# EUROPEAN PATENT APPLICATION

(11) **EP 3 653 945 A1**
(43) Date of publication of application: **20.05.2020**
(21) Application number: 18832509.6
(22) Date of filing: 13.07.2018
(51) Int. Cl.: F24F 11/56, F24F 11/50, F24F 11/64, F24F 13/20, F24F 120/20

(54) **AIR CONDITIONER, AIR-CONDITIONING SYSTEM, COMMUNICATION SYSTEM, CONTROL SYSTEM, MACHINERY CONTROL SYSTEM, MACHINERY MANAGEMENT SYSTEM, AND SOUND INFORMATION ANALYSIS SYSTEM**

(30) Priority: 14.07.2017 JP 2017138621; 14.07.2017 JP 2017138619; 14.07.2017 JP 2017138618; 14.07.2017 JP 2017138631; 14.07.2017 JP 2017138611; 14.07.2017 JP 2017138630; 14.07.2017 JP 2017138629; 30.03.2018 JP 2018070240
(71) Applicant: Daikin Industries, Ltd., Osaka-shi, Osaka 530-8323 (JP)
(72) Inventor: TSUBOI, Kousuke, Osaka-shi Osaka 530-8323 (JP); SONODA, Takao, Osaka-shi Osaka 530-8323 (JP); IKEDA, Makoto, Osaka-shi Osaka 530-8323 (JP); TSUDA, Tetsushi, Osaka-shi Osaka 530-8323 (JP); OTA, Yu, Osaka-shi Osaka 530-8323 (JP); KITA, Yuuichi, Osaka-shi Osaka 530-8323 (JP); AMANO, Kenji, Osaka-shi Osaka 530-8323 (JP); MATSUBARA, Atsushi, Osaka-shi Osaka 530-8323 (JP); KUKITA, Tomomi, Osaka-shi Osaka 530-8323 (JP); KURIYAMA, Naoko, Osaka-shi Osaka 530-8323 (JP); ASHIKAGA, Tomoyoshi, Osaka-shi Osaka 530-8323 (JP); KUMAMOTO, Gen, Osaka-shi Osaka 530-8323 (JP)
(74) Representative: Global IP Europe Patentanwaltskanzlei
(86) International application number: PCT/JP2018/026616
(87) International publication number: WO 2019/013349

(57) **Abstract**

Provided is an air conditioner including an indoor unit provided with a microphone element for receiving voice instructions, such that a voice instruction spoken by an operator is acquired with high quality and control based on the voice instruction spoken by the operator is likely to be ensured. The air conditioner includes an indoor unit (12), a transmission unit, and a reception unit. The indoor unit has a main body (100) and a microphone element. The main body has formed therein a blow-out port (120) through which air-conditioned air is blown out toward a space to be air-conditioned. The microphone element accepts a voice instruction captured from a voice capturing portion (P1) arranged at a position that deviates from a ventilation space through which the air blown out from the blow-out port flows, in such a manner as to face the space to be air-conditioned. The transmission unit transmits the voice instruction accepted by the microphone element to an outside as a signal. The acceptance unit receives a command corresponding to the signal transmitted from the transmission unit from the outside.

## Description

### TECHNICAL FIELD

The present disclosure relates to an air conditioner, an air-conditioning system, a communication system, a control system, a device control system, a device management system, and a sound information analysis system.

### BACKGROUND ART

As disclosed in PTL 1 (Japanese Laid-open Patent Publication No. H2-171098), an apparatus is known that enables operation of devices by voice. PTL 1 (Japanese Laid-open Patent Publication No. H2-171098) relates to a remote control apparatus that remotely controls devices by voice.

### SUMMARY OF THE INVENTION

### <Technical Problem>

In contrast to such a remote control apparatus for remote control, if a microphone element that accepts voice instructions is provided to a device itself, the device to be used can be operated at a location near the device even if no remote control apparatus is located nearby, which provides high convenience. In addition, if a microphone element is provided to the device itself, issues involved with a portable remote control apparatus, such as losing an operation apparatus, do not arise.

However, when the device is an air conditioner and an indoor unit of the air conditioner is provided with a microphone element, depending on the arrangement of the microphone element, issues may occur, such as the effect of blowing noise of the air blown out from a blow-out port in the indoor unit resulting in failure to acquire voice instructions or failure to correctly recognize instructions due to deterioration in the quality of acquired voice.

A first object is to provide an air conditioner including an indoor unit provided with a microphone element that accepts voice instructions, such that a voice instruction spoken by an operator is acquired with high quality and control based on the voice instruction spoken by the operator is likely to be ensured.

### <Second Object>

As in PTL 2 (Japanese Laid-open Patent Publication No. 2010-181064), an air conditioner is known in which an indoor unit includes a voice acceptance section that accepts voice instructions, and an air conditioning control apparatus including voice analysis means for voice instructions and configured to control the operation of the air conditioner based on a voice analysis result. Such an air conditioner can be operated by a user even without a remote control located near the user, and the air conditioner is thus highly convenient.

However, in this configuration, when both an air conditioner with a voice-activated operation function and an air conditioner without voice-activated operation function coexist as a variation, the labor for attaching/removing the voice acceptance section to and from the indoor unit or replacing the air conditioning control apparatus is required for each model. Thus, it is difficult to simplify the production steps of the air conditioner. In addition, for example, in the case of adding the voice-activated operation function to an existing air conditioner having no voice-activated operation function, the indoor unit needs to be relatively largely modified. Thus, it is not easy to meet the need of the user who desires to add the voice-activated operation function to the existing air conditioner.

A second object is to provide an air conditioner to which addition/non-addition of a voice-activated operation function can be easily changed, and an operation apparatus for the air conditioner that enables the air conditioner to be easily operated via voice.

### <Third Object>

Furthermore, as in PTL 2 (Japanese Laid-open Patent Publication No. 2010-181064), an air conditioner is known in which an indoor unit includes a voice acceptance section that accepts voice instructions, and an air conditioning control apparatus including voice analysis means for voice instructions and configured to control the operation of the air conditioner based on a voice analysis result.

Such an air conditioner can be operated by issuing voice instructions to the indoor unit, and the air conditioner is thus highly convenient.

However, the users of the air conditioner do not always stay near the indoor unit, and may sometimes desire to operate the air conditioner while staying at a position away from the indoor unit. In this case, the configuration disclosed in PTL 2 (Japanese Laid-open Patent Publication No. 2010-181064) has a problem in that the users have to temporarily move near the indoor unit and operate the air conditioner.

To address this, PTL 1 (Japanese Laid-open Patent Publication No. H2-171098) discloses a remote control apparatus that accepts voice and generates a command for the device based on the result of recognizing the accepted voice. Using the remote control apparatus disclosed in PTL 1 (Japanese Laid-open Patent Publication No. H2-171098), an operator is able to operate the air conditioner by voice even when not being located near the air conditioner.

However, in the configuration disclosed in PTL 1 (Japanese Laid-open Patent Publication No. 2-171098), high-level processing, such as voice recognition, is performed on the remote control apparatus. Thus, the remote control apparatus is likely to become expensive, which can result in a rise in the price of the entire air-conditioning system.

A third object is to provide an air-conditioning system with a low-cost configuration that enables a user to operate an air conditioner via voice when not being near an indoor unit, and an air conditioner that implements such an air-conditioning system.

### <Fourth Object>

Conventionally, voice communication (communication of voice data) using communication lines is widely used.

In communication, typically, when the amount of data exchanged over a communication line is relatively smaller than the capacity of the communication line (when traffic is low), comfortable communication can be performed even if data having a relatively large size is transmitted. In contrast, when the amount of data exchanged over a communication line is relatively larger than the capacity of the communication line (when traffic is high), various failures may occur if data having a relatively large size is transmitted. The same applies to voice communication.

To address the issues described above, PTL 3 (Japanese Laid-open Patent Publication No. 2001-308961) discloses a message communication apparatus that does not use voice communication to reduce the amount of communication data. In the message communication apparatus, both the transmitter side and the receiver side have a vocabulary list in which words and codes are associated with each other and one or two or more selected codes are transmitted to the receiver side instead of voice and the one or two or more codes are converted from text to voice at the receiver side by using the vocabulary list. With the use of such an apparatus, the amount of communication data can be reduced compared with the transmission of voice data, and failures are less likely to occur during communication even when traffic is high.

However, this apparatus has issues in that a vocabulary list having words and codes associated with each other needs to be generated in advance before communication and that a word not registered in the vocabulary list cannot be transmitted. This apparatus has another issue in that, due to the need to generate a message by selecting codes from the vocabulary list, it takes time and labor to transmit desired information, unlike voice communication.

A fourth object is to provide a communication system and a transmission apparatus in which communication failures can be less likely to occur regardless of the state of traffic of a communication line and in which desired information can be transmitted without much time and labor.

### <Fifth Object>

Conventionally, studies are being made on the development of an operation apparatus for centralized operation of a plurality of devices (see, for example, PTL 4 (Japanese Utility Model Registration No. 3130081)).

In recent years, there has been an increasing diversity of operation input methods and device management methods. With the increase in diversity, control instructions for individual devices possessed by a user may be overlapped. Consequently, the devices may not be correctly controllable.

A fifth object is to provide a high-reliability control system.

### <Sixth Object>

Conventionally, a device control system is known that includes a bathroom-installed remote control that enables operation of a hot-water-supply heat source apparatus located outside the bathroom. For example, PTL 5 (Japanese Laid-open Patent Publication No. 2002-267252) discloses a device control system including a bathroom-installed remote control that enables a hot-water-supply heat source apparatus to be operated via voice.

Such a system allows a user to operate the hot-water-supply heat source apparatus without moving out of the bathroom, and is highly convenient. In addition, the system disclosed in PTL 5 (Japanese Laid-open Patent Publication No. 2002-267252) allows a user to operate the hot-water-supply heat source apparatus by voice, and thus is high in usability.

However, the system disclosed in PTL 5 (Japanese Laid-open Patent Publication No. 2002-267252) is merely a system that enables control of a hot-water-related device that is used in the bathroom, and it is difficult to meet a variety of desires of a person in the bathroom, such as the desire to control or monitor the environment outside the bathroom, using devices out of the bathroom.

A sixth object is to provide a high-convenience device control system that enables a person in the bathroom to meet a variety of desires using devices out of the bathroom.

### <Seventh Object>

The use of devices that output sounds has been increasing in recent years.

For example, PTL 6 (Japanese Laid-open Patent Publication No. 2010-181064) discloses a device that outputs voice to a user in response to a given instruction, to request the user to check whether the instruction is correct.

With the increasing use of such a device that outputs a sound, failures, such as sounds output from a plurality of devices being overlapped and noisy, or the sound output from each of the devices being difficult to hear, are likely to occur.

A seventh object is to provide a device management system in which, even when a plurality of devices that output sounds are present, failures, such as the sounds output from the devices being overlapped and noisy, or the sound output from each of the devices being difficult to hear, can be less likely to occur.

### <Eighth Object>

In recent years, studies have been made on the development of an air conditioner that acquires ambient sound information. For example, PTL 7 (Japanese Laid-open Patent Publication No. 2014-229097) discloses a monitoring-function-equipped air conditioner that generates sound analysis information.

However, in the related art, information is sometimes insufficient to accurately recognize the surroundings of an air conditioner.

### <Solution to Problem>

### <Solution to Achieve First Object>

An air conditioner according to a first aspect includes an indoor unit, a transmission unit, and a reception unit. The indoor unit has a main body and a microphone element. The main body has formed therein a blow-out port through which air-conditioned air is blown out toward a space to be air-conditioned. The microphone element accepts a voice instruction captured from a voice capturing portion. The voice capturing portion is arranged at a position that deviates from a ventilation space through which the air blown out from the blow-out port flows, in such a manner as to face the space to be air-conditioned. The transmission unit transmits a signal that is based on the voice instruction accepted by the microphone element to an outside. The reception unit receives from the outside a command corresponding to the signal transmitted from the transmission unit.

In the indoor unit of the air conditioner, a portion for capturing voice instructions is arranged at a position that deviates from the ventilation space through which the air blown out from the blow-out port flows. This makes input of voice instructions to the microphone element less susceptible to blowing noise, and the microphone element can acquire less noisy voice instructions. Even if a voice spoken by an operator is weak, the microphone element is likely to acquire a clear voice instruction. A command based on the voice instruction is generated outside the air conditioner on the basis of the acquired clear voice instruction, and is transmitted to the air conditioner. Thus, for example, even if diversity instructions are given to the air conditioner by voice, malfunction of the air conditioner (in addition to a case where an operation different from that indicated in a voice instruction given from the operator is performed, a case where a voice instruction given from the operator is not recognized) is less likely to occur.

Here, a functional unit that converts a signal based on voice into a command is disposed outside the air conditioner, and the air conditioner does not need to individually have this function. Thus, a reduction in the cost of the air conditioner can be achieved.

An air conditioner according to a second aspect is the air conditioner according to the first aspect, wherein the blow-out port is formed in a lower surface of the main body, through which air is blown out in a first direction in bottom view. The voice capturing portion is disposed in the lower surface of the main body at a location other than the downstream side of the blow-out port in the first direction in bottom view.

Here, the voice capturing portion can be disposed out of the ventilation space, and the microphone element is likely to acquire a clear voice instruction.

An air conditioner according to a third aspect is the air conditioner according to the first aspect or the second aspect, wherein the blow-out port is formed in a first surface of the main body. The voice capturing portion is disposed in a second surface of the main body that intersects the first surface.

Here, since the voice capturing portion is disposed in a surface intersecting the surface on which the blow-out port is formed, the voice capturing portion can be disposed out of the ventilation space, and the microphone element is likely to acquire a clear voice instruction.

An air conditioner according to a fourth aspect is the air conditioner according to any one of the first aspect through the third aspect, wherein the blow-out port is formed in the main body so as to extend with its longitudinal direction corresponding to a second direction. The voice capturing portion is disposed on the extension of the blow-out port in the second direction.

Here, the voice capturing portion can be disposed out of the ventilation space, and the microphone element is likely to acquire a clear voice instruction.

An air conditioner according to a fifth aspect is the air conditioner according to any one of the first aspect through the fourth aspect, wherein the main body further has formed therein a suction port through which air is sucked from the space to be air-conditioned. The voice capturing portion is disposed on the main body between the blow-out port and the suction port.

Here, the voice capturing portion can be disposed out of the ventilation space, and the microphone element is likely to acquire a clear voice instruction.

An air conditioner according to a sixth aspect is the air conditioner according to any one of the first aspect through the fifth aspect, wherein the voice capturing portion is disposed on the main body in a surface that intersects both the vertical plane and the horizontal plane and that is visible in bottom view.

Here, the voice capturing portion is disposed in a surface that is visible in bottom view (i.e., directed downwards) and that intersects both the vertical plane and the horizontal plane (in other words, an inclined surface). Thus, it is easy for the microphone element to more clearly acquire a voice instruction given from an operator in the space to be air-conditioned.

An air conditioner according to a seventh aspect is the air conditioner according to the first aspect, wherein the indoor unit is of a wall-mounted type. The blow-out port is formed so as to extend with its longitudinal direction corresponding to a second direction. The indoor unit further has a fan, and a fan motor that drives the fan. The fan is accommodated in the main body. The fan motor is arranged on one side of the inside of the main body in the second direction. The voice capturing portion is disposed on a side of the main body opposite to the side on which the fan motor is disposed in the second direction.

Here, the voice capturing portion of the microphone element is disposed away from the fan motor. This makes the microphone element less susceptible to noise of the fan motor, and the microphone element is likely to acquire a clear voice instruction.

An air conditioner according to an eighth aspect is the air conditioner according to the first aspect, wherein the indoor unit is of a wall-mounted type. The blow-out port is formed so as to extend with its longitudinal direction corresponding to a second direction. The indoor unit further has a fan, and a fan motor that drives the fan. The fan is accommodated in the main body. The fan motor is arranged on one side of the inside of the main body in the second direction. The voice capturing portion is disposed on the same side of the main body as the side on which the fan motor is disposed in the second direction.

Here, electric components including the microphone element and the fan motor can be gathered and arranged on one side of the main body, and the man-hours in performing a wiring task during production of the indoor unit can thus be reduced.

An air conditioner according to a ninth aspect is the air conditioner according to the first aspect, wherein the indoor unit is of a floor-mountable type. The voice capturing portion is disposed above the center of the main body in a height direction.

In a floor-mounted indoor unit, a fan motor, which is heavy, is generally arranged in a lower portion of the indoor unit. Accordingly, here, the voice capturing portion is disposed in an upper portion of the indoor unit (above the center of the main body). Thus, the microphone element is less susceptible to noise of the fan motor and is likely to acquire a clear voice instruction.

In addition, when the voice capturing portion is disposed in a lower portion of the indoor unit, a voice instruction given by a standing or seated operator can be impeded by obstacles (for example, furniture such as a table or chair). In contrast, here, the voice capturing portion is disposed in an upper portion of the indoor unit, and thus a voice instruction is likely to be captured through the voice capturing portion without obstruction.

An air conditioner according to a tenth aspect is the air conditioner according to the first aspect, wherein the indoor unit is of a wall-mounted type. The blow-out port is formed so as to extend with its longitudinal direction corresponding to a second direction. The voice capturing portion is disposed above the blow-out port and in the center portion of the main body in the second direction.

Here, the voice capturing portion is disposed in the center portion of the main body. Thus, even if the voice capturing portion is disposed in only one location, voice can be acquired from various directions.

An air conditioner according to an eleventh aspect is the air conditioner according to the first aspect, wherein the indoor unit is of a wall-mounted type. The indoor unit has two or more combinations each including a voice capturing portion and a microphone element that accepts a voice instruction captured from the voice capturing portion. The blow-out port is formed so as to extend with its longitudinal direction corresponding to a second direction. The voice capturing portions are disposed at least at both ends of the main body in the second direction.

Here, the voice capturing portions are disposed at least at both ends of the main body, and voice is thus easily acquired from various directions.

An air conditioner according to a twelfth aspect is the air conditioner according to the first aspect through the eleventh aspect, wherein the indoor unit further has a voice recognition chip. The voice recognition chip recognizes only a specific voice instruction among voice instructions acquired by the microphone element and generates a predetermined command. The transmission unit transmits a signal that is based on a voice instruction other than the specific voice instruction among the voice instructions accepted by the microphone element to the outside.

Here, the specific voice instruction can be converted into a command on the air conditioner side without being transmitted to the outside. This enables quick operation in response to the specific instruction, and provides high convenience.

An air conditioner according to a thirteenth aspect is the air conditioner according to the twelfth aspect, wherein the indoor unit further has a control board that controls an operation of the indoor unit. The control board and the voice recognition chip are integrated with each other.

Here, it is possible to reduce the man-hours in performing a wiring task during production of the indoor unit.

An air conditioner according to a fourteenth aspect is the air conditioner according to any one of the first aspect through the thirteenth aspect, wherein the transmission unit transmits a signal to an analysis apparatus that analyzes the signal via a network. The reception unit receives a command generated based on a result of analysis of the signal by the analysis apparatus.

Here, the signal that is based on the voice instruction is transmitted to the external analysis apparatus, and the command is generated on the basis of the result of analysis of the signal. Thus, even if the air conditioner is caused to execute a relatively complex operation, the air conditioner can be operated by voice.

An air conditioner according to a fifteenth aspect is the air conditioner according to the fourteenth aspect, wherein the transmission unit further transmits information on a state quantity for at least one of the air conditioner and the space to be air-conditioned to the command generation apparatus. The reception unit receives a command generated by the command generation apparatus based on the result of analysis of the signal by the analysis apparatus and the information on the state quantity.

Here, the instruction is given to the air conditioner on the basis of the result of analysis of the signal that is based on the voice instruction and on the basis of the state quantity for the air conditioner or the space to be air-conditioned, and thus it is likely that appropriate control of the air conditioner is executed.

An air conditioner according to a sixteenth aspect is the air conditioner according to any one of the first aspect through the fifteenth aspect, wherein the indoor unit further has a voice-capture-direction adjustment mechanism capable of changing a direction in which voice is captured by the voice capturing portion.

Here, since the direction in which voice is captured is changeable, it is possible to avoid a failure of the direction of voice capturing being directed to a place where no person is generally present (for example, to the wall), regardless of the attachment position or the like of the indoor unit. In addition, since the direction in which voice is captured can be changed, the microphone element is likely to acquire a clear voice instruction even if a voice spoken by an operator is weak.

An air conditioner according to a seventeenth aspect is the air conditioner according to the sixteenth aspect, wherein the indoor unit further has a detection unit that detects a position of a person in the space to be air-conditioned. The voice-capture-direction adjustment mechanism has an automatic adjustment unit that automatically changes the direction in which voice is captured by the voice capturing portion in accordance with a detection result of the detection unit.

Here, the direction of voice capturing is automatically changed in accordance with the position of a person in the space to be air-conditioned. Thus, it is easy for the microphone element to acquire a clear voice instruction anywhere an operator moves within the space to be air-conditioned.

### <Solution to Achieve Second Object>

An air conditioner according to an eighteenth aspect includes an indoor unit having a main body. The main body has formed therein a blow-out port through which air-conditioned air is blown out toward a space to be air-conditioned. The air conditioner includes an operation unit, a cable unit, a transmission unit, a reception unit, and an air conditioner control unit. The operation unit has a voice acceptance section. The voice acceptance section accepts input of a voice instruction. The operation unit is arranged outside the main body. The cable unit communicably connects the indoor unit and the operation unit to each other. The transmission unit transmits a signal that is based on the voice instruction accepted by the voice acceptance section to an outside. The reception unit receives from the outside a command corresponding to the signal transmitted from the transmission unit. The air conditioner control unit controls an operation of the air conditioner in accordance with the command.

In the air conditioner according to the eighteenth aspect, an operation unit used for operation via voice is externally attached to the indoor unit, and a command is generated outside the air conditioner in accordance with a voice instruction. Thus, it is easy to change addition/non-addition of a voice-activated operation function to the air conditioner in accordance with the need of the user. Since the operation unit is an externally attached device, it is also easy to add a voice-activated operation function to an already-installed air conditioner having no voice-activated operation function.

In the air conditioner, furthermore, since the operation unit is externally attached to the indoor unit, the operation unit is arranged flexibly. This ensures that the voice acceptance section is likely to accept an instruction given by the user, regardless of the arrangement location or the like of the indoor unit (for example, even when the arrangement location of the indoor unit and a location where the user of the air conditioner performs main activities are away from each other).

In the air conditioner, furthermore, the indoor unit and the operation unit are connected via wired connection, and thus it is likely that the signal is exchanged between these units with certainty.

Preferably, the operation unit includes a notification unit. The notification unit provides notification of acceptance of a voice instruction by the voice acceptance section.

The notification unit that provides notification of acceptance of a voice instruction by the voice acceptance section can be implemented as any of various types of notification devices such as a speaker that provides notification by sound, a light that provides notification by using light, a vibrator that provides notification by vibration, and a display that provides notification by an image (including text). The operation unit provided with the notification unit allows a user to recognize that voice is accepted by the voice acceptance section.

An air conditioner according to a nineteenth aspect is the air conditioner of the eighteenth aspect, wherein the transmission unit and the reception unit are mounted in the operation unit.

Here, the operation unit includes the transmission unit and the reception unit in addition to the voice acceptance section and the notification unit. Thus, it is particularly easy to change addition/non-addition of a voice-activated operation function to the air conditioner in accordance with the need of the user. In addition, various components necessary for operation via voice are collectively mounted in the operation unit. Thus, it is easy to also add a voice-activated operation function to an already-installed air conditioner having no voice-activated operation function.

An air conditioner according to a twentieth aspect is the air conditioner of the eighteenth aspect or the nineteenth aspect, wherein the operation unit further has a switch that switches an operating state of the voice acceptance section from a sleep state in which no voice instruction is accepted to an active state in which voice instructions are acceptable.

Here, the operation unit is provided with a switch that switches the operating state of the voice acceptance section to the active state. This makes it easy to activate the voice acceptance section only when a voice instruction is to be input, and makes it possible to prevent malfunction of the air conditioner based on voice issued without the intention of instructions.

An air conditioner according to a twenty-first aspect is the air conditioner according to any one of the eighteenth aspect through the twentieth aspect, wherein the cable unit has a function of a power line that supplies electric power to the operation unit.

Here, the cable unit connecting the indoor unit and the operation unit also functions as a power line. This enables the operation unit to function without using a power source extraction port dedicated to the operation unit, and provides high convenience.

An air conditioner according to a twenty-second aspect is the air conditioner according to any one of the eighteenth aspect through the twenty-first aspect, wherein the operation unit extends with its longitudinal direction corresponding to a horizontal direction, and is disposed on the main body or on a wall surface or the surface of the ceiling facing the space to be air-conditioned.

Thus, it is possible to realize an air conditioner that is also excellent aesthetically.

An air conditioner according to a twenty-third aspect is the air conditioner of the twenty-second aspect, wherein the voice acceptance section has at least two microphone elements. Each of the microphone elements is disposed at least at either end of the operation unit in the longitudinal direction.

Here, since each of the microphone elements is disposed at either end of the operation unit in the horizontal direction, the voice acceptance section is likely to accept an instruction given by the user regardless of the position of the user relative to the operation unit.

An air conditioner according to a twenty-fourth aspect is the air conditioner according to any one of the eighteenth aspect through the twenty-third aspect, wherein the transmission unit transmits a signal to an analysis apparatus that analyzes the signal via a network. The reception unit receives a command generated based on a result of analysis of the signal by the analysis apparatus.

Here, the signal that is based on the voice instruction is transmitted to the external analysis apparatus, and the command is generated on the basis of the analysis result of the signal. Thus, even if the air conditioner is caused to execute a relatively complex operation, the air conditioner can be operated by voice.

An air conditioner according to a twenty-fifth aspect is the air conditioner of the twenty-fourth aspect, wherein the transmission unit further transmits information on a state quantity for at least one of the air conditioner and the space to be air-conditioned to the command generation apparatus. The reception unit receives a command generated by the command generation apparatus based on the result of analysis of the signal by the analysis apparatus and on the information on the state quantity.

Here, the instruction is given to the air conditioner on the basis of the result of analysis of the voice instruction and information on the state quantity for the air conditioner or the space to be air-conditioned. Thus, it is likely that appropriate control based on the voice instruction is executed on the air conditioner.

An air conditioner according to a twenty-sixth aspect is the air conditioner of the eighteenth aspect through the twenty-fifth aspect, wherein the voice acceptance section further includes a voice compression unit that performs voice compression on the accepted voice instruction. The transmission unit transmits, as the signal, a voice instruction subjected to voice compression processing by the voice compression unit to the outside.

Here, a voice instruction is subjected to voice compression and is then transmitted to the outside. Thus, efficient communication can be achieved.

An air conditioner according to a twenty-seventh aspect is the air conditioner of the eighteenth aspect through the twenty-sixth aspect, wherein the transmission unit transmits the signal to a plurality of addresses.

Here, the voice accepted by the voice acceptance section is transmitted to a plurality of addresses. Thus, the acquired voice is available for various processing operations.

An operation apparatus according to a twenty-eighth aspect is an operation apparatus for an air conditioner, which is arranged outside a main body of a indoor unit of the air conditioner and is connected to the indoor unit via a cable unit. The main body of the indoor unit has formed therein a blow-out port through which air-conditioned air is blown out toward a space to be air-conditioned. The operation apparatus includes a voice acceptance section, a notification unit, a transmission unit, a reception unit, and a command transmission unit. The voice acceptance section accepts input of a voice instruction to the air conditioner. The notification unit provides notification of acceptance of the voice instruction by the voice acceptance section. The transmission unit transmits a signal that is based on the voice instruction accepted by the voice acceptance section to an outside. The reception unit receives from the outside a command corresponding to the signal transmitted from the transmission unit. The command transmission unit transmits a signal based on the command received by the reception unit to an air conditioner control unit that controls an operation of the air conditioner via the cable unit.

In the operation apparatus, various components necessary for operation via voice are collectively mounted in the operation apparatus. This makes it easy to add a voice-activated operation function to the air conditioner in accordance with the need of the user.

An operation apparatus according to a twenty-ninth aspect is the operation apparatus of the twenty-eighth aspect, further including a switch. The switch switches an operating state of the voice acceptance section from a sleep state in which no voice instruction is accepted to an active state in which voice instructions are acceptable.

Here, the operation apparatus has a switch that switches the operating state of the voice acceptance section to the active state. This makes it easy to activate the voice acceptance section only when a voice instruction is to be input, and makes it possible to prevent malfunction of the air conditioner based on voice issued without the intention of instructions.

An operation apparatus according to a thirtieth aspect is the operation apparatus of the twenty-eighth aspect or twenty-ninth aspect, wherein the operation apparatus is supplied with electric power via the cable unit.

Here, the supply of electric power via a cable unit connecting the indoor unit and the operation apparatus eliminates the need to use a power source extraction port dedicated to the operation apparatus, and provides high convenience.

### <Solution to Achieve Third Object>

An air-conditioning system according to a thirty-first aspect includes an air conditioner having a controller, and a voice acceptance unit. The voice acceptance unit has a voice acceptance section and a first information transmission unit. The voice acceptance section accepts a voice instruction for the air conditioner. The first information transmission unit transmits first information corresponding to the voice instruction accepted by the voice acceptance section to the controller via wireless communication. The controller has a first information reception unit, a processing unit, a second information transmission unit, a command receiving unit, and an air conditioner control unit. The first information reception unit receives the first information transmitted from the first information transmission unit. The processing unit executes specific processing on the first information accepted by the first information reception unit to generate second information having a smaller information amount than the first information. The second information transmission unit transmits the second information to an outside. The command receiving unit receives from the outside a command corresponding to the second information transmitted from the second information transmission unit. The air conditioner control unit controls an operation of the air conditioner in accordance with the command.

In the air-conditioning system, the second information based on the voice instruction is transmitted to the outside, and the command based on the transmitted second information is given from the outside. That is, the air-conditioning system eliminates the need for the air conditioner or the voice acceptance unit to recognize a voice instruction and generate a command for controlling the air conditioner on the basis of the recognition result. Accordingly, an air-conditioning system that enables an air conditioner to be operated via voice is likely to be achieved at low cost.

In the air-conditioning system, furthermore, the controller of the air conditioner generates the second information having a small information amount suitably for communication from the first information transmitted from the voice acceptance unit, and transmits the second information to the outside. Thus, the voice acceptance unit is only required to have simple functions, and the voice acceptance unit (voice-activated remote control) is likely to be achieved at low cost. Accordingly, for example, even if voice acceptance units are provided at a plurality of locations to enhance convenience, the air-conditioning system is likely to be achieved at low cost.

An air-conditioning system according to a thirty-second aspect is the air-conditioning system of the thirty-first aspect, wherein the first information is voice information subjected to A/D conversion.

Here, the voice acceptance unit is only required to have a function of merely performing A/D conversion of voice instructions, and the function required for the voice acceptance unit may be simple. The voice-activated remote control function of the air conditioner is likely to be achieved at low cost.

An air-conditioning system according to a thirty-third aspect is the air-conditioning system of the thirty-first aspect or the thirty-second aspect, wherein the specific processing is format conversion.

Here, through format conversion, the first information can be converted into second information having a small information amount, which is then transmitted to the outside of the controller. Efficient communication can be achieved between the air-conditioning system and a component external to the air-conditioning system.

An air-conditioning system according to a thirty-fourth aspect is the air-conditioning system of any one of the thirty-first aspect through the thirty-third aspect, wherein the voice acceptance unit further has a notification unit. The notification unit provides notification of acceptance of the voice instruction by the voice acceptance section.

The notification unit that provides notification of acceptance of a voice instruction by the voice acceptance section can be implemented as a notification device of any of various types of notification methods, such as a speaker that provides notification by sound, a light that provides notification by using light, a vibrator that provides notification by vibration, or a display that provides notification by an image (including text).

The voice acceptance unit provided with the notification unit enables a user to recognize that voice is accepted by the voice acceptance section. Even when the user operates the air conditioner in a location where the air conditioner is not visible, the user is able to recognize that the air conditioner would have received instructions.

An air-conditioning system according to a thirty-fifth aspect is the air-conditioning system of any one of the thirty-first aspect through the thirty-fourth aspect, wherein the voice acceptance unit has a switch that switches an operating state of the voice acceptance section from a sleep state in which no voice instruction is accepted to an active state in which voice instructions are acceptable.

Here, the voice acceptance unit is provided with a switch that switches the operating state of the voice acceptance section to the active state. This makes it easy to activate the voice acceptance section only when a voice instruction is to be input, and makes it possible to prevent malfunction of the air conditioner based on voice issued without the intention of instructions.

An air-conditioning system according to a thirty-sixth aspect is the air-conditioning system of any one of the thirty-first aspect through the thirty-fifth aspect, wherein the voice acceptance unit is a mobile terminal.

Here, a mobile terminal (such as a smartphone, a mobile phone, a tablet terminal, or a wearable terminal) having the voice acceptance section, which is possessed by the user, is available as the voice acceptance unit, and the voice-activated remote control function of the air conditioner can be achieved at low cost.

An air-conditioning system according to a thirty-seventh aspect is the air-conditioning system of any one of the thirty-first aspect through the thirty-sixth aspect, wherein the second information transmission unit transmits the second information to an analysis apparatus that analyzes the second information via a network. The command receiving unit receives a command generated based on the result of analysis of the second information by the analysis apparatus.

Here, the second information based on the voice instruction is transmitted to the external analysis apparatus, and a command is generated on the basis of the analysis result of the second information. Thus, even when the air conditioner is caused to execute operation having relatively complex content, the air conditioner can be operated by voice.

An air-conditioning system according to a thirty-eighth aspect is the air-conditioning system of the thirty-seventh aspect, wherein the controller further has a state-quantity information transmission unit. The state-quantity information transmission unit transmits information on the state quantity for at least one of the air conditioner and a space to be air-conditioned by the air conditioner to the command generation apparatus. The command receiving unit receives a command generated by the command generation apparatus based on the analysis result obtained by the analysis apparatus and the information on the state quantity.

Here, the instruction is given to the air conditioner on the basis of the analysis result of the second information based on the voice instruction and the state quantity for the air conditioner or the space to be air-conditioned. Thus, it is likely that appropriate control based on the voice instruction is executed on the air conditioner.

An air-conditioning system according to a thirty-ninth aspect is the air-conditioning system of any one of the thirty-first aspect through the thirty-eighth aspect, wherein the second information transmission unit transmits the second information to a plurality of addresses.

Here, since the second information is transmitted to a plurality of addresses, the second information, which is based on acquired voice, is available for various processing operations.

An air conditioner according to a fortieth aspect includes a first information reception unit, a processing unit, a second information transmission unit, a command receiving unit, and an air conditioner control unit. The first information reception unit receives first information that is based on a voice instruction accepted by a voice acceptance unit and that is wirelessly transmitted from the voice acceptance unit. The processing unit executes specific processing on the first information accepted by the first information reception unit to generate second information having a smaller information amount than the first information. The second information transmission unit transmits the second information to an outside. The command receiving unit receives from the outside a command corresponding to the second information transmitted from the second information transmission unit. The air conditioner control unit controls an operation of the air conditioner in accordance with the command.

In the air conditioner, the second information based on the voice instruction is transmitted to the outside, and the command based on the transmitted second information is given from the outside. That is, the air conditioner itself does not need to recognize a voice instruction and generate a command for controlling the air conditioner on the basis of the recognition result. Accordingly, an air conditioner that is voice-operable is likely to be achieved at low cost.

Furthermore, the air conditioner generates the second information having a small information amount suitably for communication from the first information transmitted from the voice acceptance unit, and transmits the second information to the outside. Thus, the voice acceptance unit, which transmits the first information that is based on the voice instruction to the air conditioner, is only required to have simple functions, and the voice acceptance unit (voice-activated remote control) is likely to be achieved at low cost.

### <Solution to Achieve Fourth Object>

A communication system according to a forty-first aspect includes a transmission apparatus and a reception apparatus. The transmission apparatus has a voice acceptance section, a text conversion unit, a transmission unit, and a switching unit. The voice acceptance section accepts input of voice. The text conversion unit converts the voice accepted by the voice acceptance section into a text data format. The transmission unit transmits data that is based on the voice accepted by the voice acceptance section via a communication line. The switching unit switches a format of the data transmitted from the transmission unit between a voice data format and the text data format. The reception apparatus has a reception unit. The reception unit receives the data transmitted from the transmission unit of the transmission apparatus.

In the communication system, the data format of data, which is based on input voice, transmitted from the transmission apparatus to the reception apparatus, can be switched between a voice data format and a text data format. In the communication system, accordingly, when traffic is high, the data based on the input voice can be switched to the text data format having a smaller data amount than the voice data format and can be transmitted. Therefore, occurrence of communication failure can be reduced regardless of the state of traffic of the communication line.

In addition, here, voice is input to the transmission apparatus. Thus, compared with input of a code selected from a vocabulary list, desired information can be transmitted from the transmission apparatus to the reception apparatus without time and labor.

In addition, here, data can also be transmitted in voice data format from the transmission apparatus, i.e. the data format available for transmission is not limited to the text data format. Thus, when traffic is low, data can be transmitted in voice data format to the reception apparatus side, providing high convenience.

A communication system according to a forty-second aspect is the communication system of the forty-first aspect, wherein the transmission apparatus further has a determination unit. The determination unit determines a state of traffic of the communication line. The switching unit switches the format of the data transmitted from the transmission unit between the voice data format and the text data format based on a determination result of the determination unit.

Here, the format of data transmitted from the transmission apparatus to the reception apparatus is switched between the voice data format and the text data format in accordance with the state of traffic of the communication line. Thus, communication failures are less likely to occur.

A communication system according to a forty-third aspect is the communication system of the forty-first aspect or the forty-second aspect, wherein the reception apparatus further has a recognition unit and a signal output unit. The recognition unit recognizes content of the received data. The signal output unit outputs a signal based on a recognition result of the recognition unit.

Here, the content of the data received on the reception apparatus side is recognized, and a signal is output accordingly. In this system, input voice is preferably transmitted to the reception apparatus side in such a manner as to be as close to original data as possible (in a voice data format having a large information amount) to enable accurate recognition of the content of the data. However, sticking to transmission of data in voice data format may cause communication failure, and data may not reach the reception apparatus, which would otherwise reach it. Consequently, the processing to be performed by the reception apparatus may not be executed.

In the communication system, in contrast, data, based on voice input to the transmission apparatus, can be transmitted in voice data format and can also be transmitted in text data format. Thus, even if the communication line enters a state where communication failure is likely to occur, a condition is less likely to occur in which data does not reach the reception apparatus and in which the processing to be performed by the reception apparatus is not executed.

A communication system according to a forty-fourth aspect is the communication system of any one of the forty-first aspect through the forty-third aspect, wherein the reception apparatus further has a voice output unit, a storage unit, and a setting unit. The voice output unit performs voice conversion of data in the text data format accepted by the reception unit, and outputs a resulting data. The storage unit stores a plurality of voice patterns. The setting unit sets a voice pattern to be used by the voice output unit for output.

Here, in the case of voice output of data coming from the text data format, a voice to be used for output can be selected from among a plurality of voice patterns. This allows a listener who listens to the voice to listen to the content of the data using a voice pattern that is the easiest to hear.

For example, a voice pattern of a human speaker who inputs voice to the transmission apparatus is stored in the storage unit, and the voice pattern is used for voice output. In this case, even when data is transmitted from the transmission apparatus to the reception apparatus in text data format, a listener who listens to the voice is less likely to feel unnatural.

A transmission apparatus according to a forty-fifth aspect includes a voice acceptance section, a text conversion unit, a transmission unit, and a switching unit. The voice acceptance section accepts input of voice. The text conversion unit converts the voice accepted by the voice acceptance section into a text data format. The transmission unit transmits via the communication line data that is based on the voice accepted by the voice acceptance section. The switching unit switches the format of the data transmitted from the transmission unit between a voice data format and the text data format.

In the transmission apparatus, the data format of data, which is based on input voice, transmitted from the transmission apparatus, can be switched between the voice data format and the text data format. In the transmission apparatus, accordingly, when traffic is high, the data based on the input voice can be switched to the text data format having a smaller data amount than the voice data format and can be transmitted. Therefore, the occurrence of communication failure can be reduced regardless of the state of traffic of the communication line.

In addition, here, voice is input to the transmission apparatus. Thus, compared with input of a code selected from a vocabulary list, desired information can be transmitted from the transmission apparatus without time and labor.

In addition, here, data can also be transmitted in voice data format from the transmission apparatus, i.e. the data format available for transmission is not limited to the text data format. Thus, when traffic is low, data can be transmitted in voice data format to the receiver side, providing high convenience.

A transmission apparatus according to a forty-sixth aspect is the transmission apparatus according to the forty-fifth aspect, further including a determination unit. The determination unit determines a state of traffic of the communication line. The switching unit switches a format of the data transmitted from the transmission unit between the voice data format and the text data format based on a determination result of the determination unit.

Here, the format of data transmitted from the transmission apparatus is switched between the voice data format and the text data format in accordance with the state of traffic of the communication line. Thus, communication failures are less likely to occur.

### <Solution to Achieve Fifth Object>

A control system according to a forty-seventh aspect includes an input acceptance unit, an input selection unit, and a control unit. The input acceptance unit accepts input of a control instruction for a device at least by voice input. In a case where the input acceptance unit accepts a plurality of inputs indicating control instructions for one device, the input selection unit selects one of the plurality of inputs. The control unit transmits an output command to the device in accordance with only a control instruction corresponding to the input selected by the input selection unit.

In the control system according to the forty-seventh aspect, in a case where a plurality of inputs indicating control instructions for one device are accepted, one of the plurality of inputs is selected, and the device is controlled in accordance with only a control instruction corresponding to the selected input, achieving correct control of a device. As a result, a high-reliability control system can be achieved.

A control system according to a forty-eighth aspect is the control system according to the forty-seventh aspect, wherein when input of the control instruction is received, the input selection unit selects one of inputs of control instructions received within a predetermined time period before and after an input time.

In the control system according to the forty-eighth aspect, when one of inputs of control instructions accepted within a predetermined time period after the input time is selected, no control instruction is accepted after the elapse of the predetermined time period, and thus the load on the system can be reduced. In the control system according to the forty-eighth aspect, furthermore, when one of inputs of control instructions accepted within a predetermined time period before the input time is selected, control instructions before the elapse of the predetermined time period are referred to, and thus a high-flexibility system can be achieved.

A control system according to a forty-ninth aspect is the control system according to the forty-seventh aspect or the forty-eighth aspect, further including a selection result notification unit that provides notification of a selection result by the input selection unit.

The control system according to the forty-ninth aspect allows a user to recognize the control state of the device.

A control system according to a fiftieth aspect is the control system according to the forty-ninth aspect, wherein the selection result notification unit provides notification of the selection result by voice output.

The control system according to the fiftieth aspect allows a user to recognize the control state of the device by voice.

A control system according to a fifty-first aspect is the control system according to the forty-ninth aspect or the fiftieth aspect, wherein the selection result notification unit provides notification of information concerning an unselected input.

The control system according to the fifty-first aspect allows a user who has given overlapped control instructions to recognize control that is not executed on the device.

A control system according to a fifty-second aspect is the control system of any one of the forty-seventh aspect through the fifty-first aspect, wherein the input selection unit gives higher priority to a control instruction given by voice input.

The control system according to the fifty-second aspect can enhance the effectiveness of a control system that controls a device by voice input.

A control system according to a fifty-third aspect is the control system of any one of the forty-seventh aspect through the fifty-first aspect, wherein the input selection unit gives higher priority to a control instruction given by input other than voice input.

The control system according to the fifty-third aspect can enhance the effectiveness of a control system that controls a device by input other than voice input.

A control system according to a fifty-fourth aspect is the control system of any one of the forty-seventh aspect through the fifty-third aspect, wherein the plurality of inputs are performed by one or more input acceptance devices each having an input acceptance unit. The control system further includes an input condition storage unit that stores an input condition indicating whether to accept an input in accordance with the input acceptance device and/or input type, and the input selection unit selects an input in accordance with the input acceptance condition.

The control system according to the fifty-fourth aspect can provide a control system capable of controlling a device in accordance with an input from a predetermined input acceptance device.

A control system according to a fifty-fifth aspect is the control system of any one of the forty-seventh aspect through the fifty-fourth aspect, wherein when the input acceptance unit accepts a plurality of inputs indicating control instructions having the same content for one device, the input selection unit selects one of the plurality of inputs.

The control system according to the fifty-fifth aspect can prevent controls having the same content from being executed redundantly.

A control system according to a fifty-sixth aspect is the control system of any one of the forty-seventh aspect through the fifty-fourth aspect, wherein in a case where the input acceptance unit accepts a plurality of inputs indicating control instructions having different contents for one device, the input selection unit selects one of the plurality of inputs.

The control system according to the fifty-sixth aspect can prevent controls from being switched frequently.

### <Solution to Achieve Sixth Object>

A device control system according to a fifty-seventh aspect includes an in-bathroom operation section installed in a bathroom, and a control apparatus. The in-bathroom operation section has a microphone. The control apparatus at least controls an out-of-bathroom device arranged out of the bathroom in accordance with a voice instruction accepted by the microphone. The out-of-bathroom device is a device different from a hot-water-supply heat source apparatus that supplies hot water to the bathroom.

Here, the operation of various devices installed out of the bathroom, other than a hot-water-supply heat source apparatus, can be controlled in accordance with voice instructions accepted by a microphone in the bathroom, providing high convenience.

A device control system according to a fifty-eighth aspect is the device control system according to the fifty-seventh aspect, wherein the control apparatus controls the out-of-bathroom device by transmitting a command for the out-of-bathroom device to the out-of-bathroom device via a communication line in accordance with a voice instruction.

The device control system allows a user to operate out-of-bathroom devices connected to the communication line from within the bathroom. Even when the out-of-bathroom device is not a device connected directly to the in-bathroom operation section via the control signal line, the user of the system is able to control the out-of-bathroom device to satisfy a variety of desires while being in the bathroom.

A device control system according to a fifty-ninth aspect is the device control system according to the fifty-seventh aspect or the fifty-eighth aspect, further including a room-side operation section. The room-side operation section is arranged in a room out of the bathroom. The room-side operation section has a room-side microphone and a room-side speaker. The room-side operation section accepts an input instruction for an out-of-bathroom device. The control apparatus further controls the out-of-bathroom device in accordance with the input instruction accepted by the room-side operation section. The in-bathroom operation section further has a speaker. The in-bathroom operation section and the room-side operation section are connected so that a voice call can be established therebetween.

In the device control system, a user can use the room-side operation section in the room to control various out-of-bathroom devices. Further, a user can have a conversation with a person in the room (a person near the room-side operation section) with the microphone of the in-bathroom operation section used for inputting voice instructions to the out-of-bathroom device. Thus, high convenience is provided.

A device control system according to a sixtieth aspect is the device control system according to the fifty-ninth aspect, wherein the in-bathroom operation section further has a command acceptance unit and a switching unit. The command acceptance unit accepts a mode change command for providing an instruction to change an operation mode of the in-bathroom operation section. The switching unit switches the operation mode of the in-bathroom operation section between a first mode and a second mode in accordance with the mode change command. In the first mode, the voice accepted by the microphone is used as the voice instruction. In the second mode, the voice accepted by the microphone is used as voice for the voice call with the room-side operation section.

Here, the function of microphone is switched between a voice instruction acceptance function and a communication-voice acceptance function in accordance with the mode change command. This facilitates prevention of the occurrence of a situation, such as a normal conversation being recognized as a voice instruction or an instruction for an out-of-bathroom device not being sent to the control apparatus.

A device control system according to a sixty-first aspect is the device control system according to the fifty-ninth aspect or the sixtieth aspect, wherein the out-of-bathroom device includes an infrared-operated device that can be operated using an infrared signal. The room-side operation section has an infrared signal transmission unit that transmits an infrared signal to an infrared-operated device. The control apparatus transmits an infrared-signal transmission command to the infrared signal transmission unit in accordance with the voice instruction to control the infrared-operated device.

Here, a device that is operated using an infrared signal can also be operated by a user from within the bathroom, and the user of the system easily controls an infrared-operated device to satisfy a variety of desires while being in the bathroom.

A device control system according to a sixty-second aspect is the device control system according to any one of the fifty-seventh aspect through the sixty-first aspect, further including a voice information transmission unit. The voice information transmission unit transmits the voice instruction accepted by the microphone to a voice recognition apparatus. The control apparatus controls the out-of-bathroom device based on a result of recognition of the voice instruction by the voice recognition apparatus.

Here, the voice recognition apparatus performs voice recognition of voice instructions. This eliminates the need for the in-bathroom operation section to have a voice recognition function to recognize instructions for out-of-bathroom devices. Thus, the cost of the system can be reduced.

A device control system according to a sixty-third aspect is the device control system according to any one of the fifty-seventh aspect through the sixty-second aspect, wherein the control apparatus further controls the hot-water-supply heat source apparatus in accordance with the voice instruction accepted by the microphone.

Here, the in-bathroom operation section also functions as an operation section for the hot-water-supply heat source apparatus. This eliminates the need to install a plurality of operation sections (an operation section for the hot-water-supply heat source apparatus, and an operation section for out-of-bathroom devices which is different from the operation section for the hot-water-supply heat source apparatus) in the bathroom.

### <Solution to Achieve Seventh Object>

A device management system according to a sixty-fourth aspect manages a first device having a first sound output unit that outputs a sound, and a second device different from the first device and having a second sound output unit that outputs a sound. The device management system includes a determination unit and a sound output control unit. The determination unit determines a positional relationship between the first device and the second device. The sound output control unit controls on/off of sound output or an output sound volume of at least one of the first device and the second device based on a determination result of the determination unit.

Here, the output of sounds does not include the output of meaningless sounds (noise). The sounds also include voice (verbal sounds).

In the device management system, in accordance with the positional relationship between the first device and the second device, on/off control of output of sound or control of the sound volume of at least one device is performed. Thus, failures, such as sounds output from both devices being overlapped and noisy, or the sound output from each of the devices being difficult to hear, can be less likely to occur.

A device management system according to a sixty-fifth aspect manages a first device having a first sound output unit that outputs a sound, and a second device different from the first device and having a second sound output unit that outputs a sound. The device management system includes a determination unit and a sound output control unit. The determination unit determines a degree of interference of one of the sound output from the first device and the sound output from the second device with the other of the sound output from the first device and the sound output from the second device. The sound output control unit controls on/off of sound output or an output sound volume of at least one of the first device and the second device based on a determination result of the determination unit.

In the device management system according to the sixty-fifth aspect, failures, such as sounds output from both devices being overlapped and noisy, or the sound output from each of the devices being difficult to hear, can be less likely to occur.

A device management system according to a sixty-sixth aspect is the device management system according to the sixty-fourth aspect or the sixty-fifth aspect, wherein the first device is a remote control device that controls an operation of the second device. The first sound output unit outputs at least first information concerning an operation to be performed on the second device by sound. The second sound output unit outputs second information concerning the content of the operation and/or the state of the second device by sound.

Here, the first device is a remote control device of the second device that provides notification by sound indicating that, for example, an operation is performed on the second device, and the second device is a device that provides notification of information concerning the content of the operation and/or the state thereof by sound. In this case, on/off control of output of sound or control of the sound volume of at least one device is performed. Thus, failures, such as sounds output from both devices being overlapped and noisy, or relatively loud sounds output from both devices annoying the operator, can be less likely to occur.

A device management system according to a sixty-seventh aspect is the device management system according to the sixty-sixth aspect, wherein the first sound output unit further outputs third information, which is not related to an operation to be performed on the second device, by sound. When the determination unit determines that the first device and the second device have a predetermined positional relationship, or when the determination unit determines that a degree of interference of one of the sound output from the first device and the sound output from the second device with the other of the sound output from the first device and the sound output from the second device is in a predetermined degree, the sound output control unit controls the first device to output the third information with a first sound volume and not to output the first information by sound or to output the first information with a second sound volume lower than the first sound volume.

Here, the case where the first device and the second device have a predetermined positional relationship refers to a case where the first device and the second device have a positional relationship in which the sound output from the first device and the sound output from the second device are likely to affect each other. The case where the first device and the second device have a predetermined positional relationship includes, for example, but not limitation, a case where the distance between the first device and the second device is smaller than a predetermined distance, and a case where the first device and the second device are arranged in the same area.

Here, when the first device and the second device are determined to have a predetermined positional relationship, among the information output from the first device, the first information related to an operation to be performed on the second device is controlled so as not to be output by sound or to be output with a reduced sound volume. Thus, failures, such as sounds output from both devices being overlapped and noisy, or relatively loud sounds output from both devices annoying the operator, can be less likely to occur.

A device management system according to a sixty-eighth aspect is the device management system according to the sixty-seventh aspect, wherein when the determination unit determines that the first device and the second device do not have the predetermined positional relationship, or that the degree of interference of one of the sound output from the first device and the sound output from the second device with the other of the sound output from the first device and the sound output from the second device is not in the predetermined degree, the sound output control unit controls the first device to output the first information and the third information at least by sound.

Here, when the first device and the second device are determined not to have the predetermined positional relationship, in other words, when the sound output from the first device and the sound output from the second device are determined not to affect each other, both the first information and the third information are output by sound. Thus, even when the operator operates the second device by using the first device at a position away from the second device, the operator easily confirms that an operation to be performed on the second device has been correctly performed.

A device management system according to a sixty-ninth aspect is the device management system according to the sixty-sixth aspect, wherein when the determination unit determines that the first device and the second device have a predetermined positional relationship or that a degree of interference of one of the sound output from the first device and the sound output from the second device with the other of the sound output from the first device and the sound output from the second device is in a predetermined degree, the sound output control unit controls the first device to output information that is included in the first information and that does not overlap in content with the second information with a third sound volume and not to output information that is included in the first information and that overlaps in content with the second information by sound or to output the information with a fourth sound volume lower than the third sound volume.

Here, when the first device and the second device are determined to have the predetermined positional relationship, among the first information concerning an operation to be performed on the second device, which is output from the first device, the information not being output by sound from the second device, is output with a relatively high sound volume. In the device management system, accordingly, a failure, such as information to be transmitted being unsuccessfully transmitted to the operator, can be less likely to occur.

A device management system according to a seventieth aspect is the device management system according to any one of the sixty-fourth aspect through the sixty-ninth aspect, further including a storage unit. The storage unit stores position-related information concerning a position of at least one of the first device and the second device, or interference-related information concerning the degree of interference of one of the sound output from the first device and the sound output from the second device with the other of the sound output from the first device and the sound output from the second device. The determination unit determines the positional relationship between the first device and the second device or the degree of interference of one of the sound output from the first device and the sound output from the second device with the other of the sound output from the first device and the sound output from the second device based on the position-related information or the interference-related information stored in the storage unit.

Here, the positional relationship between both devices is likely to be correctly understood on the basis of the position-related information stored in the storage unit. Thus, it is easy to reduce the occurrence of failures, such as sounds output from both devices being overlapped and noisy, or the sound output from each of the devices being difficult to hear.

A device management system according to a seventy-first aspect is the device management system according to any one of the sixty-fourth aspect through the seventieth aspect, further including a detection unit. The detection unit detects a position of at least one of the first device and the second device. The determination unit determines the positional relationship between the first device and the second device based on a detection result of the detection unit.

Here, the positional relationship between both devices is likely to be correctly understood on the basis of the result of detecting the positions of the devices. Thus, it is easy to reduce the occurrence of failures, such as sounds output from both devices being overlapped and noisy, or the sound output from each of the devices being difficult to hear.

### <Solution to Achieve Eighth Object>

A sound information analysis system of a seventy-second aspect includes a first air conditioner, a second air conditioner, and a sound information analysis unit. The first air conditioner is installed outside an air conditioned space, and has a first microphone that acquires an external sound outside the air conditioned space. The second air conditioner is installed inside the air conditioned space, and has a second microphone that acquires an internal sound inside the air conditioned space. The sound information analysis unit analyzes information on the external sound and information on the internal sound. With this configuration, both pieces of sound information outside and inside the air conditioned space are analyzed, and the state of the air conditioner and/or the state of the surroundings of the air conditioner can thus be accurately recognized.

A sound information analysis system of a seventy-third aspect is the sound information analysis system of the seventy-second aspect, further including a recording unit. The sound information analysis unit compares the information on the external sound with the information on the internal sound. When the sound information analysis unit determines that a predetermined state is found, the recording unit starts recording of the information on the external sound and the information on the internal sound. With this configuration, it is possible to save sound information obtained when the state of the air conditioner and/or the surroundings of air conditioner becomes in a predetermined state.

A sound information analysis system of a seventy-fourth aspect is the sound information analysis system of the seventy-third aspect, wherein when the sound information analysis unit analyzes that a specific keyword and/or a specific frequency is included in the information on the external sound and the information on the internal sound, the recording unit records the information on the external sound and the information on the internal sound. With this configuration, it is possible to recognize the state of the air conditioner and/or the state of the surroundings of the air conditioner when a specific keyword and/or a specific frequency is detected.

A sound information analysis system of a seventy-fifth aspect is the sound information analysis system of the seventy-fourth aspect, wherein when the recording unit starts recording of the information on the external sound and the information on the internal sound, the sound information analysis unit refers to the information recorded on the recording unit and checks whether a similar sound satisfying a predetermined condition is present. With this configuration, it is possible to refer to a situation occurred in the presence of a similar sound.

A sound information analysis system of a seventy-sixth aspect is the sound information analysis system of any one of the seventy-third aspect through the seventy-fifth aspect, further including a position information acquisition unit that acquires position information of the first air conditioner and/or the second air conditioner. The recording unit records the information on the external sound and the information on the internal sound in association with the position information. With this configuration, it is possible to accurately recognize the state of the air conditioner and/or the state of the surroundings of the air conditioner even if position information of the air conditioner is not recognized in advance.

A sound information analysis system of a seventy-seventh aspect is the sound information analysis system of any one of the seventy-second aspect through the seventy-sixth aspect, further including a transmission unit that transmits predetermined information to a designated destination based on an analysis result obtained by the sound information analysis unit. This configuration enables an administrator or the like to recognize the state of the air conditioner and/or the state of the surroundings of the air conditioner.

A sound information analysis system of a seventy-eighth aspect is the sound information analysis system of the seventy-seventh aspect, wherein the information on the external sound and the information on the internal sound include a sound pressure value. When the sound pressure value is greater than or equal to a predetermined value, the transmission unit transmits the predetermined information to the designated destination. With this configuration, it is possible to notify an administrator or the like of the state of the air conditioner and/or the state of the surroundings of the air conditioner, focusing on a change in sound pressure value.

A sound information analysis system of a seventy-ninth aspect is the sound information analysis system of any one of the seventy-second aspect through the seventy-eighth aspect, further including an output unit that outputs predetermined information to the air conditioned space when the sound information analysis unit analyzes that a difference between a sound volume of the internal sound and a sound volume of the external sound exceeds a predetermined amount. With this configuration, it is possible to notify a person present in the air conditioned space of predetermined information.

A sound information analysis system of an eightieth aspect is the sound information analysis system of any one of the seventy-second aspect through the seventy-ninth aspect, further including a control unit that controls the first air conditioner and the second air conditioner based on an analysis result obtained by the sound information analysis unit. With this configuration, it is possible to suitably control the air conditioner in accordance with the state of the air conditioner and/or the state of the surroundings of the air conditioner.

A sound information analysis system of an eighty-first aspect is the sound information analysis system of any one of the seventy-second aspect through the eightieth aspect, including an information processing device to be connected to the first air conditioner and/or the second air conditioner. The information processing device has the sound information analysis unit. With this configuration, it is possible to analyze sound information by using an external information processing device.

A sound information analysis system of an eighty-second aspect includes an air conditioner, and an information processing device to be connected to the air conditioner. The air conditioner has an outdoor unit, an indoor unit, and a sound information transmission unit. The outdoor unit has a first microphone that acquires an external sound outside an air conditioned space. The indoor unit has a second microphone that acquires an internal sound inside the air conditioned space. The sound information transmission unit transmits information on the external sound and information on the internal sound to the information processing device. Further, the information processing device has a sound information analysis unit that analyzes the information on the external sound and the information on the internal sound. With this configuration, it is possible to accurately recognize the state of the air conditioner and/or the state of the surroundings of the air conditioner by using an external information processing device.

An air conditioner of an eighty-third aspect is connected to an information processing device that analyzes sound information. The air conditioner has an outdoor unit, an indoor unit, and a sound information transmission unit. The outdoor unit has a first microphone that acquires an external sound outside an air conditioned space. The indoor unit has a second microphone that acquires an internal sound inside the air conditioned space. The sound information transmission unit transmits the information on the external sound and the information on the internal sound to the information processing device. With this configuration, it is possible to accurately recognize the state of the air conditioner and/or the state of the surroundings of the air conditioner with the use of an external information processing device.

An information processing device of an eighty-fourth aspect is connected to an air conditioner having an outdoor unit having a first microphone, and an indoor unit having a second microphone. The information processing device includes a sound information analysis unit that analyzes information on an external sound acquired with the first microphone and information on an internal sound acquired with the second microphone. With this configuration, it is possible to accurately recognize the state of the air conditioner and/or the state of the surroundings of the air conditioner with the use of the air conditioner described above.

### <Advantageous Effects of Invention>

In the air conditioner according to the first aspect, the indoor unit is provided with a portion for capturing voice instructions at a position that deviates from a ventilation space through which the air blown out from the blow-out port flows. This makes input of voice instructions to the microphone element less susceptible to blowing noise, and the microphone element can acquire less noisy voice instructions. Even if a voice spoken by an operator is weak, the microphone element is likely to acquire a clear voice instruction. A command based on the voice instruction is generated outside the air conditioner on the basis of the acquired clear voice instruction, and is transmitted to the air conditioner. Thus, for example, even if diversity instructions are given to the air conditioner by voice, it is less likely that malfunction of the air conditioner will occur.

In the air conditioner according to any one of the second aspect through the seventh aspect or the ninth aspect, the microphone element is likely to acquire a clear voice instruction.

The air conditioner according to the eighth aspect or the thirteenth aspect can reduce the man-hours in performing a wiring task during production of the indoor unit.

In the air conditioner according to the tenth aspect or the eleventh aspect, it is possible to acquire voice from various directions.

The air conditioner according to the twelfth aspect enables quick operation in response to the specific instruction, and provides high convenience.

In the air conditioner according to the fourteenth aspect, even if the air conditioner is caused to execute a relatively complex operation, the air conditioner can be operated by voice.

In the air conditioner according to the fifteenth aspect, it is likely that appropriate control is executed on the air conditioner.

In the air conditioner according to the sixteenth aspect or the seventeenth aspect, the microphone element is likely to acquire a clear voice instruction.

In the air conditioner according to the eighteenth aspect, an operation unit used for operation via voice is externally attached to the indoor unit, and a command is generated outside the air conditioner in accordance with a voice instruction. Thus, it is easy to change addition/non-addition of a voice-activated operation function to the air conditioner in accordance with the need of the user. Since the operation unit is an externally attached device, it is also easy to add a voice-activated operation function to an already-installed air conditioner having no voice-activated operation function.

In the air conditioner according to the nineteenth aspect, various components necessary for operation via voice are collectively mounted in the operation unit. Thus, it is easy to also add a voice-activated operation function to an already-installed air conditioner having no voice-activated operation function.

In the air conditioner according to the twentieth aspect, it is possible to prevent malfunction of the air conditioner based on voice issued without the intention of instructions.

The air conditioner according to the twenty-first aspect enables the operation unit to function without using a power source extraction port dedicated to the operation unit, and provides high convenience.

In the air conditioner according to the twenty-second aspect, it is possible to realize an air conditioner that is also excellent aesthetically.

In the air conditioner according to the twenty-third aspect, the voice acceptance section is likely to accept an instruction given by the user regardless of the position of the user relative to the operation unit.

In the air conditioner according to the twenty-fourth aspect, even if the air conditioner is caused to execute a relatively complex operation, the air conditioner can be operated by voice.

In the air conditioner according to the twenty-fifth aspect, it is likely that appropriate control based on the voice instruction is executed on the air conditioner.

In the air conditioner according to the twenty-sixth aspect, a voice instruction is subjected to voice compression and is then transmitted to the outside, and thus efficient communication can be achieved.

In the air conditioner according to the twenty-seventh aspect, acquired voice is available for various processing operations.

In the operation apparatus according to the twenty-eighth aspect, various components necessary for operation via voice are collectively mounted in the operation apparatus. Thus, it is easy to add a voice-activated operation function to the air conditioner in accordance with the need of the user.

In the operation apparatus according to the twenty-ninth aspect, it is possible to prevent malfunction of the air conditioner based on voice issued without the intention of instructions.

The operation apparatus according to the thirtieth aspect enables the operation unit to function without using a power source extraction port dedicated to the operation unit, and provides high convenience.

In the air-conditioning system according to the thirty-first aspect, the second information based on a voice instruction is transmitted to the outside, and the command based on the transmitted second information is given from the outside. That is, the air-conditioning system eliminates the need for the air conditioner or the voice acceptance unit to recognize a voice instruction and generate a command for controlling the air conditioner on the basis of the recognition result. Accordingly, an air-conditioning system that enables an air conditioner to be operated via voice is likely to be achieved at low cost. In the air-conditioning system, furthermore, the controller of the air conditioner generates the second information having a small information amount suitably for communication from the first information transmitted from the voice acceptance unit, and transmits the second information to the outside. Thus, the voice acceptance unit is only required to have simple functions, and the voice acceptance unit (voice-activated remote control) is likely to be achieved at low cost. Accordingly, for example, even if voice acceptance units are provided at a plurality of locations to enhance convenience, the air-conditioning system is likely to be achieved at low cost.

In the air-conditioning system according to the thirty-second aspect and the thirty-sixth aspect, the voice-activated remote control function of the air conditioner is likely to be achieved at low cost.

In the air-conditioning system according to the thirty-third aspect, it is possible to achieve efficient communication between the air-conditioning system and components outside the air-conditioning system.

The air-conditioning system according to the thirty-fourth aspect enables a user to recognize that voice is accepted by the voice acceptance section.

In the air-conditioning system according to the thirty-fifth aspect, it is possible to prevent malfunction of the air conditioner based on voice issued without the intention of instructions.

In the air-conditioning system according to the thirty-seventh aspect, even if the air conditioner is caused to execute a relatively complex operation, the air conditioner can be operated by voice.

In the air-conditioning system according to the thirty-eighth aspect, it is likely that appropriate control based on the voice instruction is executed on the air conditioner.

In the air-conditioning system according to the thirty-ninth aspect, an acquired voice is available for various processing operations.

In the air conditioner according to the fortieth aspect, the second information based on the voice instruction is transmitted to the outside, and the command based on the transmitted second information is given from the outside. That is, the air conditioner itself does not need to recognize a voice instruction and generate a command for controlling the air conditioner on the basis of the recognition result. Accordingly, an air conditioner that is voice-operable is likely to be achieved at low cost. Furthermore, the air conditioner generates the second information having a small information amount suitably for communication from the first information transmitted from the voice acceptance unit, and transmits the second information to the outside. Thus, the voice acceptance unit, which transmits the first information that is based on the voice instruction to the air conditioner, is only required to have simple functions, and the voice acceptance unit (voice-activated remote control) is likely to be achieved at low cost.

In the communication system according to the forty-first aspect, the data format of data, which is based on input voice, transmitted from the transmission apparatus to the reception apparatus, can be switched between a voice data format and a text data format. In the communication system, accordingly, when traffic is high, the data based on the input voice can be switched to the text data format having a smaller data amount than the voice data format and can be transmitted. Therefore, occurrence of communication failure can be reduced regardless of the state of traffic of a communication line.

In the communication system according to the forty-second aspect, the occurrence of communication failure is less likely to occur.

In the communication system according to the forty-third aspect, even if the communication line enters a state where communication failure is likely to occur, a condition is less likely to occur in which data does not reache the reception apparatus and in which the processing to be performed by the reception apparatus is not executed.

In the communication system according to the forty-fourth aspect, a listener who listens to the voice is able to listen to the content of the data using a voice pattern that is the easiest to hear.

In the transmission apparatus according to the forty-fifth aspect, when traffic is high, the data based on input voice can be switched to the text data format having a smaller data amount than the voice data format and can be transmitted. Therefore, the occurrence of communication failure can be reduced regardless of the state of traffic of a communication line.

In the transmission apparatus according to the forty-sixth aspect, the occurrence of communication failure is less likely to occur.

In the control system according to the forty-seventh aspect, it is possible to provide a high-reliability control system.

In the control system according to the forty-eighth aspect, it is possible to reduce the load on the system. Further, it is possible to enhance flexibility.

The control system according to the forty-ninth aspect allows a user to recognize the control state of the device.

The control system according to the fiftieth aspect allows a user to recognize the control state of the device by voice.

The control system according to the fifty-first aspect allows a user who has given overlapped control instructions to recognize control that is not executed on the device.

In the control system according to the fifty-second aspect, it is possible to enhance the effectiveness of a control system that controls a device by voice input.

In the control system according to the fifty-third aspect, it is possible to enhance the effectiveness of a control system that controls a device by input other than voice input.

In the control system according to the fifty-fourth aspect, it is possible to control a device in accordance with a control instruction from an input device for which the settings for acceptance are set by the setting unit.

In the control system according to the fifty-fifth aspect, it is possible to prevent controls having the same content from being executed redundantly.

In the control system according to the fifty-sixth aspect, it is possible to prevent controls from being switched frequently.

In the device control system according to the fifty-seventh aspect, the operation of various devices installed out of the bathroom, other than a hot-water-supply heat source apparatus, can be controlled in accordance with voice instructions accepted by a microphone in the bathroom, providing high convenience.

In the device control system according to the fifty-eighth aspect and the sixty-first aspect, the user of the system is able to control out-of-bathroom devices to satisfy a variety of desires while being in the bathroom.

In the device control system according to the fifty-ninth aspect, a user can use the room-side operation section in the room to control various out-of-bathroom devices, and can have a telephone conversation with a person in the room (a person near the room-side operation section) with the microphone of the in-bathroom operation section used for inputting voice instructions to an out-of-bathroom device.

The device control system according to the sixtieth aspect facilitates prevention of the occurrence of a situation, such as a normal conversation being recognized as a voice instruction or an instruction for an out-of-bathroom device not being sent to the controller.

In the device control system according to the sixty-second aspect, it is possible to reduce the cost of the system.

The device control system according to the sixty-third aspect eliminates the need to install a plurality of operation sections (an operation section for the hot-water-supply heat source apparatus, and an operation section for out-of-bathroom devices which is different from the operation section for the hot-water-supply heat source apparatus) in the bathroom.

In the device management system according to the sixty-fourth aspect, in accordance with the positional relationship between the first device and the second device, on/off control of output of sound or control of the sound volume of at least one device is performed, and thus, failures, such as sounds output from both devices being overlapped and annoying, or the sound output from each of the devices being difficult to hear, can be less likely to occur.

In the device management system according to the sixty-fifth aspect, failures, such as sounds output from both devices being overlapped and annoying, or the sound output from each of the devices being difficult to hear, can be less likely to occur.

In the device management system according to the sixty-sixth aspect, the sixty-seventh aspect, the seventieth aspect, or the seventy-first aspect, failures, such as the sounds output from the first device and the second device being overlapped and annoying, or relatively loud sounds output from the first device and the second device annoying the operator, can be less likely to occur.

In the device management system according to the sixty-eighth aspect, even when the operator operates the second device with the first device at a position away from the second device the operator easily confirms that an operation to be performed on the second device has been correctly performed.

In the device management system according to the sixty-ninth aspect, a failure, such as information to be transmitted being unsuccessfully transmitted to the operator, can be less likely to occur.

In the sound information analysis system according to the seventy-second aspect, it is possible to accurately recognize the state of the air conditioner and/or the state of the surroundings of the air conditioner.

In the sound information analysis system according to the seventy-third aspect, it is possible to save sound information when the state of the air conditioner and/or the surroundings of air conditioner becomes in a predetermined state.

In the sound information analysis system according to the seventy-fourth aspect, it is possible to recognize the state of the air conditioner and/or the state of the surroundings of the air conditioner when a specific keyword and/or a specific frequency is detected.

In the sound information analysis system according to the seventy-fifth aspect, it is possible to refer to a situation occurred in the presence of a similar sound.

The sound information analysis system according to the seventy-sixth aspect is the sound information analysis system of the second aspect through the fourth aspect, wherein it is possible to accurately recognize the state of the air conditioner and/or the state of the surroundings of the air conditioner even if position information of the air conditioner is not recognized in advance in the first air conditioner and/or the second air.

The sound information analysis system according to the seventy-seventh aspect enables an administrator or the like to recognize the state of the conditioner and/or the state of the surroundings of the air conditioner.

In the sound information analysis system according to the seventy-eighth aspect, it is possible to notify an administrator or the like of the state of the air conditioner and/or the state of the surroundings of the air conditioner, focusing on a change in sound pressure value.

In the sound information analysis system according to the seventy-ninth aspect, it is possible to notify a person present in the air conditioned space of predetermined information.

In the sound information analysis system according to the eightieth aspect, it is possible to suitably control the air conditioner in accordance with the state of the air conditioner and/or the state of the surroundings of the air conditioner.

In the sound information analysis system according to the eighty-first aspect, it is possible to analyze sound information by using an external information processing device.

In the sound information analysis system according to the eighty-second aspect, it is possible to accurately recognize the state of the air conditioner and/or the state of the surroundings of the air conditioner by using an external information processing device.

In the air conditioner according to the eighty-third aspect, it is possible to accurately recognize the state of the air conditioner and/or the state of the surroundings of the air conditioner with the use of an external information processing device.

In the information processing device according to the eighty-fourth aspect, it is possible to accurately recognize the state of the air conditioner and/or the state of the surroundings of the air conditioner.

### BRIEF DESCRIPTION OF THE DRAWINGS

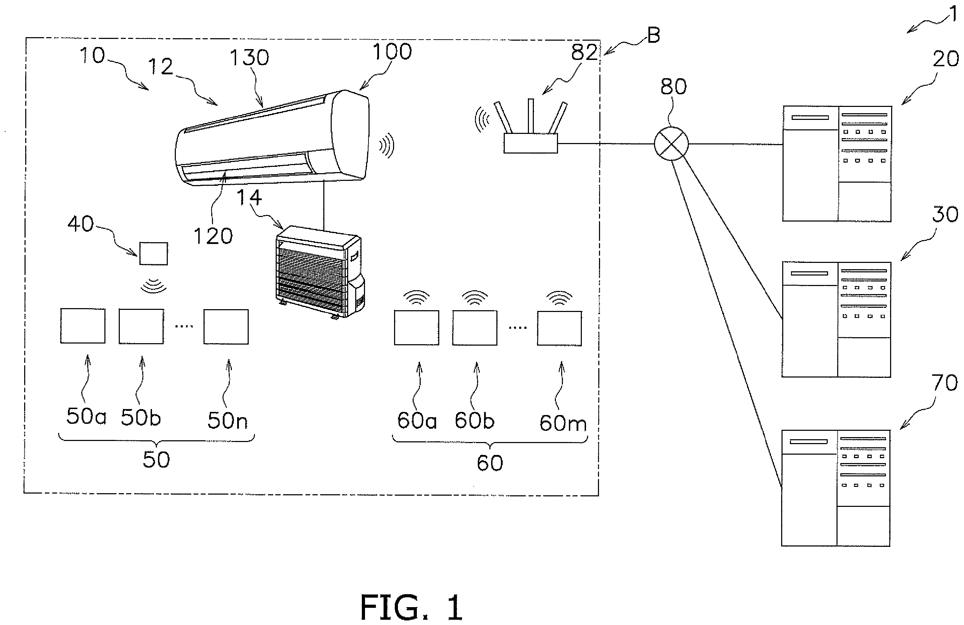

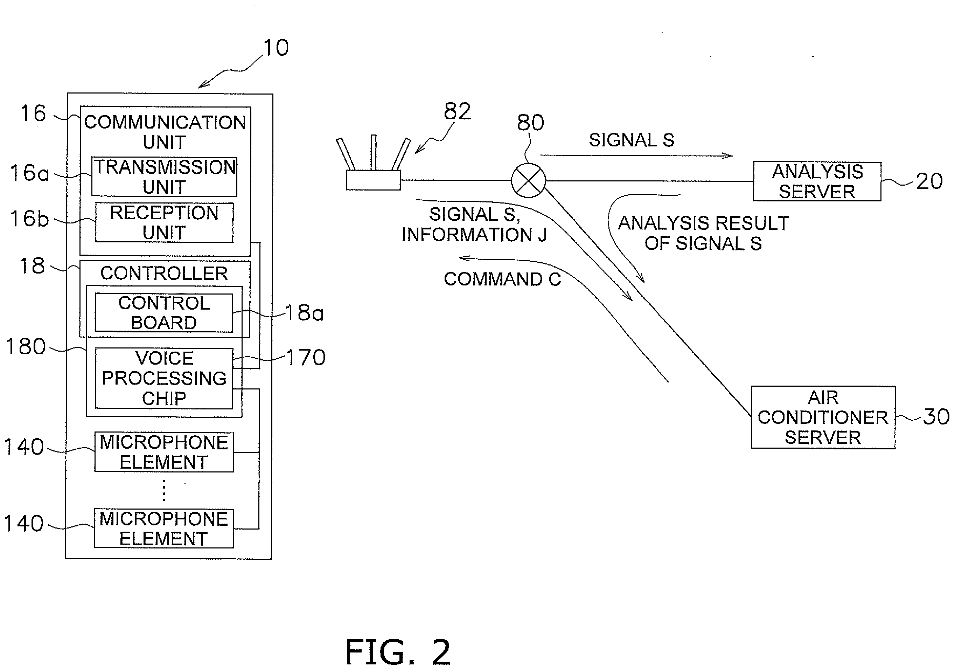

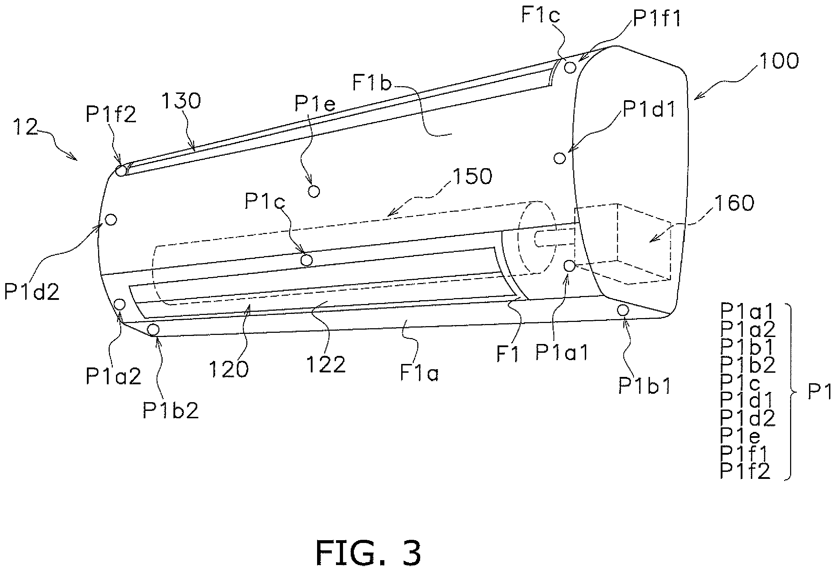

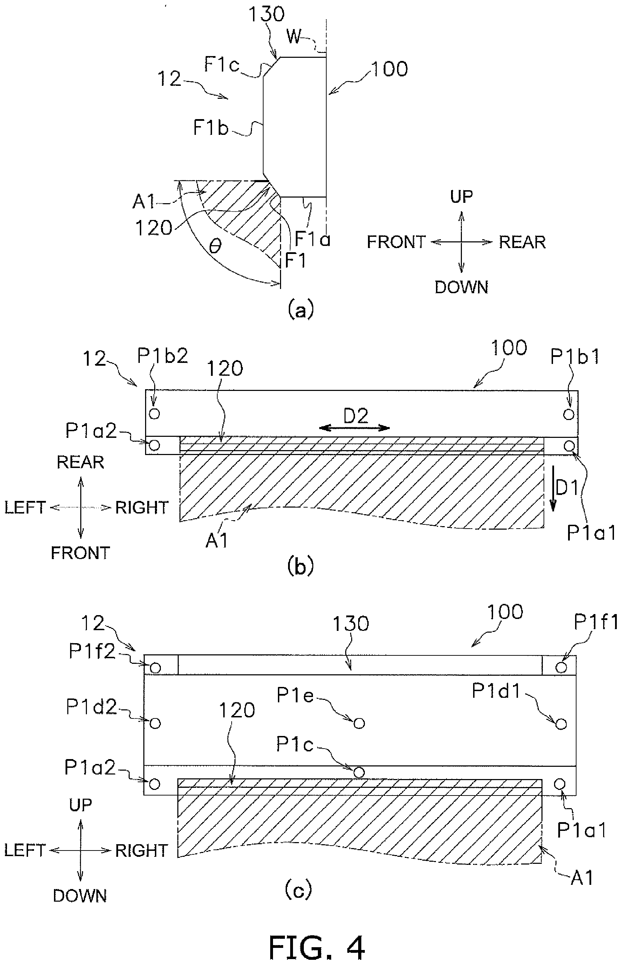

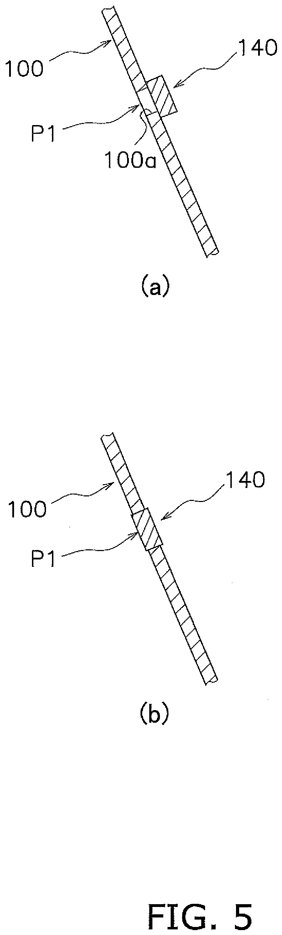

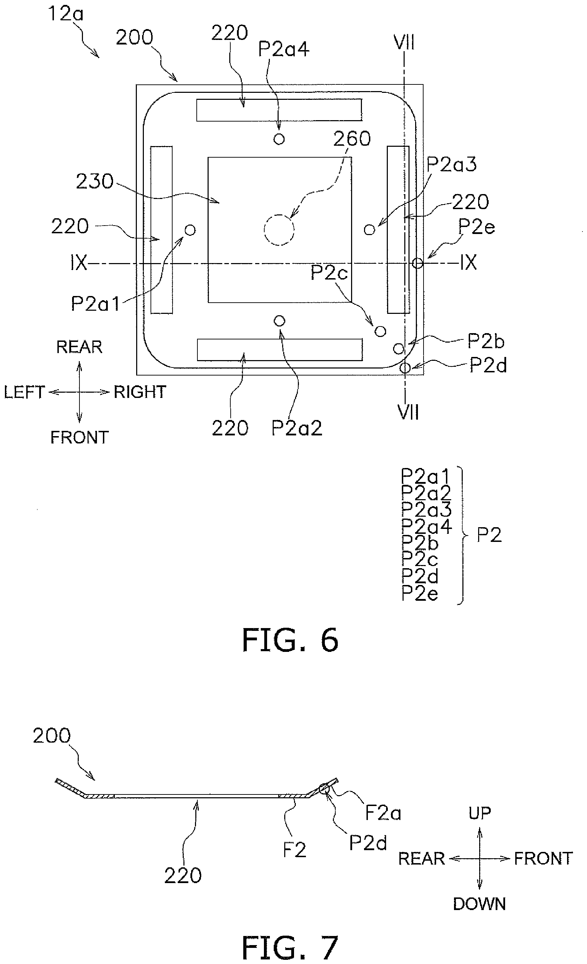

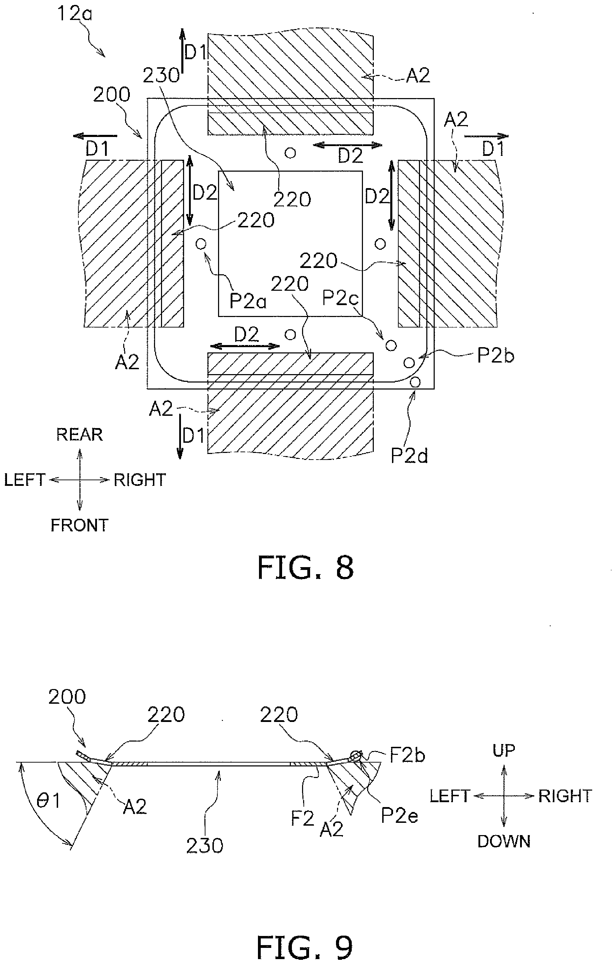

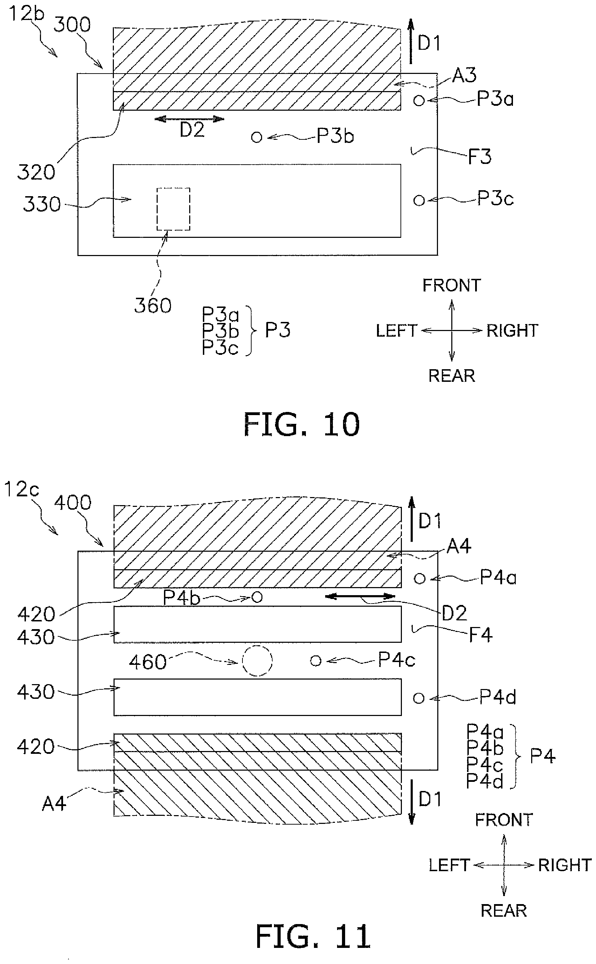

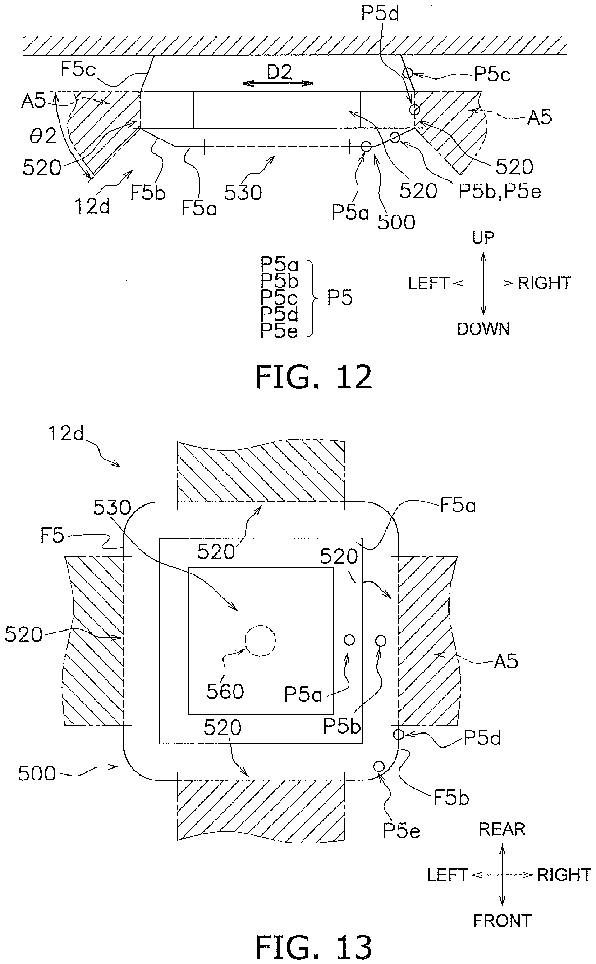

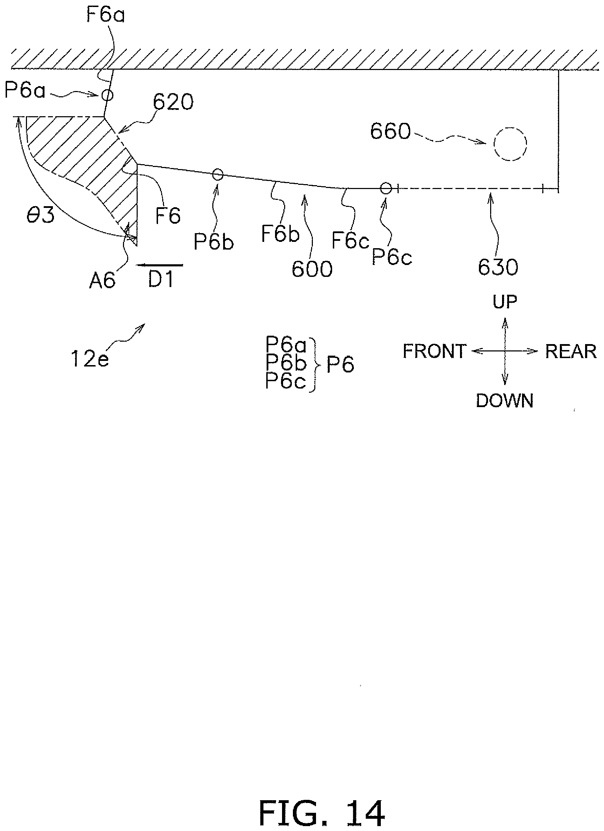

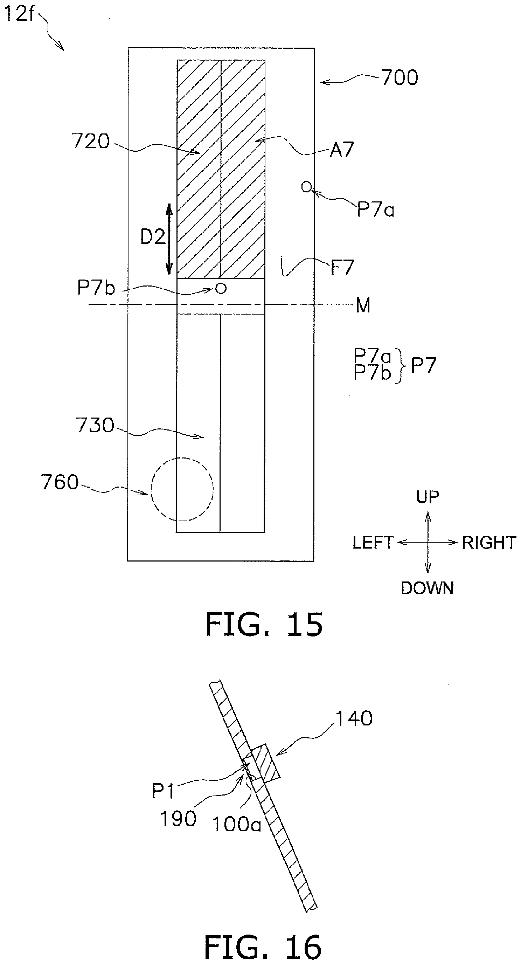

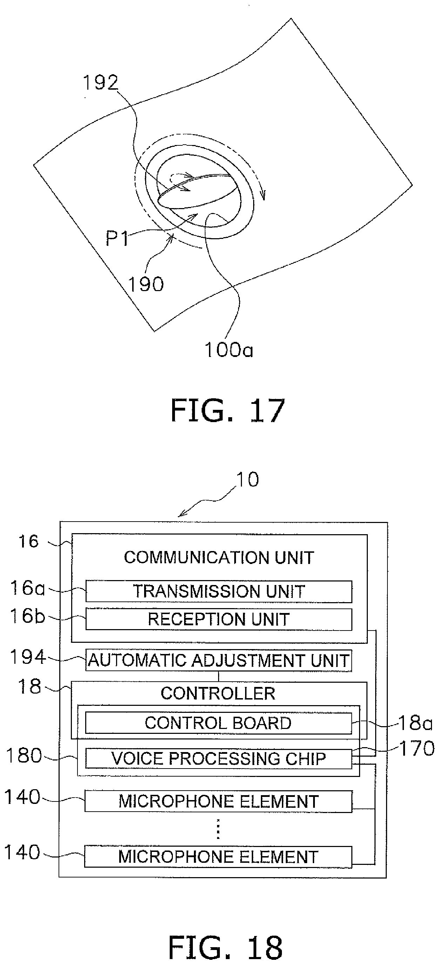

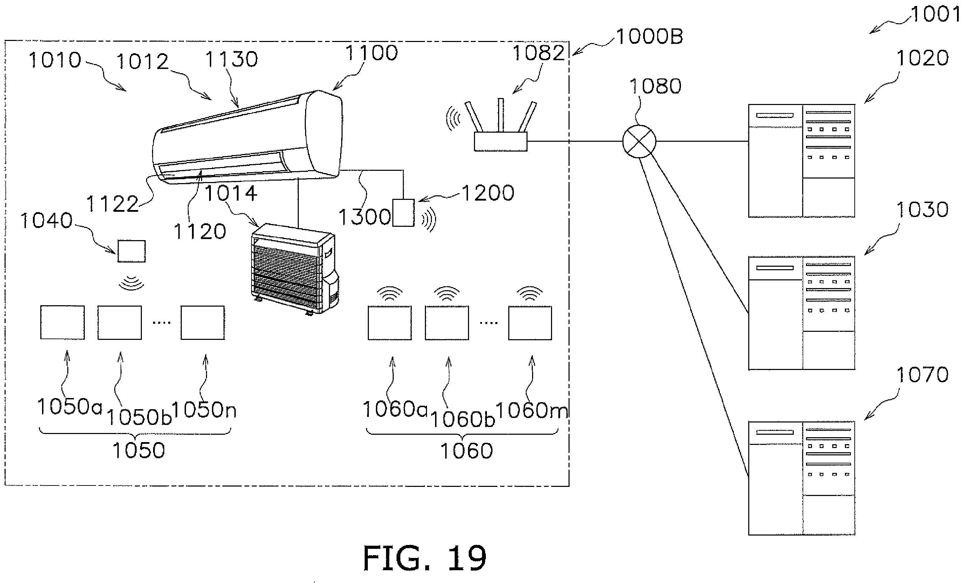

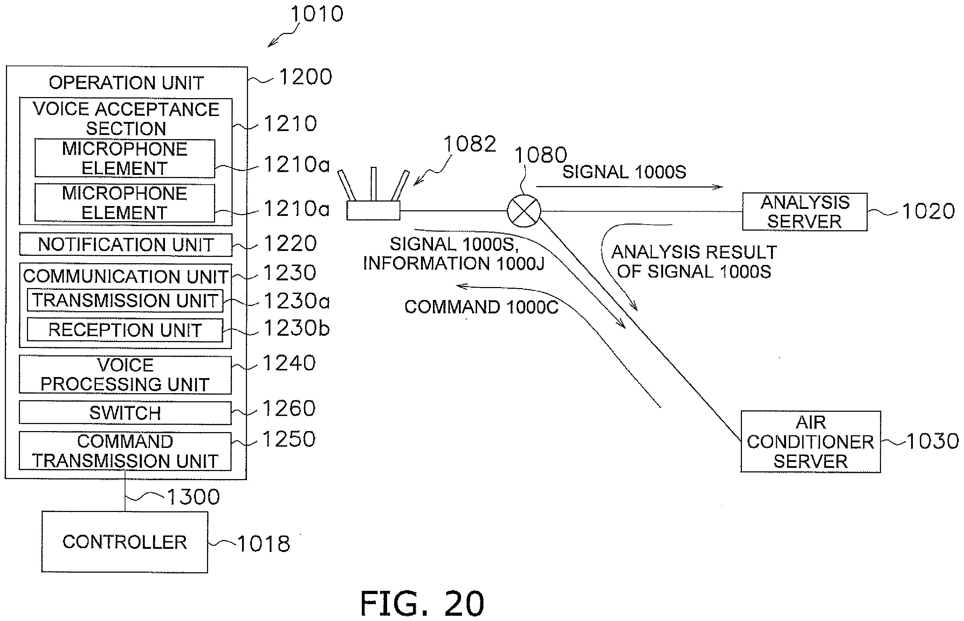

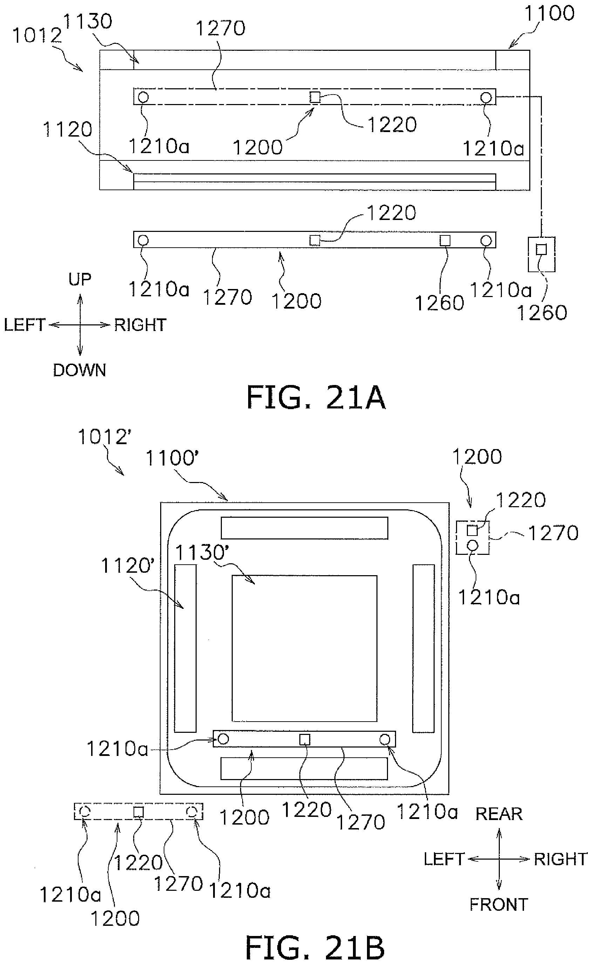

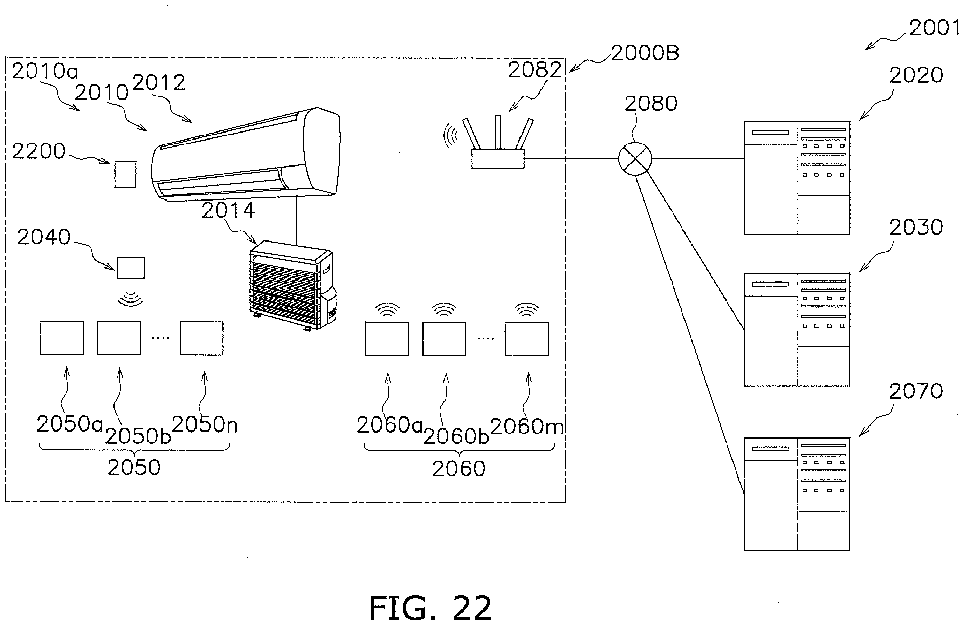

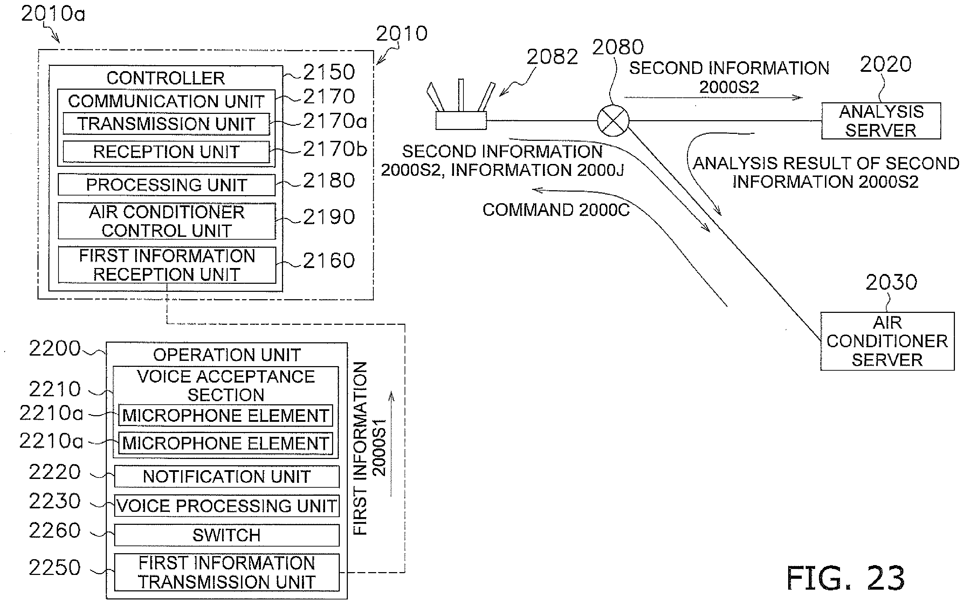

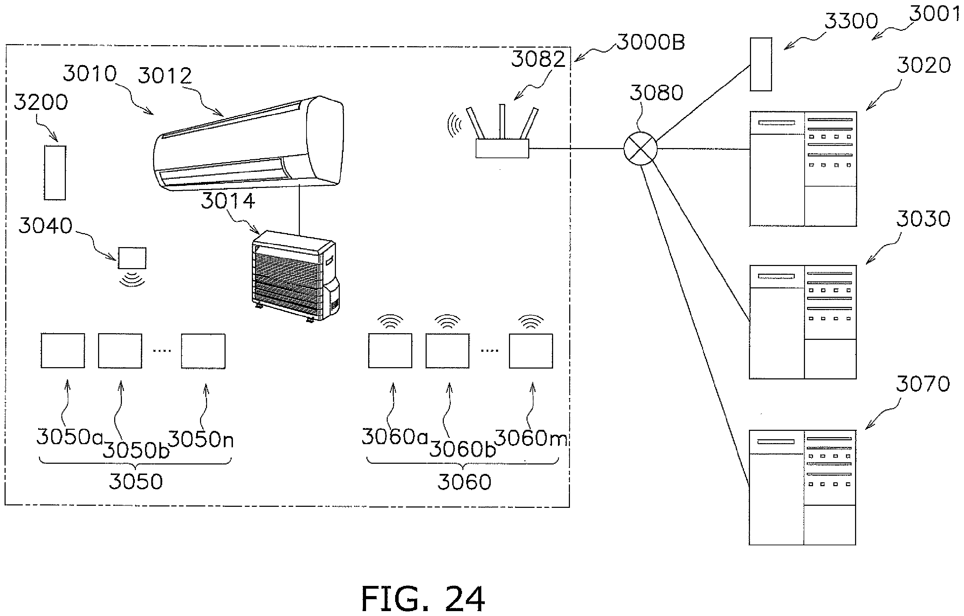

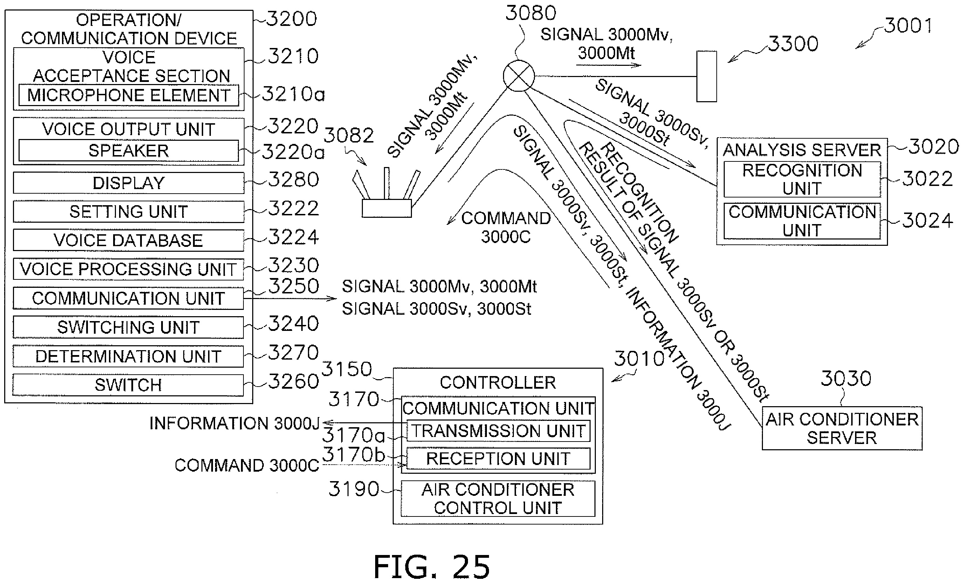

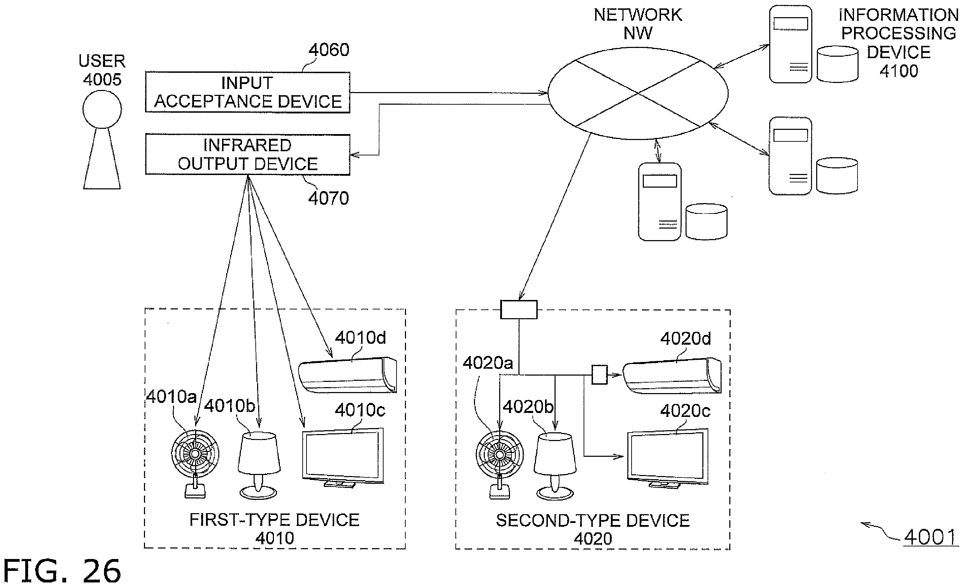

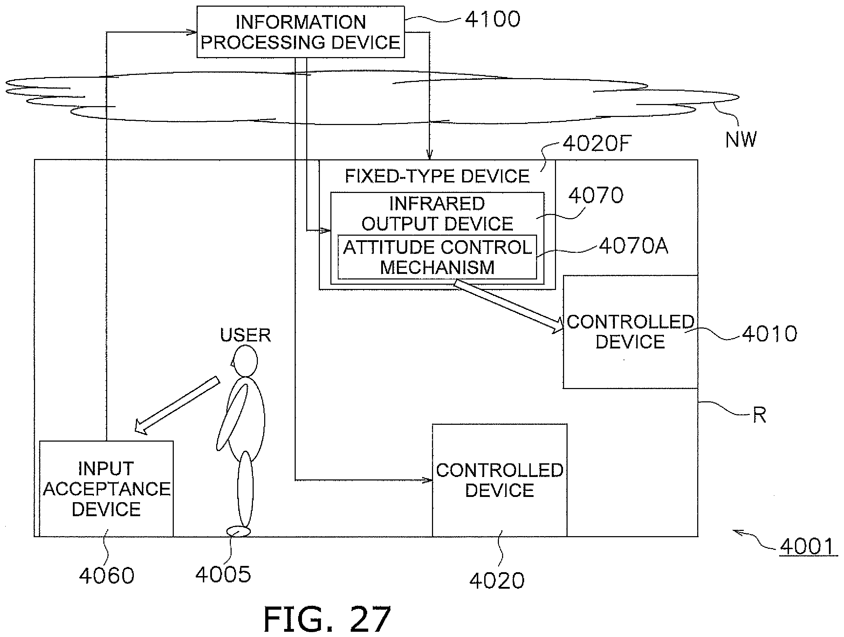

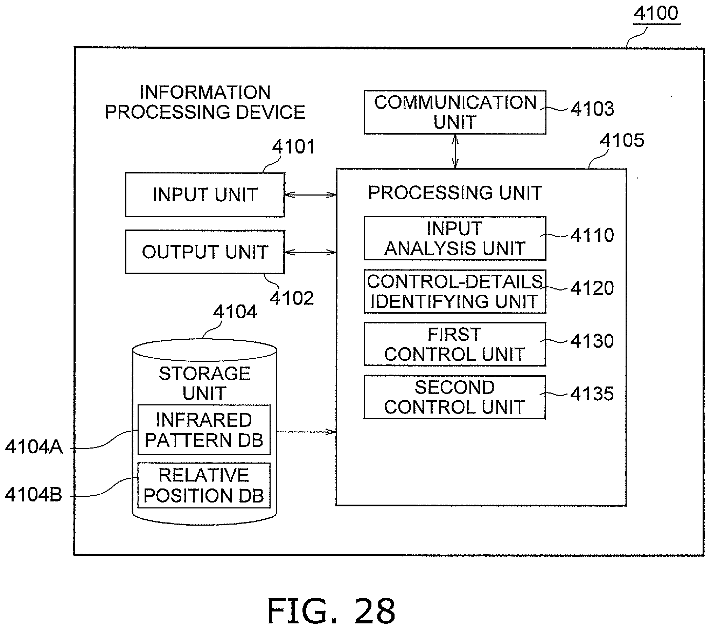

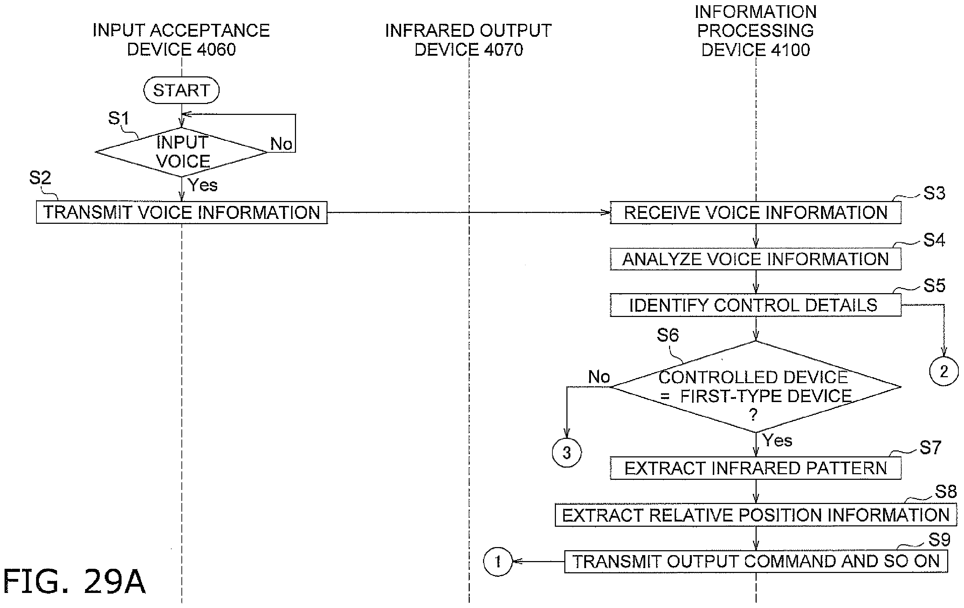

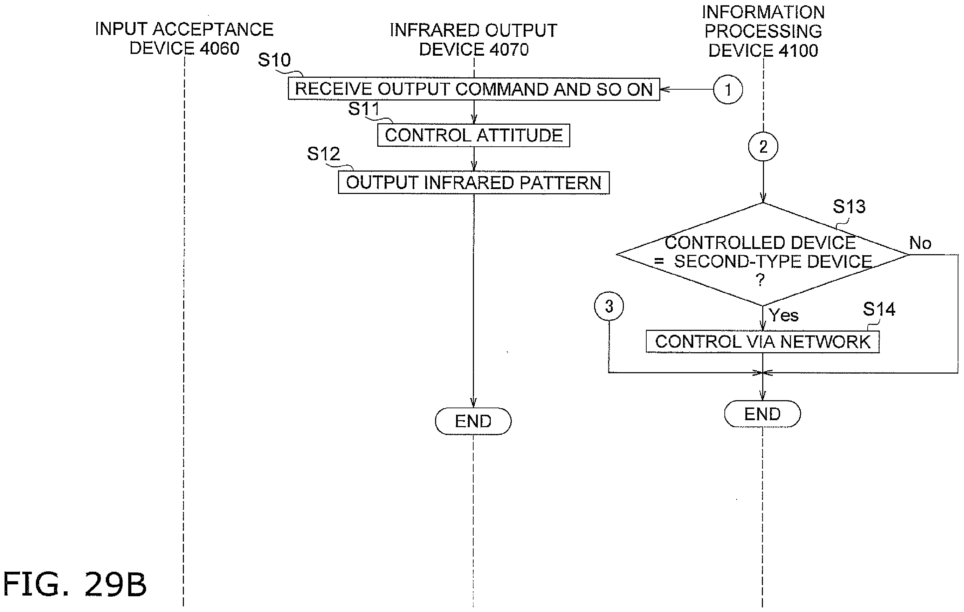

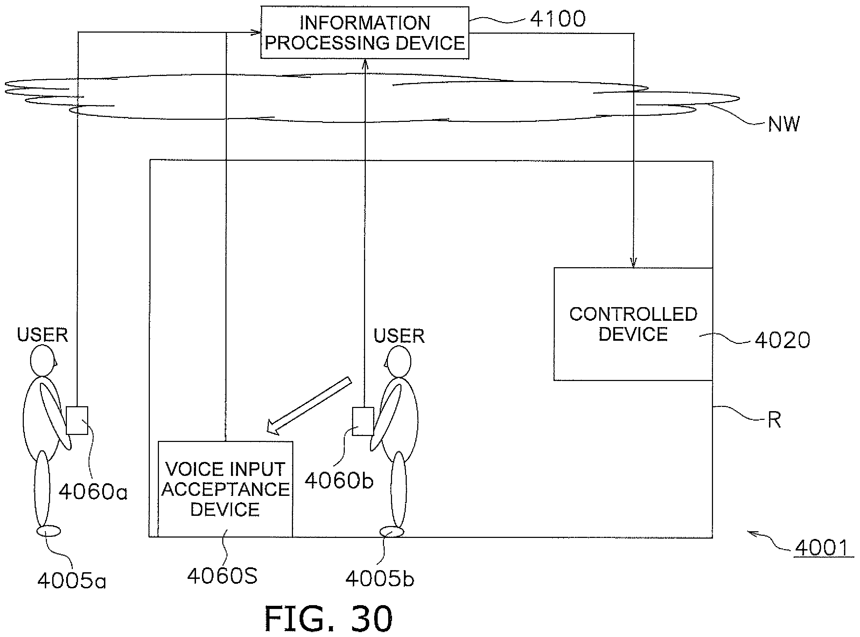

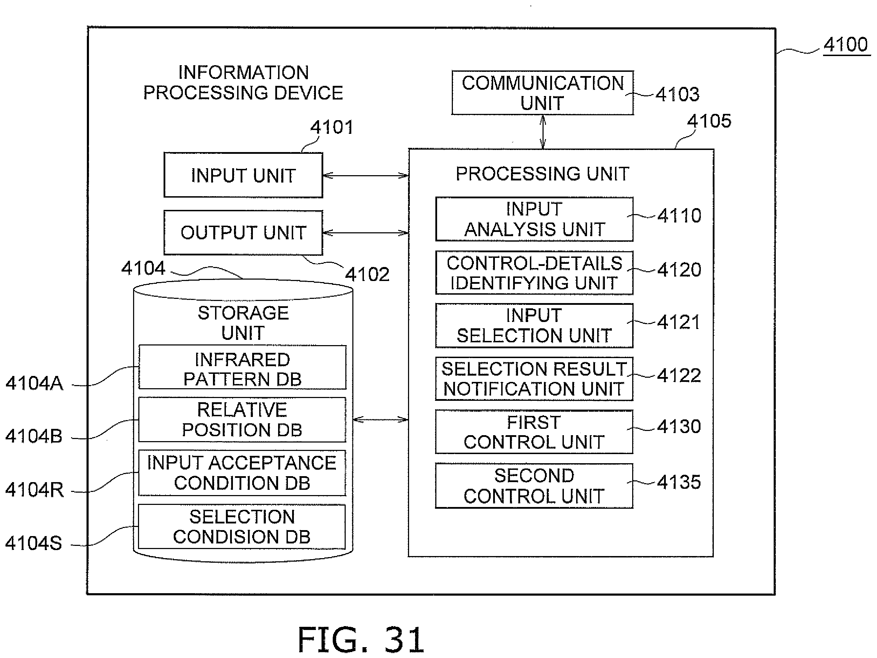

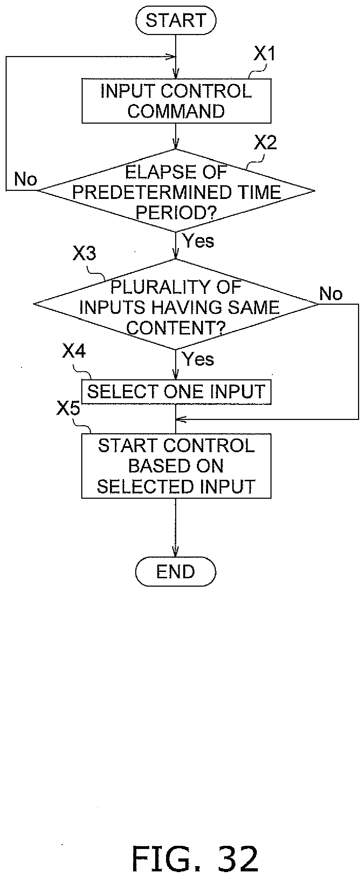

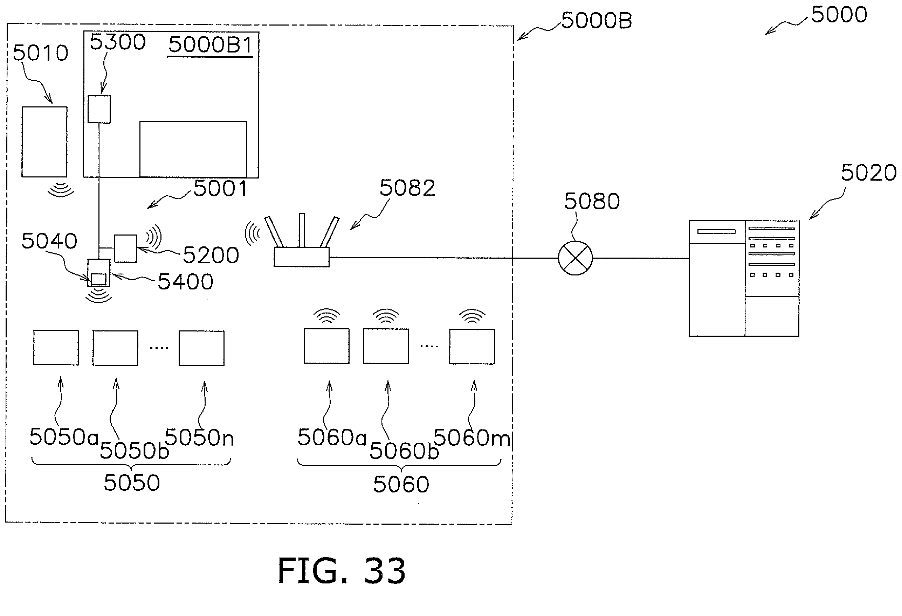

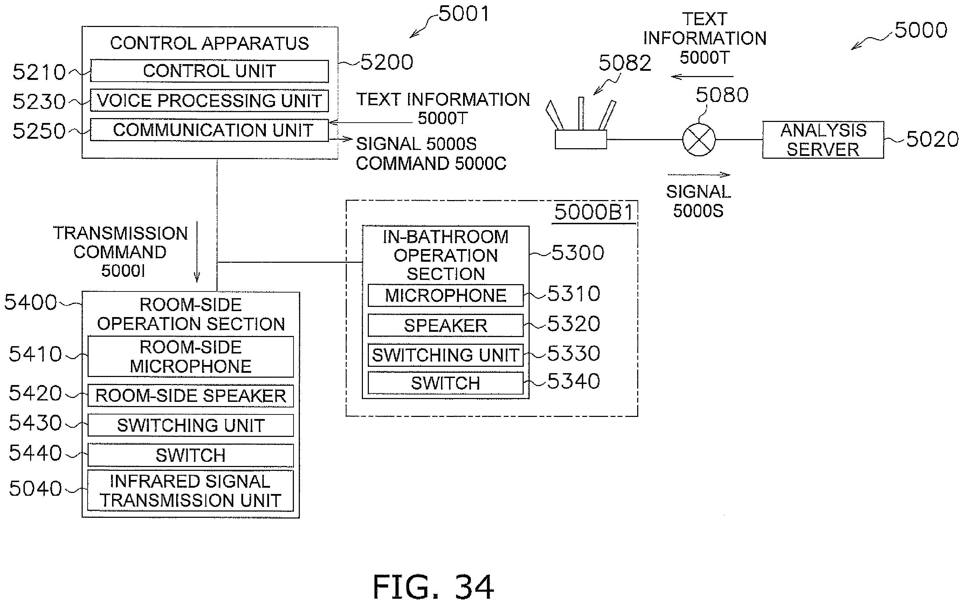

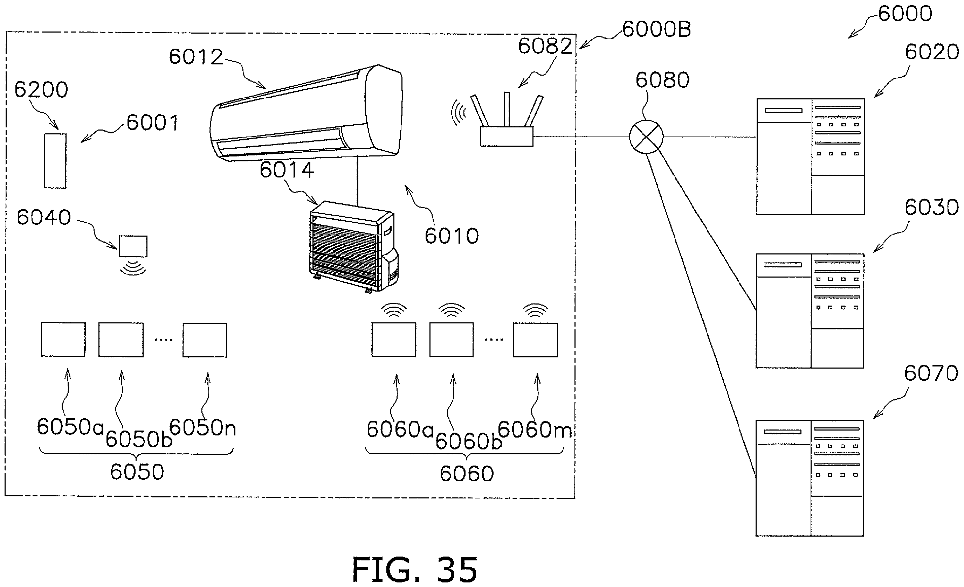

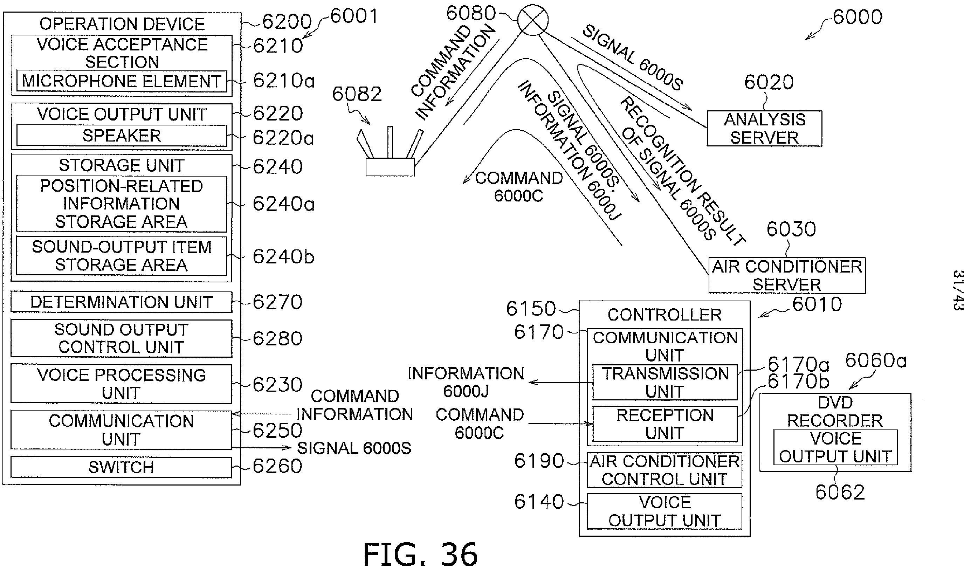

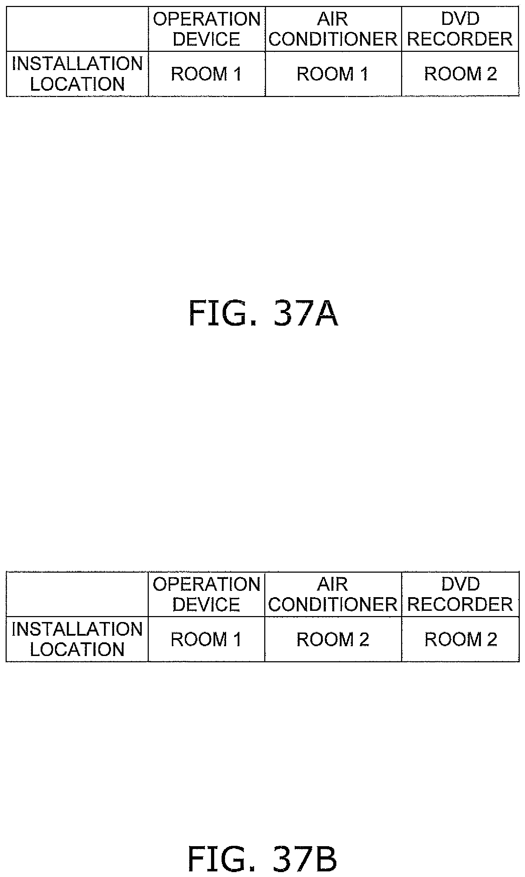

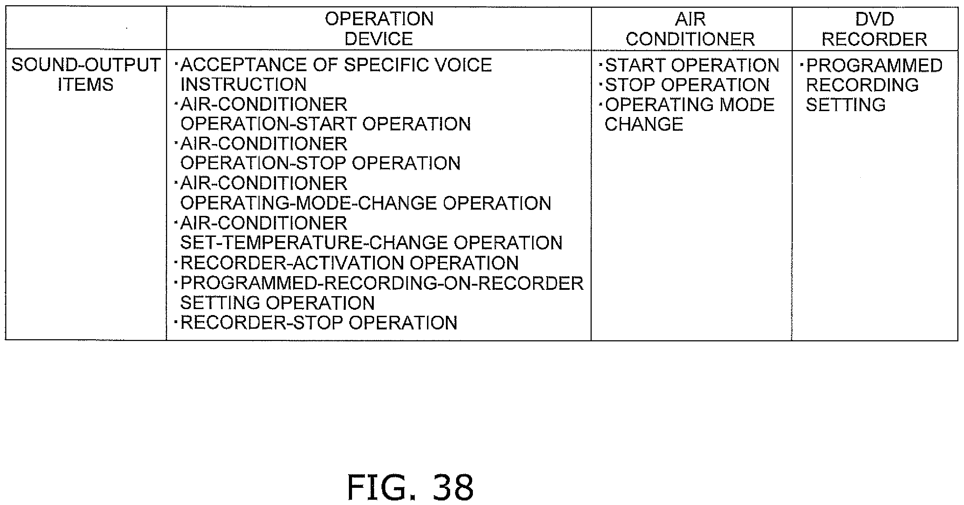

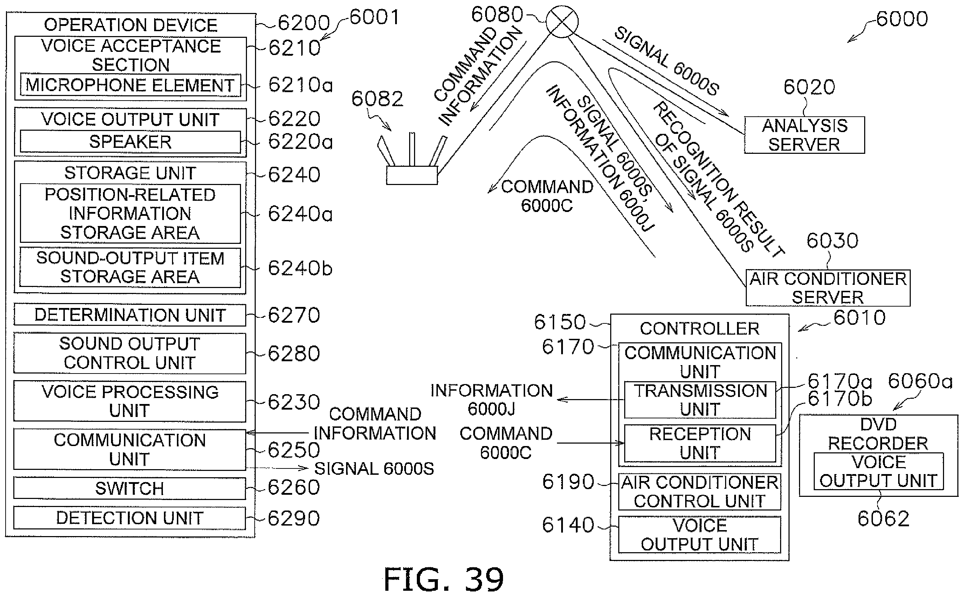

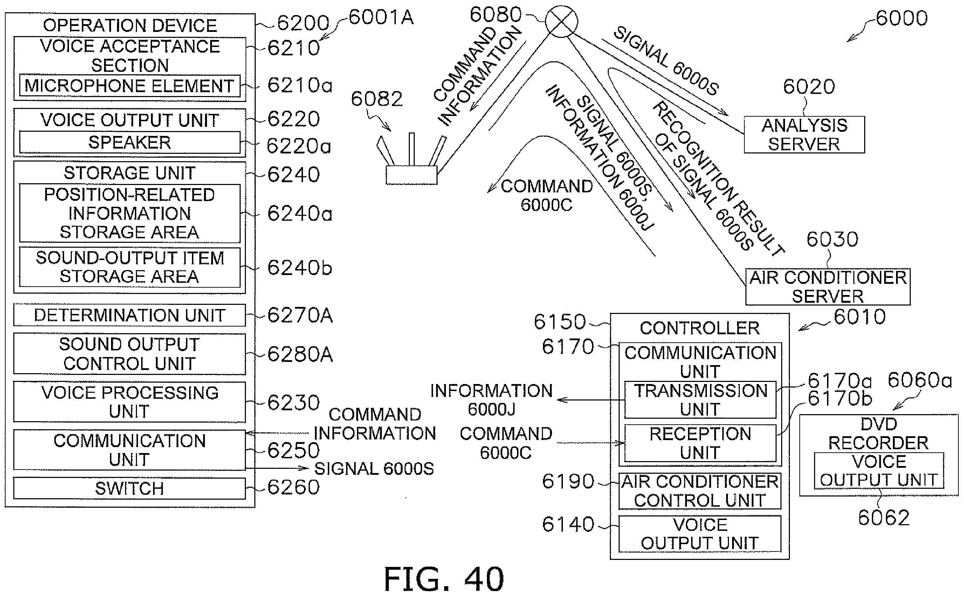

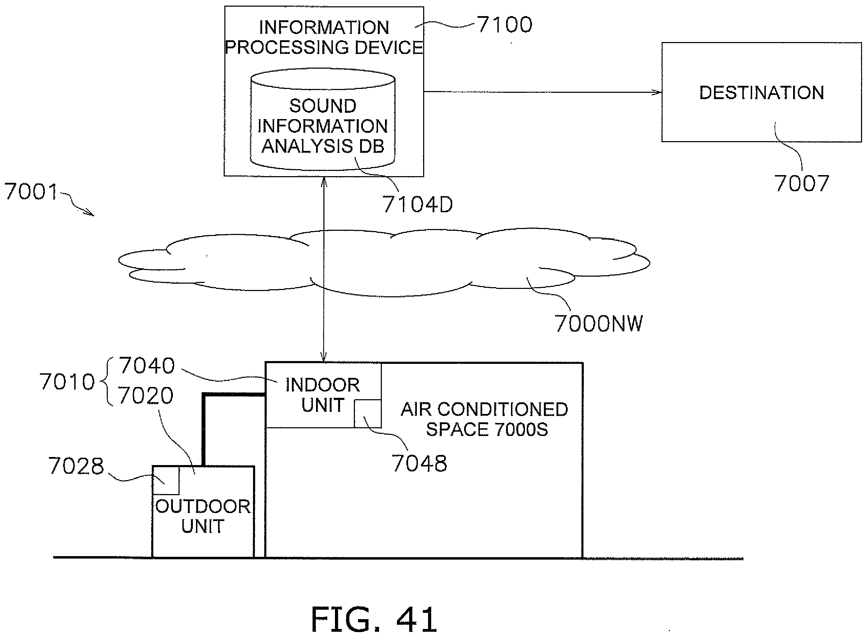

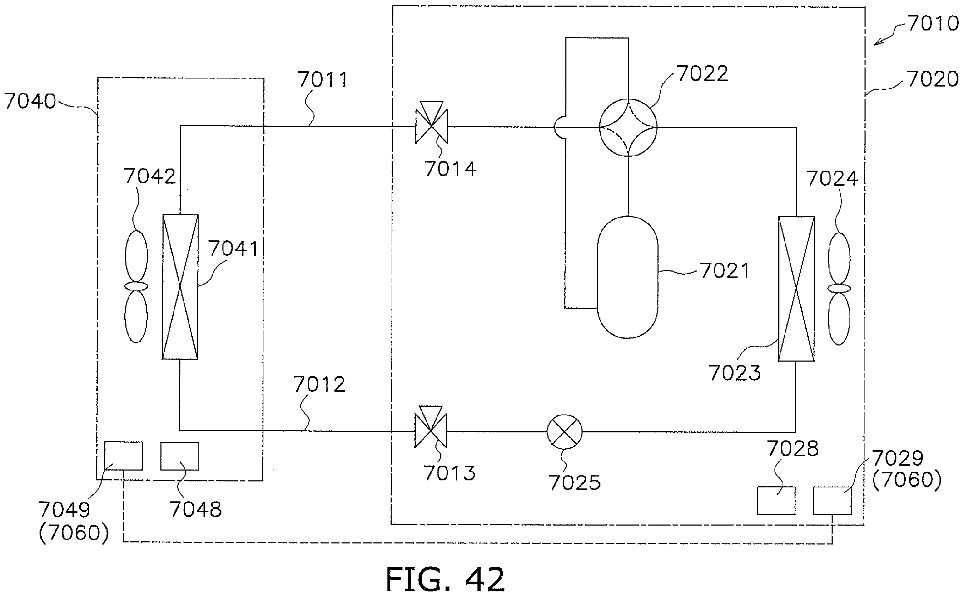

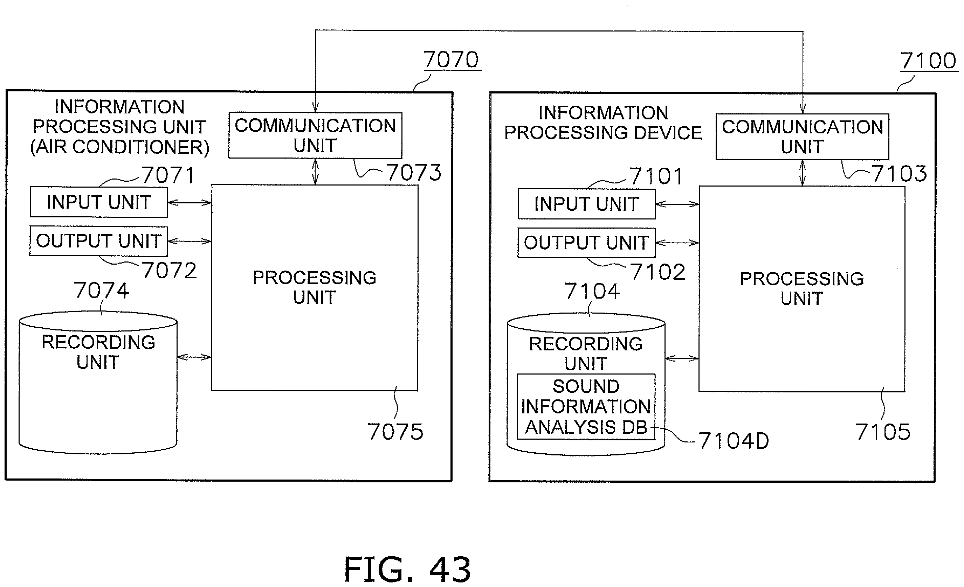

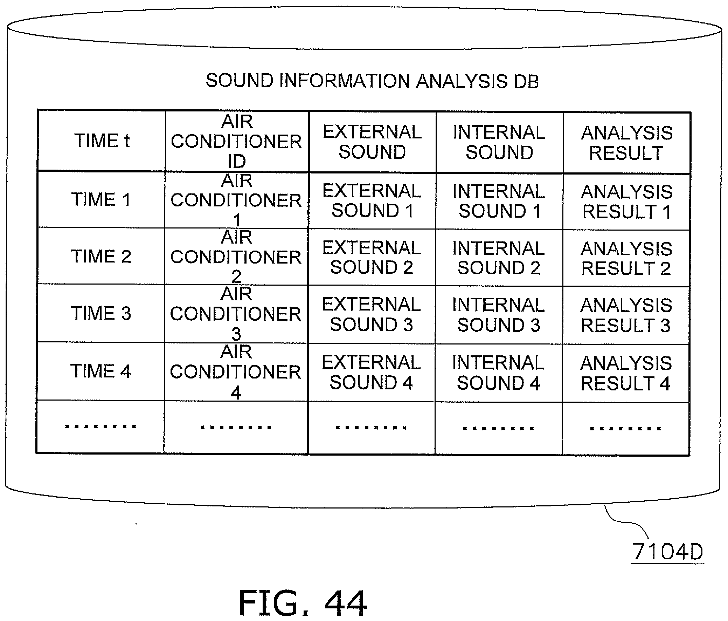

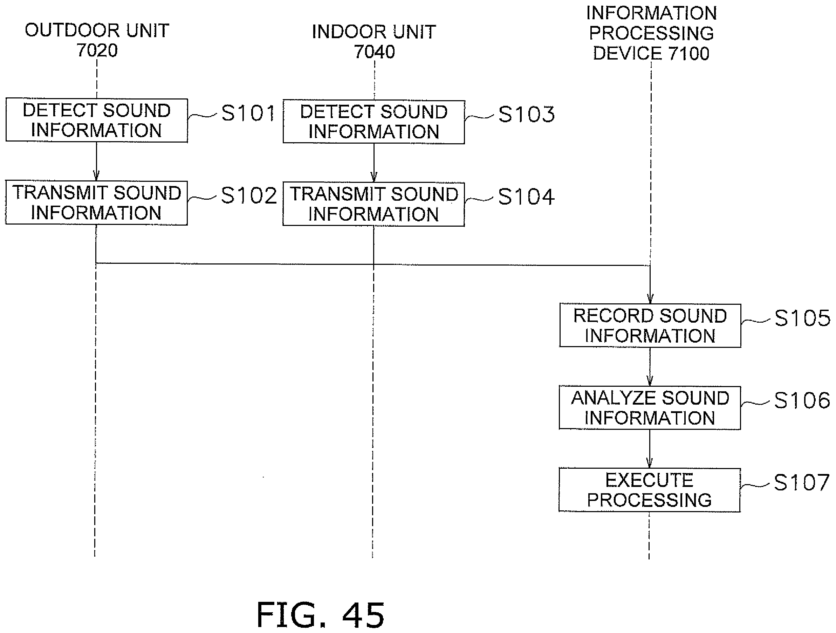

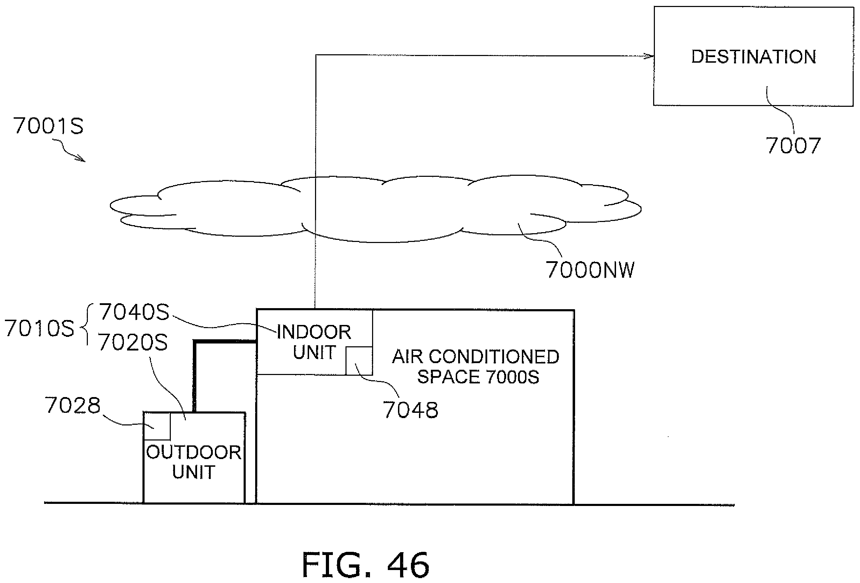

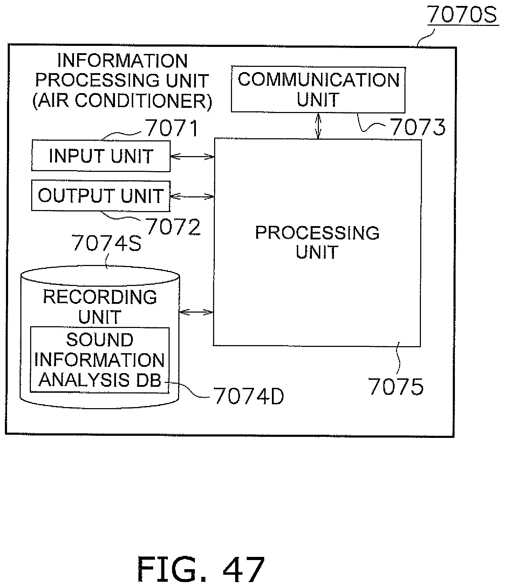

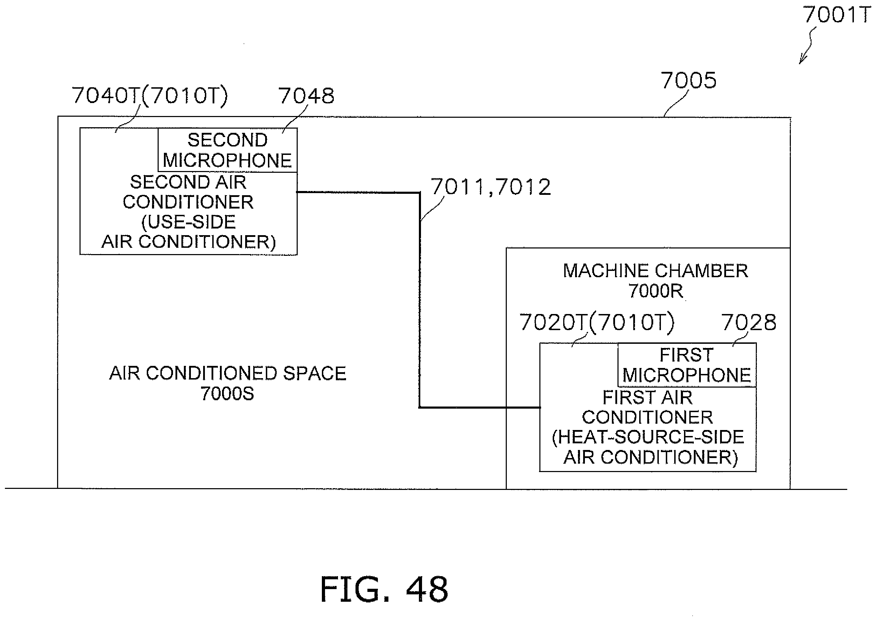

<Fig. 1 > Fig. 1 is a schematic configuration diagram of a device control system including an air conditioner according to a first embodiment.
<Fig. 2> Fig. 2 is a schematic block diagram of the device control system of Fig. 1. In Fig. 2, some of the components of the device control system are not depicted. Fig. 2 is also used to describe a device control system including an air conditioner according to second through sixth embodiments.
<Fig. 3> Fig. 3 is a schematic perspective view of a main body of an indoor unit of the air conditioner of Fig. 1.
<Fig. 4> Fig. 4 includes schematic illustrations of the blow-out of air from a blow-out port in the main body of the indoor unit of Fig. 3. Fig. 4(a) is a view of the main body, as viewed from one side, Fig. 4(b) is a view of the main body, as viewed from below, and Fig. 4(c) is a view of the main body, as viewed from the front (in the front direction).
<Fig. 5> Fig. 5 includes schematic illustrations exemplifying how a microphone element is attached to the main body of the indoor unit of Fig. 1. In the aspect of Fig. 5(a), the microphone element is accommodated in the main body, which uses an opening formed in the main body as a voice capturing portion, and voice captured by the voice capturing portion is received by the microphone element arranged inside the main body. In the aspect of Fig. 5(b), the microphone element is attached to the main body so as to be exposed from a surface of the main body, a portion of the microphone element facing a space to be air-conditioned is used as a voice capturing portion, and voice captured by the voice capturing portion is received by the microphone element.
<Fig. 6> Fig. 6 is a schematic bottom view of a main body of an indoor unit of an air conditioner according to a second embodiment.
<Fig. 7> Fig. 7 is a schematic sectional view taken along the VII-VII cross-section of Fig. 6. In Fig. 7, the illustration of internal devices and the like of the indoor unit is omitted.
<Fig. 8> Fig. 8 is a schematic illustration of the blow-out of air from blow-out ports in the main body of the indoor unit when the main body of the indoor unit of Fig. 6 is viewed from below.
<Fig. 9> Fig. 9 is a schematic sectional view taken along the IX-IX cross-section of Fig. 6. In Fig. 9, the illustration of internal devices and the like of the indoor unit is omitted.
<Fig. 10> Fig. 10 is a schematic bottom view of a main body of an indoor unit of an air conditioner according to a third embodiment.
<Fig. 11> Fig. 11 is a schematic bottom view of a main body of an indoor unit of an air conditioner according to a fourth embodiment.
<Fig. 12> Fig. 12 is a schematic side view of a main body of an indoor unit of an air conditioner according to a fifth embodiment.
<Fig. 13> Fig. 13 is a schematic bottom view of the main body of the indoor unit of the air conditioner of Fig. 12.
<Fig. 14> Fig. 14 is a schematic side view of a main body of an indoor unit of an air conditioner according to a sixth embodiment.
<Fig. 15> Fig. 15 is a schematic front view of a main body of an indoor unit of an air conditioner according to a seventh embodiment.
<Fig. 16> Fig. 16 is a schematic illustration of an indoor unit of an air conditioner according to Modification 1A, which is provide with a voice-capture-direction adjustment mechanism capable of changing the direction in which voice is captured by a voice capturing portion.
<Fig. 17> Fig. 17 is a schematic illustration of the voice-capture-direction adjustment mechanism of Fig. 16.
<Fig. 18> Fig. 18 is a schematic block diagram of the air conditioner when the voice capturing portion automatically changes the direction in which voice is captured by using the voice-capture-direction adjustment mechanism of Fig. 17.
<Fig. 19> Fig. 19 is a schematic configuration diagram of a device control system including an air conditioner according to an eighth embodiment. An operation unit for the air conditioner is an example of an operation apparatus for an air conditioner.
<Fig. 20> Fig. 20 is a schematic block diagram of the device control system of Fig.
19. In Fig. 20, some of the components of the device control system are not depicted.
   <Fig. 21A> Fig. 21A is a schematic diagram of how a main body and an operation unit (operation apparatus) of a wall-mounted indoor unit of the air conditioner of Fig. 19 are installed.
   <Fig. 21B> Fig. 21B is a schematic diagram of how a main body and an operation unit (operation apparatus) of a ceiling-embedded indoor unit of an air conditioner according to another example are installed.
   <Fig. 22> Fig. 22 is a schematic configuration diagram of a device control system including air-conditioning system/air conditioner according to a ninth embodiment.
   <Fig. 23> Fig. 23 is a schematic block diagram of the device control system of Fig. 22. In Fig. 23, some of the components of the device control system are not depicted.
<Fig. 24> Fig. 24 is a schematic configuration diagram of a device operation/communication system, which is an example of a communication system according to a tenth embodiment.
<Fig. 25> Fig. 25 is a schematic block diagram of the device operation/communication system of Fig. 24. In Fig. 25, some of the components of the device operation/communication system are not depicted.
<Fig. 26> Fig. 26 is a schematic diagram illustrating the configuration of a control system 4001 according to an eleventh embodiment.
<Fig. 27> Fig. 27 is a schematic diagram illustrating the configuration of the control system 4001 according to the eleventh embodiment.
<Fig. 28> Fig. 28 is a schematic diagram illustrating the configuration of an information processing device 4100 according to the eleventh embodiment.
<Fig. 29A> Fig. 29A is a sequence diagram describing the operation of the control system 4001 according to the eleventh embodiment.
<Fig. 29B> Fig. 29B is a sequence diagram describing the operation of the control system 4001 according to the eleventh embodiment.
<Fig. 30> Fig. 30 is a schematic diagram describing a concept of the control system 4001 according to the eleventh embodiment.
<Fig. 31> Fig. 31 is a schematic diagram illustrating the configuration of the information processing device 4100 according to the eleventh embodiment.
<Fig. 32> Fig. 32 is a flowchart describing the operation of the control system 4001 according to the eleventh embodiment.
<Fig. 33> Fig. 33 is a schematic configuration diagram of a device system including a device control system according to a twelfth embodiment.
<Fig. 34> Fig. 34 is a schematic block diagram of the device system of Fig. 33. In Fig. 34, some of the components of the device system are not depicted.
<Fig. 35> Fig. 35 is a schematic configuration diagram of a device system including a device management system according to a thirteenth embodiment.
<Fig. 36> Fig. 36 is a schematic block diagram of the device system of Fig. 35. In Fig. 36, some of the components of the device system are not depicted.
<Fig. 37A> Fig. 37A is an example of positional-relationship-related information stored in a storage unit of a operation device in the device management system of Fig. 35.
<Fig. 37B> Fig. 37B is another example of the positional-relationship-related information stored in the storage unit of the operation device in the device management system of Fig. 35.
<Fig. 38> Fig. 38 is an example of sound-output items stored in the storage unit of the operation device in the device management system of Fig. 35.
<Fig. 39> Fig. 39 is a schematic block diagram of a device system including a device management system according to Modification 7A.
<Fig. 40> Fig. 40 is a schematic block diagram of a device system including a device management system according to a fourteenth embodiment. In Fig. 40, some of the components of the device system are not depicted.
<Fig. 41> Fig. 41 is a schematic diagram illustrating the configuration of a sound information analysis system 7001 according to a fifteenth embodiment.
<Fig. 42> Fig. 42 is a schematic diagram illustrating the configuration of a refrigeration cycle of an air conditioner 7010 according to the fifteenth embodiment.
<Fig. 43> Fig. 43 is a schematic diagram illustrating the configuration of an information processing unit 7070 and an information processing device 7100 according to the fifteenth embodiment.
<Fig. 44> Fig. 44 is a schematic diagram illustrating the configuration of a sound information analysis DB 7104D according to the fifteenth embodiment.
<Fig. 45> Fig. 45 is a sequence diagram illustrating an example of the operation of the sound information analysis system 7001 according to the fifteenth embodiment.
<Fig. 46> Fig. 46 is a schematic diagram illustrating a concept of a sound information analysis system 7001S according to a sixteenth embodiment.
<Fig. 47> Fig. 47 is a schematic diagram illustrating the configuration of an information processing unit 7070S according to the sixteenth embodiment.
<Fig. 48> Fig. 48 is a schematic diagram illustrating a concept of a sound information analysis system 7001T according to a seventeenth embodiment.

### DESCRIPTION OF EMBODIMENTS

The following describes embodiments with reference to the drawings. The configuration of each of the following embodiments may be combined with the configuration of any other embodiment or the configuration of any modification as appropriate so long as consistency is maintained between them.

### <First Embodiment>

An air conditioner 10 according to a first embodiment will be described.

### (1) Overview of Device Control System

First, a device control system 1 including the air conditioner 10 will be described with reference to mainly Fig. 1 and Fig. 2.

Fig. 1 is a schematic configuration diagram of the device control system 1 including the air conditioner 10. Fig. 2 is a schematic block diagram of the device control system 1. In Fig. 2, some of the components of the device control system 1 are not depicted.

The device control system 1 is a system that controls the air conditioner 10 using instructions given by an operator by voice. Further, the device control system 1 is a system that controls devices 50a, 50b, ..., and 50n included in a first device group 50 and devices 60a, 60b, ..., and 60m included in a second device group 60 described below using instructions given by an operator by voice.

The device control system 1 mainly includes the air conditioner 10, the first device group 50, the second device group 60, an infrared output device 40, an analysis server 20, an air conditioner server 30, and a device server 70 (see Fig. 1).

The air conditioner 10, the first device group 50, the second device group 60, and the infrared output device 40 are devices arranged in a building B (see Fig. 1). The building B is, for example, but not limited to, a detached house. The building B may be an office building, a commercial facility, a factory, or the like. The analysis server 20, the air conditioner server 30, and the device server 70 are generally, but not limited to, installed in locations different from the building B.

Fig. 1 depicts one building B in which the air conditioner 10, the first device group 50, and the second device group 60, whose operations are controlled by the device control system 1, are arranged. However, a plurality of buildings B may be used. That is, the device control system 1 may be a system that controls the operation of the air conditioners 10, the first device groups 50, and the second device groups 60 arranged in each of the plurality of buildings B. For simplicity of description, it is assumed here that a single building B is used.

Further, the number of air conditioners 10, the number of devices in the first device group 50, the number of devices in the second device group 60, and the number of infrared output devices 40, which are arranged in the building B, are not limited to those depicted in Fig. 1, and may be each one or more. The following description is made assuming that one air conditioner 10 and one infrared output device 40 are arranged in the building B and the first device group 50 and the second device group 60 arranged in the building B each include a plurality of devices.

The following further describes the air conditioner 10, the first device group 50, the second device group 60, the infrared output device 40, the analysis server 20, the air conditioner server 30, and the device server 70.

### (1-1) Air Conditioner

The air conditioner 10 mainly has an indoor unit 12, an outdoor unit 14, a connection pipe (not illustrated) that connects the indoor unit 12 and the outdoor unit 14 to each other, a communication unit 16, a controller 18, and microphone elements 140 (see Fig. 1 and Fig. 2). The air conditioner 10 is an apparatus that performs air-conditioning of a space to be air-conditioned. The space to be air-conditioned is, for example, a room where the indoor unit 12 is arranged in the building B.

The air conditioner 10 is an air conditioner that can be operated by inputting a voice instruction to the microphone elements 140 (see Fig. 2). Non-limiting examples of the voice instruction include voice such as "turn air conditioning on" and "set the set temperature to 25°C". The air conditioner 10 may be configured to be operable using a typical remote control in addition to operation via voice.

In the device control system 1, the microphone elements 140 are configured to be capable of also accepting voice instructions for the devices 50a, 50b, ..., and 50n in the first device group 50 and the devices 60a, 60b, ..., and 60m in the second device group 60.

The voice-based operations of the air conditioner 10, the devices 50a, 50b, ..., and 50n in the first device group 50, and the devices 60a, 60b, ..., and 60m in the second device group 60 will be described below.

In the air conditioner 10, the indoor unit 12 and the outdoor unit 14 are connected to each other via the connection pipe, thereby connecting an indoor heat exchanger (not illustrated) of the indoor unit 12 and a compressor, an outdoor heat exchanger, an expansion valve, and the like (not illustrated) of the outdoor unit 14 to each other via a pipe. Consequently, a refrigerant circuit is formed. In the air conditioner 10, refrigerant is circulated in the refrigerant circuit, thereby cooling/heating the space where the indoor unit 12 is installed.

In this embodiment, the air conditioner 10 is configured such that in the indoor heat exchanger of the indoor unit 12, refrigerant flowing in the indoor heat exchanger and air in the space to be air-conditioned exchange heat; however, the air conditioner is not limited to such a device. For example, the air conditioner 10 may be an apparatus configured such that in the indoor heat exchanger of the indoor unit 12 (fan coil unit), cold water/hot water flowing in the indoor heat exchanger and air in the space to be air-conditioned exchange heat.

The operation of the air conditioner 10 is controlled by the controller 18. The controller 18 includes, for example, a control board 18a included in the indoor unit 12 and a control board (not illustrated) included in the outdoor unit 14. The operation of the components of the indoor unit 12 is mainly controlled by the control board 18a of the indoor unit 12, and the operation of the components of the outdoor unit 14 is mainly controlled by the control board of the outdoor unit 14. CPUs on the control boards of the indoor unit 12 and the outdoor unit 14, which constitute the controller 18, execute an air conditioning control program to control the operation of the components of the air conditioner 10 in accordance with a command C or the like described below transmitted from the air conditioner server 30.

The operational principle and the content of the operation of the air conditioner 10 using a vapor compression refrigeration cycle are widely known to the public and will not be described here. The air conditioner 10 does not need to be an air conditioner capable of both cooling/heating the space to be air-conditioned, and may be a cooling-only or heating-only air conditioner.

The indoor unit 12 has a voice processing chip 170 as another electronic component of the control board 18a. The voice processing chip 170 is an example of a voice recognition chip. Further, the voice processing chip 170 is an example of a voice recognition unit. The voice processing chip 170 is an integrated circuit that processes voice instructions acquired by the microphone elements 140 to generate a signal S described below. Further, the voice processing chip 170 is an integrated circuit that recognizes only a specific voice instruction among the voice instructions acquired by the microphone elements 140 (executes voice recognition processing on the voice instructions to recognize only a specific voice instruction) and generates a predetermined command C0.

The specific voice instruction indicates voice for, for example, requesting the air conditioner 10 to prepare to input the next voice instruction. The predetermined command C0 includes, for example, a command for requesting the microphone elements 140 to accept the subsequent voice instruction. Further, the predetermined command C0 includes, for example, a command for requesting a transmission unit 16a of the communication unit 16 described below to prepare to transmit the signal S that is based on a voice instruction (accepted subsequently to the specific voice instruction), other than the specific voice instruction, among the voice instructions accepted by the microphone elements 140.

The specific voice instruction may not be voice for requesting the air conditioner 10 to prepare to input the next voice instruction. For example, the specific voice instruction may be voice for requesting execution of the basic operation (for example, turning on/off) of the air conditioner 10, and the predetermined command C0 generated in accordance with the specific voice instruction may be a command for requesting the controller 18 to start/stop the operation of the air conditioner 10. The signal S that is based on a voice instruction for requesting execution of an operation of the air conditioner 10, other than the basic operation, may be transmitted to the outside (the analysis server 20).

The voice processing chip 170 is preferably integrated with the control board 18a. That is, the indoor unit 12 preferably has a module 180 into which the control board 18a and the voice processing chip 170 are integrated with each other (see Fig. 2).

The air conditioner 10 has the communication unit 16 for communicating with the analysis server 20 or the air conditioner server 30 external to the air conditioner 10. The air conditioner 10 (the communication unit 16) is connected to the analysis server 20 and the air conditioner server 30 via a network 80 (see Fig. 1). The network 80 is the Internet, here, but may be any other WAN. The air conditioner 10 is connected to a router 82 via a wireless LAN, and is connected to the network 80 via the router 82 (see Fig. 1). The router 82 has a WAN-side interface and a LAN-side interface, and interconnects a WAN and a LAN. The air conditioner 10 and the router 82 may be connected via a wired LAN, rather than via a wireless LAN.

The network 80 may be a LAN.

The communication unit 16 is, for example, a wireless LAN adapter that performs wireless communication with the router 82. The communication unit 16 has, as functional units, the transmission unit 16a that transmits information, and a reception unit 16b that receives information (see Fig. 2).

The transmission unit 16a transmits, for example, the signal S that is based on a voice instruction accepted by the microphone elements 140 to the outside (see Fig. 2). In particular, the transmission unit 16a transmits the signal S that is based on a voice instruction other than the specific voice instruction among the voice instructions accepted by the microphone elements 140 to the outside. However, this is not limiting, and the transmission unit 16a may transmit, for all the voice instructions accepted by the microphone elements 140, signals S that are based on the voice instructions to the outside.

Here, the signal S is a digital voice signal obtained by subjecting the voice instruction to AD conversion by the voice processing chip 170. The signal S may be data obtained by, for example, further compressing the digital voice signal by the voice processing chip 170 using various voice data compression techniques (such as MP3). Alternatively, the signal S may be data obtained by converting the voice instruction into text (voice-to-text converted data) by the voice processing chip 170. The transmission unit 16a preferably transmits the signal S to a plurality of addresses (for example, to the analysis server 20 and the air conditioner server 30).

Further, the transmission unit 16a preferably transmits information J on the state quantity for at least one of the air conditioner 10 and the space to be air-conditioned to the air conditioner server 30 (see Fig. 2). Non-limiting examples of the state quantity for the air conditioner 10 include temperatures/pressures of refrigerant measured by sensors (not illustrated) at various locations in the refrigerant circuit, the number of revolutions of an inverter-controlled motor (not illustrated) of the compressor of the outdoor unit 14, and the opening degree of the expansion valve of the outdoor unit 14. Non-limiting examples of the state quantity for the space to be air-conditioned include the temperature of the space to be air-conditioned measured by a sensor (not illustrated).

The reception unit 16b receives, for example, the command C corresponding to the signal S transmitted from the transmission unit 16a (in particular, the signal S that is based on a voice instruction for control of the air conditioner 10) from the outside. More specifically, the reception unit 16b receives the command C generated on the basis of the result of analysis of the signal S by the analysis server 20 (in particular, the signal S that is based on a voice instruction for control of the air conditioner 10). Preferably, the reception unit 16b receives the command C generated by the air conditioner server 30 on the basis of the result of analysis of the signal S by the analysis server 20 (in particular, the signal S that is based on a voice instruction for control of the air conditioner 10) and on the basis of the information J on the state quantity transmitted from the transmission unit 16a to the air conditioner server 30.

The controller 18 that controls the operation of the air conditioner 10 controls the operation of the air conditioner 10 in accordance with the command C. For example, but not limitation, the command C is related to at least one of turning on/off of the operation of the air conditioner 10, switching among the operating modes (cooling/heating/dehumidification/ventilation, etc.) of the air conditioner 10, changing of the set temperature (the target temperature of the space to be air-conditioned), a target value of the number of revolutions of the inverter-controlled motor (not illustrated) of the compressor of the outdoor unit 14, a target value of the opening degree of the expansion valve of the outdoor unit 14, and a target value of the number of revolutions of an inverter-controlled fan motor 160 of a fan 150 of the indoor unit 12.

### (1-2) First Device Group

The devices 50a, 50b, ..., and 50n in the first device group 50 are devices that can be operated using infrared signals. The devices 50a, 50b, ..., and 50n in the first device group 50 include, for example, but not limitation, an electric fan, a lighting device, and an audio device. The devices 50a, 50b, ..., and 50n in the first device group 50 may not be connected to the network 80.

The devices 50a, 50b, ..., and 50n in the first device group 50 are devices that can be operated using infrared signals transmitted from the infrared output device 40 in response to input of voice instructions to the microphone elements 140 of the air conditioner 10. Operations available by infrared signals include, for example, turning on/off the devices 50a, 50b, ..., and 50n, changing the level of ventilation in the case of an electric fan, changing the brightness in the case of a lighting device, and changing the volume level in the case of an audio device.

The devices 50a, 50b, ..., and 50n in the first device group 50 may be configured to be operable with a typical infrared remote control or switches on the main bodies of the devices 50a, 50b, ..., and 50n, in addition to operation via voice (in addition to operation using infrared signals transmitted from the infrared output device 40 in response to input of voice instructions).

### (1-3) Second Device Group

The devices 60a, 60b, ..., and 60m in the second device group 60 are devices that can be operated using signals transmitted via the network 80. The devices 60a, 60b, ..., and 60m in the second device group 60 include, for example, but not limitation, a television set and a DVD recorder. The devices 60a, 60b, ..., and 60m in the second device group 60 each have a wireless LAN adapter (not illustrated) and are connected to the network 80 via the router 82 (see Fig. 1). The devices 60a, 60b, ..., and 60m in the second device group 60 are communicably connected to at least one of the analysis server 20 and the device server 70 via the network 80 (see Fig. 1). The devices 60a, 60b, ..., and 60m in the second device group 60 and the router 82 may be connected via a wired LAN, rather than via a wireless LAN.

The devices 60a, 60b, ..., and 60m in the second device group 60 are operated using signals transmitted from the analysis server 20 or the device server 70 in response to input of voice instructions to the microphone elements 140 of the air conditioner 10. Operations available by signals transmitted from the analysis server 20 or the device server 70 include, for example, turning on/off the devices 60a, 60b, ..., and 60m, changing the channel or volume level of a television set, and setting a programmed recording on a DVD recorder.

The devices 60a, 60b, ..., and 60m in the second device group 60 may be configured to be operable with a commonly available remote control or switches on the main bodies of the devices 60a, 60b, ..., and 60m, in addition to operation via voice (in addition to operation by signals transmitted via the network 80 in response to input of voice instructions).

### (1-4) Analysis Server

The analysis server 20 is an example of an analysis apparatus.

The analysis server 20 is connected to the air conditioner 10 (the communication unit 16) via the network 80. When the microphone elements 140 of the air conditioner 10 accept a voice instruction, as described above, the transmission unit 16a of the air conditioner 10 transmits the signal S that is based on the voice instruction to the analysis server 20 via the network 80 (see Fig. 2). Voice instructions accepted by the microphone elements 140 include a voice instruction for control of the air conditioner 10, voice instructions for control of the devices 50a, 50b, ..., and 50n in the first device group 50, and voice instructions for control of the devices 60a, 60b, ..., and 60m in the second device group 60. In other words, the analysis server 20 receives the signals S that are based on the voice instructions for control of the air conditioner 10, the devices 50a, 50b, ..., and 50n, and the devices 60a, 60b, ..., and 60m.

Further, the analysis server 20 is communicably connected to the air conditioner server 30, the device server 70, and the infrared output device 40 via the network 80.

The analysis server 20 is a computer that executes a program stored in a storage device to analyze the received signal S. Specifically, for example, the analysis server 20 performs voice recognition of a received voice signal.

The storage device of the analysis server 20 stores, in addition to the program, for example, a list of devices that can be operated by input of voice instructions to the microphone elements 140 (the air conditioner 10, the devices 50a, 50b, ..., and 50n in the first device group 50, and the devices 60a, 60b, ..., and 60m in the second device group 60). That is, the analysis server 20 knows which device can be operated by input of a voice instruction to the microphone elements 140. In addition, for the devices 60a, 60b, ..., and 60m in the second device group 60, information as to whether the device 60a, 60b, ..., or 60m to be controlled is a direct control target of the analysis server 20 (a control target of either of the analysis server 20 and the device server 70) is also stored.

The analysis server 20 analyzes the voice represented by the signal S to determine a feature value for the voice, and generates text information from the feature value by using a voice recognition dictionary stored in the storage device, which includes an acoustic model, a linguistic model, and a pronunciation dictionary. Non-limiting examples of the text information generated by the analysis server 20 include text information such as "turn the air conditioner on", "set the set temperature of the air conditioner to 25 degrees", "turn the lighting device off', and "turn the television set on".

When the text information is related to control of the air conditioner 10 (for example, when the text information includes an air-conditioner-related keyword), the analysis server 20 transmits the analysis result of the signal S (i.e., the generated text information) to the air conditioner server 30 via the network 80 (see Fig. 2).

When the text information is related to control of the device 50a, 50b, ..., or 50n in the first device group 50 (for example, when the text information includes a keyword related to the first device group 50), the analysis server 20 transmits a command to the infrared output device 40 to provide an instruction to transmit an infrared signal corresponding to the analysis result of the signal S (i.e., the generated text information). For example, when the text information is information concerning a lighting device included in the devices 50a, 50b, ..., and 50n in the first device group 50 (for example, "turn the lighting device off'), the analysis server 20 transmits a command to the infrared output device 40 to transmit an infrared signal for instructing the lighting device to turn off. The command directed to the infrared output device 40 is transmitted from the analysis server 20 to the infrared output device 40 via the network 80.

When the text information is related to control of the device 60a, 60b, ..., or 60m in the second device group 60 (for example, when the text information includes a keyword related to the second device group 60), the analysis server 20 transmits a command corresponding to the analysis result of the signal S (i.e., the generated text information) to the device 60a, 60b, ..., or 60m in the second device group 60. For example, when the text information is information concerning a television set included in the devices 60a, 60b, ..., and 60m in the second device group 60 (for example, "turn the television set on"), the analysis server 20 transmits a command to the television set to provide an instruction to turn on the switch. Commands directed to the devices 60a, 60b, ..., and 60m in the second device group 60 are transmitted from the analysis server 20 to the devices 60a, 60b, ..., and 60m in the second device group 60 via the network 80.

When the text information is related to control of the device 60a, 60b, ..., or 60m in the second device group 60 and the device 60a, 60b, ..., or 60m to be controlled is not a direct control target of the analysis server 20, the text information is transmitted to the device server 70 that controls the corresponding device 60a, 60b, ..., or 60m. Then, a command is transmitted from the device server 70 to the corresponding device 60a, 60b, ..., or 60m via the network 80.

### (1-5) Air Conditioner Server

The air conditioner server 30 is an example of a command generation apparatus.

The air conditioner server 30 generates the command C on the basis of the result of analysis of the signal S by the analysis server 20 (i.e., the text information generated by the analysis server 20), which is transmitted from the analysis server 20, and on the basis of the information J on the state quantity for at least one of the air conditioner 10 and the space to be air-conditioned, which is transmitted as appropriate from the transmission unit 16a of the air conditioner 10. Then, the air conditioner server 30 transmits the command C to the reception unit 16b of the air conditioner 10 via the network 80.

Here, without limitation, the air conditioner server 30 generates the command C on the basis of the information J in addition to the result of analysis of the signal S by the analysis server 20. The air conditioner server 30 may generate the command C on the basis of only the result of analysis of the signal S by the analysis server 20.

Further, the air conditioner server 30 accumulates signals S transmitted from the transmission unit 16a of the air conditioner 10 and performs various analysis operations by using the signals S.

In this embodiment, without limitation, the device control system 1 includes the air conditioner server 30. For example, when the air conditioner 10 is capable of directly determining the content of the operation on the basis of the result of analysis of the signal S by the analysis server 20 (i.e., the text information generated by the analysis server 20), the air conditioner server 30 may not be disposed. The result of analysis of the signal S by the analysis server 20 may be transmitted directly to the reception unit 16b of the air conditioner 10 as the command C.

### (1-6) Device Server

The device server 70 generates a command for the device 60a, 60b, ..., or 60m in the second device group 60 on the basis of the result of analysis of the signal S by the analysis server 20 (i.e., the text information generated by the analysis server 20), which is transmitted from the analysis server 20. Then, the device server 70 transmits the command to the operation target among the devices 60a, 60b, ..., and 60m in the second device group 60 via the network 80.

In Fig. 1, the number of device servers 70 is one. However, if there is a plurality of types of the devices 60a, 60b, ..., and 60m to be operated by the device server 70 (rather than in accordance with commands from the analysis server 20), a number of device servers 70 equal to the number of types are preferably present.

In addition, when all of the devices 60a, 60b, ..., and 60m are operable with commands from the analysis server 20, the device server 70 may not be present.

### (1-7) Infrared Output Device

The infrared output device 40 has a storage unit (not illustrated) that stores an infrared signal pattern for control for each of the devices 50a, 50b, ..., and 50n in the first device group 50 or for each of the operations to be performed on the devices 50a, 50b, ..., and 50n in the first device group 50. The infrared output device 40 transmits an infrared signal to the operation target among the devices 50a, 50b, ..., and 50n in the first device group 50 in accordance with a command transmitted from the analysis server 20 by using the infrared signal pattern stored in the storage unit.

### (2) Indoor Unit of Air Conditioner

The indoor unit 12 of the air conditioner 10 will further be described with reference to the drawings (with reference to mainly Fig. 2 through Fig. 5).

Fig. 3 is a schematic perspective view of the indoor unit 12 of the air conditioner 10. Fig. 4 includes schematic illustrations of the blow-out of air from a blow-out port 120 in a main body 100 of the indoor unit 12 described below. Fig. 3(a) is a view of the main body 100, as viewed from one side, Fig. 3(b) is a view of the main body 100, as viewed from below, and Fig. 3(c) is a view of the main body 100, as viewed from the front. Fig. 5 includes schematic illustrations exemplifying how each of the microphone elements 140 is attached to the main body 100 of the indoor unit 12.

In the following, expressions sometimes used to describe directions or orientations, such as "front (front face)", "rear (rear face)", "left", "right", "up", and "down", are indicated by the arrows in the drawings unless otherwise stated.

The indoor unit 12 is of a wall-mounted type. That is, the indoor unit 12 has a rear surface attached to a wall W (see Fig. 4(a)).

The indoor unit 12 has the main body 100, the microphone elements 140, the fan 150, the fan motor 160, and the module 180 into which the control board 18a and the voice processing chip 170 are integrated with each other (see Fig. 2 and Fig. 3).

The main body 100 is a housing accommodating therein an indoor-side heat exchanger (not illustrated), the fan 150, and the fan motor 160.

The main body 100 has formed therein the blow-out port 120 and a suction port 130 (see Fig. 3).

The suction port 130 is an opening through which air in the space to be air-conditioned is sucked into the main body 100. The suction port 130 extends with its longitudinal direction corresponding to the left-right direction. The suction port 130 is formed so as to extend from the top of the front face of the main body 100 to an upper surface of the main body 100 (see Fig. 4).

The blow-out port 120 is an opening through which air-conditioned air is blown out into the space to be air-conditioned. The blow-out port 120 is formed in a lower surface of the main body 100. The lower surface of the main body 100 is a surface that is visible when the main body 100 is seen from below (directly below). Specifically, the blow-out port 120 is formed in a blow-out port forming surface F1 in a lower portion on the front side of the main body 100. As in Fig. 4(a), the blow-out port forming surface F1 is an inclined surface (a surface inclined relative to the vertical plane) that leans rearward as it becomes lower in position. The blow-out port 120 is formed so as to extend with its longitudinal direction corresponding to a second direction D2 (here, the left-right direction) (see Fig. 4(b) and Fig. 4(c)). A flap 122 is arranged in the blow-out port 120 to adjust the up-down direction of airflow (see Fig. 3).

The air blown out from the blow-out port 120 mainly flows through a ventilation space A1 (see Fig. 4). The ventilation space A1 is a space extending from the blow-out port 120 in such a manner as to have approximately the same width in the left-right direction as the width of the blow-out port 120. No consideration is given here of any change in the direction of airflow using an airflow-direction adjustment louver (not illustrated) for adjusting the left-right direction of airflow. In a case where the left-right direction of airflow is adjusted using the airflow-direction adjustment louver, the ventilation space A1 is a space that extends in the left-right direction toward the front. Further, the ventilation space A1 is a space that extends in a range defined by an angle θ in side view. Here, the ventilation space A1 extends between the horizontal plane and the vertical plane, for example, with the angle θ being approximately 90°. Note that the value of the angle θ changes in accordance with the shape of the flap 122 or the movable range of the flap 122. The blow-out port 120 is configured such that air is mainly blown out in a first direction D1 (forward) in bottom view (see Fig. 4(b)).

The fan 150 is used to suck air toward the inside of the main body 100 from the suction port 130 and to blow out air-conditioned air, which has exchanged heat with refrigerant within the indoor heat exchanger (not illustrated), from the blow-out port 120. The fan 150 is, for example, a cylindrical cross-flow fan. The fan 150 is disposed inside the main body 100 so as to extend in the left-right direction (the second direction D2 that is the longitudinal direction of the blow-out port 120) (see Fig. 3).

The fan 150 is driven by the inverter-controlled fan motor 160. The fan motor 160 is arranged on one side (here, the right side) of the inside of the main body 100 in the left-right direction (the second direction D2 that is the longitudinal direction of the blow-out port 120). More specifically, the fan motor 160 is disposed at one end (here, the right end) of the inside of the main body 100 in the left-right direction (see Fig. 3). Although not illustrated in the drawings, the module 180 (a module into which the control board 18a and the voice processing chip 170 are integrated with each other) is disposed at the right end of the inside of the main body 100 of the fan motor 160.

The microphone elements 140 are devices that accept voice instructions. The indoor unit 12 may have one microphone element 140, and preferably have a plurality of microphone elements 140.

The microphone elements 140 are arranged inside the main body 100 (see Fig. 5(a)), or are arranged on the main body 100 in such a manner as to face the space to be air-conditioned (see Fig. 5(b)).

When the microphone elements 140 are arranged inside the main body 100, the main body 100 has formed therein openings 100a near the microphone elements 140 (for example, at an adjacent position) (see Fig. 5(a)). While one opening 100a is depicted in Fig. 5(a), a plurality of openings 100a may be formed. The microphone elements 140 use the openings 100a as voice capturing portions P1 and accept voice instructions captured from the voice capturing portions P1.

When the microphone elements 140 are arranged on the main body 100 in such a manner as to face the space to be air-conditioned, the microphone elements 140 use portions facing the space to be air-conditioned (for example, cover portions that cover diaphragms sensing voice to the microphone elements 140) as the voice capturing portions P1 and accept voice instructions captured from the voice capturing portions P1.

The voice capturing portions P1 are preferably arranged at positions where the microphone elements 140 can acquire high-quality voice instructions (less noisy voice instructions). Further, the voice capturing portions P1 are preferably arranged at positions where the microphone elements 140 can acquire voice instructions issued by an operator even if the sound volume of the voice instructions is low or the operator is located at a position away from the microphone elements 140. The arrangement of the voice capturing portions P1 in this respect will be described below.

### (2-1) Arrangement of Voice Capturing Portions

The voice capturing portions P1 are arranged at positions that deviate from the ventilation space A1 through which the air blown out from the blow-out port 120 in the main body 100 flows. The arrangement of the voice capturing portions P1 at positions that deviate from the ventilation space A1 makes it likely that less noisy voice instructions are acquired. The arrangement of the voice capturing portions P1 at positions that deviate from the ventilation space A1 also makes it likely that voice instructions are acquired even if the sound volume of the voice instructions is low or the operator is located at a position away from the microphone elements 140.

Note that it is preferable that the voice capturing portions P1 not be arranged on the left or right side surface or the rear surface of the main body 100. This is because, for example, although the left and right side surfaces of the main body 100 are located at positions that deviate from the ventilation space A1, the indoor unit 12 may often be arranged such that either the left or right side surface of the main body 100 adjoins the wall, in which case the microphone elements 140 are less likely to capture voice.

Preferably, the voice capturing portions P1 are generally arranged at positions satisfying one or more of the following conditions (A) to (E).
(A) A voice capturing portion is preferably disposed in a lower surface of the main body at a location other than the downstream side of the blow-out port in the direction in which air is blown out from a blow-out port (the first direction D1) in bottom view.
(B) A voice capturing portion is preferably disposed in a second surface of the main body that intersects a blow-out port forming surface in which a blow-out port is formed.
(C) A voice capturing portion is preferably disposed on the extension of the blow-out port in the second direction D2 (the longitudinal direction of blow-out port).
(D) A voice capturing portion is preferably disposed on the main body between the blow-out port and a suction port.
(E) A voice capturing portion is preferably disposed on a surface that intersects both the vertical plane and the horizontal plane and that is visible in bottom view.

In the wall-mounted type indoor unit 12, furthermore, preferably, the voice capturing portions P1 are generally arranged also taking into account the following conditions (E) to (G).
(F) A voice capturing portion is preferably disposed above the blow-out port in a center portion of the main body in the second direction D2 (the longitudinal direction of blow-out port). In particular, when the number of microphone elements is small (for example, when only one microphone element is used), a voice capturing portion preferably satisfies the condition (F).
(G) When two or more voice capturing portions are present, the voice capturing portions P1 are preferably disposed at both ends of the main body in the second direction D2 (the longitudinal direction of blow-out port).

Specifically, the arrangement of voice capturing portions P1a1, P1a2, P1b1, P1b2, P1c, P1d1, P1d2, P1e, P1f1, and P1f2 will be described as a variation of the arrangement of the voice capturing portions P1. The arrangement of these portions is illustrative, and the voice capturing portions P1 may be disposed at locations other than the exemplarily illustrated locations.

The indoor unit 12 may include one or two or more combinations each including a voice capturing portion and a microphone element 140 that accepts a voice instruction captured from the voice capturing portion. However, to accept voice instructions issued by voices in various directions, the number of combinations each including a voice capturing portion and a microphone element 140 that accepts a voice instruction captured from the voice capturing portion is preferably two or more. For example, the voice capturing portions P1 are preferably disposed at two or more positions among the positions P1a1, P1a2, P1b1, P1b2, P1c, P1d1, P1d2, P1e, P1f1, and P1f2 described below. The use of a plurality of (preferably, three or more) combinations each including a voice capturing portion and a microphone element 140 that accepts a voice instruction captured from the voice capturing portion allows the operator to identify a position from which a voice instruction is issued, which can be reflected in various control operations (such as delivering air to the position of the operator).

The voice capturing portions P1a1 and P1a2 are disposed on the extension of the blow-out port 120 in the second direction D2 that is the longitudinal direction of the blow-out port 120 (the left-right direction) (see Fig. 3). Further, the voice capturing portions P1a1 and P1a2 are disposed in the lower surface of the main body 100 at locations other than the downstream side of the blow-out port 120 in the first direction D1 (in the direction in which air is blown out from the blow-out port 120 in bottom view; here, forward) in bottom view (see Fig. 4(b)). Further, the voice capturing portions P1a1 and P1a2 are disposed in the blow-out port forming surface F1 on the main body 100 that intersects both the vertical plane and the horizontal plane and that is visible in bottom view (see Fig. 4(a)). Further, the voice capturing portions P1a1 and P1a2 are disposed at ends of the main body 100 in the left-right direction (the second direction D2) (see Fig. 4(b)).

The voice capturing portions P1b1 and P1b2 are disposed in a surface F1a of the main body 100 that intersects the blow-out port forming surface F1 having the blow-out port 120 (see Fig. 4). Specifically, whereas the blow-out port forming surface F1 is an inclined surface intersecting both the horizontal plane and the vertical plane, the surface F1a is approximately the horizontal plane. Further, the voice capturing portions P1b1 and P1b2 are disposed in the lower surface of the main body 100 at locations other than the downstream side of the blow-out port 120 in the first direction D1 in bottom view (see Fig. 4(b)). Further, the voice capturing portions P1a1 and P1a2 are disposed at ends of the main body 100 in the left-right direction (the second direction D2).

The voice capturing portion P1c is disposed in the blow-out port forming surface F1, which is the same as the surface having formed therein the blow-out port 120. The voice capturing portion P1c is disposed in the blow-out port forming surface F1 on the main body 100 that intersects both the vertical plane and the horizontal plane and that is visible in bottom view (see Fig. 4(a)). Further, the voice capturing portion P1c is disposed on the main body 100 between the blow-out port 120 and the suction port 130 (see Fig. 4(c)). Further, the voice capturing portion P1c is disposed above the blow-out port 120 in a center portion of the main body 100 in the left-right direction (the second direction D2) (see Fig. 4(c)).

The voice capturing portions P1d1 and P1d2 are disposed on a surface F1b of the main body 100 that intersects the blow-out port forming surface F1 having the blow-out port 120 (see Fig. 4). Specifically, whereas the blow-out port forming surface F1 is an inclined surface intersecting both the horizontal plane and the vertical plane, the surface F1b is approximately the vertical plane. Further, the voice capturing portions P1d1 and P1d2 are disposed at ends of the main body 100 in the left-right direction (the second direction D2) (see Fig. 4(c)).

The voice capturing portion P1e is disposed on the surface F1b of the main body 100 that intersects the blow-out port forming surface F1 having the blow-out port 120 (see Fig. 4). Specifically, whereas the blow-out port forming surface F1 is an inclined surface intersecting both the horizontal plane and the vertical plane, the surface F1b is approximately the vertical plane. Further, the voice capturing portion P1e is disposed on the main body 100 between the blow-out port 120 and the suction port 130 (see Fig. 4(c)). To reduce the susceptibility to the sound of airflow, the voice capturing portion P1e is preferably arranged on the main body 100 between the blow-out port 120 and the suction port 130 at a position where the distances to the blow-out port 120 and the suction port 130 are substantially equal, or is preferably arranged nearer the suction port 130. Further, the voice capturing portion P1e is disposed above the blow-out port 120 in a center portion of the main body 100 in the left-right direction (the second direction D2) (see Fig. 4(c)).

The voice capturing portions P1f1 and P1f2 are disposed on a surface F1c of the main body 100 that intersects the blow-out port forming surface F1 having the blow-out port 120 (see Fig. 4). Specifically, whereas the blow-out port forming surface F1 is an inclined surface that leans rearward as it becomes lower in position, the surface F1c is an inclined surface that leans forward as it becomes lower in position (see Fig. 4(a)). Further, the voice capturing portions P1f1 and P1f2 are disposed at ends of the main body 100 in the left-right direction (the second direction D2) (see Fig. 4(c)).

The voice capturing portions P1a2, P1b2, P1d2, and P1f2 are disposed on the side of the main body 100 opposite to the side on which the fan motor 160 is disposed in the left-right direction (the second direction D2). Specifically, whereas the voice capturing portions P1a2, P1b2, P1d2, and P1f2 are disposed to the left (at the left end) of the main body 100, the fan motor 160 is disposed to the right (at the right end) of the main body 100. The location of the voice capturing portion P1a2 at this position makes the microphone element 140 less susceptible not only to the sound of the air blown out from the blow-out port 120 but also to the sound of the fan motor 160.

In terms of a reduced amount of the wiring task during assembling of the indoor unit 12, like the voice capturing portions P1a1, P1b1, P1d1, and P1f1, voice capturing portions may be disposed on the same side of the main body 100 as the side on which the fan motor 160 is disposed (the side on which electric components including the module 180 are arranged) in the left-right direction (the second direction D2).

### (3) Features of Air Conditioner

### (3-1)

The air conditioner 10 according to the first embodiment includes the indoor unit 12, the transmission unit 16a, and the reception unit 16b. The indoor unit 12 has the main body 100 and the microphone elements 140. The main body 100 has formed therein the blow-out port 120 through which air-conditioned air is blown out toward the space to be air-conditioned. The microphone elements 140 accept a voice instruction captured from the voice capturing portions P1. The voice capturing portions P1 are arranged at positions that deviate from the ventilation space A1 through which the air blown out from the blow-out port 120 flows, in such a manner as to face the space to be air-conditioned. The transmission unit 16a transmits the signal S that is based on the voice instruction accepted by the microphone elements 140 to the outside. The reception unit 16b receives the command C corresponding to the signal S transmitted from the transmission unit 16a from the outside.

In the indoor unit 12 of the air conditioner 10, a portion for capturing voice instructions is arranged at a position that deviates from the ventilation space A1 through which the air blown out from the blow-out port 120 flows. This makes input of voice instructions to the microphone elements 140 less susceptible to blowing noise, and the microphone elements 140 can acquire less noisy voice instructions. Even if a voice spoken by an operator is weak, the microphone elements 140 are likely to acquire a clear voice instruction. A command based on the voice instruction is generated outside the air conditioner 10 on the basis of the acquired clear voice instruction, and is transmitted to the air conditioner 10. Thus, for example, even if diversity instructions are given to the air conditioner 10 by voice, malfunction of the air conditioner 10 (in a case where an operation different from that indicated in a voice instruction given from the operator is performed, including a case where a voice instruction given from the operator is not recognized) is less likely to occur.

Here, a functional unit that converts the signal S based on voice into the command C is disposed outside the air conditioner 10, and the air conditioner 10 does not need to individually have this function. Thus, a reduction in the cost of the air conditioner 10 can be achieved.

### (3-2)

In the air conditioner 10 according to the first embodiment, the blow-out port 120 is formed in the lower surface of the main body 100, through which air is blown out in the first direction D1 (forward) in bottom view. The voice capturing portions P1a1, P1a2, P1b1, and P1b2 are disposed in the lower surface of the main body 100 at locations other than the downstream side of the blow-out port 120 in the first direction D1 in bottom view.

Here, the voice capturing portions P1 can be disposed without the intervention of the ventilation space A1, and the microphone elements 140 are likely to acquire a clear voice instruction.

### (3-3)

In the air conditioner 10 according to the first embodiment, the blow-out port 120 is formed in the blow-out port forming surface F1 of the main body 100. The blow-out port forming surface F1 is an example of a first surface. The voice capturing portions P1b1, P1b2, P1d1, P1d2, P1e, P1f1, and P1f2 are disposed in the surfaces F1a, F1b, and F1c of the main body 100, which intersect the blow-out port forming surface F1. The surfaces F1a, F1b, and F1c are examples of a second surface.

Here, since the voice capturing portions P1 are disposed in a surface intersecting the surface having formed therein the blow-out port 120, the voice capturing portions P1 can be disposed without the intervention of the ventilation space A1, and the microphone elements 140 are likely to acquire a clear voice instruction.

### (3-4)

In the air conditioner 10 according to the first embodiment, the blow-out port 120 is formed in the main body 100 so as to extend with its longitudinal direction corresponding to the second direction D2 (the left-right direction). The voice capturing portions P1a1 and P1a2 are disposed on the extension of the blow-out port 120 in the second direction D2.

Here, the voice capturing portions P1 can be disposed without the intervention of the ventilation space A1, and the microphone elements 140 are likely to acquire a clear voice instruction.

### (3-5)

In the air conditioner 10 according to the first embodiment, the main body 100 has formed therein the suction port 130 through which air is sucked from the space to be air-conditioned. The voice capturing portions P1c and P1e are disposed on the main body 100 between the blow-out port 120 and the suction port 130.

Here, the voice capturing portions P1 can be disposed without the intervention of the ventilation space A1, and the microphone elements 140 are likely to acquire a clear voice instruction.

### (3-6)

In the air conditioner 10 according to the first embodiment, the voice capturing portions P1a1, P1a2, and P1c are disposed on the main body 100 in a surface that intersects both the vertical plane and the horizontal plane and that is visible in bottom view.

Here, the voice capturing portions P1 are disposed in a surface that is visible in bottom view (i.e., directed downwards) and that intersects both the vertical plane and the horizontal plane (in other words, an inclined surface). Thus, it is easy for the microphone elements 140 to more clearly acquire a voice instruction given from an operator in the space to be air-conditioned.

### (3-7)

In the air conditioner 10 according to the first embodiment, the indoor unit 12 is of a wall-mounted type. The blow-out port 120 is formed so as to extend with its longitudinal direction corresponding to the second direction D2. The indoor unit 12 has the fan 150, and the fan motor 160 that drives the fan 150. The fan 150 is accommodated in the main body 100. The fan motor 160 is arranged on one side of the inside of the main body 100 in the second direction D2. The voice capturing portions P1a2, P1b2, P1d2, and P1f2 are disposed on the side of the main body 100 opposite to the side on which the fan motor is disposed in the second direction D2.

Here, the voice capturing portions P1 of the microphone elements 140 are disposed away from the fan motor 160. This makes the microphone elements 140 less susceptible to noise of the fan motor 160, and the microphone elements 140 are likely to acquire a clear voice instruction.

### (3-8)

In the air conditioner 10 according to the first embodiment, the indoor unit 12 is of a wall-mounted type. The blow-out port 120 is formed so as to extend with its longitudinal direction corresponding to the second direction D2. The indoor unit 12 has the fan 150, and the fan motor 160 that drives the fan 150. The fan 150 is accommodated in the main body 100. The fan motor 160 is arranged on one side of the inside of the main body 100 in the second direction D2. The voice capturing portions P1 are disposed on the same side of the main body 100 as the side on which the fan motor 160 is disposed in the second direction D2.

Here, electric components including the microphone elements 140 and the fan motor 160 can be gathered and arranged on one side of the main body 100, reducing the man-hours in performing a wiring task during production of the indoor unit 12.

### (3-9)

In the air conditioner 10 according to the first embodiment, the indoor unit 12 is of a wall-mounted type. The blow-out port 120 is formed so as to extend with its longitudinal direction corresponding to the second direction D2. The voice capturing portions P1c and P1e are disposed above the blow-out port 120 in a center portion of the main body 100 in the second direction D2.

Here, the voice capturing portions P1 are disposed in a center portion of the main body 100. Thus, even if the voice capturing portion P1 is disposed in only one location, voice can be acquired from various directions.

### (3-10)

In the air conditioner 10 according to the first embodiment, the indoor unit 12 is of a wall-mounted type. The indoor unit 12 has two or more combinations each including a voice capturing portion P1 and a microphone element 140 that accepts a voice instruction captured from the voice capturing portion P1. The blow-out port 120 is formed so as to extend with its longitudinal direction corresponding to the second direction D2. The voice capturing portions P1 are disposed at least at both ends of the main body 100 in the second direction D2.

Here, the voice capturing portions P1 are disposed at least at both ends of the main body 100, and voice is thus easily acquired from various directions.

### (3-11)

In the air conditioner 10 according to the first embodiment, the indoor unit 12 has the voice processing chip 170. The voice processing chip 170 is an example of a voice recognition chip. The voice processing chip 170 recognizes only a specific voice instruction among voice instructions acquired by the microphone elements 140 and generates the predetermined command C0. The transmission unit 16a transmits the signal S that is based on a voice instruction other than the specific voice instruction among the voice instructions accepted by the microphone elements 140 to the outside.

Here, the specific voice instruction can be converted into a command on the air conditioner 10 side without being transmitted to the outside. This enables quick operation in response to the specific instruction, and provides high convenience.

### (3-12)

In the air conditioner 10 according to the first embodiment, the indoor unit 12 has the control board 18a that controls the operation of the indoor unit 12. The control board 18a and the voice processing chip 170 are integrated with each other.

Here, it is possible to reduce the man-hours in performing a wiring task during production of the indoor unit 12.

### (3-13)

In the air conditioner 10 according to the first embodiment, the transmission unit 16a transmits the signal S to the analysis server 20, which analyzes the signal S, via the network 80. The analysis server 20 is an example of an analysis apparatus. The reception unit 16b receives the command C generated on the basis of the result of analysis of the signal S by the analysis server 20.

Here, the signal S that is based on a voice instruction is transmitted to the external analysis server 20, and the command C is generated on the basis of the result of analysis of the signal S. Thus, even if the air conditioner 10 is caused to execute a relatively complex operation, the air conditioner 10 can be operated by voice.

In addition, it is also easy to operate multiple types of devices including the air conditioner 10 (the devices in the first device group 50 and the second device group 60) by voice input to the microphone elements 140.

### (3-14)

In the air conditioner 10 according to the first embodiment, the transmission unit 16a transmits the information J on the state quantity for at least one of the air conditioner 10 and the space to be air-conditioned to the air conditioner server 30. The air conditioner server 30 is an example of a command generation apparatus. The reception unit 16b receives the command C, which is generated by the air conditioner server 30 on the basis of the result of analysis of the signal S by the analysis server 20 and on the basis of the information J on the state quantity.

Here, an instruction is given to the air conditioner 10 on the basis of the result of analysis of the signal S that is based on a voice instruction and on the basis of the state quantity for the air conditioner 10 or the space to be air-conditioned, and thus it is likely that appropriate control of the air conditioner 10 is executed.

### <Second Embodiment>

An air conditioner 10 according to a second embodiment will be described. The air conditioner 10 according to the second embodiment is the same as the air conditioner 10 of the first embodiment, except for an indoor unit 12a, and thus the components other than indoor unit 12b will not be described. In addition, a device control system 1 including the air conditioner 10 is similar to that in the first embodiment and will not be described.

As in the second embodiment, an air conditioner 10 according to a third embodiment through a seventh embodiment described below is the same as the air conditioner 10 of the first embodiment, except for an indoor unit, and thus the description of the components other than the indoor unit (including the description of a device control system 1 including the air conditioner 10) is omitted without mention in particular.

### (1) Indoor Unit of Air Conditioner

The indoor unit 12a of the air conditioner 10 will be described with reference to Fig. 2 and Fig. 6 to Fig. 9.

Fig. 6 is a schematic bottom view of the indoor unit 12a of the air conditioner 10. Fig. 7 is a schematic sectional view taken along the VII-VII cross-section of Fig. 6. Fig. 8 is a schematic illustration of the blow-out of air from blow-out ports 220 in a main body 200 of the indoor unit 12a when the main body 200 is viewed from below. Fig. 9 is a schematic sectional view taken along the IX-IX cross-section of Fig. 6. In Fig. 7 and Fig. 9, the illustration of the internal devices of the main body 200 of the indoor unit 12a is omitted.

In the following, expressions sometimes used to describe directions or orientations, such as "front (front face)", "rear (rear face)", "left", "right", "up", and "down", are indicated by the arrows in the drawings unless otherwise stated.

The indoor unit 12a is a ceiling-embedded unit. The indoor unit 12a is a unit having the blow-out ports 220 at four locations, through which air is blown out in four directions (see Fig. 8).

The indoor unit 12a has the main body 200, microphone elements 140, a fan (not illustrated), and a fan motor 260 (see Fig. 2 and Fig. 6).

The main body 200 is a housing accommodating therein an indoor-side heat exchanger (not illustrated), the fan (not illustrated), and the fan motor 260. The main body 200 has formed therein the blow-out ports 220 and a suction port 230 (see Fig. 6).

The suction port 230 is an opening through which air in the space to be air-conditioned is sucked into the main body 200. The suction port 230 is formed into a square shape (see Fig. 6). The suction port 230 is formed in a center portion of the main body 200 in bottom view (see Fig. 6).

The blow-out ports 220 are openings through which air-conditioned air is blown out into the space to be air-conditioned. The blow-out ports 220 are formed at four locations on a lower surface of the main body 200. The lower surface of the main body 200 is a surface that is visible when the main body 200 is seen from below (directly below). Specifically, the blow-out ports 220 are formed in a blow-out port forming surface F2 of the main body 200 so as to extend along the four sides of the square-shaped main body 200 in bottom view in the vicinity of the front edge, the rear edge, the left edge, and the right edge. The blow-out port forming surface F2 is approximately the horizontal plane. The blow-out ports 220 are formed so as to surround the suction port 230 arranged in the center portion of the main body 200 in bottom view. Each of the blow-out ports 220 is formed so as to extend with its longitudinal direction corresponding to the second direction D2 (the left-right direction or the front-rear direction) (see Fig. 8). A flap (not illustrated) is arranged in each of the blow-out ports 220 to adjust the up-down direction of airflow.

The air blown out from the blow-out ports 220 mainly flows through a ventilation space A2 (see Fig. 8). The ventilation space A2 is a space extending from the blow-out ports 220 in such a manner as to have approximately the same width in the respective longitudinal directions, or in the second direction D2 (the left-right direction or the front-rear direction), as the width of the blow-out ports 220. No consideration is given here of any change in the direction of airflow using an airflow-direction adjustment louver (not illustrated) for adjusting the direction of airflow in the second direction D2. In a case where the direction of airflow in the second direction D2 is adjusted using the airflow-direction adjustment louver, the ventilation space A2 is a space that extends in the respective longitudinal directions of the blow-out ports 220 (the second direction D2) as the distances from the blow-out ports 220 increase. Further, the ventilation space A2 is a space that extends in a range defined by an angle θ1 in side view. The angle θ1 is smaller than 90°. Note that the value of the angle θ1 changes in accordance with the shape of the flaps (not illustrated) disposed in the blow-out ports or the movable ranges of the flaps. The blow-out ports 220 are configured such that air is mainly blown out in the first direction D1 (outward from the main body 200; in the direction away from the suction port 230) in bottom view (see Fig. 4(b)).

The fan motor 260 is an inverter-controlled motor that drives the fan (not illustrated) so that air is sucked toward the inside of the main body 200 from the suction port 230 and air-conditioned air, which has exchanged heat with refrigerant within the indoor heat exchanger (not illustrated), is blown out from the blow-out ports 220. The fan motor 260 is arranged inside the main body 200 in a center portion of the main body 200 in bottom view.

Like the microphone elements 140 of the first embodiment, the microphone elements 140 are arranged inside the main body 200 or are arranged on the main body 200 in such a manner as to face the space to be air-conditioned. The microphone elements 140 accept a voice instruction captured from voice capturing portions P2. The arrangement of the voice capturing portions P2 will be described below.

### (1-1) Arrangement of Voice Capturing Portions

Like the voice capturing portions P1 of the first embodiment, the voice capturing portions P2 are arranged at positions that deviate from the ventilation space A2 through which the air blown out from the blow-out ports 220 in the main body 200 flows. Further, the voice capturing portions P2 are preferably arranged at positions that satisfy one or more of the conditions (A) to (E) described in the first embodiment.

Specifically, the arrangement of voice capturing portions P2a1, P2a2, P2a3, P2a4, P2b, P2c, P2d, and P2e will be described as a variation of the arrangement of the voice capturing portions P2. While, for simplicity of description, P2b, P2c, and P2d are provided only in one corner of the square-shaped main body 200 in bottom view, which is not intended to be limiting, similar voice capturing portions P2 may be disposed in the other three corners. The voice capturing portion P2e may also be disposed at the front edge, the rear edge, and the left edge in addition to the right edge of the main body 200. The arrangement of the voice capturing portions P2a1, P2a2, P2a3, P2a4, P2b, P2c, P2d, and P2e is illustrative, and the voice capturing portions P2 may be disposed at locations other than the exemplarily illustrated locations.

In the indoor unit 12a, the number of combinations each including a voice capturing portion and a microphone element 140 that accepts a voice instruction captured from the voice capturing portion may be one or two or more, and is preferably two or more.

The voice capturing portions P2a1 to P2a4 are disposed in the blow-out port forming surface F2 having formed therein the blow-out ports 220. Further, the voice capturing portions P2a1 to P2a4 are disposed in the lower surface of the main body 200 at locations other than the downstream side of the blow-out ports 220 in the first direction D1 (in the direction in which air is blown out from the blow-out ports 220 in bottom view; here outward (in the direction away from the suction port 230)) in bottom view (see Fig. 8). In other words, the voice capturing portions P2a1 to P2a4 are disposed in an area of the main body 200 closer to the center than the blow-out ports 220 (see Fig. 8). Further, the voice capturing portions P2a1 to P2a4 are disposed on the main body 200 between the blow-out ports 220 and the suction port 230 (see Fig. 8). To reduce the susceptibility to the sound of airflow, the voice capturing portions P2a1 to P2a4 are preferably arranged on the main body 200 between the blow-out ports 220 and the suction port 230 at positions where the distances to the blow-out ports 220 and the suction port 230 are substantially equal, or are preferably arranged nearer the suction port 230.

The voice capturing portion P2b is disposed on the extension of the blow-out ports 220 in the second direction D2 (the longitudinal direction of the blow-out ports 220) (see Fig. 8). Further, the voice capturing portion P2b is disposed in the lower surface of the main body 200 at a location other than the downstream side of the blow-out ports 220 in the direction in which air is blown out from the blow-out ports 220 (the first direction D1) in bottom view (see Fig. 8).

The voice capturing portion P2c is disposed in the blow-out port forming surface F2 having formed therein the blow-out ports 220. Further, the voice capturing portion P2c is disposed in the lower surface of the main body 200 at a location other than the downstream side of the blow-out ports 220 in the direction in which air is blown out from the blow-out ports 220 (the first direction D1) in bottom view (see Fig. 8). The voice capturing portion P2c is arranged between two blow-out ports 220 (see Fig. 8). Preferably, the voice capturing portion P2c is arranged at a position where the distances from the two adjacent blow-out ports 220 are equal (see Fig. 8).

The voice capturing portion P2d is disposed in a surface F2a of the main body 200 that intersects the blow-out port forming surface F2 having formed therein the blow-out ports 220 (see Fig. 8). Further, the voice capturing portion P2d is disposed on the main body 200 in the surface F2a that intersects both the vertical plane and the horizontal plane and that is visible in bottom view (see Fig. 7). Further, the voice capturing portion P2d is disposed in the lower surface of the main body 200 at a location other than the downstream side of the blow-out ports 220 in the direction in which air is blown out from the blow-out ports 220 (the first direction D1) in bottom view (see Fig. 8).

The voice capturing portion P2e is disposed in the lower surface of the main body 200 on the downstream side of the blow-out ports 220 in the direction in which air is blown out from the blow-out ports 220 (the first direction D1) in bottom view. Note that the voice capturing portion P2e is disposed at a position higher than the blow-out ports 220 (a position near the surface of the ceiling on which the indoor unit 12a is mounted) (see Fig. 9). Further, the voice capturing portion P2e is provided at a higher position than that of the ventilation space A2 (see Fig. 9). Further, the voice capturing portion P2e is disposed in a surface F2b of the main body 200 that intersects the blow-out port forming surface F2 having formed therein the blow-out ports 220 (see Fig. 9). Further, the voice capturing portion P2e is disposed on the main body 200 in the surface F2b that intersects both the vertical plane and the horizontal plane and that is visible in bottom view (see Fig. 9).

Among the voice capturing portions described above, in particular, the voice capturing portions P2b, P2c, and P2d are arranged in a corner of the square-shaped main body 200 in bottom view, and are arranged at positions relatively away from the fan motor 260 arranged in the center portion of the main body 200. This prevents not only the sound of the air blown out from the blow-out ports 220 but also the sound of the fan motor 260 from affecting the quality of voice instructions acquired by the microphone elements 140.

### (2) Features of Air Conditioner

The air conditioner 10 of the second embodiment also has a feature similar to the feature (3-1) described for the air conditioner 10 of the first embodiment. Further, the air conditioner 10 of the second embodiment can also have features similar to the features (3-2) to (3-6) described for the air conditioner 10 of the first embodiment in accordance with the arrangement of the voice capturing portions P2. Further, the air conditioner 10 of the second embodiment also has features similar to the features (3-11) to (3-14) described for the air conditioner 10 of the first embodiment.

### <Third Embodiment>

An air conditioner 10 according to a third embodiment will be described.

### (1) Indoor Unit of Air Conditioner

An indoor unit 12b of the air conditioner 10 will be described with reference to Fig. 2 and Fig. 10. Fig. 10 is a schematic bottom view of the indoor unit 12b of the air conditioner 10.

In the following, expressions sometimes used to describe directions or orientations, such as "front (front face)", "rear (rear face)", "left", and "right", are indicated by the arrows in the drawings unless otherwise stated.

The indoor unit 12b is a ceiling-embedded unit. The indoor unit 12b is a unit that blows out air in one direction (see Fig. 10).

The indoor unit 12b has a main body 300, microphone elements 140, a fan (not illustrated), and a fan motor 360 (see Fig. 2 and Fig. 10).

The main body 300 is a housing accommodating therein an indoor-side heat exchanger (not illustrated), the fan (not illustrated), and the fan motor 360. The main body 300 has formed therein a blow-out port 320 and a suction port 330 (see Fig. 10).

The suction port 330 is an opening through which air in the space to be air-conditioned is sucked into the main body 200. The suction port 330 is formed into a rectangular shape whose longitudinal direction corresponds to the left-right direction in bottom view (see Fig. 10). The suction port 330 is formed in a blow-out port forming surface F3. The suction port 330 is formed nearer the rear of the main body 200 in bottom view (see Fig. 10).

The blow-out port 320 is an opening through which air-conditioned air is blown out into the space to be air-conditioned. The blow-out port 320 is formed in a lower surface of the main body 300 nearer the front of the main body 300. The lower surface of the main body 300 is a surface that is visible when the main body 300 is seen from below (directly below). Specifically, the blow-out port 320 is formed in the blow-out port forming surface F3. The blow-out port forming surface F3 is approximately the horizontal plane. The blow-out port 320 is formed so as to extend with its longitudinal direction corresponding to the second direction D2 (the left-right direction) (see Fig. 10). A flap (not illustrated) is arranged in the blow-out port 320 to adjust the up-down direction of airflow.

The air blown out from the blow-out port 320 mainly flows through a ventilation space A3 (see Fig. 10). The ventilation space A3 is a space extending from the blow-out port 320 in such a manner as to have approximately the same width in its longitudinal direction, or in the second direction D2, as the width of the blow-out port 220. No consideration is given here of any change in the direction of airflow using an airflow-direction adjustment louver (not illustrated) for adjusting the direction of airflow in the second direction D2. In a case where the direction of airflow in the second direction is adjusted using the airflow-direction adjustment louver, the ventilation space A3 is a space that extends in the longitudinal direction of the blow-out port 320 (the second direction D2) as the distance from the blow-out port 320 increases. Further, the ventilation space A3 is a space that extends in a range defined by a predetermined angle in front of the blow-out port 320 in side view. The angle range changes in accordance with the shape of the flap (not illustrated) disposed in the blow-out port or the movable range of the flap. The blow-out port 320 is configured such that air is mainly blown out in the first direction D1 (forward; in the direction away from the suction port 330) in bottom view (see Fig. 10).

The fan motor 360 is an inverter-controlled motor that drives the fan (not illustrated) so that air is sucked toward the inside of the main body 300 from the suction port 330 and air-conditioned air, which has exchanged heat with refrigerant within the indoor heat exchanger (not illustrated), is blown out from the blow-out port 320. The fan motor 360 is arranged inside the main body 300 in the left rear of the main body 300 (see Fig. 10).

Like the microphone elements 140 of the first embodiment, the microphone elements 140 are arranged inside the main body 300 or are arranged on the main body 300 in such a manner as to face the space to be air-conditioned. The microphone elements 140 accept a voice instruction captured from voice capturing portions P3. The arrangement of the voice capturing portions P3 will be described below.

### (1-1) Arrangement of Voice Capturing Portions

Like the voice capturing portions P1 of the first embodiment, the voice capturing portions P3 are arranged at positions that deviate from the ventilation space A3 through which the air blown out from the blow-out port 320 in the main body 300 flows. Further, the voice capturing portions P3 are preferably arranged at positions that satisfy one or more of the conditions (A) to (E) described in the first embodiment.

Specifically, the arrangement of voice capturing portions P3a, P3b, and P3c will be described as a variation of the arrangement of the voice capturing portions P3. While, for simplicity of description, the voice capturing portions P3a and P3c are provided only on one side (right side) in the second direction D2, which is not intended to be limiting, similar voice capturing portions P3 may be disposed on the other side (left side) in the second direction D2. The arrangement of the voice capturing portions P3a, P3b, and P3c is illustrative, and the voice capturing portions P3 may be disposed at locations other than the exemplarily illustrated locations.

In the indoor unit 12b, the number of combinations each including a voice capturing portion and a microphone element 140 that accepts a voice instruction captured from the voice capturing portion may be one or two or more, and is preferably two or more.

The voice capturing portion P3a is disposed in the blow-out port forming surface F3 having formed therein the blow-out port 320. The voice capturing portion P3a is disposed on the extension of the blow-out port 320 in the second direction D2 (see Fig. 10). Further, the voice capturing portion P3a is disposed in the lower surface of the main body 300 at a location other than the downstream side of the blow-out port 320 in the direction in which air is blown out from the blow-out port 320 (the first direction D1) in bottom view (see Fig. 10).

The voice capturing portion P3b is disposed in the blow-out port forming surface F3 having formed therein the blow-out port 320. The voice capturing portion P3b is disposed in the lower surface of the main body 300 at a location other than the downstream side of the blow-out port 320 in the direction in which air is blown out from the blow-out port 320 (the first direction D1) in bottom view (see Fig. 10). Further, the voice capturing portion P3b is disposed on the main body 300 between the blow-out port 320 and the suction port 330 (see Fig. 10). To reduce the susceptibility to the sound of airflow, the voice capturing portion P3b is preferably arranged on the main body 300 between the blow-out port 320 and the suction port 330 at a position where the distances to the blow-out port 320 and the suction port 330 are substantially equal, or is preferably arranged nearer the suction port 330. Further, the voice capturing portion P3b is disposed in a center portion in the second direction D2 (the left-right direction) (see Fig. 10).

The voice capturing portion P3c is disposed in the blow-out port forming surface F3 having formed therein the blow-out port 320 (see Fig. 10). The voice capturing portion P3c is disposed in the lower surface of the main body 300 at a location other than the downstream side of the blow-out port 320 in the direction in which air is blown out from the blow-out port 320 (the first direction D1) in bottom view (see Fig. 10). The voice capturing portion P3c is disposed on the extension of the suction port 330 in the longitudinal direction of the suction port 330 (see Fig. 10).

When consideration is also given of the influences of the sound of the fan motor 360, the voice capturing portion P3 is preferably arranged at a position (for example, to the right or left front) relatively away from the fan motor 360 arranged in the left rear of the main body 300.

### (2) Features of Air Conditioner

The air conditioner 10 of the third embodiment also has a feature similar to the feature (3-1) described for the air conditioner 10 of the first embodiment. Further, the air conditioner 10 of the third embodiment can also have features similar to the features (3-2), (3-4), and (3-5) described for the air conditioner 10 of the first embodiment in accordance with the arrangement of the voice capturing portions P3. In addition, a portion or the entirety of the blow-out port forming surface F3 is inclined, and the inclined surface is provided with the voice capturing portions P3, thereby achieving features similar to the features (3-3) and (3-6) described for the air conditioner 10 of the first embodiment. Further, the air conditioner 10 of the third embodiment has features similar to the features (3-10) to (3-14) described for the air conditioner 10 of the first embodiment.

### <Fourth Embodiment>

An air conditioner 10 according to a fourth embodiment will be described.

### (1) Indoor Unit of Air Conditioner

An indoor unit 12c of the air conditioner 10 will be described with reference to Fig. 2 and Fig. 11. Fig. 11 is a schematic bottom view of the indoor unit 12c of the air conditioner 10.

In the following, expressions sometimes used to describe directions or orientations, such as "front (front face)", "rear (rear face)", "left", and "right", are indicated by the arrows in the drawings unless otherwise stated.

The indoor unit 12c is a ceiling-embedded unit. The indoor unit 12c is a unit that blows out air in two directions (forward and rearward) (see Fig. 11).

The indoor unit 12c has a main body 400, microphone elements 140, a fan (not illustrated), and a fan motor 460 (see Fig. 2 and Fig. 11).

The main body 400 is a housing accommodating therein an indoor-side heat exchanger (not illustrated), the fan (not illustrated), and the fan motor 460. The main body 400 has formed therein blow-out ports 420 and suction ports 430 (see Fig. 11).

The suction ports 430 are openings through which air in the space to be air-conditioned is sucked into the main body 400. The suction ports 430 are formed in a blow-out port forming surface F4. The suction ports 430 are formed in two locations in the front and rear of the main body 400 (see Fig. 11). Each of the suction ports 430 is formed into a rectangular shape whose longitudinal direction corresponds to the left-right direction in bottom view (see Fig. 11). The blow-out ports 420 are openings through which air-conditioned air is blown out into the space to be air-conditioned. The blow-out ports 420 are formed in a lower surface of the main body 400 in the front and rear of the main body 400. The lower surface of the main body 400 is a surface that is visible when the main body 400 is seen from below (directly below). Specifically, the blow-out ports 420 are formed in the blow-out port forming surface F4. The blow-out port forming surface F4 is approximately the horizontal plane. The blow-out ports 420 are formed so as to extend with their longitudinal directions corresponding to the second direction D2 (the left-right direction) (see Fig. 11). A flap (not illustrated) is arranged in each of the blow-out ports 420 to adjust the up-down direction of airflow.

The air blown out from the blow-out ports 420 mainly flows through ventilation spaces A4 (see Fig. 11). The ventilation spaces A4 are spaces extending from the blow-out ports 420 in such a manner as to have approximately the same width in the respective longitudinal directions, or in the second direction D2, as the width of the blow-out ports 420. No consideration is given here of any change in the direction of airflow using an airflow-direction adjustment louver (not illustrated) for adjusting the direction of airflow in the second direction D2. In a case where the direction of airflow in the second direction is adjusted using the airflow-direction adjustment louver, the ventilation spaces A4 are spaces that extend in the respective longitudinal directions of the blow-out ports 420 (the second direction D2) as the distances from the blow-out ports 420 increase. Further, the ventilation spaces A4 are spaces that extend toward the blowing-out directions of the blow-out ports 420 in a range defined by a predetermined angle in side view. The angle range changes in accordance with the shape of the flaps (not illustrated) disposed in the blow-out ports or the movable ranges of the flaps. The blow-out ports 420 are configured such that air is mainly blown out in the first direction D1 (forward and rearward) in bottom view (see Fig. 11). The blow-out ports 420 are configured such that air is blown out toward the outside of the main body 400 (in the direction away from the suction ports 430) (see Fig. 11).

The fan motor 460 is an inverter-controlled motor that drives the fan (not illustrated) so that air is sucked toward the inside of the main body 400 from the suction ports 430 and air-conditioned air, which has exchanged heat with refrigerant within the indoor heat exchanger (not illustrated), is blown out from the blow-out ports 420. The fan motor 460 is arranged inside the main body 400 in a center portion of the main body 400 in bottom view (see Fig. 11).

Like the microphone elements 140 of the first embodiment, the microphone elements 140 are arranged inside the main body 400 or are arranged on the main body 400 in such a manner as to face the space to be air-conditioned. The microphone elements 140 accept a voice instruction captured from voice capturing portions P4. The arrangement of the voice capturing portions P4 will be described below.

### (1-1) Arrangement of Voice Capturing Portions

Like the voice capturing portions P1 of the first embodiment, the voice capturing portions P4 are arranged at positions that deviate from the ventilation spaces A4 through which the air blown out from the blow-out ports 420 in the main body 400 flows. Further, the voice capturing portions P4 are preferably arranged at positions that satisfy one or more of the conditions (A) to (E) described in the first embodiment.

Specifically, the arrangement of voice capturing portions P4a, P4b, P4c, and P4d will be described as an example variation of the arrangement of the voice capturing portions P4. While, for simplicity of description, the voice capturing portions P4a, P4c, and P4d are provided only on one side (right side) in the second direction D2, which is not intended to be limiting, similar voice capturing portions P4 may be provided on the other side (left side) in the second direction D2. The arrangement of the voice capturing portions P4a, P4b, P4c, and P4d is illustrative, and the voice capturing portions P4 may be disposed at locations other than the exemplarily illustrated locations.

In the indoor unit 12c, the number of combinations each including a voice capturing portion and a microphone element 140 that accepts a voice instruction captured from the voice capturing portion may be one or two or more, and is preferably two or more.

The voice capturing portion P4a is disposed in the blow-out port forming surface F4 having formed therein the blow-out ports 420. The voice capturing portion P4a is disposed on the extension of one of the blow-out ports 420 in the second direction D2 (see Fig. 11). Further, the voice capturing portion P4a is disposed in the lower surface of the main body 400 at a location other than the downstream side of the blow-out ports 420 in the directions in which air is blown out from the blow-out ports 420 (the first direction D1) in bottom view (see Fig. 11).

The voice capturing portions P4b and P4c are disposed in the blow-out port forming surface F4 having formed therein the blow-out ports 420. The voice capturing portions P4b and P4c are disposed in the lower surface of the main body 400 at locations other than the downstream side of the blow-out ports 420 in the directions in which air is blown out from the blow-out ports 420 (the first direction D1) in bottom view (see Fig. 11).

Further, the voice capturing portion P4b is disposed on the main body 400 between one of the blow-out ports 420 and one of the suction ports 430 (see Fig. 11). To reduce the susceptibility to the sound of airflow, the voice capturing portion P4b is preferably arranged on the main body 400 between one of the blow-out ports 420 and one of the suction ports 430 at a position where the distances to the blow-out port 420 and the suction port 430 are substantially equal, or is preferably arranged nearer the suction port 430. Further, the voice capturing portion P4b is disposed in a center portion in the second direction D2 (the left-right direction) (see Fig. 11).

The voice capturing portion P4c is disposed on the main body 400 between the two suction ports 430 (see Fig. 11). To reduce the susceptibility to the sound of airflow, the voice capturing portion P4c is preferably arranged on the main body 400 between the two suction ports 430 at a position where the distances from the two suction ports 430 are substantially equal. In addition, to reduce the susceptibility to the sound of the fan motor 460, the voice capturing portion P4c is preferably disposed at a position away from the center portion (near the fan motor 460) in the second direction D2 (the left-right direction) (see Fig. 11).

The voice capturing portion P4d is disposed in the blow-out port forming surface F4 having formed therein the blow-out ports 420 (see Fig. 11). The voice capturing portion P4d is disposed in the lower surface of the main body 400 at a location other than the downstream side of the blow-out ports 420 in the directions in which air is blown out from the blow-out ports 420 (the first direction D1) in bottom view (see Fig. 11). The voice capturing portion P4d is disposed on the extension of one of the suction ports 430 in the longitudinal direction of the suction port 430 (see Fig. 11).

### (2) Features of Air Conditioner

The air conditioner 10 of the fourth embodiment also has a feature similar to the feature (3-1) described for the air conditioner 10 of the first embodiment. Further, the air conditioner 10 of the fourth embodiment can also have features similar to the features (3-2), (3-4), and (3-5) described for the air conditioner 10 of the first embodiment in accordance with the arrangement of the voice capturing portions P4. In addition, a portion or the entirety of the blow-out port forming surface F4 is inclined, and the inclined surface is provided with the voice capturing portions P4, thereby achieving features similar to the features (3-3) and (3-6) described for the air conditioner 10 of the first embodiment. Further, the air conditioner 10 of the fourth embodiment has features similar to the features (3-10) to (3-14) described for the air conditioner 10 of the first embodiment.

### <Fifth Embodiment>

An air conditioner 10 according to a fifth embodiment will be described.

### (1) Indoor Unit of Air Conditioner

An indoor unit 12d of the air conditioner 10 will be described with reference to Fig. 2, Fig. 12, and Fig. 13.

Fig. 12 is a schematic side view of the indoor unit 12d of the air conditioner 10. Fig. 13 is a schematic bottom view of the indoor unit 12d of the air conditioner 10.

In the following, expressions sometimes used to describe directions or orientations, such as "front (front face)", "rear (rear face)", "left", "right", "up", and "down", are indicated by the arrows in the drawings unless otherwise stated.

The indoor unit 12d is a ceiling-suspended unit. The indoor unit 12d is a unit having blow-out ports 520 at four locations, through which air is blown out in four directions (see Fig. 13).

The indoor unit 12d has a main body 500, microphone elements 140, a fan (not illustrated), and a fan motor 560 (see Fig. 2 and Fig. 13).

The main body 500 is a housing accommodating therein an indoor-side heat exchanger (not illustrated), the fan (not illustrated), and the fan motor 560. The main body 500 has formed therein the blow-out ports 520 and a suction port 530 (see Fig. 13).

The suction port 530 is an opening through which air in the space to be air-conditioned is sucked into the main body 500. The suction port 530 is formed into a square shape (see Fig. 13). The suction port 530 is formed in a center portion of the main body 500 in bottom view (see Fig. 13).

The blow-out ports 520 are openings through which air-conditioned air is blown out into the space to be air-conditioned. The blow-out ports 520 are formed in a front side surface, a rear side surface, a right side surface, and a left side surface of the main body 500. The blow-out ports 520 are formed in a blow-out port forming surface F5 so as to extend in the left-right direction or the front-rear direction. The blow-out port forming surface F5 is the vertical plane. A flap (not illustrated) is arranged in each of the blow-out ports 520 to adjust the up-down direction of airflow.

The air blown out from the blow-out ports 520 mainly flows through ventilation spaces A5 (see Fig. 12 and Fig. 13). The ventilation spaces A5 are spaces extending from the blow-out ports 520 in such a manner as to have approximately the same width in the respective longitudinal directions, or in the second direction D2 (the left-right direction or the front-rear direction), as the width of the blow-out ports 520. No consideration is given here of any change in the direction of airflow using an airflow-direction adjustment louver (not illustrated) for adjusting the direction of airflow in the second direction D2. In a case where the direction of airflow in the second direction D2 is adjusted using the airflow-direction adjustment louver, the ventilation spaces A5 are spaces that extend in the respective longitudinal directions of the blow-out ports 520 (the second direction D2) as the distances from the blow-out ports 520 increase. Further, the ventilation spaces A5 are spaces that extend in a range defined by an angle θ2 in side view. The angle θ2 is smaller than 90°. Note that the value of the angle θ2 changes in accordance with the shape of the flaps (not illustrated) disposed in the blow-out ports or the movable ranges of the flaps. The blow-out ports 520 are configured such that air is blown out in the direction away from the main body 500 (see Fig. 13).

The fan motor 560 is an inverter-controlled motor that drives the fan (not illustrated) so that air is sucked toward the inside of the main body 500 from the suction port 530 and air-conditioned air, which has exchanged heat with refrigerant within the indoor heat exchanger (not illustrated), is blown out from the blow-out ports 520. The fan motor 560 is arranged inside the main body 500 in a center portion of the main body 500 in bottom view.

Like the microphone elements 140 of the first embodiment, the microphone elements 140 are arranged inside the main body 500 or are arranged on the main body 500 in such a manner as to face the space to be air-conditioned. The microphone elements 140 accept a voice instruction captured from voice capturing portions P5. The arrangement of the voice capturing portions P5 will be described below.

### (1-1) Arrangement of Voice Capturing Portions

Like the voice capturing portions P1 of the first embodiment, the voice capturing portions P5 are arranged at positions that deviate from the ventilation spaces A5 through which the air blown out from the blow-out ports 520 in the main body 500 flows. Further, the voice capturing portions P5 are preferably arranged at positions that satisfy one or more of the conditions (A) to (E) described in the first embodiment.

Specifically, the arrangement of voice capturing portions P5a, P5b, P5c, P5d, and P5e will be described as a variation of the arrangement of the voice capturing portions P5. The arrangement of the voice capturing portions P5a, P5b, P5c, P5d, and P5e is illustrative, and the voice capturing portions P5 may be disposed at locations other than the exemplarily illustrated locations. For example, without limitation, in Fig. 13, all of the voice capturing portions P5a, P5b, P5c, P5d, and P5e are arranged at the right side of the main body 500. The voice capturing portions P5 may be disposed in the left, front, and rear of the main body 500 at positions corresponding to the voice capturing portions P5a, P5b, P5c, P5d, and P5e provided in Fig. 13.

In the indoor unit 12d, the number of combinations each including a voice capturing portion and a microphone element 140 that accepts a voice instruction captured from the voice capturing portion may be one or two or more, and is preferably two or more.

The voice capturing portion P5a is formed in a surface F5a having formed therein the suction port 530 (see Fig. 12). The voice capturing portion P5a is disposed in the surface F5a of the main body 500 that intersects the blow-out port forming surface F5 having formed therein the blow-out ports 520 (see Fig. 12). The voice capturing portion P5b is disposed on the main body 500 between one of the blow-out ports 520 and the suction port 530 (see Fig. 12).

The voice capturing portions P5b and P5e are disposed in a surface F5b intersecting the blow-out port forming surface F5 having formed therein the blow-out ports 520 (see Fig. 12). The voice capturing portions P5b and P5e are disposed in the surface F5b that intersects both the vertical plane and the horizontal plane and that is visible in bottom view (see Fig. 12).

The voice capturing portion P5b is disposed on the main body 500 between one of the blow-out ports 520 and the suction port 530 (see Fig. 13). Preferably, the voice capturing portion P5b is arranged on the main body 500 between one of the blow-out ports 520 and the suction port 530 at a position where the distances to the blow-out port 520 and the suction port 530 are substantially equal, or is preferably arranged nearer the suction port 530. Further, the voice capturing portion P4b is disposed in a center portion in the second direction D2 (in Fig. 13, in the front-rear direction) of adjacent blow-out ports 520.

The voice capturing portion P5e is arranged in a corner of the square-shaped main body 500 in bottom view and is arranged at a position relatively away from the fan motor 560 arranged in the center portion of the main body 500. Thus, when a voice capturing portion is located at the position P5e, not only the sound of the air blown out from the blow-out ports 520 but also the sound of the fan motor 560 is less likely to affect the quality of voice instructions acquired by the microphone elements 140.

The voice capturing portion P5d is disposed in the blow-out port forming surface F5 having formed therein the blow-out ports 520. The voice capturing portion P5d is disposed on the extension of one of the blow-out ports 520 in the longitudinal direction of the blow-out port 520, or in the second direction D2 (in Fig. 13, the front-rear direction).

The voice capturing portion P5c is disposed in a surface F5c of the main body 500 that intersects the blow-out port forming surface F5 having formed therein the blow-out ports 520. Specifically, whereas the blow-out port forming surface F5 is the vertical plane, the surface F5c is an inclined surface.

### (2) Features of Air Conditioner

The air conditioner 10 of the fifth embodiment also has a feature similar to the feature (3-1) described for the air conditioner 10 of the first embodiment. Further, the air conditioner 10 of the fifth embodiment can also have features similar to the features (3-3) to (3-6) described for the air conditioner 10 of the first embodiment in accordance with the arrangement of the voice capturing portions P5. Further, the air conditioner 10 of the fifth embodiment has features similar to the features (3-10) to (3-14) described for the air conditioner 10 of the first embodiment.

### <Sixth Embodiment>

An air conditioner 10 according to a sixth embodiment will be described.

### (1) Indoor Unit of Air Conditioner

An indoor unit 12e of the air conditioner 10 will be described with reference to Fig. 2 and Fig. 14.

Fig. 14 is a schematic side view of the indoor unit 12e of the air conditioner 10.

In the following, expressions sometimes used to describe directions or orientations, such as "front (front face)", "rear (rear face)", "up", and "down", are indicated by the arrows in the drawings unless otherwise stated.

The indoor unit 12e is a ceiling-suspended unit. The indoor unit 12e is a unit that blows out air in one direction (forward) (see Fig. 14).

The indoor unit 12e has a main body 600, microphone elements 140, a fan (not illustrated), and a fan motor 660 (see Fig. 2 and Fig. 14).

The main body 600 is a housing accommodating therein an indoor-side heat exchanger (not illustrated), the fan (not illustrated), and the fan motor 660. The main body 600 has formed therein a blow-out port 620 and a suction port 630 (see Fig. 14).

The suction port 630 is an opening through which air in the space to be air-conditioned is sucked into the main body 600. The suction port 630 is formed in a bottom surface of the main body 600 nearer the rear of the main body 600 (see Fig. 17). The suction port 630 is formed into a rectangular shape whose longitudinal direction corresponds to the left-right direction (the horizontal direction that is perpendicular to the front-rear direction) (see Fig. 14).

The blow-out port 620 is an opening through which air-conditioned air is blown out into the space to be air-conditioned. The blow-out port 620 is formed in a front lower portion of the main body 600. The blow-out port 620 is formed in a blow-out port forming surface F6 so as to extend in the left-right direction (the horizontal direction that is perpendicular to the front-rear direction). A flap (not illustrated) is arranged in the blow-out port 620 to adjust the up-down direction of airflow.

The air blown out from the blow-out port 620 mainly flows through a ventilation space A6 (see Fig. 14). The ventilation space A6 is a space extending from the blow-out port 620 in such a manner as to have approximately the same width in its longitudinal direction, or the left-right direction, as the width of the blow-out port 620. No consideration is given here of any change in the direction of airflow using an airflow-direction adjustment louver (not illustrated) for adjusting the left-right direction of airflow. In a case where the left-right direction of airflow is adjusted using the airflow-direction adjustment louver, the ventilation space A6 is a space that extends in the left-right direction as the distance from the blow-out port 620 increases. Further, the ventilation space A6 is a space that extends in a range defined by an angle θ3 in side view. Here, the angle θ3 is about 90°. Note that the value of the angle θ3 changes in accordance with the shape of the flap (not illustrated) disposed in the blow-out port or the movable range of the flap. The blow-out port 620 is configured such that air is mainly blown out in the first direction D1 (forward) in bottom view (see Fig. 14).

The fan motor 660 is an inverter-controlled motor that drives the fan (not illustrated) so that air is sucked toward the inside of the main body 600 from the suction port 630 and air-conditioned air, which has exchanged heat with refrigerant within the indoor heat exchanger (not illustrated), is blown out from the blow-out port 620. The fan motor 660 is arranged inside the main body 600 nearer the rear of the main body 600 (see Fig. 14).

Like the microphone elements 140 of the first embodiment, the microphone elements 140 are arranged inside the main body 600 or are arranged on the main body 600 in such a manner as to face the space to be air-conditioned. The microphone elements 140 accept a voice instruction captured from voice capturing portions P6. The arrangement of the voice capturing portions P6 will be described below.

### (1-1) Arrangement of Voice Capturing Portions

Like the voice capturing portions P1 of the first embodiment, the voice capturing portions P6 are arranged at positions that deviate from the ventilation space A6 through which the air blown out from the blow-out port 620 in the main body 600 flows. Further, the voice capturing portions P6 are preferably arranged at positions that satisfy one or more of the conditions (A) to (E) described in the first embodiment.

Specifically, the arrangement of voice capturing portions P6a, P6b, and P6c will be described as a variation of the arrangement of the voice capturing portions P6. The arrangement of P6a, P6b, and P6c is illustrative, and the voice capturing portions P6 may be disposed at locations other than the exemplarily illustrated locations.

In the indoor unit 12e, the number of combinations each including a voice capturing portion and a microphone element 140 that accepts a voice instruction captured from the voice capturing portion may be one or two or more, and is preferably two or more.

The voice capturing portion P6a is disposed in a surface F6a of the main body 600 that intersects the blow-out port forming surface F6 having formed therein the blow-out port 620 (see Fig. 14).

The voice capturing portion P6b is disposed in a surface F6b of the main body 600 that intersects the blow-out port forming surface F6 having formed therein the blow-out port 620 (see Fig. 14). Further, the voice capturing portion P6b is disposed on the main body 600 between the blow-out port 620 and the suction port 630 (see Fig. 14). Further, the voice capturing portion P6b is disposed on the main body 600 in the surface F6b that intersects both the vertical plane and the horizontal plane and that is visible in bottom view (see Fig. 14).

The voice capturing portion P6c is disposed in a surface F6c of the main body 600 that intersects the blow-out port forming surface F6 having formed therein the blow-out port 620 (see Fig. 14). Further, the voice capturing portion P6c is disposed on the main body 600 between the blow-out port 620 and the suction port 630 (see Fig. 14).

### (2) Features of Air Conditioner

The air conditioner 10 of the sixth embodiment also has a feature similar to the feature (3-1) described for the air conditioner 10 of the first embodiment. Further, the air conditioner 10 of the sixth embodiment can also have features similar to the features (3-2) to (3-6) described for the air conditioner 10 of the first embodiment in accordance with the arrangement of the voice capturing portions P6. Further, the air conditioner 10 of the sixth embodiment has features similar to the features (3-10) to (3-14) described for the air conditioner 10 of the first embodiment.

### <Seventh Embodiment>

An air conditioner 10 according to a seventh embodiment will be described.

### (1) Indoor Unit of Air Conditioner

An indoor unit 12f of the air conditioner 10 will be described with reference to Fig. 2 and Fig. 15.

Fig. 15 is a schematic front view of the indoor unit 12f of the air conditioner 10.

In the following, expressions sometimes used to describe directions or orientations, such as "right", "left", "up", and "down", are indicated by the arrows in the drawings unless otherwise stated.

The indoor unit 12f is a floor-mounted unit that blows out air to the front (see Fig. 15).

The indoor unit 12f has a main body 700, microphone elements 140, a fan (not illustrated), and a fan motor 760 (see Fig. 2 and Fig. 15).

The main body 700 is a housing accommodating therein an indoor-side heat exchanger (not illustrated), the fan (not illustrated), and the fan motor 760. The main body 700 has formed therein a blow-out port 720 and a suction port 730 (see Fig. 15).

The suction port 730 is an opening through which air in the space to be air-conditioned is sucked into the main body 700. The suction port 730 is formed in a lower portion on the front of the main body 700 (see Fig. 15). The suction port 730 is also formed in lower portions on the right and left side surfaces of the main body 700 (not illustrated).

The blow-out port 720 is an opening through which air-conditioned air is blown out into the space to be air-conditioned. The blow-out port 720 is formed in an upper portion on the front of the main body 700. The blow-out port 720 is formed in a blow-out port forming surface F7. The blow-out port 720 extends with its longitudinal direction corresponding to the up-down direction (the second direction D2). A flap (not illustrated) is arranged in the blow-out port 720 to adjust the left-right direction of airflow.

The air blown out from the blow-out port 720 mainly flows through a ventilation space A7 (see Fig. 15). The ventilation space A7 is a space extending from the blow-out port 720 in such a manner as to have approximately the same width in the left-right direction as the width of the blow-out port 720. No consideration is given here of any change in the direction of airflow using an airflow-direction adjustment louver (not illustrated) for adjusting the left-right direction of airflow. In a case where the left-right direction of airflow is adjusted using the airflow-direction adjustment louver, the ventilation space A7 is a space that extends in the left-right direction as the distance from the blow-out port 720 increases. No consideration is given here of any change in the direction of airflow using an airflow-direction adjustment louver (not illustrated) for adjusting the up-down direction of airflow. In a case where the up-down direction of airflow is adjusted using the airflow-direction adjustment louver, the ventilation space A7 is a space that extends in the up-down direction as the distance from the blow-out port 720 increases.

The fan motor 760 is an inverter-controlled motor that drives the fan (not illustrated) so that air is sucked toward the inside of the main body 700 from the suction port 730 and air-conditioned air, which has exchanged heat with refrigerant within the indoor heat exchanger (not illustrated), is blown out from the blow-out port 720. The fan motor 760 is arranged in a lower portion of the main body 700.

Like the microphone elements 140 of the first embodiment, the microphone elements 140 are arranged inside the main body 700 or are arranged on the main body 700 in such a manner as to face the space to be air-conditioned. The microphone elements 140 accept a voice instruction captured from voice capturing portions P7. The arrangement of the voice capturing portions P7 will be described below.

### (1-1) Arrangement of Voice Capturing Portions

Like the voice capturing portions P1 of the first embodiment, the voice capturing portions P7 are arranged at positions that deviate from the ventilation space A7 through which the air blown out from the blow-out port 720 in the main body 700 flows.

Note that it is preferable that the voice capturing portions P7 not be arranged on the left or right side surface or the rear surface of the main body 700. This is because, for example, although the left and right side surfaces of the main body 700 are located at positions that deviate from the ventilation space A7, the indoor unit 12f may often be arranged such that either the left or right side surface of the main body 700 adjoins the wall, in which case the microphone elements 140 are less likely to capture voice.

Further, the voice capturing portions P7 are preferably arranged at positions that satisfy one or more of the conditions (A) to (E) described in the first embodiment. Further, the voice capturing portions P7 are preferably disposed above a center M (see Fig. 15) of the main body 700 in the height direction.

In the floor-mounted indoor unit 12f, as in Fig. 15, the fan motor 760, which is heavy, is generally arranged in a lower portion of the indoor unit 12f. In contrast, the voice capturing portions P7 are disposed in an upper portion of the indoor unit 12f (above the center M of the main body 700). Thus, the microphone elements 140 is less susceptible to the sound of the fan motor 760, and is likely to acquire a clear voice instruction. In addition, when the voice capturing portions P7 are disposed in a lower portion of the indoor unit 12f, a voice instruction given by a standing or seated operator can be impeded by obstacles (for example, furniture such as a table or chair). In contrast, here, the voice capturing portions P7 are disposed in an upper portion of the indoor unit 12f, and thus a voice instruction is likely to be captured through the voice capturing portion P7 without obstruction.

Specifically, the arrangement of voice capturing portions P7a and P7b will be described as a variation of the arrangement of the voice capturing portions P7. The arrangement of the voice capturing portions P7a and P7b is illustrative, and the voice capturing portions P7 may be disposed at locations other than the exemplarily illustrated locations. For example, while, for simplicity of description, the voice capturing portion P7a is disposed only on one side (right side) in the left-right direction, which is not intended to be limiting, a similar voice capturing portion P7 may be disposed on the other side (left side) in the left-right direction.

In the indoor unit 12f, the number of combinations each including a voice capturing portion and a microphone element 140 that accepts a voice instruction captured from the voice capturing portion may be one or two or more, and is preferably two or more.

The voice capturing portions P7a and P7b are disposed above the center M of the main body 700 in the height direction (see Fig. 15).

The voice capturing portion P7b is disposed on the main body 700 between the blow-out port 720 and the suction port 730 (see Fig. 15). Further, the voice capturing portion P7b is disposed on the extension of the blow-out port 720 in the longitudinal direction of the blow-out port 720, or in the second direction D2 (the up-down direction) (see Fig. 15).

### (2) Features of Air Conditioner

The air conditioner 10 of the seventh embodiment also has a feature similar to the feature (3-1) described for the air conditioner 10 of the first embodiment. Further, the air conditioner 10 of the seventh embodiment can also have features similar to the (3-1) and (3-3) to (3-6) described for the air conditioner 10 of the first embodiment in accordance with the arrangement of the voice capturing portions P3. Further, the air conditioner 10 of the seventh embodiment has features similar to the features (3-10) to (3-14) described for the air conditioner 10 of the first embodiment.

### <Modifications>

The following provides modifications of the first to seventh embodiments described above.

### (1) Modification 1A

In the configuration of any of the embodiments described above, the indoor unit 12 or 12a to 12f preferably further has a voice-capture-direction adjustment mechanism 190 capable of changing the directions in which voice is captured by the voice capturing portions P1 to P7.

For example, in the first embodiment, when the circular openings 100a are formed near (for example, at positions adjacent to) the microphone elements 140 of the main body 100 and the openings 100a function as the voice capturing portions P1, a plate member 192 for changing the voice-capture-direction (facilitating input of sound from a specific direction) is provided for each of the openings 100a (see Fig. 16). The plate member 192 changes the direction of travel of a sound wave by, for example, reflecting voice. The plate member 192 is made manually rotatable so as to allow a point thereon to enter the opening 100a and exit the opening 100a, and, in addition, the plate member 192 is made manually rotatable in the circumferential direction of the opening 100a. This enables the voice capturing portions P1 to P7 to change the directions in which voice is captured (see Fig. 17).

Since the direction in which voice is captured is made changeable, it is possible to avoid a failure of the direction of voice capturing being directed to a place where no person is generally present (for example, to the wall), regardless of the attachment position or the like of the indoor unit 12. In addition, since the direction in which voice is captured can be changed, microphone elements are likely to acquire a clear voice instruction even if a voice spoken by an operator is weak.

Further, for example, the indoor units 12 and 12a to 12f may further include a detection unit that detects the position of a person in the space to be air-conditioned. The voice-capture-direction adjustment mechanism 190 may have an automatic adjustment unit 194 (see Fig. 18) that automatically changes the directions in which voice is captured by the voice capturing portions P1 to P7 in accordance with a detection result of the detection unit.

Specifically, for example, the detection unit is implemented by a plurality of microphone elements 140 and may detect the position of a person (who has given voice) by determining from which voice capturing portion the voice instruction having the largest sound volume has been captured. Further, the indoor unit 12 or 12a to 12f may have a motion sensor that detects the movement of a heat generating object, and the motion sensor may be used to detect the position of a person. The controller 18 may be configured to control a motor, which is an example of the automatic adjustment unit 194, in accordance with the result of detecting a person to activate the plate member 192.

With the configuration described above, the direction of voice capturing is automatically changed in accordance with the position of a person in the space to be air-conditioned. Thus, it is easy for the microphone elements 140 to acquire a clear voice instruction anywhere an operator moves within the space to be air-conditioned.

While the activation of the plate member 192 mounted in the opening 100a serving as each of the voice capturing portions P1 to P7 has been described as an example of the voice-capture-direction adjustment mechanism 190, the aspect of the voice-capture-direction adjustment mechanism is not limited to this. For example, the voice-capture-direction adjustment mechanism 190 may be configured to change the directions of the microphone elements 140 to change the directions in which voice is captured by the voice capturing portions P1 to P7.

### (2) Modification 1B

In the embodiments described above, without limitation, the device control system 1 is a system capable of also controlling the operation of the first device group 50 and the second device group 60 by using voice instructions. The device control system 1 may be a system that does not control the operation of either the first device group 50 or the second device group 60 or does not control the operation of the first device group 50 or the second device group 60. The device groups 50 and 60 that are not operated by using voice instructions, or the infrared output device 40 and the device server 70, which are required to control the device groups 50 and 60, may not be included in the device control system 1.

### (3) Modification 1C

In the embodiments described above, without limitation, the analysis server 20, the air conditioner server 30, and the device server 70 in the device control system 1 are separate servers. For example, one server may function as the analysis server 20 and the air conditioner server 30, or function as the analysis server 20, the air conditioner server 30, and the device server 70.

Conversely, the function of each of the analysis server 20, the air conditioner server 30, and the device server 70 described in the above embodiments may be achieved by a plurality of servers rather than by a single server.

Furthermore, in the embodiments described above, without limitation, the signal S transmitted from the transmission unit 16a is received by the analysis server 20. For example, the transmission unit 16a may transmit the signal S to the air conditioner server 30, and the signal S may be transmitted from the air conditioner server 30 to the analysis server 20.

### (4) Modification 1D

In the embodiments described above, an air conditioner has been described, taking as an example an apparatus that mainly adjusts the temperature or humidity of air; however, the air conditioner is not limited to an apparatus of this type. The air conditioner may be an air cleaner that removes dust particles and the like from air and blows out cleaned air, an air-flow adjustment apparatus that adjusts the flow of air in the space to be air-conditioned, or the like.

### (5) Modification 1E

In the embodiments described above, the arrangement of the microphone elements 140 is determined, taking into account the sound of the air blown out from the blow-out port in the main body of the indoor unit of the air conditioner 10 and, further, preferably, the sound of the fan motor. More preferably, the arrangement of the microphone elements 140 is determined, taking into account not only these sound generation sources but also other sound generation sources that may affect the capture of voice instructions by the microphone elements 140. For example, when the indoor unit of the air conditioner 10 has a voice output unit (such as a speaker) that generates beep, buzzer, or any other sound, preferably, the microphone elements 140 are preferably disposed away from the voice output unit (for example, when voice output unit is placed to the right of the main body, the microphone elements 140 are arranged to the left of the main body).

Further, for example, when the indoor unit of the air conditioner 10 has a drive unit (such as a stepping motor) for activating a flap disposed in a blow-out port or the like or a movable unit in an automatic cleaning mechanism for a filter, preferably, the microphone elements 140 are preferably disposed away from the drive unit (for example, when the drive unit is placed in an upper portion of the indoor unit, the microphone elements 140 are arranged in a lower portion of the main body).

Further, for example, when the indoor unit of the air conditioner 10 has an operating part such as an electrically operated valve, preferably, the microphone elements 140 are preferably disposed away from the part such as an electrically operated valve (for example, when the part such as an electrically operated valve is placed on the rear side of the main body, the microphone elements 140 are arranged on the front side of the main body).

Accordingly, the positions of the microphone elements 140 are determined, also taking into account at least some of sound generation sources such as the voice output unit, the drive unit, and the part such as an electrically operated valve, thus allowing the microphone elements 140 to acquire clearer voice.

### <Eighth Embodiment>

The following describes an air conditioner 1010 according to an eighth embodiment with reference to the drawings. The following also describes an embodiment of an operation apparatus for an air conditioner with reference to the drawings. An operation unit 1200 for the air conditioner 1010 is an example of a control apparatus for an air conditioner.

### (1) Overview of Device Control System

First, a device control system 1001 including the air conditioner 1010 will be described with reference to Fig. 19 and Fig. 20.

Fig. 19 is a schematic configuration diagram of the device control system 1001 including the air conditioner 1010. Fig. 20 is a schematic block diagram of the device control system 1001. In Fig. 20, some of the components of the device control system 1001 are not depicted.

The device control system 1001 is a system that controls the air conditioner 1010 using instructions given by an operator by voice. Further, the device control system 1001 is a system that controls devices 1050a, 1050b, ..., and 1050n included in a first device group 1050 and devices 1060a, 1060b, ..., and 1060m included in a second device group 1060 described below using instructions given by an operator by voice.

The device control system 1001 mainly includes the air conditioner 1010, the first device group 1050, the second device group 1060, an infrared output device 1040, an analysis server 1020, an air conditioner server 1030, and a device server 1070 (see Fig. 19).

The air conditioner 1010, the first device group 1050, the second device group 1060, and the infrared output device 1040 are devices arranged in a building 1000B (see Fig. 19). The building 1000B is, for example, but not limited to, a detached house. The building 1000B may be an office building, a commercial facility, a factory, or the like. The analysis server 1020, the air conditioner server 1030, and the device server 1070 are generally, but not limited to, installed in locations different from the building 1000B.

Fig. 19 depicts one building 1000B in which the air conditioner 1010, the first device group 1050, and the second device group 1060, whose operations are controlled by the device control system 1001, are arranged. However, a plurality of buildings 1000B may be used. That is, the device control system 1001 may be a system that controls the operation of the air conditioners 1010, the first device groups 1050, and the second device groups 1060 arranged in each of the plurality of buildings 1000B. For simplicity of description, it is assumed here that a single building 1000B is used.

Further, the number of air conditioners 1010, the number of devices in the first device group 1050, the number of devices in the second device group 1060, and the number of infrared output devices 1040, which are arranged in the building 1000B, are not limited to those depicted in Fig. 19, and may be each one or more. The following description is made assuming that one air conditioner 1010 and one infrared output device 1040 are arranged in the building 1000B and the first device group 1050 and the second device group 1060 arranged in the building 1000B each include a plurality of devices.

The following further describes the air conditioner 1010, the first device group 1050, the second device group 1060, the infrared output device 1040, the analysis server 1020, the air conditioner server 1030, and the device server 1070.

### (1-1) Air Conditioner

The air conditioner 1010 mainly has an indoor unit 1012, an outdoor unit 1014, a connection pipe (not illustrated) that connects the indoor unit 1012 and the outdoor unit 1014 to each other, a controller 1018, the operation unit 1200, and a cable unit 1300 (see Fig. 19 and Fig. 20). The air conditioner 1010 is an apparatus that performs air-conditioning of a space to be air-conditioned. The space to be air-conditioned is, for example, a room where the indoor unit 1012 is arranged in the building 1000B.

The air conditioner 1010 is an air conditioner that can be operated by inputting a voice instruction to a voice acceptance section 1210 of the operation unit 1200 described below. Non-limiting examples of the voice instruction include voice such as "turn air conditioning on" and "set the set temperature to 25°C". The air conditioner 1010 may be configured to be operable using a typical remote control in addition to operation via voice.

In the device control system 1001, the voice acceptance section 1210 of the operation unit 1200 is configured to be capable of also accepting voice instructions for the devices 1050a, 1050b, ..., and 1050n in the first device group 1050 and the devices 1060a, 1060b, ..., and 1060m in the second device group 1060.

The voice-based operations of the air conditioner 1010, the devices 1050a, 1050b, ..., and 1050n in the first device group 1050, and the devices 1060a, 1060b, ..., and 1060m in the second device group 1060 will be described below.

In the air conditioner 1010, the indoor unit 1012 and the outdoor unit 1014 are connected to each other via the connection pipe, thereby connecting an indoor heat exchanger (not illustrated) of the indoor unit 1012 and a compressor, an outdoor heat exchanger, an expansion valve, and the like (not illustrated) of the outdoor unit 1014 to each other via a pipe. Consequently, a refrigerant circuit is formed. In the air conditioner 1010, refrigerant is circulated in the refrigerant circuit, thereby cooling/heating the space where the indoor unit 1012 is installed.

In this embodiment, the air conditioner 1010 is configured such that in the indoor heat exchanger of the indoor unit 1012, refrigerant flowing in the indoor heat exchanger and air in the space to be air-conditioned exchange heat; however, the air conditioner is not limited to such a device. For example, the air conditioner 1010 may be an apparatus configured such that in the indoor heat exchanger of the indoor unit 1012 (fan coil unit), cold water/hot water flowing in the indoor heat exchanger and air in the space to be air-conditioned exchange heat.

The operation of the air conditioner 1010 is controlled by the controller 1018. The controller 1018 includes, for example, a control board (not illustrated) included in the indoor unit 1012 and a control board (not illustrated) included in the outdoor unit 1014. The operation of the components of the indoor unit 1012 is mainly controlled by the control board of the indoor unit 1012, and the operation of the components of the outdoor unit 1014 is mainly controlled by the control board of the outdoor unit 1014. CPUs on the control boards or the like of the indoor unit 1012 and the outdoor unit 1014, which constitute the controller 1018, execute an air conditioning control program to control the operation of the components of the air conditioner 1010 in accordance with a command 1000C or the like described below transmitted from the air conditioner server 1030. That is, the controller 1018 is an example of a control unit that controls the operation of the air conditioner 1010 in accordance with the command 1000C.

The operational principle and the content of the operation of the air conditioner 1010 using a vapor compression refrigeration cycle are widely known to the public and will not be described here. The air conditioner 1010 does not need to be an air conditioner capable of both cooling/heating the space to be air-conditioned, and may be a cooling-only or heating-only air conditioner. The operation unit 1200 is a unit for operating the air conditioner 1010 by voice. The operation unit 1200 is an example of an operation apparatus for the air conditioner 1010. The operation unit 1200 also functions as an operation apparatus used to operate devices (the devices in the first device group 1050 and the second device group 1060) other than the air conditioner 1010. The operation unit 1200 will be described below.

The air conditioner 1010 has a communication unit 1230 for communicating with the analysis server 1020 and the air conditioner server 1030 external to the air conditioner 1010 (see Fig. 20).

In this embodiment, the communication unit 1230 is mounted in the operation unit 1200 for the air conditioner 1010. However, this is not intended to be limiting, and, for example, the communication unit 1230 may be mounted in the indoor unit 1012 or the outdoor unit 1014. Further, the air conditioner 1010 may have a communication unit separate from the indoor unit 1012, the outdoor unit 1014, and the operation unit 1200. However, when a voice-activated operation function described in this embodiment is incorporated in an existing air conditioner having no communication function, it is preferable that the operation unit 1200 have the communication unit 1230.

The air conditioner 1010 (the communication unit 1230) is connected to the analysis server 1020 and the air conditioner server 1030 via a network 1080 (see Fig. 19). The network 1080 is the Internet, here, but may be any other WAN. The air conditioner 1010 is connected to a router 1082 via a wireless LAN, and is connected to the network 1080 via the router 1082 (see Fig. 19). The router 1082 has a WAN-side interface and a LAN-side interface, and interconnects a WAN and a LAN. The air conditioner 1010 and the router 1082 may be connected via a wired LAN, rather than via a wireless LAN.

The network 1080 may be a LAN.

The communication unit 1230 is, for example, a wireless LAN adapter that performs wireless communication with the router 1082. The communication unit 1230 has, as functional units, a transmission unit 1230a that transmits information, and a reception unit 1230b that receives information (see Fig. 20).

The transmission unit 1230a transmits, for example, a signal 1000S that is based on a voice instruction accepted by the voice acceptance section 1210 of the operation unit 1200 described below to the outside (see Fig. 20). In particular, the transmission unit 1230a transmits the signal 1000S that is based on a voice instruction other than a specific voice instruction (the specific voice instruction will be described below) among the voice instructions accepted by the voice acceptance section 1210 to the outside. However, this is not limiting, and the transmission unit 1230a may transmit, for all the voice instructions accepted by microphone elements 1210a, signals 1000S that are based on the voice instructions to the outside.

The transmission unit 1230a transmits the signal 1000S that is based on a voice instruction other than the specific voice instruction among the voice instructions accepted by the voice acceptance section 1210 to the analysis server 1020, which analyzes the signal 1000S. The transmission unit 1230a preferably transmits the signal 1000S that is based on a voice instruction other than the specific voice instruction among the voice instructions accepted by the voice acceptance section 1210 to also the air conditioner server 1030 and the device server 1070. That is, the transmission unit 1230a preferably transmits the signal 1000S to a plurality of addresses (for example, the analysis server 1020 and the air conditioner server 1030).

Here, the signal 1000S is a digital voice signal obtained by subjecting the voice instruction to AD conversion by a voice processing unit 1240 of the operation unit 1200 described below. The signal 1000S may be data obtained by, for example, further compressing the digital voice signal by the voice processing unit 1240 using various voice data compression techniques (such as MP3). Alternatively, the signal 1000S may be data obtained by converting the voice instruction into text (voice-to-text converted data) by the voice processing unit 1240.

Further, the transmission unit 1230a preferably transmits information 1000J on the state quantity for at least one of the air conditioner 1010 and the space to be air-conditioned to the air conditioner server 1030 (see Fig. 20). Non-limiting examples of the state quantity for the air conditioner 1010 include temperatures/pressures of refrigerant measured by sensors (not illustrated) at various locations in the refrigerant circuit, the number of revolutions of an inverter-controlled motor (not illustrated) of the compressor of the outdoor unit 1014, and the opening degree of the expansion valve of the outdoor unit 1014. Non-limiting examples of the state quantity for the space to be air-conditioned include the temperature of the space to be air-conditioned measured by a sensor (not illustrated). The information 1000J on the state quantity for the air conditioner 1010 and the space to be air-conditioned is transmitted from, for example, the controller 1018 for the air conditioner to the operation unit 1200 side, and is transmitted from the transmission unit 1230a.

The reception unit 1230b receives, for example, the command 1000C corresponding to the signal 1000S transmitted from the transmission unit 1230a (in particular, the signal 1000S that is based on a voice instruction for control of the air conditioner 1010) from the outside. More specifically, the reception unit 1230b receives the command 1000C generated on the basis of the result of analysis of the signal 1000S by the analysis server 1020 (in particular, the signal 1000S that is based on a voice instruction for control of the air conditioner 1010). Preferably, the reception unit 1230b receives the command 1000C generated by the air conditioner server 1030 on the basis of the result of analysis of the signal 1000S by the analysis server 1020 (in particular, the signal 1000S that is based on a voice instruction for control of the air conditioner 1010) and on the basis of the information 1000J on the state quantity transmitted from the transmission unit 1230a to the air conditioner server 1030.

The controller 1018 (the control unit for the air conditioner 1010) that controls the operation of the air conditioner 1010 controls the operation of the air conditioner 1010 in accordance with the command 1000C. For example, but not limitation, the command 1000C is related to at least one of turning on/off of the operation of the air conditioner 1010, switching among the operating modes (cooling/heating/dehumidification/ventilation, etc.) of the air conditioner 1010, changing of the set temperature (the target temperature of the space to be air-conditioned), a target value of the number of revolutions of the inverter-controlled motor (not illustrated) of the compressor of the outdoor unit 1014, a target value of the opening degree of the expansion valve of the outdoor unit 1014, and a target value of the number of revolutions of an inverter-controlled fan motor of the indoor unit 1012.

In this embodiment, the reception unit 1230b is disposed in the operation unit 1200. Thus, the operation unit 1200 transmits a signal based on the command 1000C received by the reception unit 1230b to the controller 1018, which controls the operation of the air conditioner 1010, via the cable unit 1300. The signal based on the command 1000C received by the reception unit 1230b may be the signal of the command 1000C or a signal (corresponding to the command 1000C) generated by the operation unit 1200 in accordance with the command 1000C.

The cable unit 1300 is a unit including a communication electric wire that communicably connects the indoor unit 1012 and the operation unit 1200 to each other. In this embodiment, furthermore, the cable unit 1300 also has the function of a power line that supplies electric power to the operation unit 1200 from the indoor unit 1012 side. For example, the cable unit 1300 is a bus-powered USB cable that is supplied with electric power from a USB port (not illustrated) on the indoor unit 1012 side. However, the operation unit 1200 may be supplied with electric power not via the cable unit 1300 but via any other power source line.

### (1-2) First Device Group

The devices 1050a, 1050b, ..., and 1050n in the first device group 1050 are devices that can be operated using infrared signals. The devices 1050a, 1050b, ..., and 1050n in the first device group 1050 can be operated using infrared signals transmitted from the infrared output device 1040 in response to input of voice instructions to the operation unit 1200. The devices 1050a, 1050b, ..., and 1050n in the first device group 1050 are similar to the devices 50a, 50b, ..., and 50n in the first device group 50 of the first embodiment and will not be described here.

### (1-3) Second Device Group

The devices 1060a, 1060b, ..., and 1060m in the second device group 1060 are devices that can be operated using signals transmitted via the network 1080. The devices 1060a, 1060b, ..., and 1060m in the second device group 1060 are operated using signals transmitted from the analysis server 1020 or the device server 1070 in response to input of voice instructions to the operation unit 1200. The devices 1060a, 1060b, ..., and 1060m in the second device group 1060 are similar to the devices 60a, 60b, ..., and 60m in the second device group 60 of the first embodiment and will not be described here.

### (1-4) Analysis Server

The analysis server 1020 is an example of an analysis apparatus.

The analysis server 1020 is connected to the air conditioner 1010 (the communication unit 1230) via the network 1080. When the operation unit 1200 for the air conditioner 1010 accepts a voice instruction, as described above, the transmission unit 1230a of the air conditioner 1010 transmits the signal 1000S that is based on the voice instruction to the analysis server 1020 via the network 1080 (see Fig. 20). Voice instructions accepted by the operation unit 1200 include a voice instruction for control of the air conditioner 1010, voice instructions for control of the devices 1050a, 1050b, ..., and 1050n in the first device group 1050, and voice instructions for control of the devices 1060a, 1060b, ..., and 1060m in the second device group 1060. In other words, the analysis server 1020 receives signals 1000S that are based on voice instructions for control of the air conditioner 1010, the devices 1050a, 1050b, ..., and 1050n, and the devices 1060a, 1060b, ..., and 1060m.

Further, the analysis server 1020 is communicably connected to the air conditioner server 1030, the device server 1070, and the infrared output device 1040 via the network 1080.

The analysis server 1020 is a computer that executes a program stored in a storage device to analyze the received signal 1000S. Specifically, for example, the analysis server 1020 performs voice recognition of a received voice signal.

The storage device of the analysis server 1020 stores, in addition to the program, for example, a list of devices (the air conditioner 1010, the devices 1050a, 1050b, ..., and 1050n in the first device group 1050, and the devices 1060a, 1060b, ..., and 1060m in the second device group 1060) that can be operated by each operation unit 1200. That is, the analysis server 1020 knows which device can be operated by each operation unit 1200. In addition, for the devices 1060a, 1060b, ..., and 1060m in the second device group 1060, information as to whether the device 1060a, 1060b, ..., or 1060m to be controlled is a direct control target of the analysis server 1020 (a control target of either of the analysis server 1020 and the device server 1070) is also stored.

The analysis server 1020 analyzes the voice represented by the signal 1000S to determine a feature value for the voice, and generates text information from the feature value by using a voice recognition dictionary stored in the storage device, which includes an acoustic model, a linguistic model, and a pronunciation dictionary. Non-limiting examples of the text information generated by the analysis server 1020 include text information such as "turn the air conditioner on", "set the set temperature of the air conditioner to 25 degrees", "turn the lighting device off", and "turn the television set on".

When the text information is related to control of the air conditioner 1010 (for example, when the text information includes an air-conditioner-related keyword), the analysis server 1020 transmits the analysis result of the signal 1000S (i.e., the generated text information) to the air conditioner server 1030 via the network 1080 (see Fig. 20).

When the text information is related to control of the device 1050a, 1050b, ..., or 1050n in the first device group 1050 (for example, when the text information includes a keyword related to the first device group 1050), the analysis server 1020 transmits a command to the infrared output device 1040 to provide an instruction to transmit an infrared signal corresponding to the analysis result of the signal 1000S (i.e., the generated text information). For example, when the text information is information concerning a lighting device included in the devices 1050a, 1050b, ..., and 1050n in the first device group 1050 (for example, "turn the lighting device off"), the analysis server 1020 transmits a command to the infrared output device 1040 to transmit an infrared signal for instructing the lighting device to turn off. The command directed to the infrared output device 1040 is transmitted from the analysis server 1020 to the infrared output device 1040 via the network 1080.

When the text information is related to control of the device 1060a, 1060b, ..., or 1060m in the second device group 1060 (for example, when the text information includes a keyword related to the second device group 1060), the analysis server 1020 transmits a command corresponding to the analysis result of the signal 1000S (i.e., the generated text information) to the device 1060a, 1060b, ..., or 1060m in the second device group 1060. For example, when the text information is information concerning a television set included in the devices 1060a, 1060b, ..., and 1060m in the second device group 1060 (for example, "turn the television set on"), the analysis server 1020 transmits a command to the television set to provide an instruction to turn on the switch. Commands directed to the devices 1060a, 1060b, ..., and 1060m in the second device group 1060 are transmitted from the analysis server 1020 to the devices 1060a, 1060b, ..., and 1060m in the second device group 1060 via the network 1080.

When the text information is related to control of the device 1060a, 1060b, ..., or 1060m in the second device group 1060 and the device 1060a, 1060b, ..., or 1060m to be controlled is not a direct control target of the analysis server 1020, the text information is transmitted to the device server 1070 that controls the corresponding device 1060a, 1060b, ..., or 1060m. Then, a command is transmitted from the device server 1070 to the corresponding device 1060a, 1060b, ..., or 1060m via the network 1080.

### (1-5) Air Conditioner Server

The air conditioner server 1030 is an example of a command generation apparatus.

The air conditioner server 1030 generates the command 1000C on the basis of the result of analysis of the signal 1000S by the analysis server 1020 (i.e., the text information generated by the analysis server 1020), which is transmitted from the analysis server 1020, and on the basis of the information 1000J on the state quantity for at least one of the air conditioner 1010 and the space to be air-conditioned, which is transmitted as appropriate from the transmission unit 1230a of the air conditioner 1010. Then, the air conditioner server 1030 transmits the command 1000C to the reception unit 1230b of the air conditioner 1010 via the network 1080. For example, without limitation, upon receipt of the command "turn the air conditioner on" as text information, the air conditioner server 1030 determines the operation of the components of the air conditioner 1010 on the basis of the current temperature and the like of the space to be air-conditioned, and transmits the command as the command 1000C.

Here, without limitation, the air conditioner server 1030 generates the command 1000C on the basis of the information 1000J in addition to the result of analysis of the signal 1000S by the analysis server 1020. The air conditioner server 1030 may generate the command 1000C on the basis of only the result of analysis of the signal 1000S by the analysis server 1020.

Further, the air conditioner server 1030 accumulates signals 1000S transmitted from the transmission unit 1230a of the air conditioner 1010 and performs various analysis operations by using the signals 1000S.

In this embodiment, without limitation, the device control system 1001 includes the air conditioner server 1030. For example, when the air conditioner 1010 is capable of directly determining the content of the operation on the basis of the result of analysis of the signal 1000S by the analysis server 1020 (i.e., the text information generated by the analysis server 1020), the air conditioner server 1030 may not be disposed. The result of analysis of the signal 1000S by the analysis server 1020 may be transmitted directly to the reception unit 1230b of the air conditioner 1010 as the command 1000C.

### (1-6) Device Server

The device server 1070 generates a command for the device 1060a, 1060b, ..., or 1060m in the second device group 1060 on the basis of the result of analysis of the signal 1000S by the analysis server 1020 (i.e., the text information generated by the analysis server 1020), which is transmitted from the analysis server 1020. Then, the device server 1070 transmits the command to the operation target among the devices 1060a, 1060b, ..., and 1060m in the second device group 1060 via the network 1080.

In Fig. 19, the number of device servers 1070 is one. However, if there is a plurality of types of the devices 1060a, 1060b, ..., and 1060m to be operated by the device server 1070 (rather than in accordance with commands from the analysis server 1020), a number of device servers 1070 equal to the number of types are preferably present.

In addition, when all of the devices 1060a, 1060b, ..., and 1060m are operable with commands from the analysis server 1020, the device server 1070 may not be present.

### (1-7) Infrared Output Device

The infrared output device 1040 has a storage unit (not illustrated) that stores an infrared signal pattern for control for each of the devices 1050a, 1050b, ..., and 1050n in the first device group 1050 or for each of the operations to be performed on the devices 1050a, 1050b, ..., and 1050n in the first device group 1050. The infrared output device 1040 transmits an infrared signal to the operation target among the devices 1050a, 1050b, ..., and 1050n in the first device group 1050 in accordance with a command transmitted from the analysis server 1020 by using the infrared signal pattern stored in the storage unit.

### (2) Indoor Unit of Air Conditioner

The indoor unit 1012 of the air conditioner 1010 will further be described with reference to the drawings.

Fig. 21A is a schematic front view of the indoor unit 1012 of the air conditioner 1010. Fig. 21B is a schematic bottom view of an indoor unit 1012' of another embodiment, which is different in type from the indoor unit 1012. In Fig. 21A and Fig. 21B, the operation unit 1200 for the air conditioner 1010 is also illustrated.

In the following, expressions sometimes used to describe directions or orientations, such as "front (front face)", "rear (rear face)", "left", "right", "up", and "down", are indicated by the arrows in the drawings unless otherwise stated.

The indoor unit 1012 according to this embodiment is of a wall-mounted type.

The indoor unit 1012 has a main body 1100 whose rear side is attached to the wall (see Fig. 19 and Fig. 21A). The main body 1100 is a housing accommodating therein an indoor-side heat exchanger (not illustrated), a fan, and a fan motor.

The main body 1100 has formed therein a blow-out port 1120 and a suction port 1130 (see Fig. 19 and Fig. 21A).

The suction port 1130 is an opening through which air in the space to be air-conditioned is sucked into the main body 1100. The suction port 1130 extends with its longitudinal direction corresponding to the left-right direction in front view (see Fig. 21). The suction port 1130 is formed so as to extend from the top of the front face of the main body 1100 to an upper surface of the main body 1100.

The blow-out port 1120 is an opening through which air-conditioned air is blown out into the space to be air-conditioned. The blow-out port 1120 is formed in a lower portion of the main body 1100. A flap 1122 is arranged in the blow-out port 1120 to adjust the up-down direction of airflow (see Fig. 19).

The type of the indoor unit of the air conditioner is not limited to the wall-mounted type. For example, the air conditioner may use the ceiling-embedded indoor unit 1012' illustrated in Fig. 21B.

In accordance with another example, without limitation, the indoor unit 1012' is a unit that blows out air in four directions (see Fig. 21B).

The indoor unit 1012' has a main body 1100' (see Fig. 21B). The main body 1100' is a housing accommodating therein an indoor-side heat exchanger (not illustrated), a fan, and a fan motor. The main body 1100' has formed therein blow-out ports 1120' and a suction port 1130' (see Fig. 21B).

In the main body 1100', the suction port 1130' is formed into a square shape (see Fig. 21B). The suction port 1130' is formed in a center portion of the main body 1100' in bottom view (see Fig. 21B).

In the main body 1100', furthermore, the blow-out ports 1120' are formed at four locations on a lower surface of the main body 1100'. The blow-out ports 1120' are formed so as to extend along the four sides of the square-shaped main body 1100' in bottom view in the vicinity of the front edge, the rear edge, the left edge, and the right edge. The blow-out ports 1120' are formed so as to surround the suction port 1130' arranged in the center portion of the main body 1100' in bottom view.

Although not illustrated or described, the indoor unit of the air conditioner may be of a ceiling-suspended type or a floor-mounted type otherwise.

Alternatively, the indoor unit of the air conditioner may be a built-in type unit having a main body that is not exposed to the space to be air-conditioned or is not substantially exposed to the space to be air-conditioned. The main body of a built-in type unit is arranged in the wall or within the ceiling area. For example, the air blown out from a blow-out port in the main body of a built-in type unit is delivered to an opening in the wall surface or the surface of the ceiling through a duct and is blown out to the space to be air-conditioned.

While the following describes the indoor unit 1012 of this embodiment as an example, the indoor unit 1012' may have a similar configuration.

The main body 1100 accommodates therein a control board (not illustrated) of the indoor unit 1012. The control board of the indoor unit 1012 is communicably connected to the operation unit 1200 by using the cable unit 1300.

The cable unit 1300 may be connected directly to the control board of the indoor unit 1012. Alternatively, the cable unit 1300 may be a USB cable whose USB terminal is connected to the USB port in the indoor unit 1012 to communicably connect the control board of the indoor unit 1012 and the operation unit 1200 to each other.

### (3) Operation Unit

The operation unit 1200 is a unit used for operation of the air conditioner 1010 via voice. The operation unit 1200 is also an example of an operation apparatus for the air conditioner 1010.

The operation unit 1200 includes a CPU (not illustrated) that executes various processing operations, and a storage device (not illustrated) that stores a program executed by the CPU and various kinds of information. Further, the operation unit 1200 includes the microphone elements 1210a included in the voice acceptance section 1210, a speaker serving as a notification unit 1220, a voice processing chip that performs various processing operations on voice acquired by the microphone elements 1210a, a wireless LAN adapter that functions as the communication unit 1230, and so on.

The operation unit 1200 is arranged outside the main body 1100 of the indoor unit 1012.

For example, the operation unit 1200 is attached to a wall surface facing the space to be air-conditioned (see the operation unit 1200 indicated by the solid line in Fig. 21A). Alternatively, for example, the operation unit 1200 may be attached on the main body 1100 (to a surface of the main body 1100) (see the operation unit 1200 indicated by the one-dot chain line in Fig. 21A or the operation unit 1200 indicated by the solid line in Fig. 21B). Alternatively, the operation unit 1200 may be attached to the surface of the ceiling facing the space to be air-conditioned (see the operation unit 1200 indicated by the one-dot chain line or broken line in Fig. 21B).

Here, without limitation, the operation unit 1200 is attached to a wall surface near the wall-mounted indoor unit 1012 or is attached on the main body 1100 of the indoor unit 1012 (see Fig. 21A) and the operation unit 1200 is attached to the surface of the ceiling near the ceiling-embedded indoor unit 1012' or is attached on the main body 1100' of the indoor unit 1012'. For example, when the wall-mounted indoor unit 1012 is used, the operation unit 1200 may be attached to the surface of the ceiling facing the space to be air-conditioned. For example, when the ceiling-embedded indoor unit 1012' is used, the operation unit 1200 may be attached to a wall surface facing the space to be air-conditioned.

The operation unit 1200 includes a main body 1270, the voice acceptance section 1210, the notification unit 1220, the communication unit 1230, the voice processing unit 1240, a command transmission unit 1250, and a switch 1260.

### (3-1) Main Body

The main body 1270 is a housing of the operation unit 1200 that accommodates therein various components of the operation unit 1200 or that has on a surface thereof various components of the operation unit 1200.

The main body 1270 is formed into, for example, but not limited to, a long and narrow rectangular shape (see the operation units 1200 depicted in Fig. 21A and the operation unit 1200 indicated by the solid line or broken line in Fig. 21B). The main body 1270 extends with its longitudinal direction corresponding to the horizontal direction in such a manner as to be attached on the main body 1100 of the indoor unit 1012 or attached to a wall surface facing the space to be air-conditioned or to the surface of the ceiling.

As indicated by the one-dot chain line in Fig. 21B, for example, the main body 1270 may be formed into a square shape. Alternatively, the main body 1270 may be formed into a polygonal shape other than a rectangular shape, such as a circular shape or an elliptic shape.

As described above, the main body 1270 is preferably attached on the main body 1100 or 1100' of the indoor unit 1012 or attached to a wall surface facing the space to be air-conditioned or to the surface of the ceiling. For example, the main body 1270 indicated by the solid line in Fig. 21A is attached to a wall surface below the main body 1100. Further, the main body 1270 indicated by the one-dot chain line in Fig. 21A is attached to a front surface of the main body 1100 between the blow-out port 1120 and the suction port 1130. The main body 1270 indicated by the solid line in Fig. 21B is attached to the lower surface of the main body 1100 between one of the blow-out ports 1120' and the suction port 1130'. The main body 1270 indicated by the one-dot chain line in Fig. 21B is attached to the surface of the ceiling near a corner of the substantially square-shaped main body 1100'. The main body 1270 indicated by the broken line in Fig. 21B is also attached to the surface of the ceiling near a corner of the substantially square-shaped main body 1100'.

To prevent input of voice instructions from being affected by noise, the main body 1270 is preferably arranged such that at least the voice acceptance section 1210 disposed on the main body 1270 is not arranged at a location which is near the blow-out port 1120 or 1120' of the indoor unit 1012 and to which the air blown out from the blow-out port 1120 or 1120' is directly applied.

### (3-2) Voice Acceptance Section

The voice acceptance section 1210 accepts input of voice instructions to the air conditioner 1010. Further, the voice acceptance section 1210 is configured to be capable of also accepting input of voice instructions to the devices 1050a, 1050b, ..., and 1050n in the first device group 1050 and the devices 1060a, 1060b, ..., and 1060m in the second device group 1060.

The voice acceptance section 1210 has the microphone elements 1210a that accept voice instructions.

Like the operation unit 1200 indicated by the one-dot chain line in Fig. 21B, the voice acceptance section 1210 may include a single microphone element 1210a. Note that the number of microphone elements 1210a included in the voice acceptance section 1210 is preferably at least two or more (see the operation units 1200 depicted in Fig. 21A and the operation units 1200 indicated by the solid line and broken line in Fig. 21B).

The arrangement of two or more microphone elements 1210a so that the microphone elements 1210a can easily acquire a voice instruction from different places results in it being likely that the voice acceptance section 1210 acquires the voice instruction with certainty, regardless of the position of the operator (utterer). In addition, the arrangement of two or more microphone elements 1210a so that the microphone elements 1210a can easily acquire a voice instruction from different places allows detection of the position of a person (operator) from a detection result and also allows control of the air conditioner 1010 based on the information.

Like the operation units 1200 depicted in Fig. 21A and the operation units 1200 indicated by the solid line and broken line in Fig. 21B, when the main body 1270 has a shape that extends with its longitudinal direction corresponding to the horizontal direction and two or more the microphone elements 1210a are present, each of the microphone elements 1210a is preferably disposed at least at either end of the operation unit 1200 (the main body 1270) in the longitudinal direction.

### (3-3) Notification Unit

The notification unit 1220 is, here, a speaker.

The notification unit 1220 mainly provides notification that a voice instruction is accepted by the voice acceptance section 1210. Specifically, for example, when the voice acceptance section 1210 accepts a voice instruction, the notification unit 1220 produces a spoken sentence, such as "voice has been accepted", or repeats the accepted voice instruction to provide notification of acceptance of the voice instruction by the voice acceptance section 1210. Alternatively, the notification unit 1220 may be configured to, when the air conditioner 1010 executes various operations, provide notification of the content of the operations (for example, a text such as "the operation starts"). Alternatively, the notification unit 1220 may be configured to, when the devices in the first device group 1050 and the second device group 1060 execute various operations, provide notification of the content of the operations.

The speaker serving as the notification unit 1220 does not need to provide notification by producing a spoken sentence or word, and may provide notification by using a beep sound or the like.

The notification unit 1220 may not be a speaker. For example, the notification unit 1220 can be implemented as any other type of notification device such as a light that provides notification by using light, a vibrator that provides notification by vibration, or a display that displays information. The operation unit provided with the notification unit allows a user to recognize that voice is accepted by the voice acceptance section.

### (3-4) Communication Unit

The communication unit 1230 is, for example, a wireless LAN adapter that performs wireless communication with the router 1082. The communication unit 1230 may be a network adapter or the like that is connected to the router 1082 via a wired LAN. The communication unit 1230 has, as functional units, the transmission unit 1230a that transmits information and the reception unit 1230b that receives information (see Fig. 20). The communication unit 1230 including the transmission unit 1230a and the reception unit 1230b has already been described and will not be described.

### (3-5) Voice Processing Unit

The voice processing unit 1240 processes a voice instruction accepted by the microphone elements 1210a of the voice acceptance section 1210 to generate the signal 1000S. Further, the voice processing unit 1240 recognizes only a specific voice instruction among voice instructions accepted by the microphone elements 1210a and generates a predetermined command 1000C0. The voice processing unit 1240 is, for example, an integrated circuit that executes these functions.

The voice processing unit 1240 performs AD conversion on a voice instruction to generate a digital voice signal that is an example of the signal 1000S. Preferably, the voice processing unit 1240 further performs voice compression on the voice instruction subjected to AD conversion using various voice data compression techniques (such as MP3) to generate the signal 1000S. In another embodiment, the voice processing unit 1240 may convert a voice instruction into text to generate the signal 1000S (voice instruction-to-text converted data).

The transmission unit 1230a transmits the signal 1000S generated by the voice processing unit 1240 (for example, a voice instruction subjected to voice compression processing by the voice processing unit 1240) to the outside (such as the analysis server 1020).

The specific voice instruction recognized by the voice processing unit 1240 is voice for, for example, requesting the operation unit 1200 to prepare to input the next voice instruction. The predetermined command 1000C0 includes, for example, a command for requesting the voice acceptance section 1210 to accept the subsequent voice instruction. Further, the predetermined command 1000C0 includes, for example, a command for requesting the transmission unit 1230a of the communication unit 1230 to prepare to transmit the signal 1000S that is based on a voice instruction (accepted subsequently to the specific voice instruction), other than the specific voice instruction, among the voice instructions accepted by the voice acceptance section 1210.

The specific voice instruction may not be voice for requesting the operation unit 1200 to prepare to input the next voice instruction. For example, the specific voice instruction may be voice for requesting execution of the basic operation (for example, turning on/off) of the air conditioner 1010, and the predetermined command 1000C0 generated in accordance with the specific voice instruction may be a command for requesting the controller 1018 to start/stop the operation of the air conditioner 1010. The signal 1000S that is based on a voice instruction for requesting execution of an operation of the air conditioner 1010, other than the basic operation, may be transmitted to the outside (the analysis server 1020).

In this embodiment, without limitation, the voice processing unit 1240 is disposed in the operation unit 1200. For example, the voice processing unit 1240 may be disposed in the indoor unit 1012 of the air conditioner 1010.

### (3-6) Switch

The switch 1260 is a switch for switching the operating state of the voice acceptance section 1210.

For example, the switch 1260 is disposed on the main body 1270 (see the operation unit 1200 indicated by the solid line in Fig. 21A).

When the main body 1270 is disposed at a position that is out of a person's reach (for example, in a high place), the switch 1260, which is separate from the main body 1270 having the voice acceptance section 1210, may be placed at a position away from the main body 1270 (see the operation unit 1200 indicated by the one-dot chain line in Fig. 21A). While the switch 1260 is not illustrated in Fig. 21B, the main body 1270 is assumed to be placed near the ceiling in Fig. 21B, and the switch 1260 is thus arranged at a position away from the main body 1270 (for example, on the wall surface), for example. When the switch 1260 is placed at a position away from the main body 1270, the switch 1260 is communicably connected to the main body 1270 side via wired or wireless connection.

The switch 1260 is a push button switch, but this is not limiting. By pressing the switch 1260, the operating state of the voice acceptance section 1210 is switched between a sleep state in which no voice instruction is accepted and an active state in which voice instructions are acceptable.

The operating state of the voice acceptance section 1210 may be switched between the sleep state and the active state each time the switch 1260 is pressed. Alternatively, the operating state of the voice acceptance section 1210 may be switched from the sleep state to the active state for a predetermined time period when the switch 1260 is pressed.

The operation unit 1200 may not have the switch 1260, and the operating state of the voice acceptance section 1210 may be always set to the active state. It is preferable that the operation unit 1200 be provided with the switch 1260 to prevent the voice acceptance section 1210 from accepting voice at an unintended timing (to avoid unintended malfunction of the air conditioner 1010 or the devices in the first device group 1050 and the second device group 1060).

### (3-7) Command Transmission Unit

The command transmission unit 1250 transmits various commands to the controller 1018 for the air conditioner 1010. For example, the command transmission unit 1250 transmits a signal based on the command 1000C received by the reception unit 1230b from the air conditioner server 1030 to the controller 1018 for the air conditioner 1010, which controls the operation of the air conditioner 1010, via the cable unit 1300. Further, the command transmission unit 1250 transmits the predetermined command 1000C0 generated by the voice processing unit 1240 to the controller 1018 for the air conditioner 1010, which controls the operation of the air conditioner 1010, via the cable unit 1300, as needed.

### (4) Features of Air Conditioner and Operation Unit (Operation apparatus)

### (4-1)

The air conditioner 1010 according to this embodiment includes the indoor unit 1012 having the main body 1100. The main body 1100 has formed therein the blow-out port 1120 through which air-conditioned air is blown out toward the space to be air-conditioned. The air conditioner 1010 includes the operation unit 1200, the cable unit 1300, the transmission unit 1230a, the reception unit 1230b, and the controller 1018, which is an example of an air conditioner control unit. The operation unit 1200 has the voice acceptance section 1210. The voice acceptance section 1210 accepts input of voice instructions. The operation unit 1200 is arranged outside the main body 1100. The cable unit 1300 communicably connects the indoor unit 1012 and the operation unit 1200 to each other. The transmission unit 1230a transmits the signal 1000S that is based on a voice instruction accepted by the voice acceptance section 1210 to the outside. The reception unit 1230b receives the command 1000C corresponding to the signal 1000S transmitted from the transmission unit 1230a from the outside. The controller 1018 controls the operation of the air conditioner 1010 in accordance with the command 1000C.

In the air conditioner 1010 according to this embodiment, the operation unit 1200 used for operation via voice is externally attached to the indoor unit 1012, and the command 1000C is generated outside the air conditioner 1010 in accordance with a voice instruction. Thus, it is easy to change addition/non-addition of a voice-activated operation function to the air conditioner 1010 in accordance with the need of the user. Since the operation unit 1200 is an externally attached device, it is also easy to add a voice-activated operation function to an already-installed air conditioner having no voice-activated operation function.

In the air conditioner 1010, furthermore, since the operation unit 1200 is externally attached to the indoor unit 1012, the operation unit 1200 is arranged flexibly. This ensures that the voice acceptance section 1210 is likely to accept an instruction given by the user, regardless of the arrangement location or the like of the indoor unit 1012 (for example, even when the arrangement location of the indoor unit 1012 and a location where the user of the air conditioner 1010 performs main activities are away from each other).

In the air conditioner 1010, furthermore, the indoor unit 1012 and the operation unit 1200 are connected via wired connection, and thus it is likely that the signal 1000S is exchanged between these units with certainty.

Preferably, the operation unit 1200 includes the notification unit 1220. The notification unit 1220 provides notification of acceptance of a voice instruction by the voice acceptance section 1210.

### (4-2)

In the air conditioner 1010 according to this embodiment, the transmission unit 1230a and the reception unit 1230b are mounted in the operation unit 1200.

Here, the operation unit 1200 includes the transmission unit 1230a and the reception unit 1230b in addition to the voice acceptance section 1210 and the notification unit 1220. Thus, it is particularly easy to change addition/non-addition of a voice-activated operation function to the air conditioner 1010 in accordance with the need of the user. In addition, various components necessary for operation via voice are collectively mounted in the operation unit 1200. Thus, it is easy to also add a voice-activated operation function to an already-installed air conditioner having no voice-activated operation function.

### (4-3)

In the air conditioner 1010 according to this embodiment, the operation unit 1200 has the switch 1260 that switches the operating state of the voice acceptance section 1210 from a sleep state in which no voice instruction is accepted to an active state in which voice instructions are acceptable.

Here, the operation unit 1200 is provided with the switch 1260 that switches the operating state of the voice acceptance section 1210 to the active state. This makes it easy to activate the voice acceptance section 1210 only when a voice instruction is to be input. In the air conditioner 1010, thus, it is possible to prevent malfunction of the air conditioner 1010 based on voice issued without the intention of instructions.

### (4-4)

In the air conditioner 1010 according to this embodiment, the cable unit 1300 has the function of a power line that supplies electric power to the operation unit 1200.

Here, the cable unit 1300 connecting the indoor unit 1012 and the operation unit 1200 also functions as a power line. This enables the operation unit 1200 to function without using a power source extraction port dedicated to the operation unit 1200, and provides high convenience.

### (4-5)

In the air conditioner 1010 according to this embodiment, the operation unit 1200 extends with its longitudinal direction corresponding to the horizontal direction, and is disposed on the main body 1100 or on a wall surface or the surface of the ceiling facing the space to be air-conditioned.

Thus, it is possible to realize the air conditioner 1010 that is also excellent aesthetically.

### (4-6)

In the air conditioner 1010 according to this embodiment, the voice acceptance section 1210 has at least two microphone elements 1210a. Each of the microphone elements 1210a is disposed at least at either end of the operation unit 1200 in the longitudinal direction.

Here, since each of the microphone elements 1210a is disposed at either end of the operation unit 1200 in the horizontal direction, the voice acceptance section 1210 is likely to accept an instruction given by the user regardless of the position of the user relative to the operation unit 1200.

### (4-7)

In the air conditioner 1010 according to this embodiment, the transmission unit 1230a transmits the signal 1000S to the analysis server 1020, which is an example of an analysis apparatus that analyzes the signal 1000S, via the network 1080. The reception unit 1230b receives the command 1000C generated on the basis of the result of analysis of the signal 1000S by the analysis server 1020.

Here, a voice instruction is transmitted to the external analysis server 1020, and the command 1000C is generated on the basis of the result of analysis of the voice instruction. Thus, even if the air conditioner is caused to execute a relatively complex operation, the air conditioner can be operated by voice.

In addition, it is also easy to operate multiple types of devices including the air conditioner 1010 (the devices in the first device group 1050 and the second device group 1060) by voice by using the operation unit 1200.

### (4-8)

In the air conditioner 1010 according to this embodiment, the transmission unit 1230a transmits the information 1000J on the state quantity for at least one of the air conditioner 1010 and the space to be air-conditioned to the air conditioner server 1030, which is an example of a command generation apparatus. The reception unit 1230b receives the command 1000C generated by the air conditioner server 1030 on the basis of the result of analysis of the signal 1000S by the analysis server 1020 and on the basis of the information 1000J on the state quantity.

Here, an instruction is given to the air conditioner 1010 on the basis of the result of analysis of a voice instruction and information on the state quantity for the air conditioner 1010 or the space to be air-conditioned. Thus, it is likely that appropriate control based on the voice instruction is executed on the air conditioner 1010.

### (4-9)

The air conditioner 1010 according to this embodiment further includes the voice processing unit 1240 that is an example of a voice compression unit that performs voice compression on the voice instruction accepted by the voice acceptance section 1210. The transmission unit 1230a transmits, as the signal 1000S, a voice instruction subjected to voice compression processing by the voice processing unit 1240 to the outside.

Here, a voice instruction is subjected to voice compression and is then transmitted to the outside. Thus, efficient communication can be achieved.

### (4-10)

In the air conditioner 1010 according to this embodiment, the transmission unit 1230a transmits the signal 1000S to a plurality of addresses.

Here, a voice accepted by the voice acceptance section 1210 is transmitted to a plurality of addresses. Thus, the acquired voice is available for various processing operations.

### (4-11)

The operation unit 1200, which is an example of an operation apparatus according to this embodiment, is the operation unit 1200 for the air conditioner 1010, which is arranged outside the main body 1100 of the indoor unit 1012 of the air conditioner 1010 and is connected to the indoor unit 1012 via the cable unit 1300. The main body 1100 of the indoor unit 1012 has formed therein the blow-out port 1120 through which air-conditioned air is blown out toward the space to be air-conditioned. The operation unit 1200 includes the voice acceptance section 1210, the notification unit 1220, the transmission unit 1230a, the reception unit 1230b, and the command transmission unit 1250. The voice acceptance section 1210 accepts input of a voice instruction to the air conditioner 1010. The notification unit 1220 provides notification of acceptance of the voice instruction by the voice acceptance section 1210. The transmission unit 1230a transmits the signal 1000S that is based on the voice instruction accepted by the voice acceptance section 1210 to the outside. The reception unit 1230b receives the command 1000C corresponding to the signal 1000S transmitted from the transmission unit 1230a from the outside. The command transmission unit 1250 transmits a signal based on the command 1000C received by the reception unit 1230b to the controller 1018 for the air conditioner 1010, which controls the operation of the air conditioner 1010, via the cable unit 1300.

In the operation unit 1200, various components necessary for operation via voice are collectively mounted in the operation unit 1200. This makes it easy to add a voice-activated operation function to the air conditioner 1010 in accordance with the need of the user.

### (4-12)

The operation unit 1200 according to this embodiment includes the switch 1260. The switch 1260 switches the operating state of the voice acceptance section 1210 from a sleep state in which no voice instruction is accepted to an active state in which voice instructions are acceptable.

Here, the operation unit 1200 has the switch 1260 that switches the operating state of the voice acceptance section 1210 to the active state, making it easy to activate the voice acceptance section 1210 only when a voice instruction is to be input. This makes it possible to prevent malfunction of the air conditioner 1010 based on voice issued without the intention of instructions.

### (4-13)

The operation unit 1200 according to this embodiment is supplied with electric power via the cable unit 1300.

Here, the supply of electric power via the cable unit 1300 connecting the indoor unit 1012 and the operation unit 1200 eliminates the need to use a power source extraction port dedicated to the operation unit 1200, and provides high convenience.

### (5) Modifications

The following describes modifications of the embodiment described above. The modifications may be combined as appropriate so long as consistency is maintained between them.

### (5-1) Modification 2A

In the embodiment described above, without limitation, the device control system 1001 is a system capable of operating the devices in the first device group 1050 and the second device group 1060 via voice instructions. The device control system 1001 may be a system that does not control the operation of either the first device group 1050 or the second device group 1060 or does not control the operation of the first device group 1050 or the second device group 1060. The device groups 1050 and 1060 that are not operated via voice instructions, and the infrared output device 1040 and the device server 1070, which are required to control the device groups 1050 and 1060, may not be included in the device control system 1001.

### (5-2) Modification 2B

In the embodiment described above, without limitation, the analysis server 1020, the air conditioner server 1030, and the device server 1070 in the device control system 1001 are separate servers. For example, one server may function as the analysis server 1020 and the air conditioner server 1030, or function as the analysis server 1020, the air conditioner server 1030, and the device server 1070.

Conversely, the function of each of the analysis server 1020, the air conditioner server 1030, and the device server 1070 described in the above embodiment may be achieved by a plurality of servers rather than by a single server.

Furthermore, in the embodiment described above, without limitation, the signal 1000S transmitted from the transmission unit 1230a is received by the analysis server 1020. For example, the transmission unit 1230a may transmit the signal 1000S to the air conditioner server 1030, and the signal 1000S may be transmitted from the air conditioner server 1030 to the analysis server 1020.

### (5-3) Modification 2C

In the embodiment described above, an air conditioner has been described, taking as an example an apparatus that mainly adjusts the temperature or humidity of air; however, the air conditioner is not limited to an apparatus of this type. The air conditioner may be an air cleaner that removes dust particles and the like from air and blows out cleaned air, an air-flow adjustment apparatus that adjusts the flow of air in the space to be air-conditioned, or the like.

### <Ninth Embodiment>

The following describes an air-conditioning system 2010a according to a ninth embodiment and an air conditioner 2010, which is an embodiment of an air conditioner, with reference to the drawings.

### (1) Overview of Device Control System

First, a device control system 2001 including the air-conditioning system 2010a will be described with reference to Fig. 22 and Fig. 23.

Fig. 22 is a schematic configuration diagram of the device control system 2001 including the air-conditioning system 2010a. Fig. 23 is a schematic block diagram of the device control system 2001. In Fig. 23, some of the components of the device control system 2001 are not depicted.

The air-conditioning system 2010a forms a portion of the device control system 2001. The air-conditioning system 2010a mainly includes the air conditioner 2010 and an operation unit 2200. The operation unit 2200 is an example of a voice acceptance unit. The operation unit 2200 is used to input a voice instruction to the air conditioner 2010.

The device control system 2001 is a system capable of controlling devices 2050a, 2050b, ..., and 2050n included in a first device group 2050 and devices 2060a, 2060b, ..., and 2060m included in a second device group 2060 described below, in addition to the air conditioner 2010, using instructions given by an operator by voice. The device control system 2001 is configured to be capable of operating the devices in the first device group 2050 and the second device group 2060, in addition to the air conditioner 2010, by input of voice instructions to the operation unit 2200 in the air-conditioning system 2010a.

The device control system 2001 mainly includes the air-conditioning system 2010a including the air conditioner 2010, the first device group 2050, the second device group 2060, an infrared output device 2040, an analysis server 2020, an air conditioner server 2030, and a device server 2070 (see Fig. 22).

The air conditioner 2010, the first device group 2050, the second device group 2060, and the infrared output device 2040 are devices arranged in a building 2000B (see Fig. 22). The building 2000B is, for example, but not limited to, a detached house. The building 2000B may be an office building, a commercial facility, a factory, or the like. The analysis server 2020, the air conditioner server 2030, and the device server 2070 are generally, but not limited to, installed in locations different from the building 2000B.

Fig. 22 depicts one building 2000B in which the air conditioner 2010, the first device group 2050, and the second device group 2060, whose operations are controlled by the device control system 2001, are arranged. However, a plurality of buildings 2000B may be used. That is, the device control system 2001 may be a system that controls the operation of the air conditioners 2010, the first device groups 2050, and the second device groups 2060 arranged in each of the plurality of buildings 2000B. For simplicity of description, it is assumed here that a single building 2000B is used.

Further, the number of air conditioners 2010, the number of devices in the first device group 2050, the number of devices in the second device group 2060, and the number of infrared output devices 2040, which are arranged in the building 2000B, are not limited to those depicted in Fig. 22, and may be each one or more. The following description is made assuming that one air conditioner 2010 and one infrared output device 2040 are arranged in the building 2000B and the first device group 2050 and the second device group 2060 arranged in the building 2000B each include a plurality of devices.

In addition, Fig. 22 and Fig. 23 depict only one operation unit 2200, which is included in the air-conditioning system 2010a. However, this is not intended to be limiting, and a plurality of operation units 2200 may be used. For example, the operation units 2200 may be arranged in a plurality of locations in the building 2000B.

The following further describes the air-conditioning system 2010a including the air conditioner 2010, the first device group 2050, the second device group 2060, the infrared output device 2040, the analysis server 2020, the air conditioner server 2030, and the device server 2070.

### (1-1) Air-Conditioning System

The air conditioner 2010 and the operation unit 2200 of the air-conditioning system 2010a will be described hereinafter.

### (A) Operation Unit

The operation unit 2200 is a unit used for operation of the air conditioner 2010 via voice. The operation unit 2200 is also a unit used for operation of the devices 2050a, 2050b, ..., and 2050n included in the first device group 2050 and the devices 2060a, 2060b, ..., and 2060m included in the second device group 2060 described below via voice.

For example, the operation unit 2200 is installed in a stationary manner in the building 2000B (for example, fixed to the wall surface or the like). The operation unit 2200 may be a unit having functions described below and used exclusively for input of voice instructions, or may be a device further having other functions (for example, the function of a watch, the function of a music player, etc.).

Alternatively, the operation unit 2200 may be a mobile terminal. Examples of the mobile terminal include, without limitation in type, a smartphone, a mobile phone, a tablet terminal, and a wearable terminal having a voice acceptance section. Specifically, for example, the operation unit 2200 is a wristwatch-type device carried by an operator in such a manner as to be worn around their wrist.

When a plurality of operation units 2200 are used, each of the plurality of operation units 2200 may be different in type from the other operation units 2200.

The operation unit 2200 includes a CPU (not illustrated) that executes various processing operations, and a storage device (not illustrated) that stores a program executed by the CPU and various kinds of information. Further, the operation unit 2200 includes microphone elements 2210a included in a voice acceptance section 2210, a speaker serving as a notification unit 2220, an A/D conversion circuit that performs A/D conversion processing on voice acquired by the microphone elements 2210a, and so on.

The operation unit 2200 has the voice acceptance section 2210, the notification unit 2220, a voice processing unit 2230, a first information transmission unit 2250, and a switch 2260.

### (A-1) Voice Acceptance Section

The voice acceptance section 2210 accepts input of a voice instruction to the air conditioner 2010. Further, the voice acceptance section 2210 is configured to be capable of also accepting input of voice instructions to the devices in the first device group 2050 and the second device group 2060.

The voice acceptance section 2210 has the microphone elements 2210a that accept voice instructions. The number of microphone elements 2210a may be one or more (in Fig. 23, two microphone elements 2210a are used).

For example, when the operation unit 2200 is a stationary-type device, a plurality of microphone elements 2210a are used, and the microphone elements 2210a are arranged so as to easily acquire a voice instruction from different places, thereby facilitating reliable acquisition of the voice instruction by the voice acceptance section 2210, regardless of the position of the operator (utterer). In addition, a plurality of microphone elements 2210a are used, and the microphone elements 2210a are arranged so as to easily acquire a voice instruction from different places, thereby allowing detection of the position of a person (operator) from a detection result and also allows control of the air conditioner 2010 based on the information.

### (A-2) Notification Unit

The notification unit 2220 is, here, a speaker.

The notification unit 2220 mainly provides notification that a voice instruction is accepted by the voice acceptance section 2210. Specifically, for example, when the voice acceptance section 2210 accepts a voice instruction, the notification unit 2220 produces a spoken sentence, such as "voice has been accepted", or repeats the accepted voice instruction to provide notification of acceptance of the voice instruction by the voice acceptance section 2210. Alternatively, the notification unit 2220 may be configured to, when the air conditioner 2010 executes various operations, provide notification of the content of the operations (for example, a text such as "the operation starts"). Alternatively, the notification unit 2220 may be configured to, when the devices in the first device group 2050 and the second device group 2060 execute various operations, provide notification of the content of the operations.

The speaker serving as the notification unit 2220 does not need to provide notification by producing a spoken sentence or word, and may provide notification by using a beep sound or the like.

The notification unit 2220 may not be a speaker. For example, the notification unit 2220 can be implemented as any other type of notification device such as a light that provides notification by using light, a vibrator that provides notification by vibration, or a display that provides notification by displaying information. The operation unit provided with the notification unit allows a user to recognize that voice is accepted by the voice acceptance section.

### (A-3) Voice Processing Unit

The voice processing unit 2230 is a functional unit that processes a voice instruction accepted by the microphone elements 2210a of the voice acceptance section 2210 to generate first information 2000S1. The voice processing unit 2230 is implemented by, for example, an A/D conversion circuit. The voice processing unit 2230 performs A/D conversion on the voice instruction to generate a digital voice signal that is an example of the first information 2000S1. That is, in an embodiment, the first information 2000S1 is voice information subjected to A/D conversion.

When a voice instruction accepted by the voice acceptance section 2210 is transmitted to a controller 2150 of the air conditioner 2010 as an analog voice signal (i.e., when the first information 2000S1 is analog voice information), the operation unit 2200 may not have the voice processing unit 2230.

### (A-4) First Information Transmission Unit

The first information transmission unit 2250 is a transmitter that transmits the first information 2000S1 corresponding to the voice instruction accepted by the voice acceptance section 2210 to the controller 2150 of the air conditioner 2010 via wireless communication.

For example, the first information transmission unit 2250 transmits the first information 2000S1 to the controller 2150 by radio (for example, via Bluetooth (registered trademark) protocol). Alternatively, the first information transmission unit 2250 may transmit the first information 2000S1 to the controller 2150 by using an infrared signal.

### (A-5) Switch

The switch 2260 is a switch for switching the operating state of the voice acceptance section 2210.

The switch 2260 is a push button switch, but this is not limiting. By pressing the switch 2260, the operating state of the voice acceptance section 2210 is switched between a sleep state in which no voice instruction is accepted and an active state in which voice instructions are acceptable.

The operating state of the voice acceptance section 2210 may be switched between the sleep state and the active state each time the switch 2260 is pressed. Alternatively, the operating state of the voice acceptance section 2210 may be switched from the sleep state to the active state for a predetermined time period when the switch 2260 is pressed.

The operation unit 2200 may not have the switch 2260, and the operating state of the voice acceptance section 2210 may be always set to the active state. It is preferable that the operation unit 2200 be provided with the switch 2260 to prevent the voice acceptance section 2210 from accepting voice at an unintended timing (to avoid unintended malfunction of the air conditioner 2010 or the devices in the first device group 2050 and the second device group 2060).

### (B) Air Conditioner

The air conditioner 2010 is an air conditioner that can be operated by inputting a voice instruction to the voice acceptance section 2210 of the operation unit 2200. Non-limiting examples of the voice instruction include voice such as "turn air conditioning on" and "set the set temperature to 25°C". The air conditioner 2010 may be configured to be operable using a typical remote control in addition to operation via voice.

The air conditioner 2010 mainly has an indoor unit 2012, an outdoor unit 2014, a connection pipe (not illustrated) that connects the indoor unit 2012 and the outdoor unit 2014 to each other, and the controller 2150 (see Fig. 22 and Fig. 23). The air conditioner 2010 is an apparatus that performs air-conditioning of a space to be air-conditioned. The space to be air-conditioned is, for example, a room where the indoor unit 2012 is arranged in the building 2000B. The indoor unit 2012 is not limited to any specific type. The indoor unit 2012 of, for example, a wall-mounted type, a ceiling-embedded type, a ceiling-suspended type, a floor-mounted type, a built-in type (in which the main body of the indoor unit 2012 is arranged in the wall or within the ceiling area), or the like is applicable to the air conditioner 2010.

In the air conditioner 2010, the indoor unit 2012 and the outdoor unit 2014 are connected to each other via the connection pipe, thereby connecting an indoor heat exchanger (not illustrated) of the indoor unit 2012 and a compressor, an outdoor heat exchanger, an expansion valve, and the like (not illustrated) of the outdoor unit 2014 to each other via a pipe. Consequently, a refrigerant circuit is formed. In the air conditioner 2010, refrigerant is circulated in the refrigerant circuit, thereby cooling/heating the space where the indoor unit 2012 is installed.

The operational principle and the content of the operation of the air conditioner 2010 using a vapor compression refrigeration cycle are widely known to the public and will not be described here. The air conditioner 2010 does not need to be an air conditioner capable of both cooling/heating the space to be air-conditioned, and may be a cooling-only or heating-only air conditioner. In this embodiment, the air conditioner 2010 is configured such that in the indoor heat exchanger of the indoor unit 2012, refrigerant flowing in the indoor heat exchanger and air in the space to be air-conditioned exchange heat; however, the air conditioner is not limited to such a device. For example, the air conditioner 2010 may be an apparatus configured such that in the indoor heat exchanger of the indoor unit 2012 (fan coil unit), cold water/hot water flowing in the indoor heat exchanger and air in the space to be air-conditioned exchange heat.

Further, the air conditioner is not limited to an apparatus that adjusts the temperature or humidity of air. The air conditioner may be an air cleaner that removes dust particles and the like from air and blows out cleaned air, an air-flow adjustment apparatus that adjusts the flow of air in the space to be air-conditioned, or the like.

### (B-1) Controller

The controller 2150 controls the operation of the air conditioner 2010.

Further, the controller 2150 also has a function that enables the air conditioner 2010 to be operated via voice. The controller 2150 enables the air conditioner 2010 to be operated via voice by substantially performing the following processing.

The controller 2150 receives the first information 2000S1 transmitted from the first information transmission unit 2250 of the operation unit 2200. Here, without limitation, the first information 2000S1 is assumed to be voice information (voice digital signal) obtained by subjecting a voice instruction to A/D conversion. Upon receipt of the first information 2000S1, the controller 2150 executes specific processing on the first information 2000S1 to generate second information 2000S2 (the specific processing will be described below). The controller 2150 transmits the generated second information 2000S2 to the outside. Further, from the outside, the controller 2150 receives a command 2000C corresponding to the transmitted second information 2000S2 from the outside. Specifically, the controller 2150 receives the command 2000C from the external air conditioner server 2030 via a network 2080. The controller 2150 executes the command 2000C to control the operation of the air conditioner 2010.

The controller 2150 includes a control board (not illustrated) included in the indoor unit 2012, and a control board (not illustrated) included in the outdoor unit 2014. CPUs on the control boards or the like of the indoor unit 2012 and the outdoor unit 2014, which constitute the controller 2150, execute various programs to execute various processing operations. Further, the controller 2150 includes a receiver that functions as a first information reception unit 2160 described below, a device such as a wireless LAN adapter that functions as a communication unit 2170 described below, an integrated circuit that functions as a processing unit 2180 described below, and so on.

The controller 2150 has, as functional units, the first information reception unit 2160, the communication unit 2170, the processing unit 2180, and an air conditioner control unit 2190. The first information reception unit 2160, the communication unit 2170, the processing unit 2180, and the air conditioner control unit 2190 will be described below.

### (B-1-1) First Information Reception Unit

The first information reception unit 2160 is a receiver corresponding to a transmitter serving as the first information transmission unit 2250 of the operation unit 2200. The first information reception unit 2160 receives the first information 2000S1 wirelessly transmitted from the first information transmission unit 2250.

### (B-1-2) Communication Unit

The communication unit 2170 is used to allow the controller 2150 to communicate with the analysis server 2020 or the air conditioner server 2030 external to the air conditioner 2010. (see Fig. 23).

The air conditioner 2010 (the communication unit 2170) is connected to the analysis server 2020 and the air conditioner server 2030 via the network 2080 (see Fig. 22). The network 2080 is the Internet, here, but may be any other WAN. The air conditioner 2010 is connected to a router 2082 via a wireless LAN, and is connected to the network 2080 via the router 2082 (see Fig. 22). The router 2082 has a WAN-side interface and a LAN-side interface, and interconnects a WAN and a LAN. The air conditioner 2010 and the router 2082 may be connected via a wired LAN, rather than via a wireless LAN.

The network 2080 may be a LAN.

The communication unit 2170 is, for example, a wireless LAN adapter that performs wireless communication with the router 2082. The communication unit 2170 has, as functional units, a transmission unit 2170a that transmits information, and a reception unit 2170b that receives information (see Fig. 23).

The transmission unit 2170a transmits, for example, the second information 2000S2 to the outside (see Fig. 23). That is, the transmission unit 2170a is an example of a second information transmission unit. The second information 2000S2 is information generated by executing specific processing on the first information 2000S1 received from the operation unit 2200 (the specific processing will be described below). Further, the transmission unit 2170a transmits the second information 2000S2, which is generated by executing specific processing on a piece of first information 2000S1 other than specific instruction information among pieces of first information 2000S1 received from the operation unit 2200 to the outside (the specific instruction information will be described below). However, this is not limiting, and the transmission unit 2170a may transmit the second information 2000S2, which is generated by executing specific processing on all the pieces of first information 2000S1 received from the operation unit 2200, to the outside.

The transmission unit 2170a transmits the second information 2000S2 to the analysis server 2020, which analyzes the second information 2000S2. Further, the transmission unit 2170a preferably transmits the second information 2000S2 also to the air conditioner server 2030 or the device server 2070. That is, the transmission unit 2170a preferably transmits the second information 2000S2 to a plurality of addresses (for example, the analysis server 2020 and the air conditioner server 2030).

Further, the transmission unit 2170a preferably transmits information 2000J on the state quantity for at least one of the air conditioner 2010 and the space to be air-conditioned to the air conditioner server 2030 (see Fig. 23). In other words, the transmission unit 2170a may function as a state-quantity information transmission unit. Non-limiting examples of the state quantity for the air conditioner 2010 include temperatures/pressures of refrigerant measured by sensors (not illustrated) at various locations in the refrigerant circuit, the number of revolutions of an inverter-controlled motor (not illustrated) of the compressor of the outdoor unit 2014, and the opening degree of the expansion valve of the outdoor unit 2014. Non-limiting examples of the state quantity for the space to be air-conditioned include the temperature of the space to be air-conditioned measured by a sensor (not illustrated).

The reception unit 2170b receives, for example, the command 2000C corresponding to the second information 2000S2 transmitted from the transmission unit 2170a (in particular, the second information 2000S2 generated from the first information 2000S1 that is based on a voice instruction for control of the air conditioner 2010) from the outside. That is, the reception unit 2170b is an example of a command reception unit. More specifically, the reception unit 2170b receives the command 2000C, which is generated on the basis of the result of analysis of the first information 2000S1 by the analysis server 2020 (in particular, the second information 2000S2 generated from the first information 2000S1 that is based on a voice instruction for control of the air conditioner 2010). Preferably, the reception unit 2170b receives the command 2000C, which is generated by the air conditioner server 2030 on the basis of the result of analysis of the second information 2000S2 by the analysis server 2020 (in particular, the second information 2000S2 generated from the first information 2000S1 that is based on a voice instruction for control of the air conditioner 2010) and on the basis of the information 2000J on the state quantity, which is transmitted from the transmission unit 2170a to the air conditioner server 2030.

For example, but not limitation, the command 2000C is related to at least one of turning on/off of the operation of the air conditioner 2010, switching among the operating modes (cooling/heating/dehumidification/ventilation, etc.) of the air conditioner 2010, changing of the set temperature (the target temperature of the space to be air-conditioned), a target value of the number of revolutions of the inverter-controlled motor (not illustrated) of the compressor of the outdoor unit 2014, a target value of the opening degree of the expansion valve of the outdoor unit 2014, and a target value of the number of revolutions of an inverter-controlled fan motor of the indoor unit 2012.

### (B-2) Processing Unit

The processing unit 2180 recognizes specific instruction information among the accepted pieces of first information 2000S1 and generates a predetermined command 2000C0. Further, the processing unit 2180 executes specific processing on the first information 2000S1 accepted by the first information reception unit 2160 to generate the second information 2000S2. More specifically, the processing unit 2180 executes specific processing on information, which is obtained by removing the specific instruction information from the pieces of first information 2000S1 accepted by the first information reception unit 2160, to generate the second information 2000S2. However, this is not limiting, and the processing unit 2180 may execute specific processing on all the pieces of first information 2000S1 received from the operation unit 2200 to generate the second information 2000S2. In the following, for simplicity of description, the pieces of first information 2000S1 other than the specific instruction information are also referred to simply as the first information 2000S1.

For example, the processing unit 2180 is an integrated circuit that executes the functions described above. Various processing operations may be implemented by hardware processing or software processing.

First, specific processing executed by the processing unit 2180 will be described.

The specific processing is a process for generating, from the first information 2000S1, information (the second information 2000S2) having a smaller data amount than the first information 2000S1. The specific processing is, for example, conversion of the data format of the first information 2000S1.

For example, when the first information 2000S1 is a digital voice signal, the specific processing is voice compression processing. The second information 2000S2 generated by the processing unit 2180 is data obtained by, for example, compressing the first information 2000S1, which is a digital voice signal, by using various voice data compression techniques (such as MP3).

For example, when the first information 2000S1 is an analog voice signal, the specific processing may be A/D conversion, and the generated second information 2000S2 may be a digital voice signal. When the first information 2000S1 is an analog voice signal, the specific processing may be a combination of A/D conversion and voice data compression processing.

For example, when the first information 2000S1 is a digital voice signal, the specific processing may be conversion of the voice signal into text, and the second information 2000S2 may be text-converted data. Here, unlike voice recognition, the conversion into text refers to simply converting voice into text without recognizing the meaning of the voice.

Next, the specific instruction information will be described.

The specific instruction information is the first information 2000S1 corresponding to a specific voice instruction (specific words or phrases) among voice instructions accepted by the voice acceptance section 2210. For example, the specific instruction information is a digital voice signal obtained by subjecting the specific voice instruction to A/D conversion.

For example, the specific voice instruction indicates voice for requesting the controller 2150 or the like to prepare to input the next voice instruction. The predetermined command 2000C0, which is generated by the processing unit 2180 upon recognition of the first information 2000S1 corresponding to the specific voice instruction (specific instruction information) includes, for example, a command for requesting the transmission unit 2170a to prepare to transmit the second information 2000S2 generated on the basis of the first information 2000S1 accepted by the first information reception unit 2160 subsequently to the specific instruction information.

The specific voice instruction may not be voice for requesting the controller 2150 or the like to prepare to input the next voice instruction. For example, the specific voice instruction may be voice for requesting execution of the basic operation (for example, turning on/off) of the air conditioner 2010, and the predetermined command 2000C0 generated in accordance with the specific voice instruction may be a command for requesting the air conditioner control unit 2190 to start/stop the operation of the air conditioner 2010. The second information 2000S2 that is based on a voice instruction for requesting execution of an operation of the air conditioner 2010, other than the basic operation, may be transmitted to the outside (the analysis server 2020, etc.).

### (B-3) Air Conditioner Control Unit

The air conditioner control unit 2190 controls the operation of the air conditioner 2010 in accordance with the command 2000C received by the reception unit 2170b, a command from a typical remote control (not illustrated), or the like. For example, the air conditioner control unit 2190 controls the operation of the compressor and expansion valve of the outdoor unit 2014, a fan of the indoor unit 2012, and so on in accordance with the command 2000C received by the reception unit 2170b on the basis of the settings of the air conditioner 2010 (such as the set temperature), values measured by various sensors (not illustrated), and so on.

### (1-2) First Device Group

The devices 2050a, 2050b, ..., and 2050n in the first device group 2050 are devices that can be operated using infrared signals. The devices 2050a, 2050b, ..., and 2050n in the first device group 2050 can be operated using infrared signals transmitted from the infrared output device 2040 in response to input of voice instructions to the operation unit 2200. The devices 2050a, 2050b, ..., and 2050n in the first device group 2050 are similar to the devices 50a, 50b, ..., and 50n in the first device group 50 of the first embodiment and will not be described here.

### (1-3) Second Device Group

The devices 2060a, 2060b, ..., and 2060m in the second device group 2060 are devices that can be operated using signals transmitted via the network 2080. The devices 2060a, 2060b, ..., and 2060m in the second device group 2060 are operated using signals transmitted from the analysis server 2020 or the device server 2070 in response to input of voice instructions to the operation unit 2200. The devices 2060a, 2060b, ..., and 2060m in the second device group 2060 are similar to the devices 60a, 60b, ..., and 60m in the second device group 60 of the first embodiment and will not be described here.

### (1-4) Analysis Server

The analysis server 2020 is an example of an analysis apparatus.

The analysis server 2020 is connected to the air conditioner 2010 (the communication unit 2170) via the network 2080. When the operation unit 2200 of the air conditioner 2010 accepts a voice instruction, the transmission unit 2170a of the air conditioner 2010 transmits the second information 2000S2, which is generated by executing specific processing on the first information 2000S 1 corresponding to the voice instruction, to the analysis server 2020 via the network 2080 (see Fig. 23). Voice instructions accepted by the operation unit 2200 include a voice instruction for control of the air conditioner 2010, voice instructions for control of the devices 2050a, 2050b, ..., and 2050n in the first device group 2050, and voice instructions for control of the devices 2060a, 2060b, ..., and 2060m in the second device group 2060. In other words, the analysis server 2020 receives the second information 2000S2, which is generated by executing specific processing on the first information 2000S1 corresponding to voice instructions for control of the air conditioner 2010, the devices 2050a, 2050b, ..., and 2050n, and the devices 2060a, 2060b, ..., and 2060m.

Further, the analysis server 2020 is communicably connected to the air conditioner server 2030, the device server 2070, and the infrared output device 2040 via the network 2080.

The analysis server 2020 is a computer that executes a program stored in a storage device to analyze the received second information 2000S2. Specifically, for example, the analysis server 2020 performs voice recognition of a received voice signal. Further, the analysis server 2020 may interpret the meaning of received text information.

The storage device of the analysis server 2020 stores, in addition to the program, for example, a list of devices (the air conditioner 2010, the devices 2050a, 2050b, ..., and 2050n in the first device group 2050, and the devices 2060a, 2060b, ..., and 2060m in the second device group 2060) that can be operated by each operation unit 2200. That is, the analysis server 2020 knows which device can be operated by each operation unit 2200. In addition, for the devices 2060a, 2060b, ..., and 2060m in the second device group 2060, information as to whether the device 2060a, 2060b, ..., or 2060m to be controlled is a direct control target of the analysis server 2020 (a control target of either of the analysis server 2020 and the device server 2070) is also stored.

For example, the analysis server 2020 analyzes the voice represented by the second information 2000S2 to determine a feature value for the voice, and generates text information from the feature value by using a voice recognition dictionary stored in the storage device, which includes an acoustic model, a linguistic model, and a pronunciation dictionary. Non-limiting examples of the text information generated by the analysis server 2020 include text information such as "turn the air conditioner on", "set the set temperature of the air conditioner to 25 degrees", "turn the lighting device off", and "turn the television set on".

When the generated text information is related to control of the air conditioner 2010 (for example, when the text information includes an air-conditioner-related keyword), the analysis server 2020 transmits the analysis result of the second information 2000S2 (i.e., the generated text information) to the air conditioner server 2030 via the network 2080 (see Fig. 23).

When the text information is related to control of the device 2050a, 2050b, ..., or 2050n in the first device group 2050 (for example, when the text information includes a keyword related to the first device group 2050), the analysis server 2020 transmits a command to the infrared output device 2040 to provide an instruction to transmit an infrared signal corresponding to the analysis result of the second information 2000S2 (i.e., the generated text information). For example, when the text information is information concerning a lighting device included in the devices 2050a, 2050b, ..., and 2050n in the first device group 2050 (for example, "turn the lighting device off'), the analysis server 2020 transmits a command to the infrared output device 2040 to transmit an infrared signal for instructing the lighting device to turn off. The command directed to the infrared output device 2040 is transmitted from the analysis server 2020 to the infrared output device 2040 via the network 2080.

When the text information is related to control of the device 2060a, 2060b, ..., or 2060m in the second device group 2060 (for example, when the text information includes a keyword related to the second device group 2060), the analysis server 2020 transmits a command corresponding to the analysis result of the second information 2000S2 (i.e., the generated text information) to the device 2060a, 2060b, ..., or 2060m in the second device group 2060. For example, when the text information is information concerning a television set included in the devices 2060a, 2060b, ..., and 2060m in the second device group 2060 (for example, "turn the television set on"), the analysis server 2020 transmits a command to the television set to provide an instruction to turn on the switch. Commands directed to the devices 2060a, 2060b, ..., and 2060m in the second device group 2060 are transmitted from the analysis server 2020 to the devices 2060a, 2060b, ..., and 2060m in the second device group 2060 via the network 2080.

When the text information is related to control of the device 2060a, 2060b, ..., or 2060m in the second device group 2060 and the device 2060a, 2060b, ..., or 2060m to be controlled is not a direct control target of the analysis server 2020, the text information is transmitted to the device server 2070 that controls the corresponding device 2060a, 2060b, ..., or 2060m. Then, a command is transmitted from the device server 2070 to the corresponding device 2060a, 2060b, ..., or 2060m via the network 2080.

### (1-5) Air Conditioner Server

The air conditioner server 2030 is an example of a command generation apparatus.

The air conditioner server 2030 generates the command 2000C on the basis of the result of analysis of the second information 2000S2 by the analysis server 2020 (i.e., the text information generated by the analysis server 2020), which is transmitted from the analysis server 2020, and on the basis of the information 2000J on the state quantity for at least one of the air conditioner 2010 and the space to be air-conditioned, which is transmitted as appropriate from the transmission unit 2170a of the air conditioner 2010. Then, the air conditioner server 2030 transmits the command 2000C to the reception unit 2170b of the air conditioner 2010 via the network 2080. For example, without limitation, upon receipt of the command "turn the air conditioner on" as text information, the air conditioner server 2030 determines the operation of the components of the air conditioner 2010 on the basis of the current temperature and the like of the space to be air-conditioned, and transmits the command as the command 2000C.

Here, without limitation, the air conditioner server 2030 generates the command 2000C on the basis of the information 2000J in addition to the result of analysis of the second information 2000S2 by the analysis server 2020. The air conditioner server 2030 may generate the command 2000C on the basis of only the result of analysis of the second information 2000S2 by the analysis server 2020.

Further, the air conditioner server 2030 accumulates the second information 2000S2 transmitted from the transmission unit 2170a of the air conditioner 2010, and performs various analysis operations by using the second information 2000S2.

In this embodiment, without limitation, the device control system 2001 includes the air conditioner server 2030. For example, when the air conditioner 2010 is capable of directly determining the content of the operation on the basis of the result of analysis of the second information 2000S2 by the analysis server 2020 (i.e., the text information generated by the analysis server 2020), the air conditioner server 2030 may not be disposed. The result of analysis of the second information 2000S2 by the analysis server 2020 may be transmitted directly to the reception unit 2170b of the air conditioner 2010 as the command 2000C.

### (1-6) Device Server

The device server 2070 generates a command for the device 2060a, 2060b, ..., or 2060m in the second device group 2060 on the basis of the result of analysis of the second information 2000S2 by the analysis server 2020 (i.e., the text information generated by the analysis server 2020), which is transmitted from the analysis server 2020. Then, the device server 2070 transmits the command to the operation target among the devices 2060a, 2060b, ..., and 2060m in the second device group 2060 via the network 2080.

In Fig. 22, the number of device servers 2070 is one. However, if there is a plurality of types of the devices 2060a, 2060b, ..., and 2060m to be operated by the device server 2070 (rather than in accordance with commands from the analysis server 2020), a number of device servers 2070 equal to the number of types are preferably present.

In addition, when all of the devices 2060a, 2060b, ..., and 2060m are operable with commands from the analysis server 2020, the device server 2070 may not be present.

### (1-7) Infrared Output Device

The infrared output device 2040 has a storage unit (not illustrated) that stores an infrared signal pattern for control for each of the devices 2050a, 2050b, ..., and 2050n in the first device group 2050 or for each of the operations to be performed on the devices 2050a, 2050b, ..., and 2050n in the first device group 2050. The infrared output device 2040 transmits an infrared signal to the operation target among the devices 2050a, 2050b, ..., and 2050n in the first device group 2050 in accordance with a command transmitted from the analysis server 2020 by using the infrared signal pattern stored in the storage unit.

### (2) Features of Air-Conditioning System and Air Conditioner

### (2-1)

The air-conditioning system 2010a according to this embodiment includes the air conditioner 2010 having the controller 2150, and the operation unit 2200, which is an example of a voice acceptance unit. The operation unit 2200 has the voice acceptance section 2210 and the first information transmission unit 2250. The voice acceptance section 2210 accepts a voice instruction for the air conditioner 2010. The first information transmission unit 2250 transmits the first information 2000S1 corresponding to the voice instruction accepted by the voice acceptance section 2210 to the controller 2150 via wireless communication. The controller 2150 has the first information reception unit 2160, the processing unit 2180, the transmission unit 2170a, the reception unit 2170b, and the air conditioner control unit 2190. The first information reception unit 2160 receives the first information 2000S1 transmitted from the first information transmission unit 2250. The processing unit 2180 executes specific processing on the first information 2000S1 accepted by the first information reception unit 2160 to generate the second information 2000S2 having a smaller information amount than the first information 2000S1. The transmission unit 2170a, which is an example of a second information transmission unit, transmits the second information 2000S2 to the outside. The reception unit 2170b, which is an example of a command reception unit, receives the command 2000C corresponding to the second information 2000S2 transmitted from the transmission unit 2170a from the outside. The air conditioner control unit 2190 controls the operation of the air conditioner 2010 in accordance with the command 2000C.

In the air-conditioning system 2010a, the second information 2000S2 based on the voice instruction is transmitted to the outside, and the command 2000C based on the transmitted second information 2000S2 is given from the outside. That is, the air-conditioning system 2010a eliminates the need for the air conditioner 2010 or the operation unit 2200 to recognize a voice instruction and generate a command for controlling the air conditioner 2010 on the basis of the recognition result. Accordingly, the air-conditioning system 2010a that enables the air conditioner 2010 to be operated via voice is likely to be achieved at low cost.

In the air-conditioning system 2010a, furthermore, the controller 2150 of the air conditioner 2010 generates the second information 2000S2 having a small information amount (amount of data to be transmitted) suitably for communication from the first information 2000S1 transmitted from the operation unit 2200, and transmits the second information 2000S2 to the outside. Thus, the operation unit 2200 is only required to have simple functions, and the operation unit 2200 (voice-activated remote control) is likely to be achieved at low cost. Accordingly, for example, even if the operation units 2200 are provided at a plurality of locations to enhance convenience, the air-conditioning system 2010a is likely to be achieved at low cost.

### (2-2)

In the air-conditioning system 2010a according to this embodiment, the first information 2000S1 is voice information subjected to A/D conversion.

Here, the operation unit 2200 is only required to have a function of merely performing A/D conversion of voice instructions, and the function required for the operation unit 2200 may be simple. The voice-activated remote control function of the air conditioner 2010 is likely to be achieved at low cost.

### (2-3)

In the air-conditioning system 2010a according to this embodiment, the specific processing is format conversion.

Here, through format conversion, the first information 2000S1 can be converted into the second information 2000S2 having a small information amount, which is then transmitted to the outside of the controller 2150. Efficient communication can be achieved between the air-conditioning system 2010a and a component external to the air-conditioning system 2010a.

### (2-4)

In the air-conditioning system 2010a according to this embodiment, the operation unit 2200 has the notification unit 2220. The notification unit 2220 provides notification of acceptance of a voice instruction by the voice acceptance section 2210.

The operation unit 2200 provided with the notification unit 2220 enables a user to recognize that voice is accepted by the voice acceptance section 2210. Even when the user operates the air conditioner 2010 in a location where the air conditioner 2010 is not visible, the user is able to recognize that the air conditioner 2010 would have received instructions.

### (2-5)

In the air-conditioning system 2010a according to this embodiment, the operation unit 2200 has the switch 2260 that switches the operating state of the voice acceptance section 2210 from a sleep state in which no voice instruction is accepted to an active state in which voice instructions are acceptable.

Here, the operation unit 2200 is provided with the switch 2260 that switches the operating state of the voice acceptance section 2210 to the active state. This makes it easy to activate the voice acceptance section 2210 only when a voice instruction is to be input, and makes it possible to prevent malfunction of the air conditioner 2010 based on voice issued without the intention of instructions.

### (2-6)

In the air-conditioning system 2010a according to this embodiment, a mobile terminal may be used as the operation unit 2200.

Here, a mobile terminal (such as a smartphone, a mobile phone, a tablet terminal, or a wearable terminal) having the voice acceptance section 2210, which is possessed by the user, is available as the operation unit 2200, and the voice-activated remote control function of the air conditioner 2010 can be achieved at low cost.

### (2-7)

In the air-conditioning system 2010a according to this embodiment, the transmission unit 2170a transmits the second information 2000S2 to the analysis server 2020, which is an example of an analysis apparatus that analyzes the second information 2000S2, via the network 2080. The reception unit 2170b receives the command 2000C generated on the basis of the result of analysis of the second information 2000S2 by the analysis apparatus.

Here, the second information 2000S2 based on the voice instruction is transmitted to the external analysis server 2020, and the command 2000C is generated on the basis of the analysis result of the second information 2000S2. Thus, even when the air conditioner 2010 is caused to execute operation having relatively complex content, the air conditioner 2010 can be operated by voice.

### (2-8)

In the air-conditioning system 2010a according to this embodiment, the controller 2150 has the transmission unit 2170a serving as a state-quantity information transmission unit. That is the transmission unit 2170a also functions as a state-quantity information transmission unit. The transmission unit 2170a transmits information on the state quantity for at least one of the air conditioner 2010 and the space to be air-conditioned by the air conditioner 2010 to the air conditioner server 2030, which is an example of a command generation apparatus. The reception unit 2170b receives the command 2000C generated by the air conditioner server 2030 on the basis of the analysis result obtained by the analysis server 2020 and on the basis of the information on the state quantity.

Here, an instruction is given to the air conditioner 2010 on the basis of the analysis result of the second information 2000S2 that is based on a voice instruction and the state quantity for the air conditioner 2010 or the space to be air-conditioned. Thus, it is likely that appropriate control based on the voice instruction is executed on the air conditioner 2010.

### (2-9)

In the air-conditioning system 2010a according to this embodiment, the transmission unit 2170a transmits the second information 2000S2 to a plurality of addresses. For example, the transmission unit 2170a transmits the second information 2000S2 to the analysis server 2020 and the air conditioner server 2030.

Here, since the second information 2000S2 is transmitted to a plurality of addresses, the second information 2000S2, which is based on acquired voice, is available for various processing operations.

### (2-10)

The air conditioner 2010 according to this embodiment includes the first information reception unit 2160, the processing unit 2180, the transmission unit 2170a, which is an example of a second information transmission unit, the reception unit 2170b, which is an example of a command receiving unit, and the air conditioner control unit 2190. The first information reception unit 2160 receives the first information 2000S1 that is based on a voice instruction accepted by the operation unit 2200 and that is wirelessly transmitted from the operation unit 2200. The processing unit 2180 executes specific processing on the first information 2000S1 accepted by the first information reception unit 2160 to generate the second information 2000S2 having a smaller information amount than the first information 2000S1. The transmission unit 2170a transmits the second information 2000S2 to the outside. The reception unit 2170b receives the command 2000C corresponding to the second information 2000S2 transmitted from the transmission unit 2170a from the outside. The air conditioner control unit 2190 controls the operation of the air conditioner 2010 in accordance with the command 2000C.

In the air conditioner 2010, the second information 2000S2 based on the voice instruction is transmitted to the outside, and the command 2000C based on the transmitted second information 2000S2 is given from the outside. That is, the air conditioner 2010 itself does not need to recognize a voice instruction and generate a command for controlling the air conditioner 2010 on the basis of the recognition result. Accordingly, the air conditioner 2010 that is voice-operable is likely to be achieved at low cost.

Furthermore, the air conditioner 2010 generates the second information 2000S2 having a small information amount suitably for communication from the first information 2000S1 transmitted from the operation unit 2200, and transmits the second information 2000S2 to the outside. Thus, the operation unit 2200, which transmits the first information 2000S1 that is based on a voice instruction to the air conditioner 2010, is only required to have simple functions, and the operation unit 2200 (voice-activated remote control) is likely to be achieved at low cost.

### (3) Modifications

The following describes modifications of the embodiment described above. The modifications may be combined as appropriate so long as consistency is maintained between them.

### (3-1) Modification 3A

In the embodiment described above, without limitation, the device control system 2001 is a system capable of operating the devices in the first device group 2050 and the second device group 2060 via voice instructions. The device control system 2001 may be a system that does not control the operation of either the first device group 2050 or the second device group 2060 or does not control the operation of the first device group 2050 or the second device group 2060. The device groups 2050 and 2060 that are not operated via voice instructions, and the infrared output device 2040 and the device server 2070, which are required to control the device groups 2050 and 2060, may not be included in the device control system 2001.

### (3-2) Modification 3B

In the embodiment described above, without limitation, the analysis server 2020, the air conditioner server 2030, and the device server 2070 in the device control system 2001 are separate servers. For example, one server may function as the analysis server 2020 and the air conditioner server 2030, or function as the analysis server 2020, the air conditioner server 2030, and the device server 2070.

Conversely, the function of each of the analysis server 2020, the air conditioner server 2030, and the device server 2070 described in the above embodiment may be achieved by a plurality of servers rather than by a single server.

Furthermore, in the embodiment described above, without limitation, the second information 2000S2 transmitted from the transmission unit 2170a is received by the analysis server 2020. For example, the transmission unit 2170a may transmit the second information 2000S2 to the air conditioner server 2030, and the second information 2000S2 may be transmitted from the air conditioner server 2030 to the analysis server 2020.

### (3-3) Modification 3C

In the embodiment described above, without limitation, the operation unit 2200 is provided with a notification unit. The operation unit 2200 may not have a notification unit in particular.

### <Tenth Embodiment>

The following describes a device operation/communication system 3001 according to a tenth embodiment and operation/communication devices 3200 and 3300 according to an embodiment of a transmission apparatus with reference to the drawings.

### (1) General Overview

Fig. 24 is a schematic configuration diagram of the device operation/communication system 3001. Fig. 25 is a schematic block diagram of the device operation/communication system 3001. In Fig. 25, some of the components of the device operation/communication system 3001 are not depicted.

The device operation/communication system 3001 mainly includes the operation/communication device 3200, the operation/communication device 3300, an air conditioner 3010, a first device group 3050, a second device group 3060, an infrared output device 3040, an analysis server 3020, an air conditioner server 3030, and a device server 3070 (see Fig. 24 and Fig. 25).

The device operation/communication system 3001 is a system that operates the air conditioner 3010, devices 3050a, 3050b, ..., and 3050n included in the first device group 3050, and devices 3060a, 3060b, ..., and 3060m included in the second device group 3060 by instructions given by voice. To enable voice-based operation of devices, the device operation/communication system 3001 functions as a communication system for transmitting data that is based on a voice accepted by the operation/communication devices 3200 and 3300, which are transmission apparatuses, to the analysis server 3020, which is a reception apparatus.

The device operation/communication system 3001 is also a system capable of communication between users of the system. Specifically, the device operation/communication system 3001 is a system capable of communication between the operation/communication device 3200 and the operation/communication device 3300, where each of the operation/communication devices 3200 and 3300 is used as a transmission apparatus/reception apparatus.

In the device operation/communication system 3001 of this embodiment, without limitation, communication can be performed between the operation/communication device 3200 and the operation/communication device 3300. The device operation/communication system 3001 may be a system that functions only as a system for operating the air conditioner 3010, the devices in the first device group 3050, and the devices in the second device group 3060 and that does not allow communication between operation/communication devices.

The air conditioner 3010, the first device group 3050, the second device group 3060, and the infrared output device 3040 are devices arranged in a building 3000B (see Fig. 24). The building 3000B is, for example, but not limited to, a detached house. The building 3000B may be an office building, a commercial facility, a factory, or the like. The analysis server 3020, the air conditioner server 3030, and the device server 3070 are generally, but not limited to, installed in locations different from the building 3000B.

The number of air conditioners 3010, the number of devices in the first device group 3050, the number of devices in the second device group 3060, and the number of infrared output devices 3040, which are arranged in the building 3000B, are not limited to those depicted in Fig. 24, and may be each one or more. The following description is made assuming that one air conditioner 3010 and one infrared output device 3040 are arranged in the building 3000B and the first device group 3050 and the second device group 3060 arranged in the building 3000B each include a plurality of devices.

For simplicity of description, Fig. 24 depicts one building 3000B in which the air conditioner 3010, the first device group 3050, and the second device group 3060, whose operations are controlled by the device operation/communication system 3001, are arranged. However, a plurality of buildings 3000B may be used. That is, the device operation/communication system 3001 may be a system that controls the operation of the air conditioners 3010, the first device groups 3050, and the second device groups 3060 arranged in each of the plurality of buildings 3000B.

The operation/communication device 3200 is installed in the building 3000B and is used to operate the air conditioner 3010, the devices in the first device group 3050, and the devices in the second device group 3060 in the building 3000B. While a single operation/communication device in the building 3000B is depicted, a plurality of operation/communication devices 3200 may be installed in the building 3000B. Further, the operation/communication device 3200 is not limited to a mounted type, and may be a mobile terminal that can be carried outside the building 3000B. In other words, the air conditioner 3010 and the devices in the first device group 3050 and the second device group 3060 may be configured to be operable from outside the building 3000B by using the operation/communication device 3200 that is portable.

The operation/communication device 3300 has a function similar to that of the operation/communication device 3200. For example, the operation/communication device 3300 is installed in a building (not illustrated) different from the building 3000B and is used to operate devices (not illustrated) located in the building. However, this is not limiting, and the operation/communication device 3300 may be a device dedicated to communication with the operation/communication device 3200.

While two operation/communication devices (the operation/communication devices 3200 and 3300) are depicted in Fig. 24 and Fig. 25, the number of operation/communication devices is not limited to two. For example, the device operation/communication system 3001 may have a large number of operation/communication devices.

### (2) Detailed Configuration

The operation/communication device 3200, the air conditioner 3010, the first device group 3050, the second device group 3060, the analysis server 3020, the air conditioner server 3030, the device server 3070, and the infrared output device 3040 will be described below. Since the operation/communication device 3300 is a device similar to the operation/communication device 3200, the operation/communication device 3300 will not be described.

### (2-1) Operation/Communication Device

The operation/communication device 3200 is a device used to operate the air conditioner 3010, the devices 3050a, 3050b, ..., and 3050n included in the first device group 3050 and the devices 3060a, 3060b, ..., and 3060m included in the second device group 3060. Further, the operation/communication device 3200 is a device used to communicate with the operation/communication device 3300.

The operation/communication device 3200 is an example of a transmission apparatus. The operation/communication device 3200 transmits data that is based on voice accepted by a voice acceptance section 3210 described below to the analysis server 3020 or the operation/communication device 3300 that is an example of a reception apparatus.

Further, the operation/communication device 3200 is an example of a reception apparatus. The operation/communication device 3200 receives data based on voice (data that is based on voice accepted by a voice acceptance section of the operation/communication device 3300), which is transmitted from the operation/communication device 3300 that is an example of a transmission apparatus.

The operation/communication device 3200 is installed in a stationary manner in the building 3000B, for example. For example, the operation/communication device 3200 is placed on a table or shelf or is fixed to the wall surface or the like. The operation/communication device 3200 may be a device that has functions described below and that is used to operate the air conditioner 3010 and the devices in the first device group 3050 and the second device group 3060 and to communicate with any other operation/communication device. Further, the operation/communication device 3200 may be a device having, in addition to the functions described below, other functions (for example, the functions of a watch and a music player).

The operation/communication device 3200 may be a mobile terminal. Examples of the mobile terminal include, without limitation in type, a smartphone, a mobile phone, a tablet terminal, and a wearable terminal having a voice acceptance section. Specifically, for example, the operation/communication device 3200 is a wristwatch-type device carried by an operator in such a manner as to be worn around their wrist.

When a plurality of operation/communication devices 3200 are used in the building 3000B, each of the plurality of operation/communication devices 3200 may be different in type from the other operation/communication devices 3200.

The operation/communication device 3200 includes a CPU that executes various processing operations, and a storage device that stores a program executed by the CPU and various kinds of information. The operation/communication device 3200 further includes a microphone element 3210a included in the voice acceptance section 3210, a speaker 3220a included in a voice output unit 3220, a display 3280, a voice processing chip that performs various processing operations on voice acquired by the microphone element 3210a, a wireless LAN adapter that functions as a communication unit 3250, and so on.

The operation/communication device 3200 has, as functional units, the voice acceptance section 3210, the voice output unit 3220, the display 3280, a setting unit 3222, a voice database 3224, a voice processing unit 3230, a switching unit 3240, a determination unit 3270, the communication unit 3250, and a switch 3260 (see Fig. 25).

### (2-1-1) Voice Acceptance Section

The voice acceptance section 3210 accepts input of voice. The voice accepted by the voice acceptance section 3210 includes voice instructions for operating the air conditioner 3010, the devices in the first device group 3050, and the devices in the second device group 3060, and voice for communication (normal conversation) with the user of the operation/communication device 3300.

The voice acceptance section 3210 has the microphone element 3210a that accepts voice. The number of microphone elements 3210a may be one or more.

For example, when the operation/communication device 3200 is a stationary-type device, a plurality of microphone elements 3210a are used, and the plurality of microphone elements 3210a are arranged so as to easily acquire voice from different places, thereby facilitating reliable acquisition of the voice by the voice acceptance section 3210, regardless of the position of the utterer.

The operation/communication device 3200 is preferably provided with an operation section (not illustrated) for designating whether the voice input to the voice acceptance section 3210 is voice directed to the analysis server 3020 (a voice instruction for device operation) or voice directed to the operation/communication device 3300. Preferably, based on the input from the operation section, the communication unit 3250 described below switches the address of the destination of data that is based on the voice accepted by the voice acceptance section 3210 (to be transmitted to the analysis server 3020 or the operation/communication device 3300).

### (2-1-2) Voice Output Unit

The voice output unit 3220 is an output unit of voice. The voice output unit 3220 has the speaker 3220a.

The voice output unit 3220 outputs voice from the speaker 3220a, for example, when the communication unit 3250 described below receives data that is based on voice (data similar to a signal 3000Mv or a signal 3000Mt described below) from any other operation/communication device (here, the operation/communication device 3300).

When the communication unit 3250 receives data of a voice data format (data similar to the signal 3000Mv described below) from the operation/communication device 3300, the voice output unit 3220 outputs the data received by the communication unit 3250 from the speaker 3220a after, for example, performing processing for decompressing compressed data, performing D/A conversion processing to convert a digital voice signal into an analog voice signal, and so on.

When the communication unit 3250 receives data of a text data format (data similar to the signal 3000Mt described below) from the operation/communication device 3300, for example, the voice output unit 3220 performs voice conversion processing to convert the data of the text data format accepted by the communication unit 3250 into voice, and outputs the voice-converted data from the speaker 3220a. The voice conversion processing is a process for converting the content of sent text into voice.

For example, also when the voice acceptance section 3210 accepts voice instructions for the air conditioner 3010, the devices in the first device group 3050, and the devices in the second device group 3060, the voice output unit 3220 may output voice to provide notification of acceptance of the voice instructions. Specifically, for example, when the voice acceptance section 3210 accepts a voice instruction, the voice output unit 3220 produces a spoken sentence, such as "voice has been accepted", or repeats the accepted voice instruction to provide notification of acceptance of the voice instruction by the voice acceptance section 3210.

The voice output unit 3220 may be configured to, when the air conditioner 3010, the devices in the first device group 3050, and the devices in the second device group 3060 to be operated by the operation/communication device 3200 execute various operations, output the content of the operations (for example, a sentence, such as "the operation starts") via voice.

### (2-1-3) Display

The display 3280 is a display unit that displays various kinds of information.

For example, when the communication unit 3250 described below receives data of a text file format (data similar to the signal 3000Mt described below) from any other operation/communication device (here, the operation/communication device 3300), the display 3280 outputs (displays) the content of the received data together with the voice output unit 3220 or instead of the voice output unit 3220.

Alternatively, together with the voice output unit 3220 or instead of the voice output unit 3220, the display 3280 may output (display) that voice instructions for the air conditioner 3010, the devices in the first device group 3050, and the devices in the second device group 3060 are accepted by the voice acceptance section 3210, or output (display) the content of the operations of the air conditioner 3010, the devices in the first device group 3050, and the devices in the second device group 3060 to be operated by the operation/communication device 3200, and so on.

The operation/communication device 3200 may not have the display 3280.

### (2-1-4) Setting Unit and Voice Database

The setting unit 3222 sets a voice pattern to be used by the voice output unit 3220. The voice output unit 3220 uses the set voice pattern when the communication unit 3250 outputs data of a text data format which is received from any other operation/communication device (here, the operation/communication device 3300) and which is subjected to voice conversion. The voice pattern refers to a pattern of tone or accent of voice.

The setting unit 3222 sets one voice pattern as a voice pattern to be used by the voice output unit 3220 from among a plurality of voice patterns stored in the voice database 3224 in accordance with a user's selection input from, for example, the operation section (not illustrated) of the operation/communication device 3200. The plurality of voice patterns stored in the voice database 3224 include, for example, male voices, female voices, voices of specific individuals, voices of specific characters, and so on.

The setting unit 3222 may not set a voice pattern to be used by the voice output unit 3220 in accordance with a user's selection. For example, the setting unit 3222 may set a voice pattern to be used by the voice output unit 3220 in the following way.

Here, the voice database 3224 stores a specific voice in association with an operation/communication device with which the operation/communication device 3200 communicates (for example, in association with an identification code for identifying the operation/communication device 3300). For example, the voice database 3224 stores, the voice of the user of the operation/communication device 3300 in association with the operation/communication device 3300. When communication is started between the operation/communication device 3200 and the operation/communication device 3300, the setting unit 3222 identifies the operation/communication device 3300 that is the communication partner of the operation/communication device 3200 (for example, on the basis of data sender information included in a signal transmitted to the communication unit 3250). Then, the setting unit 3222 sets the voice pattern stored in the voice database 3224 in association with the identified operation/communication device 3300 as a voice pattern to be used by the voice output unit 3220.

While the case where the voice database 3224 stores a plurality of voice patterns has been described as an example, the voice database 3224 may store only one voice pattern.

### (2-1-5) Voice Processing Unit

The voice processing unit 3230 is an integrated circuit that converts voice accepted by the voice acceptance section 3210 into data suitable for communication. Various processing operations may be implemented by hardware processing or software processing.

The voice processing unit 3230 mainly performs two processing operations.

As one of the processing operations, the voice processing unit 3230 converts voice accepted by the voice acceptance section 3210 into data of a voice data format suitable for communication (first processing operation). As the other processing operation, the voice processing unit 3230 converts voice accepted by the voice acceptance section 3210 into data of a text data format (second processing operation). Which of the first processing operation and the second processing operation to be executed by the voice processing unit 3230 on voice accepted by the voice acceptance section 3210 is switched by the switching unit 3240 described below. When the voice processing unit 3230 executes both the first processing operation and the second processing operation on a voice accepted by the voice acceptance section 3210, data generated by executing the second processing operation has a smaller size than data generated by executing the first processing operation.

The first processing operation and the second processing operation will further be described.

As the first processing operation, the voice processing unit 3230 performs A/D conversion on voice accepted by the voice acceptance section 3210 to obtain a digital voice signal, and further executes voice compression processing using various voice data compression techniques (such as MP3) to generate signals 3000Sv and 3000Mv. The content of the first processing operation is an example, and the voice processing unit 3230 may perform, as the first processing operation, A/D conversion on voice accepted by the voice acceptance section 3210 to generate digital voice signals as the signals 3000Sv and 3000Mv.

The signal 3000Sv refers to data of a voice data format, which is generated on the basis of voice instructions for the air conditioner 3010, the devices in the first device group 3050, and the devices in the second device group 3060 to be operated by the operation/communication device 3200. The signal 3000Sv is a signal to be transmitted to the analysis server 3020. The signal 3000Mv refers to data of a voice data format, which is generated on the basis of voice (normal conversation) to be transmitted to the operation/communication device 3300.

The signal 3000Sv and the signal 3000Mv may be data of a voice data format, which is generated by performing the same processing operation on a voice accepted by the voice acceptance section 3210, or data of a voice data format, which is generated by performing different processing operations on voice accepted by the voice acceptance section 3210.

As the second processing operation, the voice processing unit 3230 converts voice accepted by the voice acceptance section 3210 into a text data format. The voice processing unit 3230 may perform, for example, voice recognition processing (processing for interpreting the meaning of the voice), which is performed by a recognition unit 3022 of the analysis server 3020 described below. Alternatively, the voice processing unit 3230 may perform, as the second processing operation, for example, processing to replace each sound included in a voice accepted by the voice acceptance section 3210 with text. For example, the voice processing unit 3230 may replace the voice "akari", which means "light" in Japanese, with texts "a", "ka", and "ri", with each of the sounds in the voice being converted into a text by referring to a database in which each of texts prepared in advance and a pattern of the sound of pronunciation of the text are associated with each other, without recognizing the meaning of the voice.

The voice processing unit 3230 executes the second processing operation on voice accepted by the voice acceptance section 3210 to generate signals 3000St and 3000Mt. The signal 3000St refers to data of a text data format, which is generated on the basis of voice instructions for the air conditioner 3010, the devices in the first device group 3050, and the devices in the second device group 3060 to be operated by the operation/communication device 3200. The signal 3000Mt refers to data of a text data format, which is generated on the basis of voice (normal conversation) to be transmitted to the operation/communication device 3300.

The signal 3000St and the signal 3000Mt may be data of a text data format, which is generated by performing the same processing operation on a voice accepted by the voice acceptance section 3210, or data of a text data format, which is generated by performing different processing operations on voice accepted by the voice acceptance section 3210.

### (2-1-6) Communication Unit

The communication unit 3250 is a functional unit for allowing the operation/communication device 3200 to communicate with the analysis server 3020 or the operation/communication device 3300 (see Fig. 25).

When the operation/communication device 3200 functions as a transmission apparatus, the communication unit 3250 functions as a transmission unit. When the operation/communication device 3200 functions as a reception apparatus, the communication unit 3250 functions as a reception unit.

The operation/communication device 3200 is connected to the analysis server 3020 and the operation/communication device 3300 via a network 3080 that is an example of a communication line (see Fig. 24).

The network 3080 is the Internet, here, but may be any other WAN. The operation/communication device 3200 is connected to a router 3082 via a wireless LAN, and is connected to the network 3080 via the router 3082 (see Fig. 24). The communication unit 3250 is, for example, a wireless LAN adapter that performs wireless communication with the router 3082. The router 3082 has a WAN-side interface and a LAN-side interface, and interconnects a WAN and a LAN. The operation/communication device 3200 and the router 3082 may be connected via a wired LAN, rather than via a wireless LAN. The network 3080 may be a LAN.

The communication unit 3250 transmits data that is based on voice accepted by the voice acceptance section 3210 (in particular, voice instructions for the air conditioner 3010, the devices in the first device group 3050, and the devices in the second device group 3060 to be operated by the operation/communication device 3200) to the analysis server 3020, which is an example of a reception apparatus, via the network 3080 (see Fig. 25). The data transmitted to the analysis server 3020 is the signal 3000Sv or the signal 3000St generated by the voice processing unit 3230.

The communication unit 3250 may transmit the signal 3000Sv and the signal 3000St to the air conditioner server 3030 or the device server 3070 in addition to the analysis server 3020. That is, the communication unit 3250 may transmit the signal 3000Sv and the signal 3000St to a plurality of addresses (for example, the analysis server 3020 and the air conditioner server 3030) (see Fig. 25).

Further, the communication unit 3250 transmits data that is based on voice accepted by the voice acceptance section 3210 (in particular, normal conversation whose destination is the operation/communication device 3300) to the operation/communication device 3300, which is an example of a reception apparatus, via the network 3080 (see Fig. 25). The data transmitted to the operation/communication device 3300 is the signal 3000Mv or the signal 3000Mt generated by the voice processing unit 3230.

When the operation/communication device 3200 functions as a reception apparatus, the communication unit 3250 serves as a reception unit and receives data (the signal 3000Mv or the signal 3000Mt) transmitted from a transmission unit of the operation/communication device 3300.

The communication unit 3250 may be configured to receive information concerning the content of the operation of the air conditioner 3010 and the devices in the second device group 3060, which is transmitted from a transmission unit 3170a of the air conditioner 3010 and transmission units (not illustrated) of the devices in the second device group 3060.

### (2-1-7) Switching Unit

The switching unit 3240 switches the format of data that is based on voice accepted by the voice acceptance section 3210, which is transmitted from the communication unit 3250, between the voice data format and the text data format.

Here, the switching unit 3240 switches the type of processing to be executed by the voice processing unit 3230 on the voice accepted by the voice acceptance section 3210 between the first processing operation and the second processing operation to switch the format of the data transmitted from the communication unit 3250 between the voice data format and the text data format.

The method of switching the format of the data transmitted from the communication unit 3250 is not limited to the method described above. For example, the voice processing unit 3230 may execute the first processing operation on a voice accepted by the voice acceptance section 3210 to generate data of a voice data format, and also execute the second processing operation on the voice to generate data of a text data format. Then, the switching unit 3240 may control the communication unit 3250 to transmit only one of the generated two types of data to switch the format of the data transmitted from the communication unit 3250 between the voice data format and the text data format.

Preferably, the switching unit 3240 switches the format of the data transmitted from the communication unit 3250 between the voice data format and the text data format on the basis of the determination result of the determination unit 3270 described below. In particular, when the determination unit 3270 determines that the traffic of the network 3080 is relatively high, the switching unit 3240 switches the format of the data transmitted from the communication unit 3250 to the text data format (switches the processing by the voice processing unit 3230 to the second processing operation). When the determination unit 3270 determines that the traffic of the network 3080 is relatively low, the switching unit 3240 switches the format of the data transmitted from the communication unit 3250 to the voice data format (switches the processing by the voice processing unit 3230 to the first processing operation).

Note that the switching unit 3240 may switch the format of the data transmitted from the communication unit 3250 between the voice data format and the text data format without using the determination result of the determination unit 3270 or in accordance with a user's selection input from the operation section (not illustrated) in addition to the determination result of the determination unit 3270.

### (2-1-8) Determination Unit

The determination unit 3270 determines the state of traffic of the network 3080.

For example, the determination unit 3270 determines that the traffic of the network 3080 is relatively high when the measured communication speed is less than a predetermined threshold value, and determines that the traffic of the network 3080 is relatively low when the measured communication speed is greater than or equal to the predetermined threshold value.

In another embodiment, the determination unit 3270 may determine that the traffic of the network 3080 is relatively low in a certain time zone (for example, midnight and early morning), and determine that the traffic of the network 3080 is relatively high in the other time zones.

### (2-1-9) Switch

The switch 3260 is a switch for switching the operating state of the voice acceptance section 3210.

The switch 3260 is a push button switch, but this is not limiting. By pressing the switch 3260, the operating state of the voice acceptance section 3210 is switched between a sleep state in which no voice is accepted and an active state in which voice is acceptable.

The operating state of the voice acceptance section 3210 may be switched between the sleep state and the active state each time the switch 3260 is pressed. Alternatively, the operating state of the voice acceptance section 3210 may be switched from the sleep state to the active state for a predetermined time period when the switch 3260 is pressed.

The operation/communication device 3200 may not have the switch 3260, and the operating state of the voice acceptance section 3210 may be always set to the active state. It is preferable that the operation/communication device 3200 be provided with the switch 3260 to prevent the voice acceptance section 3210 from accepting voice at an unintended timing (to prevent malfunction of the air conditioner 3010 or the devices in the first device group 3050 and the second device group 3060 or unintended transmission of the signal 3000Mv or the signal 3000Mt to the operation/communication device 3300).

### (2-2) Air Conditioner

The air conditioner 3010 is an air conditioner that can be operated by inputting a voice instruction to the voice acceptance section 3210 of the operation/communication device 3200. Non-limiting examples of the voice instruction include voice such as "turn air conditioning on" and "set the set temperature to 25°C". The air conditioner 3010 may be configured to be operable using a typical remote control in addition to operation via voice.

The air conditioner 3010 mainly has an indoor unit 3012, an outdoor unit 3014, a connection pipe (not illustrated) that connects the indoor unit 3012 and the outdoor unit 3014 to each other, and a controller 3150 (see Fig. 24 and Fig. 25).

The air conditioner 3010 is an apparatus that performs air-conditioning of a space to be air-conditioned. The space to be air-conditioned is, for example, a room where the indoor unit 3012 is arranged in the building 3000B.

In the air conditioner 3010, the indoor unit 3012 and the outdoor unit 3014 are connected to each other via the connection pipe, thereby connecting an indoor heat exchanger (not illustrated) of the indoor unit 3012 and a compressor, an outdoor heat exchanger, an expansion valve, and the like (not illustrated) of the outdoor unit 3014 to each other via a pipe. Consequently, a refrigerant circuit is formed. In the air conditioner 3010, refrigerant is circulated in the refrigerant circuit, thereby cooling/heating the space where the indoor unit 3012 is installed.

The operational principle and the content of the operation of the air conditioner 3010 using a vapor compression refrigeration cycle are widely known to the public and will not be described here. The air conditioner 3010 does not need to be an air conditioner capable of both cooling/heating the space to be air-conditioned, and may be a cooling-only or heating-only air conditioner.

In this embodiment, the air conditioner 3010 is configured such that in the indoor heat exchanger of the indoor unit 3012, refrigerant flowing in the indoor heat exchanger and air in the space to be air-conditioned exchange heat; however, the air conditioner is not limited to such a device. For example, the air conditioner 3010 may be an apparatus configured such that in the indoor heat exchanger of the indoor unit 3012 (fan coil unit), cold water/hot water flowing in the indoor heat exchanger and air in the space to be air-conditioned exchange heat.

The controller 3150 is a control apparatus that controls the operation of the air conditioner 3010.

The controller 3150 includes a control board (not illustrated) included in the indoor unit 3012 and a control board (not illustrated) included in the outdoor unit 3014. CPUs on the control boards or the like of the indoor unit 3012 and the outdoor unit 3014, which constitute the controller 3150, execute various programs stored in storage devices on the control boards or the like to execute various processing operations. Further, the controller 3150 includes devices and the like such as a wireless LAN adapter that functions as a communication unit 3170 described below.

The controller 3150 mainly has a communication unit 3170 and an air conditioner control unit 3190.

The communication unit 3170 is used to allow the air conditioner 3010 to communicate with mainly the air conditioner server 3030 (see Fig. 25).

The air conditioner 3010 (the communication unit 3170) is connected to the air conditioner server 3030 via the network 3080 (see Fig. 24). The air conditioner 3010 is connected to the router 3082 via a wireless LAN, and is connected to the network 3080 via the router 3082 (see Fig. 24). The air conditioner 3010 and the router 3082 may be connected via a wired LAN, rather than via a wireless LAN.

The communication unit 3170 is, for example, a wireless LAN adapter that performs wireless communication with the router 3082. The communication unit 3170 has, as functional units, the transmission unit 3170a that transmits information, and a reception unit 3170b that receives information (see Fig. 25).

The transmission unit 3170a preferably transmits information 3000J on the state quantity for at least one of the air conditioner 3010 and the space to be air-conditioned to the air conditioner server 3030 (see Fig. 25). Non-limiting examples of the state quantity for the air conditioner 3010 include temperatures/pressures of refrigerant measured by sensors (not illustrated) at various locations in the refrigerant circuit, the number of revolutions of an inverter-controlled motor (not illustrated) of the compressor of the outdoor unit 3014, and the opening degree of the expansion valve of the outdoor unit 3014. The state quantity for the space to be air-conditioned, includes, but not limited to, the measured temperature of the space to be air-conditioned.

The reception unit 3170b receives, for example, a command 3000C corresponding to the signal 3000Sv or the signal 3000St transmitted from the communication unit 3250 of the operation/communication device 3200 (in particular, the signal 3000Sv or the signal 3000St that is based on a voice instruction for control of the air conditioner 3010) from the outside. More specifically, the reception unit 3170b receives the command 3000C generated on the basis of the result of analysis of the signal 3000Sv or the signal 3000St by the analysis server 3020 (in particular, the signal 3000Sv or the signal 3000St that is based on a voice instruction for control of the air conditioner 3010). Preferably, the reception unit 3170b receives the command 3000C generated by the air conditioner server 3030 on the basis of the result of analysis of the signal 3000Sv or the signal 3000St by the analysis server 3020 (in particular, the signal 3000Sv or the signal 3000St that is based on a voice instruction for control of the air conditioner 3010) and on the basis of the information 3000J on the state quantity transmitted from the transmission unit 3170a to the air conditioner server 3030.

For example, but not limitation, the command 3000C is related to at least one of turning on/off of the operation of the air conditioner 3010, switching among the operating modes (cooling/heating/dehumidification/ventilation, etc.) of the air conditioner 3010, changing of the set temperature (the target temperature of the space to be air-conditioned), a target value of the number of revolutions of the inverter-controlled motor (not illustrated) of the compressor of the outdoor unit 3014, a target value of the opening degree of the expansion valve of the outdoor unit 3014, and a target value of the number of revolutions of an inverter-controlled fan motor of the indoor unit 3012.

The air conditioner control unit 3190 controls the operation of the air conditioner 3010 in accordance with the command 3000C received by the reception unit 3170b, a command from a typical remote control (not illustrated), or the like. For example, the air conditioner control unit 3190 controls the operation of the compressor and expansion valve of the outdoor unit 3014, a fan of the indoor unit 3012, and so on in accordance with the command 3000C received by the reception unit 3170b on the basis of the settings of the air conditioner 3010 (such as the set temperature), values measured by various sensors (not illustrated), and so on.

### (2-3) First Device Group

The devices 3050a, 3050b, ..., and 3050n in the first device group 3050 are devices that can be operated using infrared signals. The devices 3050a, 3050b, ..., and 3050n in the first device group 3050 can be operated using infrared signals transmitted from the infrared output device 3040 in response to input of voice instructions to the operation/communication device 3200. The devices 3050a, 3050b, ..., and 3050n in the first device group 3050 are similar to the devices 50a, 50b, ..., and 50n in the first device group 50 of the first embodiment and will not be described here.

### (2-4) Second Device Group

The devices 3060a, 3060b, ..., and 3060m in the second device group 3060 are devices that can be operated using signals transmitted via the network 3080. The devices 3060a, 3060b, ..., and 3060m in the second device group 3060 are operated using signals transmitted from the analysis server 3020 or the device server 3070 in response to input of voice instructions to the operation/communication device 3200. The devices 3060a, 3060b, ..., and 3060m in the second device group 3060 are similar to the devices 60a, 60b, ..., and 60m in the second device group 60 of the first embodiment and will not be described here.

### (2-5) Analysis Server

The analysis server 3020 is communicably connected to the operation/communication device 3200, the air conditioner 3010, the air conditioner server 3030, the device server 3070, and the infrared output device 3040 via the network 3080. The analysis server 3020 is an example of a reception apparatus that receives the signals 3000Sv and 3000St transmitted from the operation/communication devices 3200 and 3300, which are examples of a transmission apparatus.

When the operation/communication device 3200 accepts a voice instruction for the air conditioner 3010, a device in the first device group 3050, or a device in the second device group 3060, the communication unit 3250 transmits the signal 3000Sv or the signal 3000St that is based on the voice instruction to the analysis server 3020 via the network 3080 (see Fig. 25).

The analysis server 3020 is a computer that executes a program stored in a storage device to analyze the received signal 3000Sv and signal 3000St. For example, the analysis server 3020 performs voice recognition of the received signal 3000Sv of a voice data format. Further, the analysis server 3020 performs processing to recognize the meaning of the received signal 3000St of a text data format.

The analysis server 3020 has a communication unit 3024 capable of communication via the network 3080. The communication unit 3024 is an example of a reception unit, and receives the signal 3000Sv and the signal 3000St, which are transmitted from the operation/communication devices 3200 and 3300. The communication unit 3024 is also an example of a signal output unit that outputs (transmits) a signal (text information) that is based on the recognition result obtained by the recognition unit 3022 described below.

The storage device of the analysis server 3020 preferably stores, in addition to the program executed by a CPU, for example, a list of devices that can be operated by each of the operation/communication devices 3200 and 3300. That is, the analysis server 3020 preferably knows which device can be operated by each of the operation/communication devices 3200 and 3300. In addition, preferably, for the devices 3060a, 3060b, ..., and 3060m in the second device group 3060, information as to whether the device 3060a, 3060b, ..., or 3060m to be controlled is a direct control target of the analysis server 3020 (a control target of either of the analysis server 3020 and the device server 3070) is also stored.

The analysis server 3020 has, as a functional unit, the recognition unit 3022 that recognizes the content of the received signal 3000Sv and signal 3000St.

For example, the recognition unit 3022 analyzes the signal 3000Sv of a voice data format to determine a feature value, and generates text information from the feature value by using a voice recognition dictionary stored in the storage device, which includes an acoustic model, a linguistic model, and a pronunciation dictionary.

For example, the recognition unit 3022 includes a text recognition engine, and recognizes the meaning of the signal 3000St of a text data format. Then, the analysis server 3020 recognizes the meaning of text data, such as "air-conditioner-on", and generates meaningful text information, such as "turn the air conditioner on".

When the recognition unit 3022 executes recognition processing on the signal 3000Sv and the signal 3000St that are based on the same voice, it is more likely that the content will be recognizable when recognition processing is executed on the signal 3000Sv of a voice data format (having a relatively large amount of data). If the meaning of the signal 3000Sv or the signal 3000St fails to be recognized, the analysis server 3020 may request the user of the operation/communication device 3200 to retransmit the signal 3000Sv or the signal 3000St (reenter voice).

Non-limiting examples of the text information generated by the analysis server 3020 include text information such as "turn the air conditioner on", "set the set temperature of the air conditioner to 25 degrees", "turn the lighting device off", and "turn the television set on".

When the generated text information is related to control of the air conditioner 3010 (for example, when the text information includes an air-conditioner-related keyword), the analysis server 3020 transmits the recognition result of the signal 3000Sv or the signal 3000St (i.e., the generated text information) to the air conditioner server 3030 via the network 3080 (see Fig. 25).

When the text information is related to control of the device 3050a, 3050b, ..., or 3050n in the first device group 3050 (for example, when the text information includes a keyword related to the first device group 3050), the analysis server 3020 transmits a command to the infrared output device 3040 to provide an instruction to transmit an infrared signal based on the recognition result of the signal 3000Sv or the signal 3000St (i.e., the generated text information). For example, when the text information is information concerning a lighting device included in the devices 3050a, 3050b, ..., and 3050n in the first device group 3050 (for example, "turn the lighting device off"), the analysis server 3020 transmits a command to the infrared output device 3040 to transmit an infrared signal for instructing the lighting device to turn off. The command directed to the infrared output device 3040 is transmitted from the analysis server 3020 to the infrared output device 3040 via the network 3080.

When the text information is related to control of the device 3060a, 3060b, ..., or 3060m in the second device group 3060 (for example, when the text information includes a keyword related to the second device group 3060), the analysis server 3020 transmits a command based on the recognition result of the signal 3000Sv or the signal 3000St (i.e., the generated text information) to the device 3060a, 3060b, ..., or 3060m in the second device group 3060. For example, when the text information is information concerning a television set included in the devices 3060a, 3060b, ..., and 3060m in the second device group 3060 (for example, "turn the television set on"), the analysis server 3020 transmits a command to the television set to provide an instruction to turn on the switch. Commands directed to the devices 3060a, 3060b, ..., and 3060m in the second device group 3060 are transmitted from the analysis server 3020 to the devices 3060a, 3060b, ..., and 3060m in the second device group 3060 via the network 3080.

When the text information is related to control of the device 3060a, 3060b, ..., or 3060m in the second device group 3060 and the device 3060a, 3060b, ..., or 3060m to be controlled is not a direct control target of the analysis server 3020, the text information is transmitted to the device server 3070 that controls the corresponding device 3060a, 3060b, ..., or 3060m. Then, a command is transmitted from the device server 3070 to the corresponding device 3060a, 3060b, ..., or 3060m via the network 3080.

### (2-6) Air Conditioner Server

The air conditioner server 3030 generates the command 3000C on the basis of the result of analysis of the signal 3000Sv or the signal 3000St by the analysis server 3020 (i.e., the text information generated by the analysis server 3020), which is transmitted from the analysis server 3020, and on the basis of the information 3000J on the state quantity for at least one of the air conditioner 3010 and the space to be air-conditioned, which is transmitted as appropriate from the transmission unit 3170a of the air conditioner 3010. Then, the air conditioner server 3030 transmits the command 3000C to the reception unit 3170b of the air conditioner 3010 via the network 3080. For example, without limitation, upon receipt of the command "turn the air conditioner on" as text information, the air conditioner server 3030 determines the operation of the components of the air conditioner 3010 on the basis of the current temperature and the like of the space to be air-conditioned, and transmits the command as the command 3000C.

Here, without limitation, the air conditioner server 3030 generates the command 3000C on the basis of the information 3000J in addition to the result of analysis of the signal 3000Sv or the signal 3000St by the analysis server 3020. The air conditioner server 3030 may generate the command 3000C on the basis of only the result of analysis of the signal 3000Sv or the signal 3000St by the analysis server 3020.

Further, the air conditioner server 3030 accumulates signals 3000Sv or signals 3000St transmitted from the operation/communication device 3200 and performs various analysis operations by using the signals 3000Sv or the signals 3000St.

In this embodiment, without limitation, the device operation/communication system 3001 includes the air conditioner server 3030. For example, when the air conditioner 3010 is capable of directly determining the content of the operation on the basis of the result of analysis of the signal 3000Sv or the signal 3000St by the analysis server 3020 (i.e., the text information generated by the analysis server 3020), the air conditioner server 3030 may not be disposed. The result of analysis of the signal 3000Sv or the signal 3000St by the analysis server 3020 may be transmitted directly to the reception unit 3170b of the air conditioner 3010 as the command 3000C.

### (2-7) Device Server

The device server 3070 generates a command for the device 3060a, 3060b, ..., or 3060m in the second device group 3060 on the basis of the result of analysis of the signal 3000Sv or the signal 3000St by the analysis server 3020 (i.e., the text information generated by the analysis server 3020), which is transmitted from the analysis server 3020. Then, the device server 3070 transmits the command to the operation target among the devices 3060a, 3060b, ..., and 3060m in the second device group 3060 via the network 3080.

In Fig. 24, the number of device servers 3070 is one. However, if there is a plurality of types of the devices 3060a, 3060b, ..., and 3060m to be operated by the device server 3070 (rather than in accordance with commands from the analysis server 3020), a number of device servers 3070 equal to the number of types are preferably present.

In addition, when all of the devices 3060a, 3060b, ..., and 3060m are operable with commands from the analysis server 3020, the device server 3070 may not be present.

### (2-8) Infrared Transmitter

The infrared output device 3040 has a storage unit (not illustrated) that stores an infrared signal pattern for control for each of the devices 3050a, 3050b, ..., and 3050n in the first device group 3050 or for each of the operations to be performed on the devices 3050a, 3050b, ..., and 3050n in the first device group 3050. The infrared output device 3040 transmits an infrared signal to the operation target among the devices 3050a, 3050b, ..., and 3050n in the first device group 3050 in accordance with a command transmitted from the analysis server 3020 by using the infrared signal pattern stored in the storage unit.

### (3) Features

### (3-1)

The device operation/communication system 3001 according to this embodiment includes the operation/communication device 3200, which is an example of a transmission apparatus, and the operation/communication device 3300 and the analysis server 3020, which are examples of a reception apparatus. The operation/communication device 3200 has the voice acceptance section 3210, the voice processing unit 3230, which is an example of a text conversion unit, the communication unit 3250, which is an example of a transmission unit, and the switching unit 3240. The voice acceptance section 3210 accepts input of voice. The voice processing unit 3230 converts the voice accepted by the voice acceptance section 3210 into a text data format. The communication unit 3250 transmits data that is based on voice accepted by the voice acceptance section 3210 via the network 3080. The switching unit 3240 switches the format of the data transmitted from the communication unit 3250 between a voice data format and a text data format. The operation/communication device 3300 has a reception unit (similar to the communication unit of the operation/communication device 3200) that receives data transmitted from the communication unit 3250 of the operation/communication device 3200. Further, the analysis server 3020 has the communication unit 3024, which is an example of a reception unit that receives data transmitted from the communication unit 3250 of the operation/communication device 3200.

In the device operation/communication system 3001, the data format of data based on input voice, which is transmitted from the operation/communication device 3200 to the analysis server 3020 or the operation/communication device 3300, can be switched between a voice data format and a text data format. In the device operation/communication system 3001, accordingly, when traffic is high, the data based on the input voice can be switched to the text data format having a smaller data amount than the voice data format and can be transmitted, reducing the occurrence of communication failure regardless of the state of traffic of the network 3080.

In addition, here, voice is input to the operation/communication device 3200. Thus, compared with input of a code selected from a vocabulary list, desired information can be transmitted from the operation/communication device 3200 to the analysis server 3020 or the operation/communication device 3300 without time and labor.

In addition, here, data can also be transmitted in voice data format from the operation/communication device 3200 (the data format available for transmission is not limited to the text data format). Thus, when traffic is low, data can be transmitted in voice data format to the analysis server 3020 or the operation/communication device 3300, providing high convenience.

### (3-2)

The device operation/communication system 3001 according to this embodiment has the determination unit 3270. The determination unit 3270 determines the state of traffic of the network 3080. The switching unit 3240 switches the format of the data transmitted from the communication unit 3250 between a voice data format and a text data format on the basis of the determination result of the determination unit 3270.

Here, the format of data transmitted from the operation/communication device 3200 to the analysis server 3020 or the operation/communication device 3300 is switched between the voice data format and the text data format in accordance with the state of traffic of the network 3080. Thus, communication failures are less likely to occur.

### (3-3)

In the device operation/communication system 3001 according to this embodiment, the analysis server 3020, which is an example of a reception apparatus, has the recognition unit 3022, and the communication unit 3024, which is an example of a signal output unit. The recognition unit 3022 recognizes the content of received data (the received signal 3000Sv and signal 3000St). The communication unit 3024 outputs a signal (text information) based on the recognition result of the recognition unit 3022.

Here, the content of the data received on the analysis server 3020 side is recognized, and a signal is output accordingly. In this system, input voice is preferably transmitted to the analysis server 3020 side in such a manner as to be as close to original data as possible (in a voice data format having a large information amount) to enable accurate recognition of the content of the data. However, sticking to transmission of data in voice data format may cause communication failure, and data may not reach the analysis server 3020, which would otherwise reach it. Consequently, the processing to be performed by the analysis server 3020 may not be executed.

In the device operation/communication system 3001, in contrast, data based on voice input to the operation/communication device 3200 can be transmitted in voice data format and can also be transmitted in text data format. Thus, if the network 3080 enters a state where communication failure is likely to occur, data may be transmitted in text data format. A condition is less likely to occur in which no data reaches the analysis server 3020 and in which the processing to be performed by the analysis server 3020 is not executed.

### (3-4)

In the device operation/communication system 3001 according to this embodiment, the operation/communication device 3300, which is an example of a reception apparatus, further has a voice output unit, a storage unit, and a setting unit. The voice output unit, the storage unit, and the setting unit of the operation/communication device 3300 have configurations similar to those of the voice output unit 3220, the voice database 3224, and the setting unit 3222 of the operation/communication device 3200, respectively. The voice output unit performs voice conversion of data of the text data format accepted by the reception unit of the operation/communication device 3300 (having a configuration similar to that of the communication unit 3250 of the operation/communication device 3200), and outputs the resulting data. The storage unit stores a plurality of voice patterns. The setting unit sets a voice pattern to be used by the voice output unit for output.

Here, in the case of voice output of data of the text data format, a voice to be used for output can be set from among a plurality of voice patterns. This allows a listener who listens to the voice to listen to the content of the data using a voice pattern that is the easiest to hear.

### (3-5)

The operation/communication device 3200 according to this embodiment includes the voice acceptance section 3210, the voice processing unit 3230, the communication unit 3250, and the switching unit 3240. The voice acceptance section 3210 accepts input of voice. The voice processing unit 3230 converts the voice accepted by the voice acceptance section 3210 into a text data format. The communication unit 3250 transmits data that is based on the voice accepted by the voice acceptance section 3210 via the network 3080. The switching unit 3240 switches the format of the data transmitted from the communication unit 3250 between a voice data format and the text data format.

The operation/communication device 3300 also has features similar to those of the operation/communication device 3200, which will not be described to avoid repetition.

In the operation/communication device 3200, the data format of data based on input voice, which is transmitted from the operation/communication device 3200, can be switched between the voice data format and the text data format. In the operation/communication device 3200, accordingly, when traffic is high, the data based on the input voice can be switched to the text data format having a smaller data amount than the voice data format and can be transmitted, reducing the occurrence of communication failure regardless of the state of traffic of the network 3080.

In addition, here, voice is input to the operation/communication device 3200. Thus, compared with input of a code selected from a vocabulary list, desired information can be transmitted from the operation/communication device 3200 without time and labor.

In addition, here, data can also be transmitted in voice data format from the device/communication device 3200 (the data format available for transmission is not limited to the text data format). Thus, when traffic is low, data can be transmitted in voice data format to the receiver side, providing high convenience.

### (3-6)

The operation/communication device 3200 according to this embodiment includes the determination unit 3270. The determination unit 3270 determines the state of traffic of the network 3080. The switching unit 3240 switches the format of the data transmitted from the communication unit 3250 between a voice data format and a text data format on the basis of the determination result of the determination unit 3270.

Here, the format of data transmitted from the operation/communication device 3200 is switched between the voice data format and the text data format in accordance with the state of traffic of the network 3080. Thus, communication failures are less likely to occur.

### (4) Modifications

The following describes modifications of the embodiment described above. The modifications may be combined as appropriate so long as consistency is maintained between them.

### (4-1) Modification 4A

In the embodiment described above, without limitation, the device operation/communication system 3001 is a system capable of operating the air conditioner 3010, the devices in the first device group 3050, and the devices in the second device group 3060 via voice instructions.

For example, in the device operation/communication system 3001, some of the air conditioner 3010, the devices in the first device group 3050, and the devices in the second device group 3060 may not be operation targets. When some of the air conditioner 3010, the devices in the first device group 3050, and the devices in the second device group 3060 are no longer operation targets, a component that is no longer necessary (for example, the infrared output device 3040, the air conditioner server 3030, or the device server 3070) may be removed from the configuration of the device operation/communication system 3001.

Further, the communication system may not be a system used to operate devices. That is, the communication system may be a system for implementing communication between a plurality of communication devices (the operation/communication device 3200 of the embodiment described above from which the device operating function is removed). In this communication system, the infrared output device 3040, the analysis server 3020, the air conditioner server 3030, and the device server 3070 are no longer necessary. Likewise, the transmission apparatus may be an apparatus obtained by removing the device operating function from the operation/communication device 3200 of the embodiment described above.

### (4-2) Modification 4B

In the embodiment described above, without limitation, the analysis server 3020, the air conditioner server 3030, and the device server 3070 in the device operation/communication system 3001 are separate servers. For example, one server may function as the analysis server 3020 and the air conditioner server 3030, or function as the analysis server 3020, the air conditioner server 3030, and the device server 3070.

Conversely, the function of each of the analysis server 3020, the air conditioner server 3030, and the device server 3070 described in the above embodiment may be achieved by a plurality of servers rather than by a single server.

Furthermore, in the embodiment described above, without limitation, the signal 3000Sv and the signal 3000St transmitted from the communication unit 3250 are received directly by the analysis server 3020. For example, the communication unit 3250 may transmit the signal 3000Sv and the signal 3000St to the air conditioner server 3030, and the signal 3000Sv and the signal 3000St may be transmitted from the air conditioner server 3030 to the analysis server 3020.

Furthermore, in the embodiment described above, without limitation, whether data that is based on voice accepted by the voice acceptance section 3210 is transmitted to the analysis server 3020 or the operation/communication device 3300 is determined on the operation/communication device 3200 side. For example, all the data that is based on voice accepted by the voice acceptance section 3210 may be temporarily transmitted to the analysis server 3020, and the analysis server 3020 may recognize the content of the data and transmit data based on voice (including a voice data format and a text data format) to the operation/communication device 3300, if necessary.

### (4-3) Modification 4C

The air conditioner 3010 in the device operation/communication system 3001 according to the embodiment described above is an apparatus that adjusts the temperature or humidity or air, but this is not limiting. The air conditioner may be an air cleaner that removes dust particles and the like from air and blows out cleaned air, an air-flow adjustment apparatus that adjusts the flow of air in the space to be air-conditioned, or the like.

### (4-4) Modification 4D

In the device operation/communication system 3001 according to the embodiment described above, without limitation, when the communication unit 3250 receives data based on voice in text data format, the operation/communication device 3200 serving as a reception apparatus performs voice conversion of the data and outputs the resulting data from the voice output unit 3220. For example, when the communication unit 3250 receives data based on voice in text data format, the operation/communication device 3200 may merely output the data to the display 3280.

### <Eleventh Embodiment>

The following describes a control system 4001 according to an eleventh embodiment with reference to the drawings.

### (1) Overview of Control System 4001

In a control system according to this embodiment, when a plurality of control instructions having the same content, including at least a control instruction given by voice input, are given to one device that is controlled at least by voice input, only one of the plurality of control instructions that are the same is selected, and a control signal (output command) is transmitted in accordance with only the selected control instruction. As the subsequent control instruction, which is received within a predetermined time period after receipt of the first control instruction, the first control instruction is also included in the selection target. The control system announces (notifies) the selection result. Specifically, a selected input method is announced (such as "priority was given to input by voice"). In addition, an input method that is not selected is announced (the smartphone shows on a screen a temporary suspension caused by operation from an information processing device on the network).

In the control system according to this embodiment, furthermore, the selected control instruction may be a control instruction given by voice input (device operation with the smartphone may be suspended at the timing when device operation activated by voice input is started). Alternatively, in the control system, the selected control instruction may be a control instruction given by non-verbal input (device operation activated by voice input may be suspended at the timing when device operation with the smartphone is started). Restricted changes in the settings of an input device may be enabled, and whether to reflect input may be selected at the timing when changes in settings are enabled.

When a plurality of voice inputs are given to the same device, a predetermined priority is used. Here, other input devices can be restricted in accordance with the predetermined priority. Further, the operation by a person with a high priority can be preceded based on voiceprints. Alternatively, the order of control can be determined based on the distance from the device. The control system can also have priorities for input devices, and changes in settings can also be made. Further, the control system also includes means for giving a light or sound notification to a user who uses a device being controlled.

### (2) Fundamental Configuration of Control System 4001

Figs. 26 and 27 are schematic diagrams illustrating the configuration of the control system 4001 according to an embodiment.

The control system 4001 includes an input acceptance device 4060, an infrared output device 4070, and an information processing device 4100. In the control system 4001, a user 4005 is able to control a predetermined controlled device by inputting a control instruction to the input acceptance device 4060. Here, a "first-type device 4010" and a "second-type device 4020" exist as controlled devices. These controlled devices are assumed to be arranged in a room R.

While Figs. 26 and 27 illustrate one input acceptance device 4060, one infrared output device 4070, and one information processing device 4100, the number of input acceptance devices 4060, the number of infrared output devices 4070, and the number of information processing devices 4100 are not limited to those. The information processing device 4100 may be connected to any number of devices and is capable of managing these devices.

The first-type device 4010 is controllable by an infrared output signal. Examples of the first-type device 4010 include an electric fan 4010a, a lighting device 4010b, a television set 4010c, and an air conditioner 4010d. As supplementary remarks, an infrared output signal pattern is set in advance for each controlled device, which can be used to control a controlled device 4010. Here, correspondences between infrared output signal patterns and control details are stored in an infrared pattern DB 4104A described below. In the following description, an arbitrary first-type device is represented by numeral 4010, which is followed by lowercase alphabetic subscripts indicating individual first-type devices.

The second-type device 4020 can be controlled directly by the information processing device 4100 via a network NW. Like the first-type device 4010, examples of the second-type device 4020 also include an electric fan 4020a, a lighting device 4020b, a television set 4020c, and an air conditioner 4020d. In the following description, an arbitrary second-type device is represented by numeral 4020, which is followed by lowercase alphabetic subscripts indicating individual second-type devices.

The input acceptance device 4060 accepts input of control instructions for the predetermined controlled device 4010 or 4020. Here, the input acceptance device 4060 has a microphone, and is capable of accepting, through the microphone, a control instruction for the controlled device 4010 or 4020, which is given from the user 4005, by voice input. The input acceptance device 4060 transmits voice information corresponding to the accepted voice input to the information processing device 4100. Upon detection of voice issued by the user 4005, the input acceptance device 4060 transmits the voice information directly to the information processing device 4100. However, the input acceptance device 4060 is not limited to a voice input acceptance device, and is configured to accept input from any input means. For example, the input acceptance device 4060 may accept input of a control instruction via a touch panel of a smart device or the like.

The infrared output device 4070 outputs an infrared ray to the controlled device (first-type device) 4010. The infrared output device 4070 has an attitude control mechanism 4070A, which controls, upon receipt of relative position information described below from the information processing device 4100, the attitude of the infrared output device 4070 on the basis of the relative position information. The infrared output device 4070 can be attached to the inside of a fixed-type device 4020F whose position is fixed in a predetermined space (the room R). The fixed-type device 4020F, examples of which include an air conditioning device, a light fixture, and a television set, is attached to and fixed on the ceiling or wall of the room R. Alternatively, the fixed-type device 4020F may be embedded in and fixed to the ceiling or wall of the room R.

As illustrated in Fig. 28, the information processing device 4100 has an input unit 4101, an output unit 4102, a communication unit 4103, a storage unit 4104, and a processing unit 4105, and is connected to the input acceptance device 4060 and the infrared output device 4070 via the network NW, such as the Internet. The information processing device 4100 is a device similar to the analysis server 20 in the first embodiment and the like although processing operations to be executed are different.

Here, the input unit 4101 is implemented by any input device, and is configured to input various kinds of information to the information processing device 4100. The output unit 4102 is implemented by any output device, and is configured to output various kinds of information from the information processing device 4100. The communication unit 4103 is connected to the external network NW, and is capable of communicating information.

The storage unit 4104 is implemented by a ROM, a RAM, or the like, and is configured to store information input to the information processing device 4100, information calculated by the information processing device 4100, and so on. The storage unit 4104 stores an "infrared pattern database (DB) 4104A" and a "relative position database (DB) 4104B".

The infrared pattern DB 4104A stores, for each controlled device (the first-type device 4010), a correspondence between an infrared output signal pattern and predetermined control details.

The relative position DB 4104B stores "relative position information" indicating the relative positional relationship between the infrared output device 4070 and a controlled device (the first-type device 4010) in the predetermined space (the room R). When the infrared output device 4070 is fixed to the fixed-type device 4020F, information indicating the relative positional relationship between the position of the fixed-type device 4020F and the position of the first-type device 4010 can be used as the relative position information, instead of information indicating the relative positional relationship between the position of the infrared output device 4070 and the position of the first-type device 4010.

The processing unit 4105 is implemented by a CPU or the like, and is configured to execute information processing in the information processing device 4100. Here, the processing unit 4105 executes a program stored in the storage unit 4104 to function as an "input analysis unit 4110", a "control-details identifying unit 4120", a "first control unit 4130", and a "second control unit 4135".

The input analysis unit 4110 analyzes the content of input received from the input acceptance device 4060. For example, when the input acceptance device 4060 accepts voice input, the input analysis unit 4110 converts the content of the voice input into text information and analyzes the text information. When analyzing the content of the voice input, the input analysis unit 4110 can accurately analyze the content by using a neural network or the like.

The control-details identifying unit 4120 identifies control details indicating a controlled device and a control instruction from the analysis result obtained by the input analysis unit 4110. For example, when the input acceptance device 4060 accepts voice input, the control-details identifying unit 4120 determines whether text information converted by the input analysis unit 4110 includes linguistic information corresponding to a controlled device and a control instruction to identify control details.

When the controlled device is identified as the first-type device 4010, the control-details identifying unit 4120 sends the control details corresponding to the controlled device to the first control unit 4130. When the controlled device is identified as the second-type device 4020, on the other hand, the control-details identifying unit 4120 sends the control details corresponding to the controlled device to the second control unit 4135.

When the control-details identifying unit 4120 identifies control details related to the first-type device 4010, the first control unit 4130 transmits an infrared pattern associated with the control details to the infrared output device 4070. Specifically, the first control unit 4130 transmits an infrared output command to the infrared output device 4070 on the basis of the control details identified by the control-details identifying unit 4120 and the information stored in the infrared pattern DB 4104A. Accordingly, the first-type device 4010 is controlled via the infrared output device 4070. The first control unit 4130 further transmits, together with the infrared output command, relative position information on the relative position between the infrared output device 4070 and the intended first-type device 4010 to the infrared output device 4070. The relative position information is extracted from the relative position DB 4104B.

When the control-details identifying unit 4120 identifies control details related to the second-type device 4020, the second control unit 4135 controls the second-type device 4020 via the network NW on the basis of the control details.

### (3) Operation of Control System 4001

Fig. 29 is a sequence diagram describing the operation of the control system 4001 according to this embodiment.

First, the user 4005 gives voice input to the controlled device 4010 or 4020 by using the input acceptance device 4060 (S1). Then, the input acceptance device 4060 transmits input information corresponding to the accepted voice input to the information processing device 4100 (S2). Here, the input acceptance device 4060 is assumed to accept voice-based operation input (voice input).

Subsequently, the information processing device 4100 receives input information (S3), and analyzes the content of the input (S4). Then, the information processing device 4100 identifies control details indicating the controlled device 4010 or 4020 and a control instruction for the controlled device 4010 or 4020 (S5).

If the information processing device 4100 determines that the control details are related to the first-type device 4010 (S6-Yes), the information processing device 4100 extracts infrared-pattern information from the infrared pattern DB 4104A on the basis of the control details (S7). The information processing device 4100 further extracts relative position information on the relative position between the first-type device 4010 and the infrared output device 4070 (or the fixed-type device 4020F) from the relative position DB 4104B (S8). Then, the information processing device 4100 transmits, together with an infrared output command, the infrared-pattern information and the relative position information to the infrared output device 4070 (S9).

Subsequently, upon receipt of the infrared-pattern information and the relative position information together with the infrared output command (S10), the infrared output device 4070 changes the attitude toward the corresponding controlled device 4010 on the basis of the relative position information (S11). Then, the infrared output device 4070 outputs an infrared ray to the controlled device (first-type device) 4010 on the basis of the received infrared-pattern information (S12).

In parallel with step S6 described above, if the information processing device 4100 determines that the control details are related to the second-type device 4020 (S13-Yes), the information processing device 4100 controls the controlled device (second-type device) 4020 via the network NW on the basis of the control details (S14).

If the information processing device 4100 cannot determine in step S6 or S13 described above that the control details are related to the first-type device 4010 or the second-type device 4020, the process ends (S6-No, S13-No).

The processing of steps S6 to S9 described above and the processing of steps S13 and S14 are not in particular order, and either processing may be performed first.

### (4) Features

As described above, the control system 4001 according to this embodiment includes the input acceptance device 4060, the infrared output device 4070, and the information processing device 4100. Here, the input acceptance device 4060 accepts a control instruction for the controlled device 4010 or 4020 from the user 4005 by voice input. The infrared output device 4070 outputs an infrared ray to the controlled device 4010 or 4020. The information processing device 4100 has the input analysis unit 4110, the control-details identifying unit 4120, the first control unit 4130, and the second control unit 4135. The input analysis unit 4110 analyzes the content of input received from the input acceptance device 4060. The control-details identifying unit 4120 identifies control details indicating a controlled device and a control instruction from the analysis result obtained by the input analysis unit 4110. When the control-details identifying unit 4120 identifies control details related to the first-type device 4010, the first control unit 4130 transmits infrared pattern associated with the control details to the infrared output device 4070. When the control-details identifying unit 4120 identifies control details related to the second-type device 4020, the second control unit 4135 controls the second-type device 4020 via the network NW on the basis of the control details.

In the control system 4001 according to this embodiment, accordingly, the first-type device 4010, which is controllable by output of an infrared pattern, and the second-type device 4020, which is controllable via the network NW, can be controlled.

In the control system 4001 according to this embodiment, furthermore, the information processing device 4100 on the network NW is capable of transmitting an infrared output command to the infrared output device 4070 on the basis of the result of analysis of voice input. In some cases, an enormous amount of information processing may be performed to control a device by voice input. Even in this case, in the control system 4001, the information processing device 4100, which implements a neural network or the like established on the network NW, enables accurate voice analysis. Accordingly, even with voice input, the controlled device 4010 or 4020 and a control instruction can be identified in detail. As a result, the control system 4001 can be achieved which is capable of easily controlling any desired device.

In the control system 4001 according to this embodiment, the information processing device 4100 on the network NW has the infrared pattern DB 4104A, in which a correspondence between an infrared output signal pattern and predetermined control details is stored for each controlled device. This enables collective setting, such as change, update, and addition, of infrared output signal patterns. The control system 4001 according to this embodiment may be configured such that the information in the infrared pattern DB 4104A may not be stored in the information processing device 4100, but may be stored in storage unit of each infrared output device 4070.

### (5) Addition of Input Selection Function

### (5-1) Configuration of Control System 4001

In the control system 4001 according to this embodiment, it is possible to add an input selection function when a plurality of control instructions are input. For example, as in a concept illustration of Fig. 30, in some cases, a plurality of users 4005a and 4005b input the same control instruction to a controlled device 4020, or the same user 4005b inputs the same control instruction to the controlled device 4020 by using a plurality of input acceptance devices 4060b and 4060S. In the control system 4001 according to this embodiment, even in such cases, one of a plurality of inputs can be selected, and the controlled device 4020 can be controlled on the basis of the selected input.

Specifically, the storage unit 4104 of the information processing device 4100 stores an "input acceptance condition database (DB 4) 104R" and a "selection condition database (DB 4) 104S".

The input acceptance condition DB 4104R stores an input condition indicating whether to accept an input in accordance with the input acceptance device 4060 and/or input type. The input acceptance condition is set in association with user information identifying the user 4005. Further, the input acceptance condition can be set by any device with which a user can access the information processing device 4100.

The selection condition DB 4104S stores a selection condition for selecting, when a plurality of inputs are given in the same time zone, one of the inputs. For example, the selection condition is information for determination, such as information indicating that voice input takes precedence over input other than voice input, or information indicating that non-voice input takes precedence over voice input. More specifically, if the input type is content such as "turn on the power to the television set", the selection condition is information, such as information indicating that voice input is given priority over input by any other input means. For example, if the input acceptance device 4060 is the "voice input acceptance device 4060S", the selection condition is information, such as information indicating that input from the voice input acceptance device 4060S is given priority over input from the other input acceptance devices 4060a and 4060b.

In the information processing device 4100, furthermore, as illustrated in Fig. 31, the processing unit 4105 further functions as an "input selection unit 4121" and a "selection result notification unit 4122".

The input selection unit 4121 compares control details identified by the control-details identifying unit 4120 for one input with control details identified by the control-details identifying unit 4120 for another input, and determines whether both are the same. If the input selection unit 4121 determines that these pieces of information are the same, the input selection unit 4121 selects one of the inputs on the basis of the information stored in the selection condition DB 4104S. For example, if one input is voice input and another input is non-voice input, the input selection unit 4121 gives higher priority to the input given by voice.

The selection result notification unit 4122 provides notification of a selection result obtained by the input selection unit 4121. Specifically, the selection result notification unit 4122 provides notification of information concerning the selected input via the input acceptance device 4060 by voice output. Further, the selection result notification unit 4122 provides notification of information concerning an unselected input via the input acceptance device 4060.

### (5-2) Operation of Control System 4001

Fig. 32 is a flowchart describing the operation of the control system 4001 according to this embodiment.

First, the user 4005 inputs a control command to the controlled device 4010 or 4020 by using the input acceptance device 4060 (X1). The input acceptance device 4060 transmits the accepted control command to the information processing device 4100.

The information processing device 4100 waits until a predetermined time period elapses after the control command is accepted (X2-No).

Then, the information processing device 4100 determines whether inputs having the same control instruction are given while waiting (X3). If the information processing device 4100 determines that inputs having the same control instruction are given, the information processing device 4100 selects one of the inputs on the basis of the information in the selection condition DB 4104S (X3-Yes, X4). Then, the information processing device 4100 transmits the output command to the controlled device 4010 or 4020 on the basis of the selected input (X5).

If the information processing device 4100 determines that inputs having the same control instruction are not given, the information processing device 4100 determines that only one input is given, and transmits the output command to the controlled device 4010 or 4020 on the basis of the input (X3-No, X5).

### (5-3) Features

### (5-3-1)

As described above, the control system 4001 according to this embodiment includes the input acceptance device 4060 (input acceptance unit), the input selection unit 4121, and the first control unit 4130 or the second control unit 4135 (output command transmission unit). The input acceptance device 4060 (input acceptance unit) accepts input of a control instruction for the controlled device 4010 or 4020 at least by voice input. When the input acceptance device 4060 accepts a plurality of inputs of control instructions having the same content for a controlled device 4010 or 4020, the input selection unit 4121 selects one of the plurality of inputs. The first control unit 4130 or the second control unit 4135 transmits an output command to the controlled device 4010 or 4020 in accordance with the control instruction corresponding to the input selected by the input selection unit 4121.

In the control system 4001 according to this embodiment, accordingly, when a plurality of inputs indicating control instructions having the same content are accepted for a controlled device 4010 or 4020, one of the plurality of inputs is selected, and the controlled device 4010 or 4020 is controlled in accordance with the control instruction corresponding to the select input, achieving correct control of a controlled device. As a result, the control system 4001 having high reliability can be achieved.

For example, the input selection unit 4121 gives higher priority to a control instruction given by voice input. This can enhance the effectiveness of a control system that controls a device by voice input. Alternatively, for example, the input selection unit 4121 may give higher priority to a control instruction given by input other than voice input. This can enhance the effectiveness of the control system 4001 that controls a device by input other than voice input.

### (5-3-2)

In the control system 4001 according to this embodiment, the input selection unit 4121 selects one of inputs of control instructions received within a predetermined time period after input of a control instruction is received. Accordingly, no control instruction is accepted after the elapse of the predetermined time period, and thus the load on the system can be reduced.

### (5-3-3)

The control system 4001 according to this embodiment further includes the selection result notification unit 4122 that provides notification of a selection result obtained by the input selection unit 4121. This allows the user 4005 to recognize the control state of the controlled device 4010 or 4020. The selection result notification unit 4122 may provide a notification of the selection result by voice output. This allows the user 4005 to recognize the control state of the controlled device 4020 by voice. In addition, the selection result notification unit 4122 may provide a notification of information concerning an unselected input. This allows the user 4005, who has given redundant control instructions, to recognize control that is not executed on the controlled device 4010 or 4020.

### (5-3-4)

The control system 4001 according to this embodiment is configured such that a plurality of inputs are given from one or more input acceptance devices, and has the input acceptance condition DB 4104R indicating an input acceptance condition of whether to accept an input in accordance with the input acceptance device and/or the input type. The input selection unit 4121 may select one input on the basis of the input acceptance condition DB 4104R, in place of the selection condition in the selection condition DB 4104S or in addition to the selection condition in the selection condition DB 4104S. Accordingly, the control system 4001 can be achieved in which the controlled device 4010 or 4020 can be controlled in accordance with a control instruction from an input acceptance device for which input acceptance is set. In other words, the control system 4001 can be achieved which can prevent the controlled device 4010 or 4020 from being controlled in accordance with a control instruction from an input acceptance device for which no input acceptance is set.

### (5-3-5)

In the foregoing description, one of inputs within a predetermined time period after receipt of input of a control instruction is selected. However, the control system according to this embodiment is not limited to this. The control system according to this embodiment may be configured to, when input of a control instruction is received, refer to a history of inputs received a predetermined time period before the input time and to select an input to which a high priority is set.

For example, when a high priority is set to voice input, upon touch input from a smart device, a history of inputs within a predetermined time period before the input time of the touch input from the smart device is referred to. If the history of inputs includes voice input, the voice input is selected preferentially over the smart device.

In short, in the control system 4001 according to this embodiment, it is desirable that when input of a control instruction is received, the input selection unit 4121 select one of inputs of control instructions received within a predetermined time period before or after the input time.

Accordingly, when one of inputs of control instructions accepted within a predetermined time period after the input time is selected, no control instruction is accepted after the elapse of the predetermined time period, and thus the load on the system can be reduced. Furthermore, when one of inputs of control instructions accepted within a predetermined time period before the input time is selected, control instructions before the elapse of the predetermined time period are referred to, and thus a high-flexibility system can be achieved.

As supplementary remarks, priority setting can be carried out as follows. For example, inputs A1, A2, and A3 are given at times t1, t2, and t3, respectively, and are assigned priority such that A1 > A2, A2 > A3, and A3 > A1 are satisfied. If only input after a predetermined time period is taken into account, when the input A1 and the input A2 are given, the input A1 is selected. Thereafter, when the input A3 is given, the input A3 is selected finally. In contrast, if input before a predetermined time period is also taken into account, when the input A1 and the input A2 are given, the input A1 is selected. Thereafter, when the input A3 is given, the input A2 and the input A3 are compared and finally the input A2 may be selected depending on the setting of the predetermined time period.

### (5-4) Modifications

In the embodiment described above, without limitation, when the input acceptance device 4060 accepts a plurality of inputs of control instructions having the same content for a controlled device 4010 or 4020, the input selection unit 4121 selects one of the plurality of inputs.

For example, the input selection unit 4121 may be configured to, not only when the input acceptance device 4060 accepts a plurality of inputs of control instructions having the same content for a controlled device 4010 or 4020 but also when the input acceptance device 4060 accepts a plurality of inputs of control instructions each having different content for a controlled device 4010 or 4020, select one of the plurality of inputs. In this case, in step X3 of the flowchart in Fig. 32, the input selection unit 4121 determines whether further inputs of control instructions are given (regardless of whether the control instructions are the same) in the period in step X2 while the input selection unit 4121 is waiting. If the input selection unit 4121 determines that further inputs of control instructions are given during the waiting period, the input selection unit 4121 is configured to select one of the inputs on the basis of the information in the selection condition DB 4104S or the input acceptance condition DB 4104R. In this case, the selection condition used by the input selection unit 4121 may include, in addition to the selection condition described above for illustrative purposes, a condition in which (regardless of the type of input acceptance device) a control command having a certain kind of content takes priority over control commands having the other kinds of content.

When a plurality of inputs of control instructions each having different content are accepted for a controlled device 4010 or 4020, the control system 4001 is configured to select one of the plurality of inputs. This can prevent the occurrence of a situation, such as frequent changes in the control of the controlled device 4010 or 4020 or performance of controls conflicting with each other at short time intervals.

In another example, the input selection unit 4121 may be configured to, only when the input acceptance device 4060 accepts a plurality of inputs of control instructions each having different content for a controlled device 4010 or 4020, select one of the plurality of inputs.

### <Twelfth Embodiment>

The following describes a device control system 5001 according to a twelfth embodiment with reference to the drawings.

### (1) Overview of device system including device control system

Fig. 33 is a schematic configuration diagram of a device system 5000 including the device control system 5001. Fig. 34 is a schematic block diagram of the device system 5000. In Fig. 34, some of the components of the device system 5000 are not depicted.

The device system 5000 mainly has the device control system 5001, an analysis server 5020, a hot-water-supply heat source apparatus 5010, an infrared-operated device group 5050, and a network-connected device group 5060 (see Fig. 33). The device control system 5001 mainly includes a control apparatus 5200, an in-bathroom operation section 5300 installed in a bathroom 5000B1, and a room-side operation section 5400 arranged in a room out of the bathroom 5000B1.

The device control system 5001 is a system that controls the hot-water-supply heat source apparatus 5010, devices 5050a, 5050b, ..., and 5050n included in the infrared-operated device group 5050, and devices 5060a, 5060b, ..., and 5060m included in the network-connected device group 5060 in accordance with instructions given by voice (voice instructions).

Specifically, in the device control system 5001, the control apparatus 5200 controls the devices in the infrared-operated device group 5050 and the devices in the network-connected device group 5060, which are examples of an out-of-bathroom device, in accordance with voice instructions accepted by a microphone 5310 (see Fig. 34) included in the in-bathroom operation section 5300. Further, in the device control system 5001, the control apparatus 5200 controls the hot-water-supply heat source apparatus 5010 in accordance with a voice instruction accepted by the microphone 5310 included in the in-bathroom operation section 5300. That is, a user who uses the device control system 5001 is able to control a variety of devices from within the bathroom 5000B1.

In the device control system 5001, furthermore, the control apparatus 5200 controls the devices in the infrared-operated device group 5050 and the devices in the network-connected device group 5060, which are examples of an out-of-bathroom device, in accordance with voice instructions (instruction input) accepted by a room-side microphone 5410 (see Fig. 34) disposed in the room-side operation section 5400.

The hot-water-supply heat source apparatus 5010, the devices in the infrared-operated device group 5050, and the devices in the network-connected device group 5060, which are to be controlled by the device control system 5001, are devices arranged in a building 5000B (see Fig. 33). The building 5000B is, for example, but not limited to, a detached house. The building 5000B may be a dwelling unit of an apartment house. The number of hot-water-supply heat source apparatus 5010, the number of devices in the infrared-operated device group 5050, and the number of devices in the network-connected device group 5060, which are arranged in the building 5000B, are not limited to those depicted in Fig. 33, and may be each one or more. A description is made assuming that a single hot-water-supply heat source apparatus 5010 is arranged in the building 5000B and the infrared-operated device group 5050 and the network-connected device group 5060 arranged in the building 5000B each include a plurality of devices. The devices in the infrared-operated device group 5050 and the network-connected device group 5060 may be separately disposed in a plurality of rooms in the building 5000B or may be disposed in a single room in the building 5000B.

The in-bathroom operation section 5300 is installed in the bathroom 5000B1 in the building 5000B. In this embodiment, the building 5000B includes a single bathroom 5000B1, and a single in-bathroom operation section 5300 is used. However, this is not limiting, and the building 5000B may include a plurality of bathrooms 5000B1, and the in-bathroom operation section 5300 may be arranged in each of the bathrooms 5000B1.

The room-side operation section 5400 is installed in a room out of the bathroom 5000B1 in the building 5000B. The room-side operation section 5400 is installed in a kitchen, for example. However, the installation location of the room-side operation section 5400 is not limited to the kitchen, and the room-side operation section 5400 may be installed in any other room (for example, a living room). In this embodiment, a single room-side operation section 5400 is used. However, this is not limiting, and a plurality of room-side operation sections 5400 may be arranged in the building 5000B.

The analysis server 5020 is generally, but not limited to, installed in a location different from the building 5000B. For example, the analysis server 5020 may be shared by device control systems 5001, each of which is installed in one of a plurality of buildings (not illustrated).

### (2) Detailed Configuration

The hot-water-supply heat source apparatus 5010, the infrared-operated device group 5050, the network-connected device group 5060, the device control system 5001 (the in-bathroom operation section 5300, the room-side operation section 5400, and the control apparatus 5200), and the analysis server 5020 will be described below.

### (2-1) Hot-Water-Supply Heat Source Apparatus

The hot-water-supply heat source apparatus 5010 is an apparatus that supplies hot water to the bathroom 5000B1. The hot-water-supply heat source apparatus 5010 may be a heat-pump hot water supply apparatus or a gas hot water supply apparatus.

The hot-water-supply heat source apparatus 5010 is arranged out of the bathroom 5000B1.

Preferably, the hot-water-supply heat source apparatus 5010 has a wireless LAN adapter (not illustrated), and is connected to a router 5082 described below via a wireless LAN. Alternatively, the hot-water-supply heat source apparatus 5010 may be connected to the router 5082 described below via a wired LAN. The hot-water-supply heat source apparatus 5010 is preferably communicably connected to the control apparatus 5200 via a network 5080 described below. The hot-water-supply heat source apparatus 5010 is preferably configured to be controllable by the control apparatus 5200 in accordance with a voice instruction accepted by the microphone 5310 of the in-bathroom operation section 5300 described below or the room-side microphone 5410 of the room-side operation section 5400 described below.

Further, the hot-water-supply heat source apparatus 5010 is preferably communicably connected to the in-bathroom operation section 5300 and the room-side operation section 5400. For example, the hot-water-supply heat source apparatus 5010 is wirelessly connected to the in-bathroom operation section 5300 and the room-side operation section 5400. However, the method of connecting the hot-water-supply heat source apparatus 5010 to the in-bathroom operation section 5300 and the room-side operation section 5400 is not limited to wireless connection, and the hot-water-supply heat source apparatus 5010 may be connected to the in-bathroom operation section 5300 and the room-side operation section 5400 in a wired manner (using a remote control cable). The hot-water-supply heat source apparatus 5010 may be configured to be also controllable by input with an operation button (not illustrated) provided for the in-bathroom operation section 5300 or the room-side operation section 5400 (without intervention of the control apparatus 5200).

### (2-2) Infrared-Operated Device Group

The devices 5050a, 5050b, ..., and 5050n in the infrared-operated device group 5050 are examples of an out-of-bathroom device. The devices 5050a, 5050b, ..., and 5050n in the infrared-operated device group 5050 are examples of an infrared-operated device. The devices 5050a, 5050b, ..., and 5050n in the infrared-operated device group 5050 are devices that can be operated using infrared signals.

The devices 5050a, 5050b, ..., and 5050n in the infrared-operated device group 5050 include, for example, but not limitation, an electric fan, a lighting device, an audio device, a microwave oven, and an air conditioner. The devices 5050a, 5050b, ..., and 5050n in the infrared-operated device group 5050 may not be connected to the network 5080 described below.

The devices 5050a, 5050b, ..., and 5050n in the infrared-operated device group 5050 can be operated using infrared signals transmitted from an infrared signal transmission unit 5040 of the room-side operation section 5400 in accordance with input of voice instructions to the in-bathroom operation section 5300 or the room-side operation section 5400. Examples of operation that can be performed using infrared signals include turning on/off the devices 5050a, 5050b, ..., and 5050n, setting a temperature in an air conditioner, selecting songs to be played in an audio device, and adjusting a volume level.

The devices 5050a, 5050b, ..., and 5050n in the infrared-operated device group 5050 may be configured to be operable by, in addition to operation via voice (in addition to operation using infrared signals transmitted from the infrared signal transmission unit 5040 in accordance with voice instructions), a typical infrared remote control, or switches on the main bodies of the devices 5050a, 5050b, ..., and 5050n.

### (2-3) Network-Connected Device Group

The devices 5060a, 5060b, ..., and 5060m in the network-connected device group 5060 are examples of an out-of-bathroom device. The devices 5060a, 5060b, ..., and 5060m in the network-connected device group 5060 include, for example, but not limited to, a television set, a DVD recorder, a washing machine, a refrigerator, an air conditioner, and a camera whose imaging direction is variable.

The devices 5060a, 5060b, ..., and 5060m in the network-connected device group 5060 each have a wireless LAN adapter (not illustrated), and are connected to the network 5080 described below via the router 5082 (see Fig. 33). The devices 5060a, 5060b, ..., and 5060m in the network-connected device group 5060 are communicably connected to the control apparatus 5200 via the network 5080. The devices 5060a, 5060b, ..., and 5060m in the network-connected device group 5060 and the router 5082 may be connected via a wired LAN, rather than via a wireless LAN.

The devices 5060a, 5060b, ..., and 5060m in the network-connected device group 5060 are devices controlled using a command 5000C transmitted from the control apparatus 5200 in accordance with voice instructions for the in-bathroom operation section 5300 or the room-side operation section 5400. Examples of control that can be performed by the control apparatus 5200 include turning on/off the devices 5060a, 5060b, ..., and 5060m, setting a temperature in an air conditioner, setting a programmed recording on a DVD recorder, and adjusting the imaging direction of a camera.

The devices 5060a, 5060b, ..., and 5060m in the network-connected device group 5060 may be configured to be operable with a commonly available remote control or switches on the main bodies of the devices 5060a, 5060b, ..., and 5060m, in addition to operation via voice (in addition to operation based on the command 5000C transmitted via the network 5080 in accordance with voice instructions).

### (2-4) Device Control System

### (2-4-1) In-Bathroom Operation Section

The in-bathroom operation section 5300 is a remote control device installed in the bathroom 5000B1 and capable of giving instructions to out-of-bathroom devices (the devices in the infrared-operated device group 5050 and the devices in the network-connected device group 5060) and the hot-water-supply heat source apparatus 5010. Here, in particular, the in-bathroom operation section 5300 has the microphone 5310, and is capable of operating out-of-bathroom devices and the hot-water-supply heat source apparatus 5010 upon input of voice instructions to the microphone 5310.

The in-bathroom operation section 5300 is attached to, for example, a wall of the bathroom 5000B1.

The in-bathroom operation section 5300 is connected to the room-side operation section 5400 so that a telephone call can be established therebetween. A person in the bathroom 5000B1 can have a telephone conversation with a person in a room out of the bathroom 5000B1 (a person near the room-side operation section 5400) by using the in-bathroom operation section 5300. Further, the in-bathroom operation section 5300 is communicably connected to the control apparatus 5200. The in-bathroom operation section 5300 is connected to the room-side operation section 5400 and the control apparatus 5200 via wireless connection, for example. However, this is not limiting, and the in-bathroom operation section 5300 may be connected to the room-side operation section 5400 and the control apparatus 5200 via wired connection.

The in-bathroom operation section 5300 has a CPU (not illustrated) and a storage device (not illustrated) that stores a program executed by the CPU and so on. The in-bathroom operation section 5300 performs various processing operations and control in response to the program being executed by the CPU. For example, the in-bathroom operation section 5300 functions as a switching unit 5330 in response to the program being executed by the CPU. The function of the switching unit 5330 of the in-bathroom operation section 5300 may be implemented by hardware rather than by software. Further, the in-bathroom operation section 5300 has the microphone 5310, a speaker 5320, and a switch 5340 (see Fig. 34). The in-bathroom operation section 5300 further has a communication device capable of communicating with the room-side operation section 5400 and the control apparatus 5200. For example, when the out-of-bathroom devices operated by the in-bathroom operation section 5300 include an image capturing device such as a camera, the in-bathroom operation section 5300 may have a display.

### (2-4-1-1) Microphone

The microphone 5310 accepts input of voice instructions to the hot-water-supply heat source apparatus 5010, the devices 5050a, 5050b, ..., and 5050n in the infrared-operated device group 5050, or the devices 5060a, 5060b, ..., and 5060m in the network-connected device group 5060. The microphone 5310 further accepts input of telephone-conversation voice (normal conversation) during a telephone conversation with the room-side operation section 5400.

### (2-4-1-2) Speaker

The speaker 5320 is used for various voice outputs.

For example, during a telephone conversation with the room-side operation section 5400, the speaker 5320 outputs telephone-conversation voice input to the room-side operation section 5400 on the other end of the telephone conversation.

Further, when the microphone 5310 accepts a voice instruction for the hot-water-supply heat source apparatus 5010, an out-of-bathroom device, or the like, the speaker 5320 provides notification of acceptance of an instructions by voice (for example, outputs the sentence "a voice instruction has been accepted" by voice). Further, for example, when the hot-water-supply heat source apparatus 5010 or an out-of-bathroom device is operated in accordance with a voice instruction input to the microphone 5310, the speaker 5320 provides notification by voice that the device has been operated in accordance with control (for example, outputs the sentence "the air conditioner has started the operation" by voice).

### (2-4-1-3) Switching Unit

The switching unit 5330 switches the operation mode of the in-bathroom operation section 5300.

First, the operation mode of the in-bathroom operation section 5300 will be described. The in-bathroom operation section 5300 has two operation modes, namely, a first mode and a second mode.

The first mode is a mode in which voice accepted by the microphone 5310 is used as a voice instruction. Specifically, when the first mode is selected as the operation mode of the in-bathroom operation section 5300, voice input to the microphone 5310 is transmitted to the control apparatus 5200.

The second mode is a mode in which voice accepted by the microphone 5310 is used as voice for a telephone conversation with the room-side operation section 5400. Specifically, when the second mode is selected as the operation mode of the in-bathroom operation section 5300, voice accepted by the microphone 5310 is transmitted to the room-side operation section 5400.

Here, regardless of which operation mode is selected from among the first mode and the second mode, an analog voice signal is transmitted from the in-bathroom operation section 5300. However, a signal having a different format may be transmitted from the in-bathroom operation section 5300 depending on the operation mode. For example, when the first mode is selected as the operation mode, a digital voice signal subjected to A/D conversion may be transmitted from the in-bathroom operation section 5300 to the control apparatus 5200, and when the second mode is selected as the operation mode, an analog voice signal (not subjected to A/D conversion) may be transmitted from the in-bathroom operation section 5300 to the room-side operation section 5400.

The switching unit 5330 switches the operation mode of the in-bathroom operation section 5300 between the first mode and the second mode in accordance with a mode change command accepted by the switch 5340.

### (2-4-1-4) Switch

The switch 5340 is an example of a command acceptance unit that accepts a mode change command for providing an instruction to change the operation mode of the in-bathroom operation section 5300. The switch 5340 is a push button switch, but this is not limiting. Here, pressing of the switch 5340 corresponds to acceptance of a mode change command.

### (2-4-2) Room-Side Operation Section

The room-side operation section 5400 is arranged in a room out of the bathroom 5000B1. The room-side operation section 5400 is arranged in a kitchen, for example. Like the in-bathroom operation section 5300, the room-side operation section 5400 is a remote control device capable of giving instructions to out-of-bathroom devices and the hot-water-supply heat source apparatus 5010. Here, in particular, the room-side operation section 5400 has the room-side microphone 5410, and is capable of operating out-of-bathroom devices and the hot-water-supply heat source apparatus 5010 upon input of voice instructions to the room-side microphone 5410.

The room-side microphone 5410 is attached to, for example, the wall of the room. As described below, the room-side operation section 5400 is also used as an infrared signal transmitting device, and thus is preferably arranged in a place having a few obstacles during transmission of infrared signals to the devices in the infrared-operated device group 5050.

The room-side operation section 5400 has a CPU (not illustrated) and a storage device (not illustrated) that stores a program executed by the CPU and so on. The room-side operation section 5400 performs various processing operations and control in response to the program being executed by the CPU. For example, the room-side operation section 5400 functions as a switching unit 5430 in response to the program being executed by the CPU. The function of the switching unit 5430 of the room-side operation section 5400 may be implemented by hardware rather than by software. The room-side operation section 5400 has the room-side microphone 5410, a room-side speaker 5420, the switching unit 5430, a switch 5440, and the infrared signal transmission unit 5040 (see Fig. 34). The room-side operation section 5400 further has a communication device capable of communicating with the in-bathroom operation section 5300 and the control apparatus 5200. For example, when the out-of-bathroom devices operated by the room-side operation section 5400 include an image capturing device such as a camera, the room-side operation section 5400 may have a display.

The room-side operation section 5400 is connected to the in-bathroom operation section 5300 so that a telephone call can be established therebetween. Further, the room-side operation section 5400 is communicably connected to the control apparatus 5200. The room-side operation section 5400 is connected to the in-bathroom operation section 5300 and the control apparatus 5200 via wireless connection, for example. However, this is not limiting, and the room-side operation section 5400 may be connected to the in-bathroom operation section 5300 and the control apparatus 5200 via wired connection.

The room-side microphone 5410, the room-side speaker 5420, the switching unit 5430, and the switch 5440 have configurations similar to those of the microphone 5310, the speaker 5320, the switching unit 5330, and the switch 5340 of the in-bathroom operation section 5300, respectively. Thus, the room-side microphone 5410, the room-side speaker 5420, the switching unit 5430, and the switch 5440 will not be described here to avoid repetition.

### (2-4-2-1) Infrared Signal Transmission Unit

The infrared signal transmission unit 5040 is an infrared-operated device that can be operated using an infrared signal, that is, a transmitter that transmits an infrared signal to the devices 5050a, 5050b, ..., and 5050n in the infrared-operated device group 5050.

Upon receipt of infrared-signal transmission command 50001 that is based on a voice instruction for the in-bathroom operation section 5300 or the room-side operation section 5400, which is transmitted from the control apparatus 5200, the infrared signal transmission unit 5040 transmits an infrared signal to the devices of the devices 5050a, 5050b, ..., and 5050n in the infrared-operated device group 5050.

A more specific description will be made.

First, the infrared-signal transmission command 50001 is a request for the infrared signal transmission unit 5040 to transmit an infrared signal. The infrared-signal transmission command 50001 includes information indicating to which device among the devices 5050a, 5050b, ..., and 5050n in the infrared-operated device group 5050 to transmit an infrared signal, and information indicating what operation the destination device of the infrared signal is instructed to perform (information on the content of an operation to be performed on the destination device of the infrared signal).

The infrared-signal transmission command 50001 transmitted from the control apparatus 5200 is delivered from the control apparatus 5200 to the room-side operation section 5400 via wireless or wired connection. The infrared signal transmission unit 5040 receives the infrared-signal transmission command 50001 via the communication device (not illustrated) of the room-side operation section 5400.

The storage device (not illustrated) of the room-side operation section 5400 stores an infrared signal pattern for control for each of the devices 5050a, 5050b, ..., and 5050n in the infrared-operated device group 5050 and for each of the operations to be performed on the devices 5050a, 5050b, ..., and 5050n in the infrared-operated device group 5050. Upon receipt of the transmission command 50001, the infrared signal transmission unit 5040 transmits an infrared signal to the operation target among the devices 5050a, 5050b, ..., and 5050n in the infrared-operated device group 5050 by using the infrared signal pattern stored in the storage unit (not illustrated) of the room-side operation section 5400.

### (2-4-3) Control apparatus

The control apparatus 5200 controls out-of-bathroom devices (the infrared-operated device group 5050 and the devices in the network-connected device group 5060) in accordance with voice instructions accepted by the microphone 5310 of the in-bathroom operation section 5300. Further, the control apparatus 5200 controls out-of-bathroom devices in accordance with voice instructions accepted by the room-side microphone 5410 of the room-side operation section 5400. Further, the control apparatus 5200 also controls the hot-water-supply heat source apparatus 5010 in accordance with a voice instruction accepted by the microphone 5310 of the in-bathroom operation section 5300 and the room-side microphone 5410 of the room-side operation section 5400.

The control apparatus 5200 is communicably connected to the in-bathroom operation section 5300 and the room-side operation section 5400. The control apparatus 5200 is connected to the in-bathroom operation section 5300 and the room-side operation section 5400 via wireless connection, here, or, alternatively, wired connection may be used. The control apparatus 5200 may be integrated with one of the in-bathroom operation section 5300 or the room-side operation section 5400. The control apparatus 5200 may be a device separate from the in-bathroom operation section 5300 and the room-side operation section 5400.

Further, the control apparatus 5200 is communicably connected to the analysis server 5020, the devices in the network-connected device group 5060, and the hot-water-supply heat source apparatus 5010 via the network 5080.

The control apparatus 5200 is a computer including a CPU (not illustrated) that executes various processing operations, and a storage device (not illustrated) that stores a program executed by the CPU and various kinds of information. The CPU executes a program, thereby allowing the control apparatus 5200 to perform various processing operations. Various processing operations executed by the control apparatus 5200 by software may be implemented by hardware.

Further, the control apparatus 5200 includes a voice processing chip that performs various processing operations on voice data transmitted from the in-bathroom operation section 5300 or the room-side operation section 5400, a wireless LAN adapter that functions as a communication unit 5250, and so on.

The control apparatus 5200 mainly has, as functional units, a voice processing unit 5230, the communication unit 5250, and a control unit 5210 (see Fig. 34).

### (2-4-3-1) Voice Processing Unit

Upon accepting voice data from the in-bathroom operation section 5300 and the room-side operation section 5400 (upon accepting voice data of a voice instruction accepted by the microphone 5310 of the in-bathroom operation section 5300 and the room-side microphone 5410 of the room-side operation section 5400), the voice processing unit 5230 processes the voice data and generates a signal 5000S.

For example, the voice processing unit 5230 performs A/D conversion on analog voice data (voice instruction) accepted from the in-bathroom operation section 5300 and the room-side operation section 5400, and, preferably, further performs voice compression using various voice data compression techniques (such as MP3) to generate the signal 5000S. In another example, the voice processing unit 5230 may convert the voice instruction into text to generate the signal 5000S.

### (2-4-3-2) Communication Unit

The communication unit 5250 is a functional unit for allowing the control apparatus 5200 to communicate with the analysis server 5020, the devices in the network-connected device group 5060, the hot-water-supply heat source apparatus 5010, and so on.

The control apparatus 5200 is connected to the analysis server 5020, the devices in the network-connected device group 5060, and the hot-water-supply heat source apparatus 5010 via the network 5080, which is an example of a communication line.

The network 5080 is the Internet, here, but may be any other WAN. The control apparatus 5200 is connected to the router 5082 via a wireless LAN, and is connected to the network 5080 via the router 5082 (see Fig. 33). The communication unit 5250 is, for example, a wireless LAN adapter that performs wireless communication with the router 5082. The router 5082 has a WAN-side interface and a LAN-side interface, and interconnects a WAN and a LAN. The control apparatus 5200 and the router 5082 may be connected via a wired LAN, rather than via a wireless LAN. The network 5080 may be a LAN.

The communication unit 5250 transmits the signal 5000S generated by the voice processing unit 5230 (i.e., the voice instruction accepted by the microphone 5310 of the in-bathroom operation section 5300 and the room-side microphone 5410 of the room-side operation section 5400) to the analysis server 5020, which is an example of a voice recognition apparatus, via the network 5080 (see Fig. 34). That is, the communication unit 5250 is an example of a voice information transmission unit.

Further, the command 5000C for an out-of-bathroom device, which is generated by the control unit 5210 described below in accordance with a voice instruction, is transmitted from the communication unit 5250 to the out-of-bathroom device via the network 5080. Also, the command 5000C for the hot-water-supply heat source apparatus 5010, which is generated by the control unit 5210 described below in accordance with a voice instruction, is transmitted from the communication unit 5250 to the hot-water-supply heat source apparatus 5010 via the network 5080.

The communication unit 5250 receives, as text information 5000T, a recognition result of the signal 5000S by the analysis server 5020 (i.e., a recognition result of the voice instruction accepted by the microphone 5310 of the in-bathroom operation section 5300 and the room-side microphone 5410 of the room-side operation section 5400). The text information 5000T has content, for example, "start the operation of the air conditioner" or "set a programmed recording for the program on channel X from Y o'clock to Z o'clock on the DVD recorder". The content of the text information 5000T provided here is only for the purpose of illustration, and is not limited to exemplarily provided content.

### (2-4-3-3) Control Unit

The control unit 5210 controls the hot-water-supply heat source apparatus 5010 and out-of-bathroom devices (the infrared-operated device group 5050 and the devices in the network-connected device group 5060) on the basis of the recognition results of the voice instructions by the analysis server 5020 (i.e., the text information 5000T).

The control unit 5210 refers to the information stored in the storage device (not illustrated) of the control apparatus 5200, and controls the hot-water-supply heat source apparatus 5010 and the out-of-bathroom devices on the basis of the text information 5000T.

The storage device of the control apparatus 5200 stores the following information, for example.

The storage device stores, in addition to the program executed by the CPU, a list of devices (the hot-water-supply heat source apparatus 5010, the devices in the infrared-operated device group 5050, and the devices in the network-connected device group 5060) to be operated by the control apparatus 5200. The storage device preferably stores one or more keywords in association with each of the devices to be operated by the control apparatus 5200. A keyword is a word that is likely to be included in the text information 5000T concerning a device associated with the keyword. For example, but not limitation, the storage device stores the keyword "hot water supply temperature" in association with the hot-water-supply heat source apparatus 5010. The storage device also stores, for each of the devices to be operated by the control apparatus 5200, instructions that can be provided to the device (operations that can be performed).

Further, the storage device of the control apparatus 5200 stores, for each device and each operation (each instruction), what signal (the command 5000C) is to be transmitted to the hot-water-supply heat source apparatus 5010 or any one of the devices in the network-connected device group 5060 when an instruction is provided to the device to execute a certain operation. The storage device of the control apparatus 5200 further stores, for each device and each operation (each instruction), what signal (the infrared-signal transmission command 50001) is to be transmitted to the infrared signal transmission unit 5040 of the room-side operation section 5400 when an instruction is provided to any one of the devices in the infrared-operated device group 5050 to execute a certain operation.

When the communication unit 5250 receives the text information 5000T, the control unit 5210 refers to the information stored in the storage device of the control apparatus 5200, and determines (identifies) to which device the text information 5000T is related. For example, when the text information 5000T includes the name "hot water supply apparatus" or a hot water supply apparatus related keyword (for example, "hot water supply temperature"), the control unit 5210 determines that the text information 5000T is information concerning the hot-water-supply heat source apparatus 5010.

Further, the control unit 5210 refers to the information stored in the storage device of the control apparatus 5200, and further determines what operation a device is instructed to execute a device to execute by the text information 5000T. At the same time, the control unit 5210 determines whether the content of the operation instructed by the text information 5000T is executable by the device. Specifically, for example, the control unit 5210 determines whether the content of the operation instructed by the text information 5000T is included in the content of instructions that are stored in the storage device of the control apparatus 5200 and that can be provided to the device.

After identifying to which device the text information 5000T is related and what operation the device is instructed by the text information 5000T to execute, the control unit 5210 refers to the information stored in the storage device of the control apparatus 5200 and generates the command 5000C (a signal directed to the hot-water-supply heat source apparatus 5010 or any one of the devices in the network-connected device group 5060), or the transmission command 50001 (a signal to be transmitted to the infrared signal transmission unit 5040 of the room-side operation section 5400 to control the devices in the infrared-operated device group 5050).

Then, the control apparatus 5200 transmits the command 5000C or the transmission command 50001 from the communication unit 5250 to the destination device (the device identified by the text information 5000T from among the devices 5010, 5060a, 5060b, ..., and 5060m or the infrared signal transmission unit 5040).

That is, the control apparatus 5200 transmits the command 5000C for any device (called an intended out-of-bathroom device) among the devices 5060a, 5060b, ..., and 5060m in the network-connected device group 5060 to the intended out-of-bathroom device via the network 5080 in accordance with the voice instruction accepted by the microphone 5310 of the in-bathroom operation section 5300 and the room-side microphone 5410 of the room-side operation section 5400 to control the intended out-of-bathroom device.

Further, the control apparatus 5200 transmits the command 5000C for the hot-water-supply heat source apparatus 5010 to the hot-water-supply heat source apparatus 5010 via the network 5080 in accordance with the voice instruction accepted by the microphone 5310 of the in-bathroom operation section 5300 and the room-side microphone 5410 of the room-side operation section 5400 to control the hot-water-supply heat source apparatus 5010.

Further, the control apparatus 5200 transmits the infrared-signal transmission command 50001 to the infrared signal transmission unit 5040 of the room-side operation section 5400 in accordance with the voice instruction accepted by the microphone 5310 of the in-bathroom operation section 5300 and the room-side microphone 5410 of the room-side operation section 5400 to control any one of the devices 5050a, 5050b, ..., and 5050n in the infrared-operated device group 5050.

If the control unit 5210 fails to identify a device related to the text information 5000T as a result of the determination described above or if the instruction included in the text information 5000T is not executable by the identified device related to the text information 5000T, the control apparatus 5200 may transmit a signal to the in-bathroom operation section 5300 or the room-side operation section 5400 to which the voice instruction on which the text information 5000T is based has been input to provide notification of this fact.

### (2-5) Analysis Server

The analysis server 5020 is communicably connected to at least the control apparatus 5200 via the network 5080.

When the in-bathroom operation section 5300 or the room-side operation section 5400 accepts a voice instruction and the voice instruction is transmitted to the control apparatus 5200, the control apparatus 5200 transmits the signal 5000S that is based on the voice instruction to the analysis server 5020 via the network 5080 (see Fig. 34).

The analysis server 5020 is a computer that executes a program stored in a storage device to analyze the signal 5000S transmitted from the control apparatus 5200. Specifically, for example, the analysis server 5020 is a device that performs voice recognition of a received voice signal.

For example, the analysis server 5020 analyzes voice data indicated by the signal 5000S to determine a feature value of the voice data, and generates the text information 5000T from the feature value by using a voice recognition dictionary stored in the storage device, which includes an acoustic model, a linguistic model, and a pronunciation dictionary. Then, the analysis server 5020 transmits the text information 5000T, which is a recognition result of the signal 5000S based on the voice instruction accepted by the in-bathroom operation section 5300 or the room-side operation section 5400, to the control apparatus 5200 from which the signal 5000S is transmitted.

The analysis server 5020 is not limited to a device that executes voice recognition processing, and may be a device that, for example, recognizes the signal 5000S having a text data format, which is based on the voice instruction transmitted from the control apparatus 5200.

### (3) Features

### (3-1)

The device control system 5001 according to the embodiment described above includes the in-bathroom operation section 5300 installed in the bathroom 5000B1, and the control apparatus 5200. The in-bathroom operation section 5300 has the microphone 5310. The control apparatus 5200 controls at least an out-of-bathroom device arranged out of the bathroom 5000B1 in accordance with a voice instruction accepted by the microphone 5310. The out-of-bathroom device is a device different from the hot-water-supply heat source apparatus 5010 that supplies hot water to the bathroom. In this embodiment, the devices 5050a, 5050b, ..., and 5050n in the infrared-operated device group 5050 and the devices 5060a, 5060b, ..., and 5060m in the network-connected device group 5060 are examples of an out-of-bathroom device.

Here, the operation of various devices installed out of the bathroom 5000B1, other than the hot-water-supply heat source apparatus 5010, can be controlled in accordance with a voice instruction accepted by the microphone 5310 in the bathroom 5000B1, providing high convenience.

For example, the air conditioner, which is an example of an out-of-bathroom device, is made controllable from within the bathroom 5000B1. Thus, it is likely to promote comfort after a bath. Further, for example, making it possible to set a programmed recording on a DVD recorder, which is an example of an out-of-bathroom device, from within the bathroom 5000B1 allows a person to set recording while in the bathroom 5000B1 even if the person forgets setting the programmed recording. In addition, for example, making it possible to change the image capturing position or the like of a camera, which is an example of an out-of-bathroom device, from within the bathroom 5000B1 allows a person to monitor the child's or pet's activity or the like while in the bathroom 5000B1.

### (3-2)

In the device control system 5001 according to the embodiment described above, the control apparatus 5200 transmits the command 5000C for an out-of-bathroom device (here, in particular, the devices 5060a, 5060b, ..., and 5060m in the network-connected device group 5060) to the out-of-bathroom device via the network 5080 in accordance with a voice instruction to control the out-of-bathroom device.

The device control system 5001 allows a user to operate an out-of-bathroom device connected to the network 5080 from within the bathroom 5000B1. Even when the out-of-bathroom device is not a device connected directly to the in-bathroom operation section 5300 via a control signal line (such as a remote control cable), the user of the system is able to control the out-of-bathroom device while in the bathroom to satisfy a variety of desires.

### (3-3)

The device control system 5001 according to the embodiment described above includes the room-side operation section 5400. The room-side operation section 5400 is arranged in a room out of the bathroom 5000B1. The room-side operation section 5400 has the room-side microphone 5410 and the room-side speaker 5420. The room-side operation section 5400 accepts an input instruction for an out-of-bathroom device. The control apparatus 5200 controls the out-of-bathroom device in accordance with the input instruction accepted by the room-side operation section 5400. The in-bathroom operation section 5300 has the speaker 5320. The in-bathroom operation section 5300 and the room-side operation section 5400 are connected so that a telephone call can be established therebetween.

In the device control system 5001, even on the room side, a user can use the room-side operation section 5400 to control various out-of-bathroom devices. Further, a user can also use the microphone 5310 of the in-bathroom operation section 5300 for inputting voice instructions to an out-of-bathroom device to have a telephone conversation with a person in a room (a person near the room-side operation section 5400). Thus, high convenience is provided.

### (3-4)

In the device control system 5001 according to the embodiment described above, the in-bathroom operation section 5300 has the switch 5340, which is an example of a command acceptance unit, and the switching unit 5330. The switch 5340 accepts a mode change command for providing an instruction to change the operation mode of the in-bathroom operation section 5300. The switching unit 5330 switches the operation mode of the in-bathroom operation section 5300 between a first mode and a second mode in accordance with the mode change command. In the first mode, the voice accepted by the microphone 5310 is used as a voice instruction. In the second mode, the voice accepted by the microphone 5310 is used as voice for a telephone conversation with the room-side operation section 5400.

Here, the function of the microphone 5310 is switched between a voice instruction acceptance function and a communication-voice acceptance function in accordance with the mode change command. This facilitates prevention of the occurrence of a situation, such as a normal conversation being recognized as a voice instruction or an instruction for an out-of-bathroom device not being sent to the control apparatus.

### (3-5)

In the device control system 5001 according to the embodiment described above, the out-of-bathroom devices include an infrared-operated device that can be operated using an infrared signal (the devices 5050a, 5050b, ..., and 5050n in the infrared-operated device group 5050). The room-side operation section 5400 has the infrared signal transmission unit 5040 that transmits an infrared signal to an infrared-operated device. The control apparatus 5200 transmits an infrared-signal transmission command to the infrared signal transmission unit 5040 in accordance with a voice instruction to control the infrared-operated device.

Here, a device that is operated using an infrared signal can also be operated by a user from within the bathroom 5000B1, and the user of the system easily controls an infrared-operated device while in the bathroom to satisfy a variety of desires.

### (3-6)

The device control system 5001 according to the embodiment described above includes the communication unit 5250 (the communication unit 5250 of the control apparatus 5200), which is an example of a voice information transmission unit. The communication unit 5250 transmits the voice instruction accepted by the microphone 5310 to the analysis server 5020, which is an example of a voice recognition apparatus. The control apparatus 5200 controls an out-of-bathroom device on the basis of the result of recognition of the voice instruction by the analysis server 5020.

Here, the analysis server 5020 performs voice recognition of voice instructions. This eliminates the need for the in-bathroom operation section 5300 to have a voice recognition function to recognize instructions for out-of-bathroom devices. Thus, the cost of the device control system 5001 can be reduced.

### (3-7)

In the device control system 5001 according to the embodiment described above, the control apparatus 5200 controls the hot-water-supply heat source apparatus 5010 in accordance with the voice instruction accepted by the microphone 5310.

Here, the in-bathroom operation section 5300 also functions as an operation section for the hot-water-supply heat source apparatus 5010. This eliminates the need to install a plurality of operation sections (an operation section for the hot-water-supply heat source apparatus 5010, and an operation section for out-of-bathroom devices which is different from the operation section for the hot-water-supply heat source apparatus 5010) in the bathroom.

### (4) Modifications

The following describes modifications of the embodiment described above. The modifications may be combined as appropriate so long as consistency is maintained between them.

### (4-1) Modification 6A

In the device control system 5001 according to the embodiment described above, the infrared-operated device group 5050 or the devices in the network-connected device group 5060, which are examples of an out-of-bathroom device, are controlled in accordance with voice instructions accepted by the room-side microphone 5410 of the room-side operation section 5400. Instructions for the room-side operation section 5400 may be input in a way other than by voice. For example, an instruction may be input to the room-side operation section 5400 by, instead of voice, operating a push button (not illustrated) or the like provided for the room-side operation section 5400.

### (4-2) Modification 6B

In terms of convenience, the device control system 5001 according to the embodiment described above preferably has the room-side operation section 5400. However, the room-side operation section 5400 may be omitted.

When the room-side operation section 5400 is omitted, preferably, an infrared signal transmitter is provided that is communicably connected to the control apparatus 5200 and that transmits an infrared signal similar to that of the infrared signal transmission unit 5040 to a device in the infrared-operated device group 5050 in accordance with the infrared-signal transmission command 50001 from the control apparatus 5200.

Even when the room-side operation section 5400 is present, the room-side operation section 5400 may not have the infrared signal transmission unit 5040, and the device control system 5001 may have the infrared signal transmission unit 5040 instead of the infrared signal transmission unit 5040.

### (4-3) Modification 6C

In the embodiment described above, without limitation, the control apparatus 5200 is used to control out-of-bathroom devices in one building 5000B (for example, a dwelling unit in an apartment house). For example, the control apparatus 5200 may be configured to be shared by a plurality of dwelling units in an apartment house in such a manner as to control out-of-bathroom devices in each of the plurality of dwelling units in accordance with voice instructions from a microphone of an in-bathroom operation section in the dwelling unit.

In addition, instead of the control apparatus 5200 installed in each building, a server having the function of the control apparatus 5200 of the embodiment described above, in particular, the function of the control unit 5210, which can be connected to a plurality of in-bathroom operation sections in a plurality of buildings via the network 5080, may be provided such that the server controls out-of-bathroom devices in each of the buildings in accordance with voice instructions from a microphone of the in-bathroom operation section in the building.

### (4-4) Modification 6D

In the embodiment described above, the physical switch 5340 functions as a command acceptance unit. However, the command acceptance unit is not limited to the type of the switch 5340.

For example, instead of the switch 5340, the microphone 5310 of the in-bathroom operation section 5300 may be made to function as a command acceptance unit. A specific description will be made.

It is assumed here that the operation mode of the in-bathroom operation section 5300 is normally set to the second mode. The in-bathroom operation section 5300 is provided with a voice recognition chip capable of recognizing only specific voice (for example, a certain word). The voice recognition chip checks whether the voice input to the microphone 5310 of the in-bathroom operation section 5300 corresponds to the specific voice. If the voice recognition chip determines that the specific voice has been input to the microphone 5310, for example, the switching unit 5330 switches the operation mode of the in-bathroom operation section 5300 from the second mode to the first mode only for a predetermined time period.

### (4-5) Modification 6E

In the embodiment described above, without limitation, the control apparatus 5200 has the communication unit 5250. For example, the control apparatus 5200 may have the function of the control unit 5210 described above, and a different device may have the function of the voice processing unit 5230 and the communication unit 5250.

### (4-6) Modification 6F

In the embodiment described above, without limitation, the device control system 5001 is a system capable of operating the hot-water-supply heat source apparatus 5010, the devices in the infrared-operated device group 5050, and the devices in the network-connected device group 5060 via voice instructions.

For example, in the device control system 5001, the hot-water-supply heat source apparatus 5010 and/or either the devices in the infrared-operated device group 5050 or the devices in the network-connected device group 5060 may not be an operation target.

When the devices in the infrared-operated device group 5050 are not to be operated by the device control system 5001, the device control system 5001 may not have a component that is no longer necessary (for example, the infrared signal transmission unit 5040 of the room-side operation section 5400).

### (4-7) Modification 6G

In the embodiment described above, without limitation, the hot-water-supply heat source apparatus 5010 is also to be operated by the control apparatus 5200. For example, the operation of the hot-water-supply heat source apparatus 5010 may be controlled by operating an operation button (not illustrated) provided for the in-bathroom operation section 5300, rather than the control apparatus 5200, and transmitting a signal via a remote control cable.

In addition, an in-bathroom operation section for the hot-water-supply heat source apparatus 5010 may be installed in the bathroom 5000B1 separately from an in-bathroom operation section for out-of-bathroom devices.

### (4-8) Modification 6H

In the embodiment described above, the signal 5000S that is based on a voice instruction is transmitted from the control apparatus 5200 to the analysis server 5020, and the analysis server 5020 performs recognition processing of the signal 5000S. However, the device control system 5001 is not limited to this configuration.

For example, the control apparatus 5200 may have a voice recognition function similar to that of the analysis server 5020, and the control apparatus 5200 may execute processing similar to that of the analysis server 5020 described above.

### <Thirteenth Embodiment>

The following describes a device management system 6001 according to a thirteenth embodiment with reference to the drawings.

### (1) Overview of device system including device management system

Fig. 35 is a schematic configuration diagram of a device system 6000 including the device management system 6001. Fig. 36 is a schematic block diagram of the device system 6000. In Fig. 36, some of the components of the device system 6000 are not depicted.

The device system 6000 mainly includes an operation device 6200, an air conditioner 6010, infrared-operated device group 6050, network-connected device group 6060, 6040, an analysis server 6020, an air conditioner server 6030, and a device server 6070 (see Fig. 35 and Fig. 36). The device management system 6001 includes the operation device 6200.

The device management system 6001 is a system that operates the air conditioner 6010, devices 6050a, 6050b, ..., and 6050n included in the infrared-operated device group 6050, and devices 6060a, 6060b, ..., and 6060m included in the network-connected device group 6060 by instructions given by voice.

Further, the device management system 6001 is a system that controls, in an environment where a plurality of a devices that output sounds (having a sound output unit) are present, sound output of the devices such that failures, such as sounds output from the devices being overlapped and noisy, or the sound output from each of the devices being difficult to hear, are less likely to occur. In this embodiment, examples of the plurality of devices that output sounds are assumed to include the operation device 6200, the air conditioner 6010, and the device 6060a. The device 6060a is, for example, a DVD recorder. The operation device 6200 is a remote control device that controls the operation of the air conditioner 6010 and the device 6060a, and is an example of a first device. The air conditioner 6010 and the device 6060a are examples of a second device.

The air conditioner 6010, the infrared-operated device group 6050, the network-connected device group 6060, and 6040 are devices arranged in a building 6000B (see Fig. 35). The building 6000B is, for example, but not limited to, a detached house. The building 6000B may be an office building, a commercial facility, a factory, or the like. The analysis server 6020, the air conditioner server 6030, and the device server 6070 are generally, but not limited to, installed in locations different from the building 6000B.

The number of air conditioners 6010, the number of devices in the infrared-operated device group 6050, the number of devices in the network-connected device group 6060, and the number of 6040, which are arranged in the building 6000B, are not limited to those depicted in Fig. 35, and may be each one or more. The following description is made assuming that one air conditioner 6010 and one 6040 are arranged in the building 6000B and the infrared-operated device group 6050 and the network-connected device group 6060 arranged in the building 6000B each include a plurality of devices.

For simplicity of description, Fig. 35 depicts one building 6000B in which the air conditioner 6010, the infrared-operated device group 6050, and the network-connected device group 6060, whose operations are controlled by the device management system 6001, are arranged. However, a plurality of buildings 6000B may be used. That is, the device management system 6001 may be a system that controls the operation of the air conditioners 6010, the infrared-operated device groups 6050, and the network-connected device groups 6060 arranged in each of the plurality of buildings 6000B.

The operation device 6200 is installed in the building 6000B and is used to operate the air conditioner 6010, the devices in the infrared-operated device group 6050, and the devices in the network-connected device group 6060 in the building 6000B. While a single operation/communication device in the building 6000B is depicted, a plurality of operation devices 6200 may be installed in the building 6000B. Further, the operation device 6200 is not limited to a mounted type, and may be a mobile terminal that can be carried outside the building 6000B. In other words, the air conditioner 6010 and the devices in the infrared-operated device group 6050 and the network-connected device group 6060 may be configured to be operable from outside the building 6000B by using the operation device 6200 that is portable.

### (2) Detailed Configuration

The operation device 6200, the air conditioner 6010, the infrared-operated device group 6050, the network-connected device group 6060, the analysis server 6020, the air conditioner server 6030, the device server 6070, and 6040 will be described below.

### (2-1) Operation Device

The operation device 6200 is an example of a remote control apparatus. The operation device 6200 is a device used to control the operation of the air conditioner 6010, the devices 6050a, 6050b, ..., and 6050n included in the infrared-operated device group 6050, and the devices 6060a, 6060b, ..., and 6060m included in the network-connected device group 6060 in the building 6000B, including a second device (the air conditioner 6010 and the device 6060a).

The operation device 6200 may be a device having, in addition to the functions described below, other functions (for example, the functions of a watch and a music player).

In this embodiment, the operation device 6200 is installed in a stationary manner in the building 6000B. For example, the operation device 6200 is placed on a table or shelf or is fixed to the wall surface or the like.

In another aspect, the operation device 6200 may be a mobile terminal. Examples of the mobile terminal include, without limitation in type, a smartphone, a mobile phone, a tablet terminal, and a wearable terminal having a voice acceptance section. Specifically, for example, the operation device 6200 is a wristwatch-type device carried by an operator in such a manner as to be worn around their wrist.

In this embodiment, for simplicity of description, the operation device 6200 is described as a single operation device. However, a plurality of operation devices 6200 may be used. When a plurality of operation devices 6200 are used in the building 6000B, each of the plurality of operation devices 6200 may be different in type from the other operation devices 6200.

The operation device 6200 includes a CPU (not illustrated) that executes various processing operations, and a storage device (not illustrated) that stores a program executed by the CPU and various kinds of information. Further, the operation device 6200 includes a microphone element 6210a included in a voice acceptance section 6210, a speaker 6220a included in a voice output unit 6220, a voice processing chip that performs various processing operations on voice acquired by the microphone element 6210a, a wireless LAN adapter that functions as a communication unit 6250, and so on.

The operation device 6200 has, as functional units, the voice acceptance section 6210, the voice output unit 6220, a storage unit 6240, a determination unit 6270, a sound output control unit 6280, a voice processing unit 6230, the communication unit 6250, and a switch 6260 (see Fig. 36).

### (2-1-1) Voice Acceptance Section

The voice acceptance section 6210 accepts input of voice instructions to the air conditioner 6010, the devices 6050a, 6050b, ..., and 6050n in the infrared-operated device group 6050 and the devices 6060a, 6060b, ..., and 6060m in the network-connected device group 6060.

The voice acceptance section 6210 has the microphone element 6210a that accepts voice. The number of microphone elements 6210a may be one or more.

For example, when the operation device 6200 is a stationary-type device, a plurality of microphone elements 6210a are used, and the plurality of the microphone element 6210a are arranged so as to easily acquire voice from different places, thereby facilitating reliable acquisition of the voice by the voice acceptance section 6210, regardless of the position of the utterer.

### (2-1-2) Voice Output Unit

The voice output unit 6220 has the speaker 6220a and outputs various kinds of information by sounds (including voice (verbal sounds) in addition to beep, buzzer, and other sounds). The voice output unit 6220 is an example of a first sound output unit.

The following describes the basic operation of the voice output unit 6220. The basic operation of the voice output unit 6220 refers to an operation in a case where the sound output control unit 6280 does not control sound output described below.

For example, when the voice acceptance section 6210 accepts a specific voice instruction, the voice output unit 6220 provides notification of acceptance of the specific voice instruction by voice. For example, when a specific voice instruction is accepted, the voice output unit 6220 outputs the sentence "a specific voice instruction has been accepted" by voice. The specific voice instruction will be described below.

Further, for example, when a device (the air conditioner 6010, a device in the infrared-operated device group 6050, or a device in the network-connected device group 6060) is to be operated, the voice output unit 6220 outputs information concerning an operation to be performed on the device by sound. The information concerning an operation to be performed on the device, which is transmitted from the voice output unit 6220, also includes information (first information) concerning an operation to be performed on a second device (the air conditioner 6010 or the device 6060a).

The information concerning an operation to be performed on the device will be described in detail.

As described below, when the voice acceptance section 6210 accepts a voice instruction, the operation device 6200 generates a signal 6000S that is based on the voice instruction (voice data obtained by performing A/D conversion processing on the voice instruction and further performing compression processing) and transmits the signal 6000S from the communication unit 6250 to the analysis server 6020. The analysis server 6020 executes voice recognition processing on the received signal 6000S. Then, the analysis server 6020, the air conditioner server 6030, or the device server 6070 generates a command for the operation target device on the basis of the result of the voice recognition processing performed by the analysis server 6020 . At this time, a command generated by the analysis server 6020, the air conditioner server 6030, or the device server 6070 (which device is to be instructed to execute operation and what operation is to be executed) is transmitted to the operation device 6200 (the communication unit 6250) as command information (see Fig. 36). Here, without limitation, the command information is transmitted from the analysis server 6020, the air conditioner server 6030, or the device server 6070 to the operation device 6200. The command information may be transmitted from the command recipient (operated) device side to the communication unit 6250.

When the communication unit 6250 receives the command information, the voice output unit 6220 outputs the information concerning an operation to be performed on the device (information indicating which device is to be operated and what operation is to be performed) by sound on the basis of the received command information. The information concerning an operation to be performed on the device is output by sound, which allows the operator of the device to which the voice instruction is input from the voice acceptance section 6210 to check whether their issued voice instruction has been correctly recognized. When the received command information indicates an instruction to start the operation of the air conditioner 6010, for example, the voice output unit 6220 outputs the sentence "the control of the operation of the air conditioner has been accepted" by sound.

The operation device 6200 may also be configured to receive information concerning the content of the current operations or the current operating states of the air conditioner 6010, the devices in the infrared-operated device group 6050, and the devices in the network-connected device group 6060, which are to be operated by the operation device 6200, and to output the information by sound from the speaker 6220a of the voice output unit 6220. The information concerning the content of the operation or the operating state of a device may be transmitted from the device side or transmitted from a component that has obtained such information (for example, the air conditioner server 6030 or the device server 6070).

### (2-1-3) Storage Unit

The storage unit 6240 stores various kinds of information in addition to a program executed by the CPU (not depicted) of the operation device 6200. The information stored in the storage unit 6240 includes position-related information stored in a position-related information storage area 6240a, and sound output content information stored in a sound-output item storage area 6240b.

### (2-1-3-1) Position-Related Information Storage Area

The position-related information stored in the position-related information storage area 6240a is information concerning the positions of the operation device 6200 serving as a first device and the air conditioner 6010 and the device 6060a serving as second devices. The position-related information is, for example, a list of installation locations (room names) of devices (the operation device 6200, the air conditioner 6010, and the device 6060a) (see Fig. 37A and Fig. 37B).

While the installation locations are defined as rooms where the respective devices are installed, the installation locations may not be defined as rooms.

For example, the installation locations may be defined as regions. For example, even when devices are installed in the same room, the installation locations of the devices may be determined to be different depending on the areas of installation. In addition, for example, when the building 6000B has a plurality of floors, the regions may be defined for each floor, regardless of the room. Alternatively, the installation locations may be defined as distances from the operation device 6200 (first device) (for example, when a second device is installed within an area that is 5 m away from the operation device 6200, the second device is regarded as being installed in the same region as that of the operation device 6200).

The position-related information is, for example, information input by the user of the operation device 6200 (for example, a resident of the building 6000B) using an input unit (not illustrated).

Here, the position-related information stored in the position-related information storage area 6240a is information concerning only the operation device 6200, the air conditioner 6010, and the device 6060a, each having a sound output unit. However, this is not limiting. Position-related information of the operation device 6200 and all the devices to be operated by the operation device 6200 (the air conditioner 6010, the devices in the infrared-operated device group 6050, and the devices in the network-connected device group 6060) may be registered in the position-related information storage area 6240a.

### (2-1-3-2) Sound-Output Item Storage Area 6240b

The sound-output item information stored in the sound-output item storage area 6240b is information concerning items that are output by sound from the operation device 6200 serving as a first device and the air conditioner 6010 and the device 6060a serving as second devices. Specifically, the sound-output item information is a list of collection of voice items that are output from the voice output unit 6220 of the operation device 6200, a voice output unit 6140 of the air conditioner 6010 described below, and a voice output unit 6062 of the device 6060a described below (see Fig. 38). The sound-output item information stored in the sound-output item storage area 6240b does not take into account the control of sound output by the sound output control unit 6280 described below. In other words, in some cases, as a result of control of sound output by the sound output control unit 6280, the voice output unit 6220 does not output information on some items by sound even if the information corresponds to the sound-output item information stored in the sound-output item storage area 6240b.

In the example in Fig. 38, the operation device 6200 outputs information concerning acceptance of a specific voice instruction by voice from the voice output unit 6220. Further, for example, in the example in Fig. 38, the operation device 6200 outputs information concerning operation-start operation, operation-stop operation, operating-mode-change operation, and set-temperature-change operation for the air conditioner 6010 (first information concerning an operation to be performed on the air conditioner 6010) by voice. Further, in the example in Fig. 38, the operation device 6200 outputs information concerning activation operation, programmed-recording setting operation, and stop operation for a DVD recorder (the device 6060a) (first information concerning an operation to be performed on the device 6060a) by voice. Preferably, the operation device 6200 outputs information concerning an operation to be performed on not only the second devices but also all the operation target devices (including devices having no sound output unit) by voice. That is, in Fig. 38, which illustrates an example of the sound-output item information, only items concerning an operation to be performed on the air conditioner 6010 and the device 6060a are registered in the list. However, preferably, items concerning devices other than the air conditioner 6010 and the device 6060a are also registered in the list.

In the example in Fig. 38, the air conditioner 6010 outputs information concerning operation start, operation stop, and operating mode change by voice. In the example in Fig. 38, furthermore, the DVD recorder (the device 6060a) outputs information concerning programmed recording setting by voice.

The sound-output item information illustrated in Fig. 38 is an example for the purpose of illustration, and items of information to be output by sound from each of the devices 6200, 6010, and 6060a are not limited to the illustrated items.

The sound-output item information of the operation device 6200 is created automatically (in accordance with a predetermined rule), for example, when the user or the like of the operation device 6200 inputs an operation target device, which is a device to be operated by the operation device 6200, by using an input unit (not illustrated). The sound-output item information of the air conditioner 6010 and the device 6060a is, for example, information downloadable from homepages or the like of the manufacturers of the air conditioner 6010 and the device 6060a. However, all the pieces of sound-output item information may be information that is manually input from an input unit (not illustrated).

### (2-1-4) Determination Unit

The determination unit 6270 determines a positional relationship between the operation device 6200, which is an example of first device, and the air conditioner 6010, which is an example of a second device, or a positional relationship between the operation device 6200 and the device 6060a (DVD recorder), which is an example of a second device.

The determination unit 6270 mainly determines whether the first device and the second device have a predetermined positional relationship. The case where the first device and the second device have a predetermined positional relationship refers to a case where the first device and the second device have a positional relationship in which the sound output from the first device and the sound output from the second device are likely to affect each other. For example, the case where the first device and the second device have a predetermined positional relationship includes, but not limited to, a case where the distance between the first device and the second device is smaller than a predetermined distance. Further, the case where the first device and the second device have a predetermined positional relationship includes, but not limited to, a case where the first device and the second device are installed in the same region. Further, the case where the first device and the second device have a predetermined positional relationship includes, but not limited to, a case where a member having a soundproof function (for example, a wall) is arranged between the first device and the second device.

For example, preferably, the determination unit 6270 determines a positional relationship between the operation device 6200 and the air conditioner 6010 or a positional relationship between the operation device 6200 and the device 6060a on the basis of the position-related information stored in the position-related information storage area 6240a of the storage unit 6240. Specifically, the determination unit 6270 preferably determines whether the installation locations of the operation device 6200 and the air conditioner 6010 are the same and whether the installation locations of the operation device 6200 and the device 6060a are the same on the basis of the position-related information stored in the position-related information storage area 6240a of the storage unit 6240.

For example, when the position-related information storage area 6240a stores the position-related information illustrated in Fig. 37A, the determination unit 6270 determines that the operation device 6200 and the air conditioner 6010 have a predetermined positional relationship, and determines that the operation device 6200 and the device 6060a does not have a predetermined positional relationship.

### (2-1-5) Sound Output Control Unit

The sound output control unit 6280 controls on/off of sound output or an output sound volume of at least one of the operation device 6200 and the second device on the basis of the determination result of the determination unit 6270. In this embodiment, in particular, the sound output control unit 6280 controls on/off of sound output or an output sound volume of the operation device 6200 and on the basis of the determination result of the determination unit 6270.

The control performed by the sound output control unit 6280 will be described later.

### (2-1-6) Voice Processing Unit

The voice processing unit 6230 processes a voice instruction accepted by the microphone element 6210a of the voice acceptance section 6210 to generate the signal 6000S. Further, the voice processing unit 6230 recognizes only a specific voice instruction among voice instructions accepted by the microphone element 6210a. The voice processing unit 6230 is, for example, an integrated circuit that executes these functions.

The voice processing unit 6230 performs A/D conversion on the voice instruction (other than the specific voice instruction) and, preferably, further performs voice compression using various voice data compression techniques (such as MP3) to generate the signal 6000S. In another embodiment, the voice processing unit 6230 may convert the voice instruction (other than the specific voice instruction) into text to generate the signal 6000S.

Further, when the voice acceptance section 6210 accepts a voice instruction, for example, the voice processing unit 6230 determines whether the spoken pattern of the accepted voice instruction matches the spoken pattern of a specific voice instruction word stored in the storage unit 6240 to recognize a specific voice instruction. The specific voice instruction indicates voice for requesting the operation device 6200 that the voice processing unit 6230 generate the signal 6000S in accordance with a voice instruction input to the voice acceptance section 6210 subsequently to the specific voice instruction and that the communication unit 6250 prepare to transmit the generated signal 6000S.

### (2-1-7) Communication Unit

The communication unit 6250 is a functional unit for allowing the operation device 6200 to communicate with the analysis server 6020, the air conditioner server 6030, the device server 6070, the air conditioner 6010, the devices in the network-connected device group 6060, and so on (see Fig. 36).

The operation device 6200 is connected to the analysis server 6020, the air conditioner server 6030, the device server 6070, the air conditioner 6010, the devices in the network-connected device group 6060, and so on via a network 6080 that is an example of a communication line (see Fig. 35).

The network 6080 is the Internet, here, but may be any other WAN. The operation device 6200 is connected to a router 6082 via a wireless LAN, and is connected to the network 6080 via the router 6082 (see Fig. 35). The communication unit 6250 is, for example, a wireless LAN adapter that performs wireless communication with the router 6082. The router 6082 has a WAN-side interface and a LAN-side interface, and interconnects a WAN and a LAN. The operation device 6200 and the router 6082 may be connected via a wired LAN, rather than via a wireless LAN. The network 6080 may be a LAN.

The communication unit 6250 transmits the signal 6000S that is based on the voice accepted by the voice acceptance section 6210 (except for the specific voice instruction) to the analysis server 6020 via the network 6080 (see Fig. 36). The communication unit 6250 may transmit the signal 6000S to the air conditioner server 6030 or the device server 6070 in addition to the analysis server 6020. That is, the communication unit 6250 may transmit the signal 6000S to a plurality of addresses (for example, the analysis server 6020 and the air conditioner server 6030) (see Fig. 36).

Further, the communication unit 6250 receives the command information described above from the analysis server 6020, the air conditioner server 6030, or the device server 6070, for example, when the analysis server 6020, the air conditioner server 6030, or the device server 6070 generates a command for a device in accordance with the signal 6000S transmitted from the communication unit 6250.

As described above, the communication unit 6250 may receive information on the content of the current operations or the current operating states of the air conditioner 6010, the devices in the infrared-operated device group 6050, and the devices in the network-connected device group 6060, which are to be operated by the operation device 6200.

### (2-1-8) Switch

The switch 6260 is a switch for switching the operating state of the voice acceptance section 6210.

The switch 6260 is a push button switch, but this is not limiting. By pressing the switch 6260, the operating state of the voice acceptance section 6210 is switched between a sleep state in which no voice is accepted and an active state in which voice is acceptable.

The operating state of the voice acceptance section 6210 may be switched between the sleep state and the active state each time the switch 6260 is pressed. Alternatively, the operating state of the voice acceptance section 6210 may be switched from the sleep state to the active state for a predetermined time period when the switch 6260 is pressed.

The operation device 6200 may not have the switch 6260, and the operating state of the voice acceptance section 6210 may be always set to the active state. It is preferable that the operation device 6200 be provided with the switch 6260 to prevent the voice acceptance section 6210 from accepting voice at an unintended timing (to prevent malfunction of the air conditioner 6010 or the devices in the infrared-operated device group 6050 and the network-connected device group 6060).

### (2-2) Air Conditioner

The air conditioner 6010 is an air conditioner that can be operated by inputting a voice instruction to the voice acceptance section 6210 of the operation device 6200. Non-limiting examples of the voice instruction include voice such as "turn air conditioning on" and "set the set temperature to 25°C". The air conditioner 6010 may be configured to be operable using a typical remote control in addition to operation via voice.

The air conditioner 6010 mainly has an indoor unit 6012, an outdoor unit 6014, a connection pipe (not illustrated) that connects the indoor unit 6012 and the outdoor unit 6014 to each other, and a controller 6150 (see Fig. 35 and Fig. 36).

The air conditioner 6010 is an apparatus that performs air-conditioning of a space to be air-conditioned. The space to be air-conditioned is, for example, a room where the indoor unit 6012 is arranged in the building 6000B.

In the air conditioner 6010, the indoor unit 6012 and the outdoor unit 6014 are connected to each other via the connection pipe, thereby connecting an indoor heat exchanger (not illustrated) of the indoor unit 6012 and a compressor, an outdoor heat exchanger, an expansion valve, and the like (not illustrated) of the outdoor unit 6014 to each other via a pipe. Consequently, a refrigerant circuit is formed. In the air conditioner 6010, refrigerant is circulated in the refrigerant circuit, thereby cooling/heating the space where the indoor unit 6012 is installed.

The operational principle and the content of the operation of the air conditioner 6010 using a vapor compression refrigeration cycle are widely known to the public and will not be described here. The air conditioner 6010 does not need to be an air conditioner capable of both cooling/heating the space to be air-conditioned, and may be a cooling-only or heating-only air conditioner.

In this embodiment, the air conditioner 6010 is configured such that in the indoor heat exchanger of the indoor unit 6012, refrigerant flowing in the indoor heat exchanger and air in the space to be air-conditioned exchange heat; however, the air conditioner is not limited to such a device. For example, the air conditioner 6010 may be an apparatus configured such that in the indoor heat exchanger of the indoor unit 6012 (fan coil unit), cold water/hot water flowing in the indoor heat exchanger and air in the space to be air-conditioned exchange heat.

The controller 6150 is a control apparatus that controls the operation of the air conditioner 6010.

The controller 6150 includes a control board (not illustrated) included in the indoor unit 6012 and a control board (not illustrated) included in the outdoor unit 6014. CPUs on the control boards or the like of the indoor unit 6012 and the outdoor unit 6014, which constitute the controller 6150, execute various programs stored in storage devices on the control boards or the like to execute various processing operations. Further, the controller 6150 includes devices and the like such as a wireless LAN adapter that functions as a communication unit 6170 described below.

The controller 6150 mainly has a communication unit 6170, an air conditioner control unit 6190, and the voice output unit 6140.

The communication unit 6170 is used to allow the air conditioner 6010 to communicate with mainly the air conditioner server 6030 (see Fig. 36).

The air conditioner 6010 (the communication unit 6170) is connected to the air conditioner server 6030 via the network 6080 (see Fig. 35). The air conditioner 6010 is connected to the router 6082 via a wireless LAN, and is connected to the network 6080 via the router 6082 (see Fig. 35). The air conditioner 6010 and the router 6082 may be connected via a wired LAN, rather than via a wireless LAN.

The communication unit 6170 is, for example, a wireless LAN adapter that performs wireless communication with the router 6082. The communication unit 6170 has, as functional units, a transmission unit 6170a that transmits information, and a reception unit 6170b that receives information (see Fig. 36).

The transmission unit 6170a preferably transmits information 6000J on the state quantity for at least one of the air conditioner 6010 and the space to be air-conditioned to the air conditioner server 6030 (see Fig. 36). Non-limiting examples of the state quantity for the air conditioner 6010 include temperatures/pressures of refrigerant measured by sensors (not illustrated) at various locations in the refrigerant circuit, the number of revolutions of an inverter-controlled motor (not illustrated) of the compressor of the outdoor unit 6014, and the opening degree of the expansion valve of the outdoor unit 6014. The state quantity for the space to be air-conditioned, includes, but not limited to, the measured temperature of the space to be air-conditioned.

The reception unit 6170b receives, for example, a command 6000C generated on the basis of the result of analysis of the signal 6000S by the analysis server 6020. Preferably, the reception unit 6170b receives the command 6000C generated by the air conditioner server 6030 on the basis of the result of analysis of the signal 6000S by the analysis server 6020 and on the basis of information 6000J on the state quantity transmitted from the transmission unit 6170a to the air conditioner server 6030.

For example, but not limitation, the command 6000C is related to at least one of turning on/off of the operation of the air conditioner 6010, switching among the operating modes (cooling/heating/dehumidification/ventilation, etc.) of the air conditioner 6010, changing of the set temperature (the target temperature of the space to be air-conditioned), a target value of the number of revolutions of the inverter-controlled motor (not illustrated) of the compressor of the outdoor unit 6014, a target value of the opening degree of the expansion valve of the outdoor unit 6014, and a target value of the number of revolutions of an inverter-controlled fan motor of the indoor unit 6012.

The air conditioner control unit 6190 controls the operation of the air conditioner 6010 in accordance with the command 6000C received by the reception unit 6170b, a command from a typical remote control (not illustrated), or the like. For example, the air conditioner control unit 6190 controls the operation of the compressor and expansion valve of the outdoor unit 6014, a fan of the indoor unit 6012, and so on in accordance with the command 6000C received by the reception unit 6170b on the basis of the settings of the air conditioner 6010 (such as the set temperature), values measured by various sensors (not illustrated), and so on.

The voice output unit 6140 has a speaker (not illustrated). The voice output unit 6140 outputs information (second information) concerning the content of the operation and/or the state of the air conditioner 6010 by voice. Items of information to be output by voice from the voice output unit 6140 are stored in a storage device (not illustrated), and the voice output unit 6140 outputs information for a predetermined item by voice. For example, in this embodiment, the voice output unit 6140 outputs second information concerning the operation start, operation stop, operating mode change of the air conditioner 6010 by sound. For example, the voice output unit 6140 outputs information indicating "the operation starts" by voice for the start of the operation of the air conditioner 6010, outputs information indicating "the operation stops" by voice for the stop of the operation of the air conditioner 6010, and outputs information concerning a changed operating mode by voice for the change of the operating mode of the air conditioner 6010 (such as "the setting was changed to the cooling mode"). The items of information to be output by voice from the voice output unit 6140 and the content of the voice are illustrative and not limitative.

### (2-3) Infrared-Operated Device Group

The devices 6050a, 6050b, ..., and 6050n in the infrared-operated device group 6050 are devices that can be operated using infrared signals. The devices 6050a, 6050b, ..., and 6050n in the infrared-operated device group 6050 include, for example, but not limitation, an electric fan, a lighting device, an audio device, and a microwave oven. The devices 6050a, 6050b, ..., and 6050n in the infrared-operated device group 6050 may not be connected to the network 6080.

The devices 6050a, 6050b, ..., and 6050n in the infrared-operated device group 6050 are devices that can be operated using infrared signals transmitted from 6040 in response to input of voice instructions to the operation device 6200. Operations available by infrared signals include, for example, turning on/off the devices 6050a, 6050b, ..., and 6050n, setting the airflow volume for an electric fan, setting the brightness of a lighting device, and setting the sound volume of an audio device.

The devices 6050a, 6050b, ..., and 6050n in the infrared-operated device group 6050 may be configured to be operable with a typical infrared remote control or switches on the main bodies of the devices 6050a, 6050b, ..., and 6050n in addition to operation via voice (in addition to operation using infrared signals transmitted from 6040 in accordance with voice instructions).

### (2-4) Network-Connected Device Group

The devices 6060a, 6060b, ..., and 6060m in the network-connected device group 6060 are devices that can be operated using signals transmitted via the network 6080. The devices 6060a, 6060b, ..., and 6060m in the network-connected device group 6060 include, for example, but not limited to, a television set, a DVD recorder, a washing machine, a refrigerator, a hot water supply apparatus, and so on. For example, in this embodiment, the device 6060a is a DVD recorder. The devices 6060a, 6060b, ..., and 6060m in the network-connected device group 6060 each have a wireless LAN adapter (not illustrated) and are connected to the network 6080 via the router 6082 (see Fig. 35). The devices 6060a, 6060b, ..., and 6060m in the network-connected device group 6060 are communicably connected to at least one of the analysis server 6020 and the device server 6070 via the network 6080 (see Fig. 35). The devices 6060a, 6060b, ..., and 6060m in the network-connected device group 6060 and the router 6082 may be connected via a wired LAN, rather than via a wireless LAN.

The devices 6060a, 6060b, ..., and 6060m in the network-connected device group 6060 are operated using signals transmitted from the analysis server 6020 or the device server 6070 in response to input of voice instructions to the operation device 6200. Operations available by signals transmitted from the analysis server 6020 or the device server 6070 include, for example, turning on/off the devices 6060a, 6060b, ..., and 6060m, changing the channel or volume level of a television set, and setting a programmed recording on a DVD recorder.

The devices 6060a, 6060b, ..., and 6060m in the network-connected device group 6060 may be configured to be operable with a commonly available remote control or switches on the main bodies of the devices 6060a, 6060b, ..., and 6060m, in addition to operation via voice (in addition to operation by signals transmitted via the network 6080 in accordance with voice instructions).

The device 6060a is an example of a second device, and has the voice output unit 6062. The voice output unit 6062 has a speaker (not illustrated). The voice output unit 6062 outputs information (second information) concerning the content of the operation and/or the state of the device 6060a by voice. Items of information to be output by voice from the voice output unit 6062 is stored in a storage device (not illustrated), and the voice output unit 6062 outputs information for a predetermined item by voice. For example, in this embodiment, the voice output unit 6062 outputs second information concerning the setting of a programed recording on the device 6060a by voice. For example, the voice output unit 6062 outputs information indicating "record the program on channel X from Y o'clock to Z o'clock" by voice for the setting of a programed recording on the device 6060a. The items of information to be output by voice from the voice output unit 6062 and the content of the voice are illustrative and not limitative.

### (2-5) Analysis Server

The analysis server 6020 is communicably connected to the operation device 6200, the air conditioner 6010, the air conditioner server 6030, the device server 6070, and 6040 via the network 6080. When the operation device 6200 accepts a voice instruction for the air conditioner 6010, a device in the infrared-operated device group 6050, or a device in the network-connected device group 6060, the communication unit 6250 transmits the signal 6000S that is based on the voice instruction to the analysis server 6020 via the network 6080 (see Fig. 36).

The analysis server 6020 is a computer that executes a program stored in a storage device to analyze the received signal 6000S. Specifically, for example, the analysis server 6020 performs voice recognition of a received voice signal. Further, the analysis server 6020 may recognize the meaning of the received signal 6000S of a text data format.

The storage device of the analysis server 6020 stores, in addition to the program, for example, a list of devices (the air conditioner 6010, the devices 6050a, 6050b, ..., and 6050n in the infrared-operated device group 6050, and the devices 6060a, 6060b, ..., and 6060m in the network-connected device group 6060) that can be operated by each operation device 6200. That is, the analysis server 6020 knows which device can be operated by each operation device 6200. In addition, for the devices 6060a, 6060b, ..., and 6060m in the network-connected device group 6060, information as to whether the device 6060a, 6060b, ..., or 6060m to be controlled is a direct control target of the analysis server 6020 (a control target of either of the analysis server 6020 and the device server 6070) is also stored.

For example, the analysis server 6020 analyzes the voice represented by the signal 6000S to determine a feature value for the voice, and generates text information from the feature value by using a voice recognition dictionary stored in the storage device, which includes an acoustic model, a linguistic model, and a pronunciation dictionary. Non-limiting examples of the text information generated by the analysis server 6020 include text information such as "turn the air conditioner on", "set the set temperature of the air conditioner to 25 degrees", "turn the lighting device off', and "turn the television set on".

When the generated text information is related to control of the air conditioner 6010 (for example, when the text information includes an air-conditioner-related keyword), the analysis server 6020 transmits the analysis result of the signal 6000S (i.e., the generated text information) to the air conditioner server 6030 via the network 6080 (see Fig. 36).

When the text information is related to control of the device 6050a, 6050b, ..., or 6050n in the infrared-operated device group 6050 (for example, when the text information includes a keyword related to the infrared-operated device group 6050), the analysis server 6020 transmits a command to 6040 to provide an instruction to transmit an infrared signal corresponding to the analysis result of the signal 6000S (i.e., the generated text information). For example, when the text information is information concerning a lighting device included in the devices 6050a, 6050b, ..., and 6050n in the infrared-operated device group 6050 (for example, "turn the lighting device off"), the analysis server 6020 transmits a command to 6040 to transmit an infrared signal for instructing the lighting device to turn off. The command directed to 6040 is transmitted from the analysis server 6020 to 6040 via the network 6080. When transmitting a command from the analysis server 6020 to a device in the infrared-operated device group 6050 (to 6040), the analysis server 6020 preferably transmits the command information described above to the operation device 6200.

When the text information is related to control of the device 6060a, 6060b, ..., or 6060m in the network-connected device group 6060 (for example, when the text information includes a keyword related to the network-connected device group 6060), the analysis server 6020 transmits a command corresponding to the analysis result of the signal 6000S (i.e., the generated text information) to the device 6060a, 6060b, ..., or 6060m in the network-connected device group 6060. For example, when the text information is information concerning a television set included in the devices 6060a, 6060b, ..., and 6060m in the network-connected device group 6060 (for example, "turn the television set on"), the analysis server 6020 transmits a command to the television set to provide an instruction to turn on the switch. Commands directed to the devices 6060a, 6060b, ..., and 6060m in the network-connected device group 6060 are transmitted from the analysis server 6020 to the devices 6060a, 6060b, ..., and 6060m in the network-connected device group 6060 via the network 6080. When transmitting a command from the analysis server 6020 to a device in the network-connected device group 6060, the analysis server 6020 preferably transmits the command information described above to the operation device 6200.

When the text information is related to control of the device 6060a, 6060b, ..., or 6060m in the network-connected device group 6060 and the device 6060a, 6060b, ..., or 6060m to be controlled is not a direct control target of the analysis server 6020, the text information is transmitted to the device server 6070 that controls the corresponding device 6060a, 6060b, ..., or 6060m. Then, a command is transmitted from the device server 6070 to the corresponding device 6060a, 6060b, ..., or 6060m via the network 6080.

### (2-6) Air Conditioner Server

The air conditioner server 6030 generates the command 6000C on the basis of the result of analysis of the signal 6000S by the analysis server 6020 (i.e., the text information generated by the analysis server 6020), which is transmitted from the analysis server 6020, and on the basis of the information 6000J on the state quantity for at least one of the air conditioner 6010 and the space to be air-conditioned, which is transmitted as appropriate from the transmission unit 6170a of the air conditioner 6010. Then, the air conditioner server 6030 transmits the command 6000C to the reception unit 6170b of the air conditioner 6010 via the network 6080. For example, without limitation, upon receipt of the command "turn the air conditioner on" as text information, the air conditioner server 6030 determines the operation of the components of the air conditioner 6010 on the basis of the current temperature and the like of the space to be air-conditioned, and transmits the command as the command 6000C. When the command 6000C is transmitted from the air conditioner server 6030 to the air conditioner 6010 via the network 6080, the air conditioner server 6030 preferably transmits the command information described above to the operation device 6200.

Here, without limitation, the air conditioner server 6030 generates the command 6000C on the basis of the information 6000J in addition to the result of analysis of the signal 6000S by the analysis server 6020. The air conditioner server 6030 may generate the command 6000C on the basis of only the result of analysis of the signal 6000S by the analysis server 6020.

Further, the air conditioner server 6030 accumulates signals 6000S transmitted from the operation device 6200 and performs various analysis operations by using the signals 6000S.

In this embodiment, without limitation, the device system 6000 includes the air conditioner server 6030. For example, when the air conditioner 6010 is capable of directly determining the content of the operation on the basis of the result of analysis of the signal 6000S by the analysis server 6020 (i.e., the text information generated by the analysis server 6020), the air conditioner server 6030 may not be disposed. The result of analysis of the signal 6000S by the analysis server 6020 may be transmitted directly to the reception unit 6170b of the air conditioner 6010 as the command 6000C.

### (2-7) Device Server

The device server 6070 generates a command for the device 6060a, 6060b, ..., or 6060m in the network-connected device group 6060 on the basis of the result of analysis of the signal 6000S by the analysis server 6020 (i.e., the text information generated by the analysis server 6020), which is transmitted from the analysis server 6020. Then, the device server 6070 transmits the command to the operation target among the devices 6060a, 6060b, ..., and 6060m in the network-connected device group 6060 via the network 6080. When the command 6000C is transmitted from the device server 6070 to the air conditioner 6010 via the network 6080, the device server 6070 preferably transmits the command information described above to the operation device 6200.

In Fig. 35, the number of device servers 6070 is one. However, if there is a plurality of types of the devices 6060a, 6060b, ..., and 6060m to be operated by the device server 6070 (rather than in accordance with commands from the analysis server 6020), a number of device servers 6070 equal to the number of types are preferably present.

In addition, when all of the devices 6060a, 6060b, ..., and 6060m are operable with commands from the analysis server 6020, the device server 6070 may not be present.

### (2-8) Infrared Transmitter

6040 has a storage unit (not illustrated) that stores an infrared signal pattern for control for each of the devices 6050a, 6050b, ..., and 6050n in the infrared-operated device group 6050 or for each of the operations to be performed on the devices 6050a, 6050b, ..., and 6050n in the infrared-operated device group 6050. 6040 transmits an infrared signal to the operation target among the devices 6050a, 6050b, ..., and 6050n in the infrared-operated device group 6050 in accordance with a command transmitted from the analysis server 6020 via the network 6080 by using the infrared signal pattern stored in the storage unit.

### (3) Control of Sound Output by Sound Output Control Unit

The sound output control unit 6280 controls on/off of sound output or an output sound volume of the voice output unit 6220 of the operation device 6200 on the basis of the determination result of the determination unit 6270.

The control of sound output by the sound output control unit 6280 is performed in the following respects.
1. If the sound output from the sound output unit of the second device is not heard or almost not heard in the place where the first device is operated (for example, the place where the first device is installed), the first device preferably outputs information by voice. With this configuration, even when the operator operates the second device at a position away from the second device by using the first device, the operator is able to confirm that the second device has been correctly operated.
2. If the sound output from the sound output unit of the second device is heard in the place where the first device is operated, the first device does not need to output information by voice. In particular, if the content of information output from the first device corresponds to the content of information output from the second device, preferably, the first device does not output the information by voice.
3. If the sound output from the sound output unit of the second device is heard in the place where the first device is operated, but if the content of information output from the first device corresponds to the content of information that is not output from the second device, preferably, the first device outputs the information by voice. With this configuration, a failure, such as information to be transmitted being unsuccessfully transmitted to the operator, is less likely to occur.

In the above respects, for example, the sound output control unit 6280 controls sound output of the operation device 6200 in the following way.

For example, as in Fig. 37A, the installation of the operation device 6200 and the air conditioner 6010 in the same room, Room 1, is assumed to be stored in the position-related information storage area 6240a of the storage unit 6240. At this time, the determination unit 6270 determines that the operation device 6200 and the air conditioner 6010 have a predetermined positional relationship (a positional relationship in which the sound output from the first device and the sound output from the second device are likely to affect each other).

In this case, for example, the sound output control unit 6280 preferably controls the operation device 6200 to output third information, which is not related to an operation to be performed on the air conditioner 6010, with a first sound volume and not to output first information, which is related to an operation to be performed on the air conditioner 6010. For example, when the sound-output item storage area 6240b of the storage unit 6240 stores the sound output content information illustrated in Fig. 38, the sound output control unit 6280 preferably controls the operation device 6200 to output information on an item not related to an operation to be performed on the air conditioner 6010 (i.e., information concerning acceptance of a specific voice instruction, recorder-activation operation, programmed-recording-on-recorder setting operation, and recorder-stop operation) with a first sound volume (in the example illustrated in Fig. 37A, since the operation device 6200 and the DVD recorder (the device 6060a) are placed in different rooms, control of sound output of information related to an operation to be performed on the device 6060a is not particularly necessary). In contrast, the sound output control unit 6280 preferably controls the operation device 6200 not to output information on an item related to an operation to be performed on the air conditioner 6010 (information concerning air-conditioner operation-start operation, air-conditioner operation-stop operation, air-conditioner operating-mode-change operation, and air-conditioner set-temperature-change operation) by sound.

As an example of the method for preventing the voice output unit 6220 from outputting first information by sound, the sound output control unit 6280 may control a switch of the speaker 6220a of the voice output unit 6220 to be turned off at the timing when the voice output unit 6220 outputs first information by voice. As another example, the sound output control unit 6280 may control the sound volume of the speaker 6220a to zero at the timing when the voice output unit 6220 outputs first information by voice. As another example, the sound output control unit 6280 may create a list of items of information to be actually output by voice from the voice output unit 6220, separately from the sound output content information, and store the list in the storage unit 6240, and the item of the first information may be removed from the list.

Instead of controlling the operation device 6200 not to output first information by voice, the sound output control unit 6280 may control the operation device 6200 to output first information, which is related to an operation to be performed on the air conditioner 6010, with a second sound volume lower than the output sound volume (first sound volume) of the third information, which is not related to an operation to be performed on the air conditioner 6010.

More preferably, the sound output control unit 6280 preferably controls the operation device 6200 to output, within the first information related to an operation to be performed on the air conditioner 6010, information that does not overlap in content with second information output by sound from the air conditioner 6010 (for example, in the example illustrated in Fig. 38, information concerning air-conditioner set-temperature-change operation) with a third sound volume (for example, the same sound volume as the first sound volume described above). Further, the sound output control unit 6280 preferably controls the operation device 6200 not to output, within the first information, information that overlaps in content with the second information (for example, in the example illustrated in Fig. 38, information concerning air-conditioner operation-start operation, air-conditioner operation-stop operation, and air-conditioner operating-mode-change operation) by sound or to output such information with a fourth sound volume (for example, the same sound volume as the second sound volume described above) lower than the third sound volume.

Then, as in Fig. 37B, the installation of the operation device 6200 and the air conditioner 6010 in different rooms is assumed to be stored in the position-related information storage area 6240a of the storage unit 6240. At this time, the determination unit 6270 determines that the operation device 6200 and the air conditioner 6010 do not have a predetermined positional relationship.

In this case, the sound output control unit 6280 preferably controls the operation device 6200 to output the first information related to an operation to be performed on the air conditioner 6010, and the third information, which is not related to an operation to be performed on the air conditioner 6010, at least by sound. That is, the sound output control unit 6280 preferably controls the operation device 6200 to output information on all the items among the sound-output items for the operation device 6200 in the sound-output item information (unless any other second device is installed in the same room as that of the operation device 6200) at least by sound. More preferably, the sound output control unit 6280 preferably controls the operation device 6200 to output the first information related to an operation to be performed on the air conditioner 6010, and the third information, which is not related to an operation to be performed on the air conditioner 6010, with a relatively high sound volume (for example, the first sound volume described above).

### (4) Features

While the features of the device management system 6001 are described here, taking the air conditioner 6010 as an example of a second device, similar features are obtained even when the second device is the device 6060a.

### (4-1)

The device management system 6001 according to the embodiment described above is a system that manages the operation device 6200 that is an example of a first device having the voice output unit 6220 that is an example of a first sound output unit that outputs a sound, and the air conditioner 6010 that is an example of a second device different from the first device and having the voice output unit 6140 that is an example of a second sound output unit that outputs a sound. The device management system 6001 includes the determination unit 6270 and the sound output control unit 6280. The determination unit 6270 determines a positional relationship between the operation device 6200 and the air conditioner 6010. The sound output control unit 6280 controls on/off of sound output or an output sound volume of at least one of the operation device 6200 and the air conditioner 6010 on the basis of the determination result of the determination unit 6270. Here, in particular, the sound output control unit 6280 controls on/off of sound output or an output sound volume of the operation device 6200 on the basis of the determination result of the determination unit 6270.

In the device management system 6001, in accordance with the positional relationship between the operation device 6200 and the air conditioner 6010, on/off control of output of sound or control of the sound volume of at least one device 6200 or 6010 is performed. Thus, failures, such as sounds output from both devices 6200 and 6010 being overlapped and noisy, or the sound output from each of the devices 6200 and 6010 being difficult to hear, can be less likely to occur.

### (4-2)

In the device management system 6001 according to the embodiment described above, the operation device 6200 is a remote control device that controls the operation of the air conditioner 6010. The voice output unit 6220 outputs at least first information concerning an operation to be performed on the air conditioner 6010 by sound. The voice output unit 6140 outputs second information concerning the content of the operation and/or the state of the air conditioner 6010 by sound.

Here, the operation device 6200 is a remote control device of the air conditioner 6010 that provides notification by sound indicating that, for example, an operation is performed on the air conditioner 6010, and the air conditioner 6010 is a device that provides notification of information concerning the content of the operation and/or the state thereof by sound. In this case, on/off control of output of sound or control of the sound volume of at least one device is performed. Thus, failures, such as sounds output from both devices 6200 and 6010 being overlapped and noisy, or relatively loud sounds output from both devices 6200 and 6010 annoying the operator, can be less likely to occur.

### (4-3)

In the device management system 6001 according to the embodiment described above, the voice output unit 6220 outputs the third information, which is not related to an operation to be performed on the air conditioner 6010, by sound. When the determination unit 6270 determines that the operation device 6200 and the air conditioner 6010 have a predetermined positional relationship, the sound output control unit 6280 controls the operation device 6200 to output the third information with a first sound volume and not to output the first information by sound or to output the first information with a second sound volume lower than the first sound volume.

Here, the case where the operation device 6200 and the air conditioner 6010 have a predetermined positional relationship refers to a case where the operation device 6200 and the air conditioner 6010 have a positional relationship in which the sound output from the operation device 6200 and the sound output from the air conditioner 6010 are likely to affect each other. The case where the operation device 6200 and the air conditioner 6010 have a predetermined positional relationship includes, for example, but not limitation, a case where the distance between the operation device 6200 and the air conditioner 6010 is smaller than a predetermined distance, and a case where the operation device 6200 and the air conditioner 6010 are arranged in the same region.

Here, when the operation device 6200 and the air conditioner 6010 are determined to have a predetermined positional relationship, within the information output from the operation device 6200, the first information related to an operation to be performed on the air conditioner 6010 is controlled so as not to be output by sound or to be output with a reduced sound volume. Thus, failures, such as sounds output from both devices 6200 and 6010 being overlapped and noisy, or relatively loud sounds output from both devices 6200 and 6010 annoying the operator, can be less likely to occur.

### (4-4)

In the device management system 6001 according to the embodiment described above, when the determination unit 6270 determines that the operation device 6200 and the air conditioner 6010 do not have a predetermined positional relationship, the sound output control unit 6280 controls the operation device 6200 to output the first information and the third information at least by sound.

Here, when the operation device 6200 and the air conditioner 6010 are determined not to have a predetermined positional relationship, in other words, when the sound output from the operation device 6200 and the sound output from the air conditioner 6010 are determined not to affect each other, both the first information and the third information are output by sound. Thus, even when the operator operates the air conditioner 6010 at a position away from the air conditioner 6010 by using the operation device 6200, the operator easily confirms that operation for the air conditioner 6010 has been correctly operated.

### (4-5)

In the device management system 6001 according to the embodiment described above, when the determination unit 6270 determines that the operation device 6200 and the air conditioner 6010 have a predetermined positional relationship, the sound output control unit 6280 controls the operation device 6200 to output information that is included in the first information and that does not overlap in content with the second information with a third sound volume and not to output information that is included in the first information and that overlaps in content with the second information by sound or to output the information with a fourth sound volume lower than the third sound volume.

Here, when the operation device 6200 and the air conditioner 6010 are determined to have a predetermined positional relationship, a sound that is included in the first information concerning an operation to be performed on the air conditioner 6010, which is output from the operation device 6200, the sound not being output as information from the air conditioner 6010, is output with a relatively high sound volume. In the device management system 6001, accordingly, a failure, such as information to be transmitted being unsuccessfully transmitted to the operator, can be less likely to occur.

### (4-6)

The device management system 6001 according to the embodiment described above includes the storage unit 6240. The storage unit 6240 stores position-related information concerning the position of at least one of the operation device 6200 and the air conditioner 6010. Here, in particular, the storage unit 6240 stores position-related information concerning the positions of the operation device 6200 and the air conditioner 6010. The determination unit 6270 determines a positional relationship between the operation device 6200 and the air conditioner 6010 on the basis of the position-related information stored in the storage unit 6240.

Here, the positional relationship between both devices 6200 and 6010 is likely to be correctly understood on the basis of the position-related information stored in the storage unit 6240, and failures, such as sounds output from both devices 6200 and 6010 being overlapped and noisy, or the sound output from each of the devices 6200 and 6010 being difficult to hear, are less likely to occur with ease.

### (5) Modifications

The following describes modifications of the embodiment described above. The modifications may be combined as appropriate so long as consistency is maintained between them.

### (5-1) Modification 7A

In the device management system 6001 according to the embodiment described above, the determination unit 6270 determines a positional relationship between the first device and the second device on the basis of position-related information stored in the storage unit 6240. However, the method of determining the positional relationship by the determination unit 6270 is not limited to the method described above.

For example, the device management system 6001 may have a camera on the first device or the second device or near the first device or the second device, and the determination unit 6270 may determine that the other device appearing in an image captured with the camera (the second device when the camera is disposed on the first device side, or the first device when the camera is disposed on the second device side) is a device having a predetermined positional relationship with the device associated with the camera.

Further, for example, in the device management system 6001, the voice acceptance section 6210 may measure sounds output from second devices, and the determination unit 6270 may determine that a second device for which the level of the measured sound is greater than a predetermined value is a device having a predetermined positional relationship with the operation device 6200 (first device).

Further, for example, the device management system 6001 may include a detection unit that detects the position of at least one of the first device (the operation device 6200) and the second device by using GPS, indoor positioning technique such as Wi-Fi positioning using a plurality of wireless LAN access points, or the like. For example, when the operation device 6200, which is the first device, is a wearable (for example, wristwatch-type) device, the operation device 6200 may be provided with a detection unit 6290 (see Fig. 39) that detects the position of the operation device 6200. The determination unit 6270 may determine the positional relationship between the operation device 6200 and the air conditioner 6010 on the basis of the detection result of the detection unit 6290.

In the device management system 6001 having the configuration described above, the positional relationship between both devices 6200 and 6010 is likely to be correctly understood on the basis of the result of detecting the positions of the devices 6200 and 6010, and failures, such as sounds output from both devices 6200 and 6010 being overlapped and noisy, or the sound output from each of the devices 6200 and 6010 being difficult to hear, are less likely to occur with ease.

### (5-2) Modification 7B

In the embodiment described above, without limitation, the device management system 6001 is a system capable of operating the air conditioner 6010, the devices in the infrared-operated device group 6050, and the devices in the network-connected device group 6060 via voice instructions.

For example, in the device management system 6001, some of the air conditioner 6010, the devices in the infrared-operated device group 6050, and the devices in the network-connected device group 6060 may not be operation targets. When some of the air conditioner 6010, the devices in the infrared-operated device group 6050, and the devices in the network-connected device group 6060 are no longer operation targets, a component that is no longer necessary (for example, 6040, the air conditioner server 6030, or the device server 6070) may be removed from the configuration of the device system 6000.

### (5-3) Modification 7C

In the embodiment described above, without limitation, the analysis server 6020, the air conditioner server 6030, and the device server 6070 in the device system 6000 are separate servers. For example, one server may function as the analysis server 6020 and the air conditioner server 6030, or function as the analysis server 6020, the air conditioner server 6030, and the device server 6070.

Conversely, the function of each of the analysis server 6020, the air conditioner server 6030, and the device server 6070 described in the above embodiment may be achieved by a plurality of servers rather than by a single server.

### (5-4) Modification 7D

In the device management system 6001 according to the embodiment described above, the air conditioner 6010 and the device 6060a (DVD recorder) are taken as examples of a second device. However, these devices are merely examples and are not to be limiting.

The second device may be any device having a sound output unit, and is not limited in product type. For example, the second device may be a device in the infrared-operated device group 6050 of the embodiment described above (such as an electric fan, a lighting device, an audio device, or a microwave oven) or a device in the network-connected device group 6060 other than a DVD recorder (such as a television set, a refrigerator, a washing machine, or a hot water supply apparatus) so long as the second device has a sound output unit.

### (5-5) Modification 7E

In the device management system 6001 according to the embodiment described above, the air conditioner 6010 and the device 6060a (DVD recorder) are taken as examples of a second device, and the operation device 6200 serving as a remote control device that controls the operation of the air conditioner 6010 and the device 6060a is taken as an example of a first device. However, these devices are merely examples and are not to be limiting. For example, the first device and the second device may be devices that do not have a relationship in which one of them operates the other.

For example, as a specific example, the first device is an acoustic device installed in a theater or a concert hall and having a speaker as a sound output unit. The sound output unit of the acoustic device outputs music, lines in a movie, or the like as sounds. The second device is a mobile communication device such as a smartphone having a speaker that outputs a ringtone or the like. A detection unit of the smartphone detects the position of the smartphone by using, for example, the GPS function or the like of the smartphone, and a determination unit of the smartphone determines a positional relationship between the acoustic device and the smartphone on the basis of the result of detecting the position. For example, the determination unit of the smartphone determines whether the smartphone is in a theater or a concert hall on the basis of the result of detecting the position of the smartphone to determine the positional relationship between the acoustic device and the smartphone (whether the acoustic device and the smartphone are in the same space). Then, for example, a sound output control unit of the smartphone turns off sound output of the smartphone on the basis of the determination result of the determination unit of the smartphone.

With this configuration, failures, such as the sound output from the acoustic device overlapped with the ringtone or the like of the mobile communication device being noisy, or the sound output from the acoustic device being difficult to hear, can be less likely to occur.

### (5-6) Modification 7F

In the embodiment described above, the signal 6000S that is based on a voice instruction is transmitted from the operation device 6200 to the analysis server 6020, and the analysis server 6020 performs recognition processing of the signal 6000S. However, the device management system 6001 is not limited to this configuration.

For example, the operation device 6200 may have a recognition function similar to that of the analysis server 6020, and the operation device 6200 may execute processing similar to that of the analysis server 6020 described above.

Alternatively, the operation device 6200 may have the function of the air conditioner server 6030 or the device server 6070 in addition to the function of the analysis server 6020.

### (5-7) Modification 7G

The device management system 6001 according to the embodiment described above is a system capable of voice operation of the air conditioner 6010 and the like. However, this is not intended to be limiting. For example, the operation device 6200 of the device management system 6001 may be a device capable of operating the air conditioner 6010 and the like using button operation or text input, rather than voice input.

### (5-8) Modification 7H

In the device management system 6001 according to the embodiment described above, the operation device 6200 is provided with the sound output control unit 6280 that controls sound output of the operation device 6200. However, the sound output control unit may be disposed in any other location within the device system 6000.

For example, in the embodiment described above, the voice output unit 6220 outputs information by sound in accordance with command information. Thus, the sound output control unit may be disposed in on the server side such as the analysis server 6020, the air conditioner server 6030, or the device server 6070. On the server side, such as the analysis server 6020, the air conditioner server 6030, or the device server 6070, control may be performed such that command information that should not be output by sound from the operation device 6200 is not transmitted to the operation device 6200.

Further, the determination unit 6270 may also not necessarily be mounted in the operation device 6200, and, for example, the server 6020, 6030, or 6070, any other server, or the like may determine a positional relationship between the operation device 6200 and the second device.

### (5-9) Modification 7I

In the device system of the embodiment described above, sound output of the operation device 6200 is controlled. However, this is not intended to be limiting, and a sound output control unit may be used to control sound output of the second device (for example, the air conditioner 6010 or the device 6060a).

For example, when the determination unit 6270 determines that the operation device 6200 and the second device have a predetermined positional relationship, the sound output control unit 6280 of the operation device 6200 may transmit a command to the second device (for example, the air conditioner 6010) to prohibit the voice output unit 6140 from performing output operation.

Further, for example, on the air conditioner server 6030 or the device server 6070 side, it may be determined whether the operation device 6200 and the second device have a predetermined positional relationship, and a command may be transmitted to the second device to prohibit the voice output unit from outputting voice.

### (5-10) Modification 7J

In the embodiment described above, without limitation, the sound output units of the first device and the second device mainly output voice (verbal sounds). The sound output units of the first device and the second device may mainly output information by using a beep sound or the like.

### <Fourteenth Embodiment>

In the device management system 6001 according to the thirteenth embodiment, the determination unit 6270 determines a positional relationship between the first device and the second device, and the sound output control unit 6280 controls on/off of sound output or an output sound volume of at least one of the first device and the second device on the basis of the determination result of the determination unit 6270. For example, in an aspect, the determination unit 6270 determines a positional relationship between the operation device 6200 and the air conditioner 6010, and the sound output control unit 6280 control on/off of sound output or an output sound volume of the operation device 6200 on the basis of the determination result of the determination unit 6270.

However, this is not limiting, and a device management system 6001A (see Fig. 40) may be configured as follows. The device management system 6001A is the same as that of the thirteenth embodiment, except for a determination unit 6270A and a sound output control unit 6280A. Thus, the difference between the device management system 6001A and the device management system 6001 (the determination unit 6270A and the sound output control unit 6280A) will be described mainly, and most of the rest will not be described.

In the device management system 6001A, the target determined by the determination unit 6270A is different from that of the determination unit 6270 of the thirteenth embodiment. Unlike the determination unit 6270, the determination unit 6270A determines the degree of interference of one of the sound output from the first device and the sound output from the second device with the other of the sound output from the first device and the sound output from the second device. The degree of interference of one of the sound output from the first device and the sound output from the second device with the other of the sound output from the first device and the sound output from the second device refers to the degree to which the sound output from one device interferes with the hearing of the sound output from the other device (for example, the degree to which the sound output from the first device interferes with the hearing of the sound output from the second device). The sound output control unit 6280A controls on/off of sound output or an output sound volume of at least one of the first device and the second device on the basis of the determination result of the determination unit 6270A.

A detailed description will be made hereinafter. In the following, a description will be made assuming that the operation device 6200 is an example of the first device and the air conditioner 6010 is an example of the second device.

In the device management system 6001A, the determination unit 6270A determines the degree of interference of one of the sound output from the voice output unit 6220 of the operation device 6200 and the sound output from the voice output unit 6140 of the air conditioner 6010, which is an example of the second device, with the other of the sound output from the voice output unit 6220 of the operation device 6200 and the sound output from the voice output unit 6140 of the air conditioner 6010. In particular, in the device management system 6001A of this embodiment, the determination unit 6270A determines the degree of interference of the sound output from the voice output unit 6140 of the air conditioner 6010 with the sound output from the voice output unit 6220 of the operation device 6200. However, in another embodiment, the determination unit 6270A (or a determination unit (not illustrated) disposed outside the operation device 6200) may determine the degree of interference of the sound output from the voice output unit 6220 of the operation device 6200 with the sound output from the voice output unit 6140 of the air conditioner 6010. Alternatively, the determination unit 6270A (or a determination unit (not illustrated) disposed outside the operation device 6200) may determine both the degree of interference of the sound output from the voice output unit 6140 of the air conditioner 6010 with the sound output from the voice output unit 6220 of the operation device 6200 and the degree of interference of the sound output from the voice output unit 6220 of the operation device 6200 with the sound output from the voice output unit 6140 of the air conditioner 6010.

In the device management system 6001A, furthermore, the sound output control unit 6280A controls on/off of sound output or an output sound volume of at least one of the operation device 6200 and the air conditioner 6010 on the basis of the determination result of the determination unit 6270A. For example, here, the sound output control unit 6280A controls on/off of sound output or an output sound volume of the air conditioner 6010 (more specifically, the voice output unit 6140 of the air conditioner 6010) on the basis of the determination result of the determination unit 6270A. The sound output control unit 6280A is configured to be capable of controlling on/off, the output sound volume, or the like of the voice output unit 6140 of the air conditioner 6010 via the air conditioner server 6030 or by communicating directly with the controller 6150. The sound output control unit 6280A controls on/off of sound output or an output sound volume of the air conditioner 6010 when the determination unit 6270A determines that the degree of interference of the sound output from the voice output unit 6140 of the air conditioner 6010 with the sound output from the voice output unit 6220 of the operation device 6200 (hereinafter sometimes referred to simply as degree of interference, for simplicity of description) is equal to a predetermined degree. The sound output control unit 6280A may control on/off of sound output or an output sound volume of the operation device 6200 when the determination unit 6270A determines that the degree of interference is equal to a predetermined degree.

The determination of whether the degree of interference is equal to a predetermined degree by the determination unit 6270A and the control of on/off of sound output or output sound volume by the sound output control unit 6280A are performed in the following way, for example.

In an example, in the device management system 6001A, the operation device 6200 attempts to acquire the sound output from the voice output unit 6140 of the air conditioner 6010 by using the microphone element 6210a, and the determination unit 6270A determines whether the degree of interference is equal to a predetermined degree on the basis of the sound acquired by the microphone element 6210a. In an embodiment, but not limitation, when a voice instruction is input to the microphone element 6210a of the voice acceptance section 6210 of the operation device 6200 from the voice output unit 6140 of the air conditioner 6010 to output a test sound, the operation device 6200 generates the signal 6000S based on the voice instruction, and transmits the signal 6000S from the communication unit 6250 to the analysis server 6020. The analysis server 6020 executes voice recognition processing of the received signal 6000S. Then, the analysis server 6020 or the air conditioner server 6030 generates the command 6000C for the operation target air conditioner 6010 (a command for requesting the voice output unit 6140 to output a test sound) on the basis of the result of the voice recognition processing of the analysis server 6020, and transmits the command 6000C to the air conditioner 6010. Upon receipt of the command 6000C, the voice output unit 6140 of the air conditioner 6010 outputs a test sound for a predetermined time period. On the other hand, the microphone element 6210a of the operation device 6200 attempts to acquire the test sound output from the voice output unit 6140 of the air conditioner 6010.

For example, if the test sound output from the voice output unit 6140 of the air conditioner 6010 is successfully acquired, the determination unit 6270A determines that the degree of interference is equal to a predetermined degree. Alternatively the determination unit 6270A may determine that the degree of interference is equal to a predetermined degree not only when the test sound is successfully acquired but also when the sound level of the acquired test sound is determined to be greater than a predetermined volume. Then, the sound output control unit 6280 performs control to turn off sound output of the air conditioner 6010 or control to decrease the output sound volume on the basis of the determination result of the determination unit 6270A (when the degree of interference is determined to be equal to a predetermined degree). In this aspect, the sound output from the voice output unit 6140 of the air conditioner 6010 is not heard or is relatively weak around the operation device 6200, and thus interference with hearing of the sound output from the voice output unit 6220 of the operation device 6200 is less likely to occur.

In another aspect, the device management system 6001A may attempt to acquire the sound output from the voice output unit 6140 of the air conditioner 6010 by using a microphone element (not illustrated) placed at a position different from that of the microphone element 6210a (for example, within a room where the air conditioner 6010 and the operation device 6200 are installed and at a position away from the air conditioner 6010 and the operation device 6200), and the determination unit 6270A may perform determination similar to that described above on the basis of the result of the sound acquired by the microphone element (not illustrated). In this aspect, the sound output from the voice output unit 6140 of the air conditioner 6010 is not heard or is relatively weak around the installation location of the microphone element (for example, in a space where the user of the device management system 6001 mainly performs activities), and thus interference with hearing of the sound output from the voice output unit 6220 of the operation device 6200 is less likely to occur.

In still another aspect, the device management system 6001A attempts to acquire an output sound of information (second information) concerning the content of the operation and/or the state of the air conditioner 6010, which is output from the voice output unit 6140 of the air conditioner 6010 at the timing when the voice output unit 6220 outputs information (first information) concerning an operation to be performed on the air conditioner 6010 by voice, by using a microphone element (the microphone element 6210a or a microphone element (not illustrated) different from the microphone element 6210a). If the microphone element acquires the sound output from the voice output unit 6140, the determination unit 6270A may determine that the degree of interference is equal to a predetermined degree. In this case, the sound output control unit 6280A may execute control to shift the timing of sound output of the air conditioner 6010 on the basis of the determination result of the determination unit 6270A, instead of performing control to turn off sound output of the air conditioner 6010 or control to decrease the output sound volume on the basis of the determination result of the determination unit 6270A. In this aspect, the sound output from the voice output unit 6140 of the air conditioner 6010 overlapped with the sound output from the voice output unit 6220 of the operation device 6200 is not heard around the installation location of the microphone element, and thus interference with hearing of the sound output from the voice output unit 6220 of the operation device 6200 is less likely to occur.

In still another aspect, the determination unit 6270A may determine the degree of interference without measurement of sounds on the basis of the positional relationship between the first device and the second device or the aspect exemplified in Modification 7A. For example, when the distance between the first device and the second device is smaller than a predetermined distance, the determination unit 6270A may determine that the degree of interference of one of the sound output from the first device and the sound output from the second device with the other of the sound output from the first device and the sound output from the second device is equal to a predetermined degree. In addition, for example, when the first device and the second device are arranged in the same room, the determination unit 6270A may determine that the degree of interference of one of the sound output from the first device and the sound output from the second device with the other of the sound output from the first device and the sound output from the second device is equal to a predetermined degree.

When the determination unit 6270A determines that the degree of interference of one of the sound output from the first device and the sound output from the second device with the other of the sound output from the first device and the sound output from the second device is equal to a predetermined degree, as in the thirteenth embodiment, the sound output control unit 6280A may control the first device (for example, the operation device 6200 as an example of a remote control device) to output the third information described above (information not related to an operation to be performed on the second device) with a first sound volume and not to output the first information described above (information related to an operation to be performed on the second device) by sound or to output the first information with a second sound volume lower than the first sound volume.

Alternatively, when the determination unit 6270A determines that the degree of interference of one of the sound output from the first device and the sound output from the second device with the other of the sound output from the first device and the sound output from the second device is not equal to the predetermined degree, as in the thirteenth embodiment, the sound output control unit 6280A may control the first device (for example, the operation device 6200 as an example of a remote control device) to output the first information and the third information described above at least by sound.

Alternatively, when the determination unit 6270A determines that the degree of interference of one of the sound output from the first device and the sound output from the second device with the other of the sound output from the first device and the sound output from the second device is equal to a predetermined degree, as in the thirteenth embodiment, the sound output control unit 6280A may control the first device (for example, the operation device 6200 as an example of a remote control device) to output information that is included in the first information described above and that does not overlap in content with the second information output by sound from the second device (information concerning the content of the operation and/or the state of the second device) with a third sound volume and not to output information that is included in the first information described above and that overlaps in content with the second information described above by sound or to output the information with a fourth sound volume lower than the third sound volume.

In the fourteenth embodiment, the storage unit 6240 may store interference-related information concerning the degree of interference of one of the sound output from the first device and the sound output from the second device with the other of the sound output from the first device and the sound output from the second device. The determination unit 6270A may determine the degree of interference of one of the sound output from the first device and the sound output from the second device with the other of the sound output from the first device and the sound output from the second device on the basis of the interference-related information stored in the storage unit 6240.

The configurations of the thirteenth embodiment and its modifications may be applied to the device management system 6001A according to the fourteenth embodiment so long as consistency is maintained between them.

### <Fifteenth Embodiment>

### (1) Configuration of Sound Information Analysis System

As an example is illustrated in Fig. 41, a sound information analysis system 7001 according to a first embodiment includes an air conditioner 7010 and an information processing device (sound information analysis unit) 7100. The information processing device 7100 is a device similar to the analysis server 20 in the first embodiment and the like although processing operations to be executed are different.

### (1-1) Air Conditioner

As illustrated in Figs. 41 and 42, the air conditioner 7010 includes an outdoor unit (first air conditioner) 7020, an indoor unit (second air conditioner) 7040, and a control unit 7060, and is configured to generate conditioned air in a predetermined state and blow out the conditioned air into an air conditioned space 7000S. The predetermined state refers to a state of any one of the temperature, airflow volume, and direction of airflow of the conditioned air or any combination thereof.

As illustrated in Fig. 42, the outdoor unit 7020 and the indoor unit 7040 are connected to each other via refrigerant pipes 7011 and 7012 and shutoff valves 7013 and 7014, and form a vapor compression refrigeration cycle. The devices constituting the air conditioner 7010 are controlled by the control unit 7060.

The outdoor unit 7020 is installed outside the air conditioned space 7000S, and mainly includes a compressor 7021, a four-way switching valve 7022, an outdoor heat exchanger 7023, an outdoor fan 7024, an expansion mechanism 7025, and so on. In this embodiment, the "expansion mechanism" refers to a mechanism capable of decompressing refrigerant, and examples of the expansion mechanism include an expansion valve and a capillary tube. Further, the outdoor unit 7020 is provided with an outdoor control circuit 7029, which controls these devices constituting the outdoor unit 7020.

Further, a first microphone 7028 is removably attached to the outdoor unit 7020. When the outdoor unit 7020 has the first microphone 7028 attached thereto, the first microphone 7028 acquires an "external sound", which is generated in the surroundings of the first microphone 7028, outside the air conditioned space 7000S. The acquired external sound is transmitted to the information processing device 7100 via the control unit 7060 described below. The first microphone 7028 is capable of outputting various kinds of sound information to the surroundings of the first microphone 7028 in accordance with an output command from the control unit 7060.

The indoor unit 7040 is installed inside the air conditioned space 7000S, and mainly includes an indoor heat exchanger 7041, an indoor fan 7042, and so on. Further, the indoor unit 7040 is provided with an indoor control circuit 7049, which controls these devices constituting the indoor unit 7040.

Further, a second microphone 7048 is removably attached to the indoor unit 7040. When the indoor unit 7040 has the second microphone 7048 attached thereto, the second microphone 7048 acquires an "internal sound", which is generated in the surroundings of the second microphone 7048, inside the air conditioned space 7000S. The acquired internal sound is transmitted to the information processing device 7100 via the control unit 7060 described below. The second microphone 7048 is capable of outputting various kinds of sound information to the surroundings of the second microphone 7048 in accordance with an output command from the control unit 7060.

The control unit 7060 is configured to control an internal mechanism of the air conditioner 7010, and is constituted by the outdoor control circuit 7029 and the indoor control circuit 7049. For example, the control unit 7060 controls the internal mechanism of the air conditioner 7010 in accordance with a user's command input via a remote control or the like. More specifically, the control unit 7060 controls the respective devices so as to circulate refrigerant through the compressor 7021, the outdoor heat exchanger 7023 serving as a radiator, the expansion mechanism 7025, and the indoor heat exchanger 7041 serving as an evaporator in this order in accordance with a command for cooling operation. Further, the control unit 7060 controls the respective devices to circulate refrigerant through the compressor 7021, the indoor heat exchanger 7041 serving as a radiator, the expansion mechanism 7025, and the outdoor heat exchanger 7023 serving as an evaporator in this order in accordance with a command for heating operation. Depending on the control target, the outdoor control circuit 7029 or the indoor control circuit 7049 may execute control solely, or the outdoor control circuit 7029 and the indoor control circuit 7049 may execute control in cooperation.

The control unit 7060 is integrated with an information processing unit 7070 and incorporates the information processing unit 7070 in advance, or the information processing unit 7070 can be added to the control unit 7060 later. As illustrated in Fig. 43, the information processing unit 7070 includes an input unit 7071, an output unit 7072, a communication unit 7073, a recording unit 7074, and a processing unit 7075.

The input unit 7071 inputs various kinds of information to the information processing unit 7070. With the function of the input unit 7071, settings information of the air conditioner 7010, which is delivered from a remote control or the like, can be input to the processing unit 7075. Further, sound information detected by the first microphone 7028, the second microphone 7048, and the like can be input to the processing unit 7075.

The output unit 7072 outputs various kinds of information from the information processing unit 7070. By outputting control information via the output unit 7072, the internal mechanism of the air conditioner 7010 can be controlled. With the function of the output unit 7072, operation information of the air conditioner 7010 can be displayed on a display panel or the like of the remote control. Further, with the function of the output unit 7072, various kinds of sound information can be output from the first microphone 7028 and the second microphone 7048.

The communication unit (transmission unit) 73 has a function of connecting to a network 7000NW such as the Internet. Communication with the external information processing device 7100 can be performed via the communication unit 7073.

The recording unit 7074 is implemented by a ROM, a RAM, or the like, and is configured to record thereon information to be input to the information processing unit 7070, information calculated by the information processing unit 7070, and so on. Further, the recording unit 7074 has recorded thereon information input via the input unit 7071. The recording unit 7074 may be configured to record thereon sound information corresponding to a specific keyword and/ a specific frequency.

The processing unit 7075 is implemented by a CPU, a GUP, and so on and is configured to execute information processing. The processing unit 7075 executes a program recorded on the recording unit 7074 to implement various functions. Further, the processing unit 7075 detects pieces of sound information outside and inside the air conditioned space 7000S through the first microphone 7028 and the second microphone 7048, and transmits the detected pieces of sound information to the information processing device 7100 via the communication unit 7073. The processing unit 7075 may not always transmit sound information. For example, only upon detection of sound information corresponding to the specific keyword and/ the specific frequency recorded on the recording unit 7074, the processing unit 7075 may transition from a standby mode to a detection mode and transmit the detected sound information to the information processing device 7100.

### (1-2) Information Processing Device

As illustrated in Fig. 43, the information processing device 7100 has an input unit 7101, an output unit 7102, a communication unit 7103, a recording unit 7104, and a processing unit 7105 and is connected to the information processing unit 7070 incorporated in the air conditioner 7010 via the network 7000NW such as the Internet.

Here, the input unit 7101 inputs various kinds of information to the information processing device 7100. The output unit 7102 outputs various kinds of information from the information processing device 7100.

The communication unit 7103 is connected to the external network 7000NW and enables information communication. Further, the communication unit 7103 transmits predetermined information to a designated destination 7007 on the basis of an analysis result obtained by the processing unit 7105. Examples of the destination 7007 include mobile phones of the user of the air conditioner 7010 and their family, a customer center, a police station, and a hospital.

The recording unit 7104 is implemented by a ROM, a RAM, or the like, and is configured to record thereon information to be input to the information processing device 7100, information calculated by the information processing device 7100, and so on. Here, the recording unit 7104 has a "sound information analysis DB 7104D". The recording unit 7104 also has recorded thereon destination information of the destination 7007 and so on.

As illustrated in Fig. 44, the sound information analysis DB 7104D is configured to record information on an external sound and information on an internal sound in association with time t and identification information of each air conditioner 7010, whenever needed. Further, the sound information analysis DB 7104D is also configured to record analysis results of sound information by the processing unit 7105. As illustrated in Fig. 44, each air conditioner 7010 is managed by a uniquely identified identification number (ID).

The processing unit 7105 is implemented by a CPU, a GPU, or the like and is configured to execute information processing in the information processing device 7100. Here, the processing unit 7105 executes a program recorded on the recording unit 7104 to achieve various functions.

Specifically, the processing unit (sound information analysis unit) 7105 has a function of comparing information on an external sound with information on an internal sound and determining whether the air conditioner 7010 itself or the surroundings of the air conditioner 7010 are in a predetermined state. Here, the processing unit 7105 analyzes whether a specific keyword and/or a specific frequency is included in information on an external sound and information on an internal sound by using a recurrent neural network to determine whether the air conditioner 7010 itself or the surroundings of the air conditioner 7010 are in a predetermined state. If the processing unit 7105 determines that the air conditioner 7010 itself or the surroundings of the air conditioner 7010 are in the predetermined state, the processing unit 7105 records the information on the external sound and the information on the internal sound on the recording unit 7104. In addition to the start of recording of the information on the external sound and the information on the internal sound on the recording unit 7104, the processing unit 7105 analyzes the state of the air conditioner 7010 and executes processing according to the analysis result.

### (2) Operation of Sound Information Analysis System

Fig. 45 is a sequence diagram illustrating an example operation of the sound information analysis system 7001 according to this embodiment.

First, in the outdoor unit 7020, the first microphone 7028 detects ambient sound information whenever needed (S101). Then, the outdoor unit 7020 transmits the detected sound information to the information processing device 7100 via the communication unit 7073 (S102).

Also in the indoor unit 7040, the second microphone 7048 detects ambient sound information whenever needed (S103). Then, the indoor unit 7040 transmits the detected sound information to the information processing device 7100 via the communication unit 7073 (S104).

Then, the information processing device 7100 records the sound information received from the outdoor unit 7020 and the indoor unit 7040 on the sound information analysis DB 7104D whenever needed (S105). In the information processing device 7100, further, the processing unit 7105 analyzes the state of the air conditioner 7010 itself or the surroundings of the air conditioner 7010 by using the external sound received from the outdoor unit 7020 and the internal sound received from the indoor unit 7040 (S106). Then, the processing unit 7105 executes processing according to the analysis results (S107).

### (3) Features

### (3-1)

As described above, the sound information analysis system 7001 according to this embodiment includes an outdoor unit (first air conditioner) 7020, an indoor unit (second air conditioner) 7040, and an information processing device (sound information analysis unit) 7100. The information processing device 7100 analyzes both pieces of sound information, namely, information on an external sound and information on an internal sound. Accordingly, the air conditioner 7010 itself and/or the surroundings of the state of the air conditioner 7010 can be accurately recognized. In the sound information analysis system 7001, furthermore, sound information can be analyzed by using the external information processing device 7100 having abundant computational resources, and high-accuracy analysis of sound information can be executed.

As supplementary remarks, in the sound information analysis system 7001 according to this embodiment, the information processing device 7100 further includes the recording unit 7104 and the processing unit 7105. The processing unit 7105 compares information on an external sound with information on an internal sound. When the processing unit 7105 determines that a predetermined state is found, the recording unit 7104 starts recording of the information on the external sound and the information on the internal sound. With this configuration, it is possible to analyze sound information obtained when the air conditioner 7010 itself and/or the surroundings of the air conditioner 7010 becomes in a predetermined state. When the processing unit 7105 of the information processing device 7100 analyzes that a specific keyword and/or a specific frequency is included in the information on the external sound and the information on the internal sound, the recording unit 7104 may record the information on the external sound and the information on the internal sound. With this configuration, it is possible to analyze the state of the air conditioner and/or the state of the surroundings of the air conditioner obtained when a specific keyword and/or a specific frequency is detected.

In the sound information analysis system 7001 according to this embodiment, furthermore, the communication unit (transmission unit) 103 of the information processing device 7100 transmits predetermined information to the designated destination 7007 on the basis of the analysis result obtained by the processing unit 7105. This configuration enables an administrator or the like to recognize the air conditioner 7010 itself and/or the surroundings of the state of the air conditioner 7010.

The sound information analysis system 7001 according to this embodiment having the configuration described above can be applied as follows.

For example, it is possible to detect anomalies in the air conditioner 7010 itself by using the sound information analysis system 7001. Specifically, upon detection of an unusual sound from the compressor 7021 from external sounds and also an unusual sound from internal sounds, the processing unit 7105 of the information processing device 7100 determines the fault level of the air conditioner 7010 on the basis of the detected unusual sound and a specific pattern. Then, the processing unit 7105 sends information on the fault level to the contact address of the user of the air conditioner 7010 and the contact address of the customer center or the like. In this way, it is possible to notify the administrator or the like of anomalies in the air conditioner 7010. With the use of the analysis result of sound information and also information such as the number of revolutions of the compressor 7021 or the discharge temperature in combination, the processing unit 7105 can more accurately determine the fault level.

Further, for example, it is possible to detect anomalies in the surroundings of the air conditioner 7010 and perform processing according to the situation by using the sound information analysis system 7001. Specifically, the processing unit 7105 of the information processing device 7100 analyzes that noise or the like has been generated in the surroundings of the air conditioner 7010 as a result of comparison in sound volume between external sounds and internal sounds, and can accordingly execute processing to report the generation of the noise to the contact address of the user of the air conditioner 7010 and/or the competent police station or the like. Additionally, in case of a disaster, when a human voice is detected in internal sounds and no ambulance siren is detected in external sounds, the processing unit 7105 of the information processing device 7100 can execute processing such as reporting to the hospital to ask for an ambulance.

### (3-2)

In the sound information analysis system 7001 according to this embodiment, furthermore, when the difference in sound pressure value between an external sound and an internal sound is greater than or equal to a predetermined value, predetermined information may be transmitted to a designated destination. For example, focusing on a change in sound pressure value can facilitate execution of determination of noise from a motorcycle or the like.

### (3-3)

Further, the air conditioner 7010 according to this embodiment further includes the control unit 7060 that controls the outdoor unit 7020 and the indoor unit 7040 on the basis of the analysis result obtained by the processing unit 7105 of the information processing device 7100. Here, the control unit 7060 controls the outdoor unit 7020 and the indoor unit 7040 in accordance with a control command from the information processing unit 7070. With this configuration, it is possible to suitably control the air conditioner 7010 in accordance with the air conditioner 7010 itself and/or the surroundings of the state of the air conditioner 7010.

For example, if it is determined that a fire has started in the surroundings of the air conditioner 7010 based on the analysis result of sound information, the control unit 7060 controls refrigerant in the air conditioner 7010 to move from the indoor unit 7040 to the outdoor unit 7020.

### (4) Modifications

### (4-1)

In the sound information analysis system 7001 according to this embodiment, the air conditioner 7010 may not always transmit sound information detected by the first microphone 7028 and the second microphone 7048 to the information processing device 7100. Specifically, the processing unit 7075 of the air conditioner 7010 may transition from a standby mode to a detection mode and transmit the detected sound information to the information processing device 7100 only upon detection of sound information corresponding to the specific keyword and/ the specific frequency recorded on the recording unit 7074. Alternatively, only upon detection of sound information with a sound pressure value greater than or equal to a predetermined sound pressure value, the processing unit 7075 of the air conditioner 7010 may transmit the detected sound information to the information processing device 7100.

For example, in case of the occurrence of anomalies such as an accident with a loud sound or a disaster, the sound pressure value detected by the first microphone 7028 of the outdoor unit 7020 or the sound pressure value detected by the second microphone 7048 of the indoor unit 7040 may sometimes become greater than or equal to a predetermined value. In this case, the occurrence of the anomalies can be reported to the police station or the like by a transition of the air conditioner 7010 from a standby mode (sleep) to a detection mode and transmitting information to the information processing device 7100.

### (4-2)

In the sound information analysis system 7001 according to this embodiment, when the recording unit 7104 of the information processing device 7100 starts recording of information on an external sound and information on an internal sound, the processing unit 7105 may refer to the information recorded on the recording unit 7104 and check whether a similar sound satisfying a predetermined condition is present. With this configuration, the processing unit 7105 can refer to a situation occurring in the presence of a similar sound and to execute processing. As a result, the computational load required for analysis can be reduced.

### (4-3)

Further, in the sound information analysis system 7001 according to this embodiment, the outdoor unit 7020 and/or the indoor unit 7040 may further include a position information acquisition unit (a so-called GPS function) that acquires position information of the outdoor unit 7020 and/or the indoor unit 7040. In this configuration, the recording unit 7104 records thereon information on an external sound and information on an internal sound in association with position information. This enables accurate recognition of the air conditioner 7010 itself and/or the surroundings of the state of the air conditioner 7010 even if position information of the air conditioner 7010 is not recorded on the information processing device 7100.

For example, if it is determined that noise has generated from a motorcycle based on the analysis result of sound information, the position of the source of the noise information can be identified. In addition, the generation of the noise and the location of the source can be reported to the competent police station or the like.

### (4-4)

In the sound information analysis system 7001 according to this embodiment, furthermore, when the processing unit 7105 of the information processing device 7100 analyzes that the difference between the sound volume of an internal sound and the sound volume of an external sound exceeds a predetermined amount, predetermined information may be output to the air conditioned space 7000S. With this configuration, a person in the surroundings of the air conditioner 7010 can be notified of predetermined information.

For example, a maintenance engineer of the air conditioner 7010 can be notified of diagnostic information of the air conditioner 7010 and necessary task information.

Furthermore, for example, in a hotel or the like, when noise is generated inside the air conditioned space 7000S, inside users can be notified of attention information.

### (4-5)

In the air conditioner 7010 according to this embodiment, furthermore, each of the outdoor unit 7020 and the indoor unit 7040 may separately have the communication unit (sound information transmission unit) 7073, or one of them may have the communication unit (sound information transmission unit) 7073. In the latter case (when one of the outdoor unit 7020 or the outdoor unit 7020 has the communication unit 7073), the outdoor unit 7020 or the indoor unit 7040 that does not have the communication unit 7073 transmits information to the information processing device 7100 via the indoor unit 7040 or the outdoor unit 7020 that has the communication unit 7073.

### (4-6)

Furthermore, the sound information analysis system 7001S according to this embodiment is configured such that the outdoor unit 7020 has the first microphone 7028 and the indoor unit 7040 has the second microphone 7048, but this configuration is not necessarily meant to be limiting. For example, instead of the outdoor unit 7020, any other indoor unit located outside the target air conditioned space 7000S may have the first microphone 7028. In short, the sound information analysis system 7001S according to this embodiment may employ any embodiment in which two or more outdoor units and/or indoor units located inside and outside an air conditioned space have a first microphone and a second microphone, respectively.

For example, in a hotel or the like, a complaint about the noise inside the air conditioned space 7000S may be raised. Two indoor units arranged in adjacent rooms of a hotel have the first microphone 7028 and the second microphone 7048, which allows comparison between the volumes of sounds in the adjacent rooms and output of attention information. This ensures that the hotel users feel fair.

### <Sixteenth Embodiment>

Fig. 46 is a schematic diagram illustrating a concept of a sound information analysis system 7001S according to a sixteenth embodiment. In the following description, the same portions as those described previously are assigned substantially the same numerals or symbols and will not be described repeatedly. In this embodiment, furthermore, the uppercase alphabetic subscript S is sometimes added to portions to distinguish them from the corresponding ones of the other embodiments.

In the sound information analysis system 7001S of the sixteenth embodiment, an information processing unit 7070S of an air conditioner 7010S (an outdoor unit 7020S and an indoor unit 7040S) has the function of the information processing device 7100 of the fifteenth embodiment. Accordingly, as illustrated in Fig. 47, the recording unit 7074S of the information processing unit 7070S has a sound information analysis DB 7074D having a configuration similar to that of the sound information analysis DB 7104D of the fifteenth embodiment. With this configuration, the information processing unit 7070S of the air conditioner 7010S can analyze sound information without using the external information processing device 7100.

As supplementary remarks, in some cases, high-level computational capabilities are not required for the purpose of analysis of only sound information corresponding to a specific keyword and/or a specific frequency. In these cases, a system with a simple configuration that does not use the external information processing device 7100 may be required. The sound information analysis system 7001S according to the sixteenth embodiment can meet such a requirement for simplification.

The configuration of the sound information analysis system 7001S according to the sixteenth embodiment is the same as that of the sound information analysis system 7001 according to the fifteenth embodiment, except that the information processing device 7100 is not used. Accordingly, the sound information analysis system 7001S according to the sixteenth embodiment also has features similar to the features described in the fifteenth embodiment, and similar modifications can be applied.

### <Seventeenth Embodiment>

Fig. 47 is a schematic diagram illustrating a concept of a sound information analysis system 7001T according to a seventeenth embodiment. In this embodiment, the uppercase alphabetic subscript T is sometimes added to portions to distinguish them from the corresponding ones of the other embodiments.

The sound information analysis system 7001T of the seventeenth embodiment includes a first air conditioner 7020T and a second air conditioner 7040T, instead of the outdoor unit 7020 and the indoor unit 7040 according to the first and second embodiments.

The first air conditioner 7020T is a heat-source-side air conditioner and has a compressor and so on. The first air conditioner 7020T has a water-cooled heat exchanger, for example, and can be installed in a machine chamber 7000R in a building 7005. The second air conditioner 7040T is a use-side heat exchanger and is configured to supply conditioned air to the air conditioned space 7000S.

In short, as illustrated in Fig. 47, the air conditioners 7010T according to the third embodiment can be installed in the same building 7005. However, this is not limiting, and the sound information analysis system 7001T according to the seventeenth embodiment may employ any embodiment in which two or more first air conditioners 7020T and/or second air conditioners 7040T located inside and outside the air conditioned space 7000S have the first microphone 7028 and the second microphone 7048.

The air conditioner 7010T according to the seventeenth embodiment having the configuration described above includes the concept of the air conditioners 7010 and 7010S according to the fifteenth and sixteenth embodiments. Accordingly, the air conditioner 7010T according to the seventeenth embodiment has features similar to those described in the fifteenth and sixteenth embodiments, and similar modifications can be applied.

### <Other Embodiments>

The embodiments and modifications described above for purposes of illustration may be combined as appropriate so long as consistency is maintained between them.

### <Additional Remarks>

While embodiments have been described, it will be understood that various changes in the form or in the details may be made without departing from the spirit and scope of the claims.

### INDUSTRIAL APPLICABILITY

The air conditioner according to the first aspect through the seventeenth aspect is suitable for use as an air conditioner that can be operated via voice.

The air conditioner according to the eighteenth aspect through the twenty-seventh aspect and the operation apparatus according to the twenty-eighth aspect through the thirtieth aspect are suitable for use as an air conditioner that is voice-operable and an operation apparatus that enables an air conditioner to be operated via voice.

The air-conditioning system according to the thirty-first aspect through the thirty-ninth aspect and the air conditioner according to the fortieth aspect are suitable for use as an air-conditioning system that enables an air conditioner to be operated via voice and an air conditioner that is voice-operable.

The communication system according to the forty-first aspect through the forty-fourth aspect and the transmission apparatus according to the forty-fifth aspect through the forty-sixth aspect are suitable for use as a communication system and a transmission apparatus that are capable of reducing the occurrence of communication failures regardless of the state of traffic of a communication line and that are capable of transmitting desired information without time and labor.

The control system according to the forty-seventh aspect through the fifty-sixth aspect is suitable for use as a high-reliability control system.

The control system according to the fifty-seventh aspect through the sixty-third aspect is suitable for use as a high-convenience device control system.

The device management system according to the sixty-fourth aspect through the seventy-first aspect is suitable since even when a plurality of devices that output sounds are present, failures, such as the sounds output from the devices being overlapped and noisy, or the sound output from each of the devices being difficult to hear, can be less likely to occur.

The device management system according to the seventy-second aspect through the eighty-fourth aspect is suitable for use as a system capable of accurately recognizing the surroundings of an air conditioner.

### REFERENCE SIGNS LIST

10 air conditioner
12, 12a, 12b, 12c, 12d, 12e, 12f indoor unit
16a transmission unit
16b reception unit
18a control board
20 analysis server (analysis apparatus)
30 air conditioner server (command generation apparatus)
80 network
100, 200, 300, 400, 500, 600, 700 main body
120, 220, 320, 420, 520, 620, 720 blow-out port
130, 230, 330, 430, 530, 630, 730 suction port
140 microphone element (detection unit)
150 fan
160 fan motor
170 voice processing chip (voice recognition unit, voice recognition chip)
190 voice-capture-direction adjustment mechanism
194 automatic adjustment unit
A1, A2, A3, A4, A5, A6, A7 ventilation space
C command
C0 predetermined command
D1 first direction
D2 second direction
F1, F2, F3, F4, F5, F6, F7 blow-out port forming surface (first surface)
F1a, F1b, F1c, F2a, F2b, F5a, F5b, F5c, F6a, F6b, F6c surface (second surface)
J information
M center (center of main body of floor-mounted indoor unit)
P1 (P1a1, P1a2, P1b1, P1b2, P1c, P1d1, P1d2, P1e, P1f1, P1f2) voice capturing portion
P2 (P2a1, P2a2, P2a3, P2a4, P2b, P2c, P2d, P2e) voice capturing portion
P3 (P3a, P3b, P3c) voice capturing portion
P4 (P4a, P4b, P4c, P4d) voice capturing portion
P5 (P5a, P5b, P5c, P5d, P5e) voice capturing portion
P6 (P6a, P6b, P6c) voice capturing portion
P7 (P7a, P7b) voice capturing portion
S signal
1010 air conditioner
1012, 1012' indoor unit
1018 controller (air conditioner control unit)
1020 analysis server (analysis apparatus)
1030 air conditioner server (command generation apparatus)
1080 network
1100, 1100' main body
1120, 1120' blow-out port
1200 operation unit (operation apparatus)
1210 voice acceptance section
1210a microphone element
1220 notification unit
1230a transmission unit
1230b reception unit
1240 voice processing unit (voice compression unit)
1250 command transmission unit
1260 switch
1300 cable unit
1000C command
1000J information
1000S signal
2010 air conditioner
2010a air-conditioning system
2020 analysis server (analysis apparatus)
2030 air conditioner server (command generation apparatus)
2080 network
2150 controller
2160 first information reception unit
2170a transmission unit (second information transmission unit, state-quantity information transmission unit)
2170b reception unit (command receiving unit)
2180 processing unit
2190 air conditioner control unit
2200 operation unit (voice acceptance unit)
2210 voice acceptance section
2220 notification unit
2250 first information transmission unit
2000C command
2000J information
2000S1 first information
2000S2 second information
3001 device operation/communication system
3020 analysis server (reception apparatus)
3022 recognition unit
3024 communication unit (reception unit, signal output unit)
3080 network (communication line)
3200 operation/communication device (transmission apparatus, reception apparatus)
3210 voice acceptance section
3220 voice output unit
3222 setting unit
3224 voice database (storage unit)
3230 voice processing unit (text conversion unit)
3240 switching unit
3250 communication unit (transmission unit, reception unit)
3270 determination unit
3300 operation/communication device (reception apparatus, transmission apparatus)
4001 control system
4005, 4005a, 4005b user
4010 first-type device (controlled device)
4020 second-type device (controlled device)
4020F fixed-type device
4060 input acceptance device (input acceptance unit)
4060S voice input acceptance device (input acceptance unit)
4070 infrared output device
4070A attitude control apparatus
4100 information processing device
4110 input analysis unit
4120 control-details identifying unit
4121 input selection unit
4122 selection result notification unit
4130 first control unit
4135 second control unit
R room
NW network
5001 device control system
5010 hot-water-supply heat source apparatus
5020 analysis server (voice recognition apparatus)
5040 infrared signal transmission unit
5050a, 5050b, ..., and 5050n device (out-of-bathroom device, infrared-operated device)
5060a, 5060b, ..., and 5060m device (out-of-bathroom device)
5080 network (communication line)
5200 control apparatus
5250 communication unit (voice information transmission unit)
5300 in-bathroom operation section
5310 microphone
5320 speaker
5330 switching unit
5340 switch (command acceptance unit)
5400 room-side operation section
5410 room-side microphone
5420 in-room speaker
5000B1 bathroom
5000C command
5000I transmission command
6001 device management system
6010 air conditioner (second device)
6060a DVD recorder (second device)
6062 voice output unit (second sound output unit)
6140 voice output unit (second sound output unit)
6200 operation device (first device)
6220 voice output unit (first sound output unit)
6240 storage unit
6270 determination unit
6280 sound output control unit
6290 detection unit
7001, 7001S, 7001T sound information analysis system
7007 destination
7010, 7010S, 7010T air conditioner
7020 outdoor unit (first air conditioner)
7020S outdoor unit (first air conditioner)
7020T heat-source-side air conditioner (first air conditioner)
7028 first microphone
7029 outdoor control circuit
7040 indoor unit (second air conditioner)
7040S indoor unit (second air conditioner)
7040T use-side air conditioner (second air conditioner)
7048 second microphone
7049 indoor control circuit
7060 control unit
7070 information processing unit
7071 input unit
7072 output unit
7073 communication unit (transmission unit)
7074 recording unit
7075 processing unit (sound information analysis unit)
7100 information processing device
7101 input unit
7102 output unit
7103 communication unit (transmission unit)
7104 recording unit
7104D sound information analysis DB
7105 processing unit (sound information analysis unit, control unit)
7000S air conditioned space

### CITATION LIST

### PATENT LITERATURE

<PTL 1> Japanese Laid-open Patent Publication No. H2-171098
<PTL 2> Japanese Laid-open Patent Publication No. 2010-181064
<PTL 3> Japanese Laid-open Patent Publication No. 2001-308961
<PTL 4> Japanese Utility model registration No. 3130081
<PTL 5> Japanese Laid-open Patent Publication No. 2002-267252
<PTL 6> Japanese Laid-open Patent Publication No. 2010-181064
<PTL 7> Japanese Laid-open Patent Publication No. 2014-229097

## Claims

1. An air conditioner (10) comprising:
an indoor unit (12, 12a, 12b, 12c, 12d, 12e, 12f) including a main body (100, 200, 300, 400, 500, 600, 700) having formed therein a blow-out port (120, 220, 320, 420, 520, 620, 720) through which air-conditioned air is blown out toward a space to be air-conditioned, and a microphone element (140) that accepts a voice instruction captured from a voice capturing portion (P1, P2, P3, P4, P5, P6, P7) arranged at a position that deviates from a ventilation space (A1, A2, A3, A4, A5, A6, A7) through which the air blown out from the blow-out port flows, in such a manner as to face the space to be air-conditioned;
a transmission unit (16a) that transmits a signal (S) that is based on the voice instruction accepted by the microphone element to an outside; and
a reception unit (16b) that receives a command (C) corresponding to the signal transmitted from the transmission unit from the outside.

2. An air conditioner (1010) including an indoor unit (1012, 1012') having a main body (1100, 1100') having formed therein a blow-out port (1120, 1120') through which air-conditioned air is blown out toward a space to be air-conditioned, the air conditioner comprising:
an operation unit (1200) including a voice acceptance section (1210) that accepts input of a voice instruction, the operation unit being arranged outside the main body;
a cable unit (1300) that communicably connects the indoor unit and the operation unit to each other;
a transmission unit (1230a) that transmits a signal (1000S) that is based on the voice instruction accepted by the voice acceptance section to an outside;
a reception unit (1230b) that receives a command (1000C) corresponding to the signal transmitted from the transmission unit from the outside; and
an air conditioner control unit (1018) that controls an operation of the air conditioner in accordance with the command.

3. An air-conditioning system (2010a) comprising:
an air conditioner (2010) including a controller (2150); and
a voice acceptance unit (2200) including a voice acceptance section (2210) that accepts a voice instruction for the air conditioner, and a first information transmission unit (2250) that transmits first information (2000S1) corresponding to the voice instruction accepted by the voice acceptance section to the controller via wireless communication,
the controller including
a first information reception unit (2160) that receives the first information transmitted from the first information transmission unit,
a processing unit (2180) that executes specific processing on the first information accepted by the first information reception unit to generate second information (2000S2) having a smaller information amount than the first information,
a second information transmission unit (2170a) that transmits the second information to an outside,
a command receiving unit (2170b) that receives a command (2000C) corresponding to the second information transmitted from the second information transmission unit from the outside, and
an air conditioner control unit (2190) that controls an operation of the air conditioner in accordance with the command.

4. A communication system (3001) comprising:
a transmission apparatus (3200, 3300) including a voice acceptance section (3210) that accepts input of voice, a text conversion unit (3230) that converts the voice accepted by the voice acceptance section into a text data format, a transmission unit (3250) that transmits data based on the voice accepted by the voice acceptance section via a communication line (3080), and a switching unit (3240) that switches a format of the data transmitted from the transmission unit between a voice data format and the text data format; and
a reception apparatus (3020, 3200, 3300) including a reception unit (3024, 3250) that receives the data transmitted from the transmission unit of the transmission apparatus.

5. A control system (4001) comprising:
an input acceptance unit (4060) that accepts input of a control instruction for a controlled device (4010, 4020) at least by voice input;
an input selection unit (4121) that, in a case where the input acceptance unit accepts a plurality of inputs indicating control instructions for one device, selects one of the plurality of inputs; and
a control unit (4130, 4135) that transmits an output signal to the controlled device in accordance with only a control instruction corresponding to the input selected by the input selection unit.

6. A device control system (5001) comprising:
an in-bathroom operation section (5300) having a microphone (5310), the in-bathroom operation section being installed in a bathroom (5000B1); and
a control apparatus (5200) that at least controls an out-of-bathroom device (5050a, 5050b, ..., 5050n, 5060a, 5060b, ..., 5060m) in accordance with a voice instruction accepted by the microphone, the out-of-bathroom device being arranged out of the bathroom and being different from a hot-water-supply heat source apparatus (5010) that supplies hot water to the bathroom.

7. A device management system (6001) that manages a first device (6200) including a first sound output unit (6220) that outputs a sound, and a second device (6010, 6060a) different from the first device, the second device including a second sound output unit (6140, 6062) that outputs a sound, the device management system comprising:
a determination unit (6270) that determines a positional relationship between the first device and the second device; and
a sound output control unit (6280) that controls on/off of sound output or an output sound volume of at least one of the first device and the second device based on a determination result of the determination unit.

8. A sound information analysis system (7001, 7001S, 7001T) comprising:
a first air conditioner (7020, 7020S, 7020T) installed outside an air conditioned space (7000S), the first air conditioner including a first microphone (7028) that acquires an external sound outside the air conditioned space;
a second air conditioner (7040, 7040S, 7040T) installed inside the air conditioned space, the second air conditioner including a second microphone (7048) that acquires an internal sound inside the air conditioned space; and
a sound information analysis unit (7075, 7105) that analyzes information on the external sound and information on the internal sound.
